(19) Europäisches Patentamt
European Patent Office
Office européen des brevets

(11) **EP 1 763 033 A1**

(12) **EUROPEAN PATENT APPLICATION**

(43) Date of publication:
**14.03.2007 Bulletin 2007/11**

(51) Int Cl.:
**G11B 27/034** *(2006.01)*   **G11B 27/10** *(2006.01)*
**G11B 27/32** *(2006.01)*

(21) Application number: **06119688.7**

(22) Date of filing: **29.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.09.2005 JP 2005261050**

(71) Applicant: **KABUSHIKI KAISHA TOSHIBA**
**Tokyo 105-8001 (JP)**

(72) Inventors:
• **Kikuchi, Shinichi**
**Toshiba Corporation, IPD**
**Tokyo 105-8001 (JP)**

• **Nakashika, Masahiro**
**Toshiba Corporation, IPD**
**Tokyo 105-8001 (JP)**
• **Tsumagari, Yasufumi**
**Toshiba Corporation, IPD**
**Tokyo 105-8001 (JP)**

(74) Representative: **Henkel, Feiler & Hänzel**
**Patentanwälte**
**Maximiliansplatz 21**
**80333 München (DE)**

(54) **Information storage medium, information recording method, information playback method, information recording apparatus, and information playback apparatus**

(57)   An embodiment may allow not only information management of contents which are to be recorded and played back by the user but also information management which has affinity for contents distributed by contents providers. An information storage medium may have a file structure that manages first high-definition video information (HD_DVD-VR, HDVR_VOB/HDVR_SOB) which can be recorded by the user and second high-definition video information (HD_DVD-VIDEO, ADV_OBJ) which can be provided by a contents provider. The management area is configured to include management information (VIDEO_PLAYLIST, VTSI) used to manage playback of the digital stream signal including the second high-definition video information (HD_DVD-VIDEO).

F I G. 79

**Description**

One embodiment relates to an information storage medium (or data structure), an information recording and playback method, and an information recording and playback apparatus, which are suited to record and play back a digital stream signal used in digital TV broadcast or the like.

In recent years, TV broadcast has entered the era of digital broadcasts having Hi-Vision programs (programs of high-definition AV information) as principal broadcast contents. The current BS digital broadcast (and forthcoming terrestrial digital broadcast) adopts an MPEG2 transport stream (to be abbreviated as MPEG-TS hereinafter as needed). In the field of digital broadcast using moving pictures, the MPEG-TS will be used as a standard format in the future. In the expectation of such digital TV broadcast, market needs for a streamer that can directly record digital TV broadcast contents are increasing.

As an example of a streamer that utilizes an optical disc such as a DVD-RAM or the like, "A recording and playback apparatus" disclosed in patent reference 1 below is known (for example, see Jpn. Pat. Appln. KOKAI Publication No. 2002-84479).

For example, when a long-term music program in which a short news program is inserted (NHK Red & White Year-end Song Festival which was BS digital broadcasted on the new year eve) is stream-recorded in a news cut mode (video recording is paused at the news part), a stream object of a recorded program is divided into two stream objects at the news cut part. In such case, the two stream objects are normally continuously recorded at physically neighboring locations. However, these stream objects may be discontinuously recorded at physically separate locations. In this example, the playback times of the contents of the two stream objects are logically continuous independently of whether or not the two stream objects are physically continuous. The same applies to a case wherein one movie in which CMs are inserted is stream-recorded in a CM cut mode. Even when physical discontinuity occurs among a plurality of stream objects at CM cut parts, the playback times as a series of movie contents are logically continuous.

On the other hand, when program A of channel X is stream-recorded, and program B of channel Y is then stream-recorded, the playback times of the contents of stream objects of programs A and B are not continuous (logically discontinuous) even when their recording locations are physically continuous.

In this manner, when stream video recording is made by a plurality of stream objects, whether or not neighboring stream objects have logical continuity (continuity of playback times in a single program) in place of physical continuity influences the decoding processing (setting processing of system time clock STC and the like) upon playback. More specifically, when the STC setting is inappropriately made (STC reset, etc.) without recognizing continuity of playback times, a wait time by means of still picture display may be generated for a relatively long period of time when playback shifts from the end of the former stream object of a single program to the head of the latter stream object.

Note that information to be recorded (digital broadcast, etc.) often includes information such as PSI (Program Specific Information), SI (Service Information), and the like. A case wherein PSI and SI are unknown is not considered so far. Video information to be recorded may have various resolutions. However, a case wherein one (horizontal resolution) of the horizontal and vertical resolutions is unknown in designation of the resolution is not considered.

Furthermore, Hi-Vision contents with various added values are expected to be distributed (marketed) by contents providers soon, and future Hi-Vision recorders are demanded to have affinity (compatibility) for such Hi-Vision contents.

One embodiment is intended to allow not only information management of contents which are to be recorded and played back by the user but also information management which has affinity for contents distributed by contents providers.

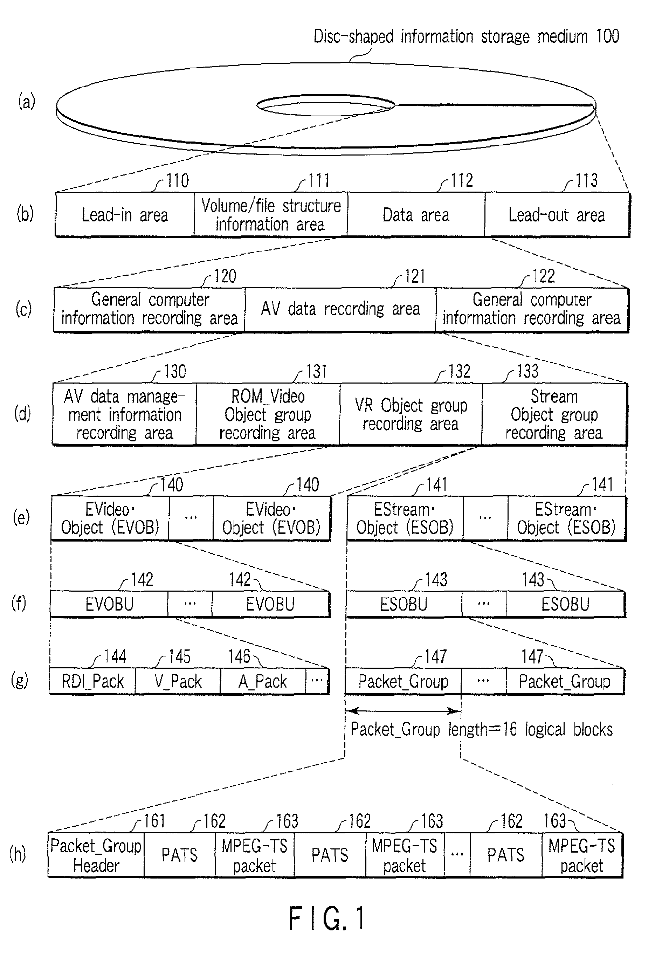

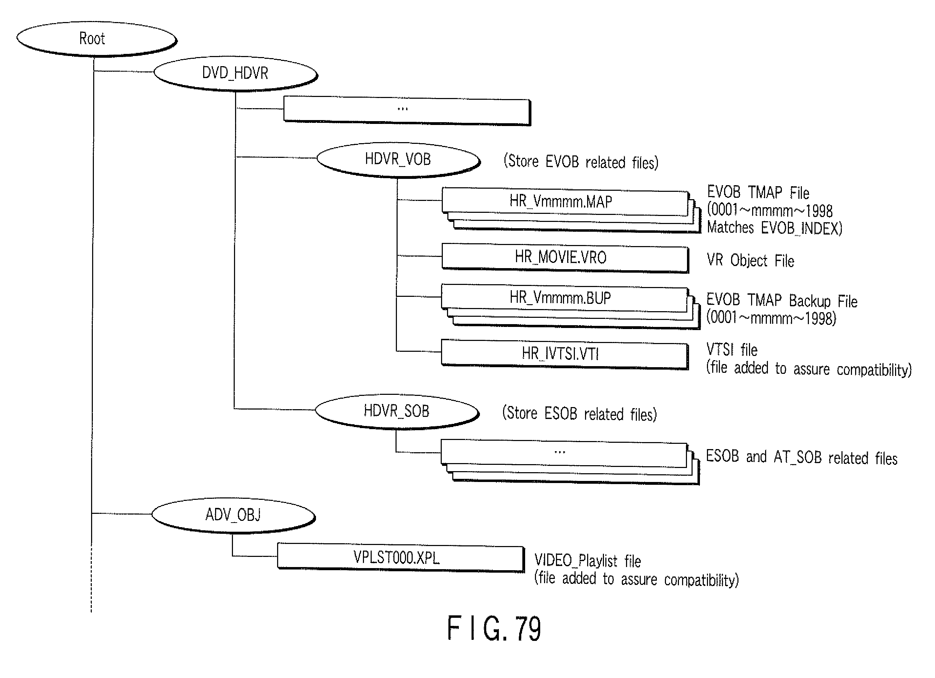

One embodiment uses an information storage medium (100 in FIG. 1) which is configured to have a file structure (FIG. 79) that manages first high-definition video information (HD_DVD-VR; HDVR_VOB/HDVR_SOB) which can be recorded by the user and second high-definition video information (HD_DVD-VIDEO; ADV_OBJ) which can be provided by a contents provider, and to record a predetermined digital stream signal including the first high-definition video information (HD DVD-VR) and the second high-definition video information (HD_DVD-VIDEO). Note that the information storage medium has a management area and a data area, and the data area is configured to separately record data of the digital stream signal as a plurality of objects (HDVR_VOB, HDVR_SOB, ADV_OBJ). The management area stores management information (ESOB related files) for each output source of the digital stream signal including the first high-definition video information (HD_DVD-VR) or for each broadcast scheme of the digital stream signal, and also time map information (VSOB related files in FIG. 79) for each output source of the digital stream signal including the first high-definition video information (HD_DVD-VR) or for each broadcast scheme of the digital stream signal. Furthermore, the management area is configured to include management information (VIDEO_PLAYLIST, VTSI) used to manage playback of the digital stream signal including the second high-definition video information (HD_DVD-VIDEO).

The invention can be more fully understood from the following detailed description when taken in conjunction with the accompanying drawings, in which:

FIG. 1 is an exemplary view for explaining the data structure according to an embodiment;

FIG. 2 is an exemplary view for explaining the relationship among a playback management information layer, object management information layer, and object layer in the data structure according to the embodiment;

FIG. 3 is an exemplary view for explaining the file structure according to the embodiment;

FIG. 4 is an exemplary view for explaining an example of the configuration of a field (HDVR_MGI) of management information recorded on AV data management information recording area 130;

FIG. 5 is an exemplary view for explaining a practical example of DISC_RSM_MRKI;

FIG. 6 is an exemplary view for explaining a practical example of EX_DISC_REP_PICI;

FIG. 7 is an exemplary view for explaining a practical example of an EX_PL_SRPT;

FIG. 8 is an exemplary view for explaining an example of the configuration of another field (EX_M_AVFIT) of one management information (HDVR_MG) in the data structure according to the embodiment;

FIG. 9 is an exemplary view for explaining a practical example of EVOB_TMAP_GI;

FIG. 10 is an exemplary view for explaining an example of the configuration of EX_M_VOB_STI;

FIG. 11 is an exemplary view for explaining an example of the configuration of a V_ATR;

FIG. 12 is an exemplary view for explaining an example of the configuration of an ESTR_FIT;

FIG. 13 is an exemplary view for explaining a practical example of HR_SFIxx.IFO;

FIG. 14 is an exemplary view for explaining an example of the configuration of ESOBI_GI;

FIG. 15 is an exemplary view for explaining various kinds of information included in the ESOBI_GI;

FIG. 16 is an exemplary view for explaining an example of the configuration of ESOB_ESI;

FIG. 17 is an exemplary view for explaining an example of the configuration of ESOB_V_ESI and an example of the configuration of video attribute V_ATTR included in this ESOB_V_ESI;

FIG. 18 is an exemplary view for explaining an example of the configuration of ESOB_A_ESI and an example of the configuration of audio attribute AUDIO_ATTR included in this ESOB_A_ESI;

FIG. 19 is an exemplary view for explaining an example of the configuration of ESOB_OTHER_ESI;

FIG. 20 is an exemplary view for explaining a practical example of ESOB_DCNI;

FIG. 21 is an exemplary view for explaining an example of the configuration of ESOB GPI;

FIG. 22 is an exemplary view for explaining an example of the configuration of ESOB_GPI_GI, GPI_SRP#, and GPI#;

FIG. 23 is an exemplary view for explaining an example of the configuration of ESOB_CONNI;

FIG. 24 is an exemplary view for explaining an example of the configuration of an ESOB_TMAP (type A);

FIG. 25 is an exemplary view for explaining an example of the configuration of an ESOB_TMAP (type B);

FIG. 26 is an exemplary view for explaining an example of the configuration of HR_VTMAP.IFO and HR_STMAPx.IFO included in the DVD_HDVR directory;

FIG. 27 is an exemplary view for explaining an example of the configuration of EX_VTMAPTI, each EX_VTMAP_SRP#, and each EX_VTMAPI;

FIG. 28 is an exemplary view for explaining an example of the configuration of the contents of each EVOBU_ENT#;

FIG. 29 is an exemplary view for explaining an example of the configuration of various kinds of information included in an STMAPT (type A);

FIG. 30 is an exemplary view for explaining an example of the configuration of various kinds of information included in an STMAPT (type B);

FIG. 31 is an exemplary view for explaining an example (example of type A) of the configuration of the contents of an ESOBU_ENT#;

FIG. 32 is an exemplary view for explaining an example of the configuration of PGC information (EX_ORG_PGC information and EX_playlist information/EX_UD_PGC information) included in HDVR_VMG;

FIG. 33 is an exemplary view for explaining an example of the configuration of EX_PGC information;

FIG. 34 is an exemplary view for explaining a practical example of EX_CI;

FIG. 35 is an exemplary view for explaining a practical example of C_EPI;

FIG. 36 is an exemplary view for explaining an example of the configuration of the PTM of an ESOB (or EVOB);

FIG. 37 is an exemplary view for explaining an example of the configuration of a data unit (ESOBU) for a stream object;

FIG. 38 is an exemplary view for explaining a practical example of PKT_GRP_GI;

FIG. 39 is an exemplary view for explaining an example of the configuration of copy control information CCI# included in a Packet_Group_Header;

FIG. 40 is an exemplary view for explaining a practical example of MNI;

FIG. 41 is an exemplary view for explaining an example of the configuration of an EVOBU;

FIG. 42 is an exemplary view for explaining an example of the configuration of GCI of the EVOBU;

FIG. 43 is an exemplary view for explaining an example of the configuration of EX_PCI of the EVOBU;

FIG. 44 is an exemplary view for explaining an example of the configuration of EX_DSI of the EVOBU;

FIG. 45 is an exemplary view for explaining an example of the configuration of EX_RDI in case of an Interoperability VTS/VR_VOB;

FIG. 46 is an exemplary view for explaining the file structure according to another embodiment;

FIG. 47A is an exemplary view for explaining an example of the relationship between an ESOB_SZ and ESOB_S_PKT_POS;

FIG. 47B is an exemplary view for explaining an example of the relationship between an ESOB_SZ and ESOB_S_PKT_POS;

FIG. 47C is an exemplary view for explaining an example of the relationship between an ESOB_SZ and ESOB_S_PKT_POS;

FIG. 47D is an exemplary view for explaining an example of the relationship between an ESOB_SZ and ESOB_S_PKT_POS;

FIG. 48 is an exemplary view for explaining an example of an ESOBU cluster;

FIG. 49 is an exemplary view for explaining an example of the relationship between AT_SOBUs and packets;

FIG. 50 is an exemplary view for explaining an example of the relationship among an ESOBU__SZ, ESOBU_S_POS, and ES_LAST__SOBU_E_PKT_POS;

FIG. 51 is an exemplary view for explaining an example of the relationship between an AT_SOBU_SZ and AT_SOBU_S_PKT_POS;

FIG. 52 is an exemplary view for explaining an example of the relationship between TS Packets and Packet Groups;

FIG. 53 is an exemplary block diagram for explaining an example of an apparatus for recording and playing back AV information (digital TV broadcast program and the like) on and from an information storage medium (optical disc, hard disc, or the like) using the data structure according to the embodiment;

FIG. 54 is an exemplary block diagram for explaining an example of a system model of a recorder;

FIG. 55 is an exemplary flowchart (overall operation processing flow) for explaining an example of the overall operation of the apparatus shown in FIG. 53;

FIG. 56 is an exemplary flowchart (edit operation processing flow) for explaining an example of edit processing (ST28);

FIG. 57 is an exemplary flowchart for explaining an example of a video recording operation (part 1);

FIG. 58 is an exemplary flowchart for explaining an example of a video recording operation (part 2);

FIG. 59 is an exemplary flowchart (ESOB delimitation processing flow) for explaining an example of ESOB segmentation processing (ST160);

FIG. 60 is an exemplary flowchart (buffer fetch processing flow) for explaining an example of buffer fetch processing (ST130);

FIG. 61 is an exemplary flowchart (PKT_GRP_GI setting processing flow) for explaining an example of packet group general information setting processing (ST1340);

FIG. 62 is an exemplary flowchart (ESI setting processing flow) for explaining stream information (ESI) generation processing (ST120);

FIG. 63 is an exemplary flowchart for explaining an example of stream file information (ESTR_FI) generation processing in video recording end processing (ST150);

FIG. 64 is an exemplary flowchart for explaining an example of GPI setting processing ST1530;

FIG. 65 is an exemplary flowchart for explaining an example of TMAP setting processing ST1540;

FIG. 66 is an exemplary flowchart for explaining EVOB/ESOB structure setting processing ST15400;

FIG. 67 is an exemplary flowchart for explaining CP_CTL_INFO (CCI) generation processing ST1220;

FIG. 68 is an exemplary flowchart (program setting processing flow) for explaining an example of program chain (PGC) generation processing (including program setting processing) in the video recording end processing (ST150);

FIG. 69 is an exemplary flowchart (overall playback operation flow) for explaining an example of a playback operation;

FIG. 70 is an exemplary flowchart for explaining decoder setting processing (ST217);

FIG. 71 is an exemplary flowchart for explaining an example of processing upon cell playback;

FIG. 72 is an exemplary flowchart for explaining ESOB continuity check processing (ST2201);

FIG. 73 is an exemplary flowchart for explaining an example of data transfer processing from a buffer RAM to a decoder;

FIG. 74 is an exemplary flowchart for explaining an example of GP switching setting processing;

FIG. 75 is an exemplary flowchart for explaining an example of discontinuity processing;

FIG. 76 is an exemplary flowchart for explaining an example of skip processing;

FIG. 77 is an exemplary view for explaining another example of FIG. 3 or FIG. 46;

FIG. 78 is an exemplary view for explaining another example of FIG. 9;

FIG. 79 is an exemplary view for explaining another example of FIG. 77;

FIG. 80 is an exemplary view for explaining another example of FIG. 24;

FIG. 81 is an exemplary view for explaining another example of FIG. 25;

FIG. 82 is an exemplary view for explaining another example of the TMAP file structure;

FIG. 83 is an exemplary view for explaining another example of FIG. 27;

FIG. 84 is an exemplary view for explaining another example of FIG. 29;

FIG. 85 is an exemplary view for explaining another example of FIG. 30;

FIG. 86 is an exemplary view for explaining another example of FIG. 36;

FIG. 87 is an exemplary view for explaining another example of FIG. 42;

FIG. 88 is an exemplary view for explaining a conversion example of an interoperable content;

FIG. 89 is an exemplary view for explaining a conversion table (part 1) from HD_VR into VTSI;

FIG. 90 is an exemplary view for explaining a conversion table (part 2) from HD_VR into VTSI;

FIG. 91 is an exemplary view for explaining a conversion table (part 3) from HD_VR into VTSI;

FIG. 92 is an exemplary view for explaining a conversion table (part 4) from HD_VR into VTSI;

FIG. 93A is an exemplary flowchart for explaining processing timing of generation of an interoperable content;

FIG. 93B is an exemplary flowchart for explaining processing timing of generation of an interoperable content;

FIG. 93C is an exemplary flowchart for explaining processing timing of generation of an interoperable content;

FIG. 94 is an exemplary flowchart for explaining an example of interoperable content generation processing;

FIG. 95 is an exemplary view for explaining an example of the PGC configuration of HD_VR;

FIG. 96 is an exemplary view for explaining a special case of CNT_SEG;

FIG. 97 is an exemplary view for explaining the relationship of the SOB start positions according to the ESOB_CONNI;

FIG. 98 is an exemplary view for explaining the relationship of the SOB start positions according to the ESOB_ CONNI upon editing;

FIG. 99 is an exemplary view for explaining the relationship of the SOB end positions according to the ESOB_ CONNI; and

FIG. 100 is an exemplary view for explaining the relationship of the SOB end positions according to the ESOB_ CONNI upon editing.

Various embodiments will be described hereinafter with reference to the accompanying drawings.

FIG. 1 is an exemplary view for explaining the data structure according to an embodiment. As a typical example of a Recordable or Re-writable information storage medium, DVD disc (DVD±R, DVD±RW, DVD-RAM, and the like which has a single recording layer or multiple recording layers using a red laser of a wavelength around 650 nm or a blue-violet or blue laser of a wavelength of 405 nm or less) 100 is known. As shown in FIG. 1, this disc 100 is configured to include volume/file structure information area 111 that stores a file system, and data area 112 that actually records data files. The file system includes information indicating the recording locations of files.

Data area 112 includes areas 120 and 122 which record general computer data, and area 121 that records AV data. AV data recording area 121 is configured to include AV data management information area 130 that stores a video manager (VMG) file used to manage AV data, ROM_Video object group recording area 131 that records a file of object data complying with the DVD-Video (ROM Video) standard, VR object group recording area 132 that records a file (VRO file) of object data (EVOBS: Extended Video Object Set) complying with the video recording (VR) standard, and recording area 133 that records a stream object data (ESOBS: Extended Video Object Set) file (SRO file) which records objects compatible to digital broadcast. Note that the recording standard for the SRO file will be described as stream recording (SR) as needed.

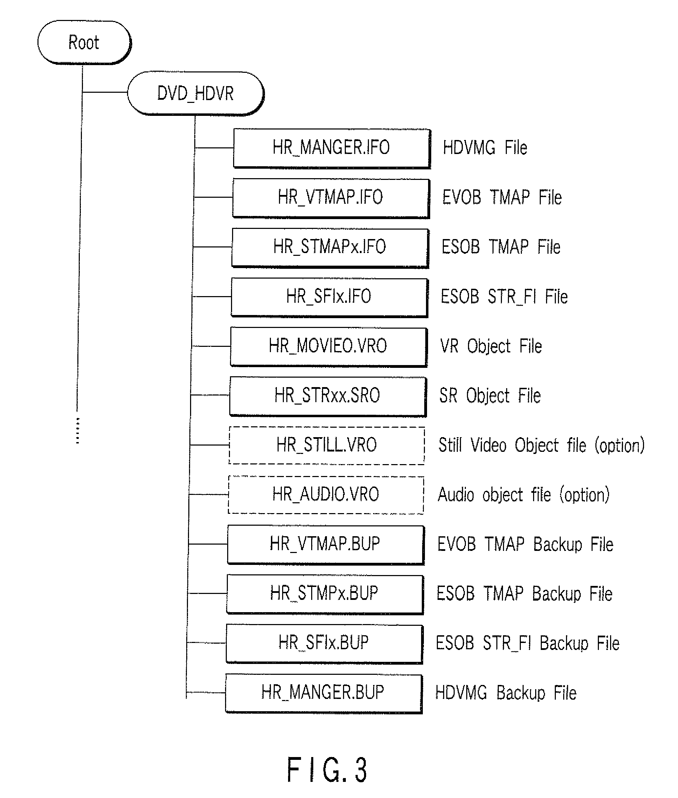

Note that different file directories are prepared in correspondence with formats (e.g., video title set (VIDEO-TS) for DVD-Video (ROM Video) and DVD-RTAV for recordable/reproducible DVD (DVD-RTR), and a new DVD standard file compatible to digital broadcast to be described in this embodiment is recorded in, e.g., a DVD_HDVR directory (to be described later with reference to FIG. 3).

That is, the DVD_HDVR directory (FIG. 3) records a VMG file used to manage data, VRO files as object files for analog recording of analog broadcast data, line-in data, and the like, and an SRO file as a digital broadcast object. The SRO file records an ESOBS.

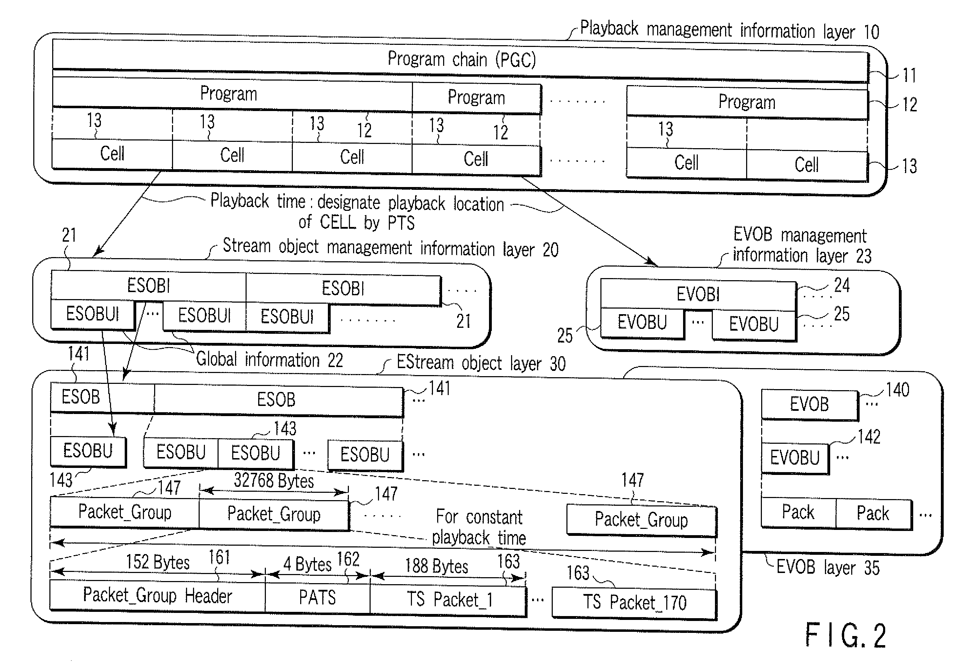

FIG. 2 is an exemplary view for explaining the relationship among a playback management information layer, object management information layer, and object layer in the data structure according to the embodiment. As shown in FIG. 2, SR management data is recorded in the VMG file common to VR, and undergoes control common to VR. SR and VR data are linked for respective cells, and the playback location is designated for each playback time. This management data is called VR MANGER.IFO (see FIG. 3). When a TMAPT is recorded as an independent file, HR_VTMAP.IFO and HR_STMAP.IFO, and HR_VTMAP.BUP and HR_STMAP.BUP as their backup files are added, as shown in FIG. 3.

The structure of each ESOBU includes one or more ESOBs 141. Each ESOB corresponds to, e.g., one program. The ESOB includes one or more ESOBUs (Extended Stream object units), each of which corresponds to object data for a given time interval (which changes depending on the value of an ESOBU_PB__TM_RNG) or one or more GOP data. When the transfer rate is low, one GOP data cannot often be sent within 1s (1 second) (VR can freely set the data unit configuration since it adopts internal encoding, but digital broadcast cannot specify the next incoming data since encoding is done by a broadcast station). On the other hand, the transfer rate may be high, and I-picture data may be sent frequently. In such case, the ESOBU is delimited frequently, and ESOBU management information increases accordingly, thus ballooning the whole management information. For this reason, it is appropriate to delimit ESOBUs by a given time interval (minimum limitation is to delimit ESOBUs by picture data except for the last ESOBU of the ESOB: the delimitation unit corresponds to an I-picture (e.g., for each sec)) or by one or more GOP data.

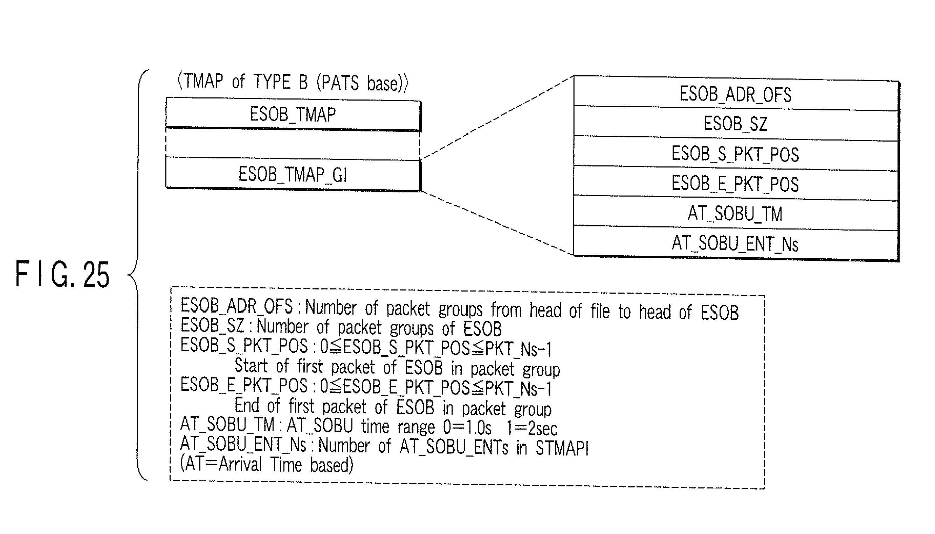

When management information is formed on the PATS base in case of a non-cognizable stream, the AT_SOBUs (Arrival Time based SOBUs) are delimited at time intervals indicated by AT_SOBU_TM data. There are two types of AT_SOBU_TM data: it is designated in seconds (see FIG. 25) or by a 27-MHz count value.

In the embodiment, one ESOBU includes one or more packet groups, each of which can correspond to 16 (or 32) Logical Blocks (1 LB = 2048 bytes; 16 LBs = 32640 bytes). Each packet group includes a Packet_Group_Header and (170) TS packets. The Arrival Time of each TS packet can be expressed by a PATS (Packet Arrival Time Stamp: 4 bytes) which is allocated before each TS packet.

The arrival times of TS packets need be linearly counted up until a video recording end time to have a video recording start time as 0 (or a predetermined value). Note that the STC and the PATS may not always indicate the same value (due to different default values or the like). However, the count interval of a PATS counter need be synchronized with that of an STC counter which corresponds to the interval between neighboring PCR fetch timings in a playback synchronized state. Note that the PCR is included in an adaptation field (not shown) in an MPEG-TS. A packet group can include a maximum of two ESOBs. That is, packet groups need not be aligned for respective ESOBs.

The management information will be described below with reference to FIGS. 3 to 36 and the like. FIG. 3 is an exemplary view for explaining the file structure according to the embodiment.

As shown in FIG. 3, the HDVR directory stores HR_MANGER.IFO as a DVD management information file, VRO files as analog video input object files, and an SRO file compatible to digital broadcast. That is, management information of stream data is saved in the VMG file, and stream data are managed on the same level as VR data. More specifically, the stream management information is saved in an ESTR_FIT (Extended Stream File Information table), and the VMG file as management information adopts a format obtained by adding the ESTR_FIT (Extended Stream File Information table) to management information of the existing DVD-VR standard.

An MPEG-TS scheme as a basic format common to broadcast schemes which broadcast (distribute) compressed moving picture data such as digital TV broadcast, broadcast that uses a wired network such as the Internet or the like, and so on is divided into a packet management data field and payload.

The payload includes data to be played back in a scrambled state. According to ARIB, a PAT (Program Association Table), a PMT (Program Map Table), and SI (Service Information) are not scrambled. Also, various kinds of management information are generated using the PMT and the SI (SDT: Service Description Table, EIT: Event Information Table, BAT: Bouquet Association Table).

The contents to be played back include MPEG video data, Dolby AC3 (R) audio data, MPEG audio data, data broadcast data, and the like. Also, the contents include information used upon playback (e.g., a PAT, a PMT, SI, and the like) although they are not directly related to the contents to be played back. The PAT includes the PID (Packet Identification) of the PMT for each program, and the PMT records the PIDs of video data and audio data.

A normal playback sequence of an STB is as follows. That is, when the user determines a program based on EPG information, the PAT is loaded at the start time of the target program. The PID of a PMT, which belongs to the desired program, is determined based on that data, and the target PMT is read out in accordance with that PID. Then, the PIDs of video and audio packets to be played back, which are included in the PMT, are determined. Video and audio attributes are read out based on the PMT and SI and are set in respective decoders. The video and audio data are extracted and played back in accordance with their PIDs. Note that the PAT, PMT, SI, and the like are transmitted at intervals of several 100 ms since they are also used during playback.

Different digital broadcast schemes are adopted in respective countries and broadcast stations: for example, DVB (Digital Video Broadcasting) in Europe; ATSC (Advanced Television Systems Committee) in U.S.A.; and ARIB (Association of Radio Industries and Businesses) in Japan.

In DVB, the video format is MPEG2, the resolutions are 1152*1440i, 1080*1920(i, p), 1035*1920, 720*1280, (576, 480)*(720, 544, 480, 352), and (288, 240)*352, the frame frequencies are 30 Hz and 25 Hz, the audio format includes MPEG-1 audio and MPEG-2 Audio, and the sampling frequencies are 32 kHz, 44.1 kHz, and 48 kHz.

In ATSC, the video format is MPEG2, the resolutions are 1080*1920(i, p), 720*1280p, 480*704(i, p), and 480*640(i, p), the frame frequencies are 23.976 Hz, 24 Hz, 29.97 Hz, 30 Hz, 59.94 Hz, and 60 Hz, the audio format includes MPEG1 Audio Layer 1 & 2 (DirecTV) and AC3 Layer 1 & 2 (Primstar), and the sampling frequencies are 48 kHz, 44.1 kHz, and 32 kHz.

In ARIB, the video format is MPEG2, the resolutions are 1080i, 720p, 480i, and 480p, the frame rates are 29.97 Hz and 59.94 Hz, the audio format includes AAC (MPEG-2 Advanced Audio Coding), and the sampling frequencies are 48 kHz, 44.1 kHz, 32 kHz, 24 kHz, 22.05 kHz, and 16 kHz.

In this manner, digital broad broadcast schemes are different in different countries, and may also be different for respective broadcast stations. For this reason, a recorder need record objects as one or a plurality of files in accordance with each individual scheme to be used.

For this reason, in the embodiment, files to be further added to the existing VR file configuration are configured to allow the presence of a plurality of "x"s in the file names HR_SFIx.IFO and HR_SFIx.bup, as shown in FIG. 3. One or more files with such configuration are added for respective broadcast schemes.

For example, when "x" = 00, such files can be used when the broadcast scheme is unknown or the recorder does not support that broadcast scheme. In this case, a stream whose broadcast scheme is unknown or a stream which is not supported by the recorder can be saved as a stream (SOB_STRB) of TYPE B. Hence, since ESTR_FI as management information for digital broadcast is changed for each broadcast station (or each broadcast scheme), a plurality of pieces of ESTR_FI exist.

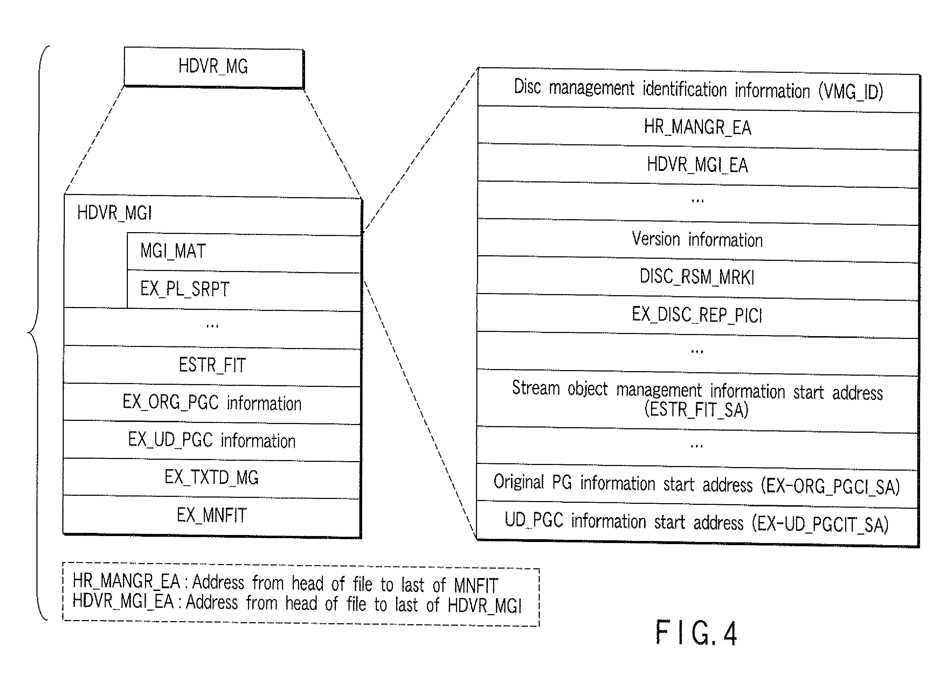

FIG. 4 is an exemplary view for explaining an example of the configuration of a field (HDVR_MGI) of management information (HDVR_MG) recorded on AV data management information recording area 130. This HDVR_MGI has a manager information table (MGI_MAT) and a playlist search pointer table (EX_PL_SRPT). The manager information table (MGI_MAT) includes disc management identification information (VMG_ID), the end address (HR_MANGER_EA: indicating the addresses from the head of HDVR_MG file to the end of an EX_MNFIT) of HDVMG file information (HR_MANGER.IFO), the end address (HDVR_MGI_EA: indicating addresses from the head of the HDVR_MG file to the end of HDVR_MGI) of the management information (HDVR_MGI), version information, disc resume information (DISC_RSM_MRKI), disc representative picture information (EX_DISC_REP_PICI), the start address (ESTR_FIT_SA) of stream object management information, the start address (EX_ORG_PGCI_SA) of original program chain information, the start address (EX_UD_PGCI_SA) of a user-defined program chain information table, and the like.

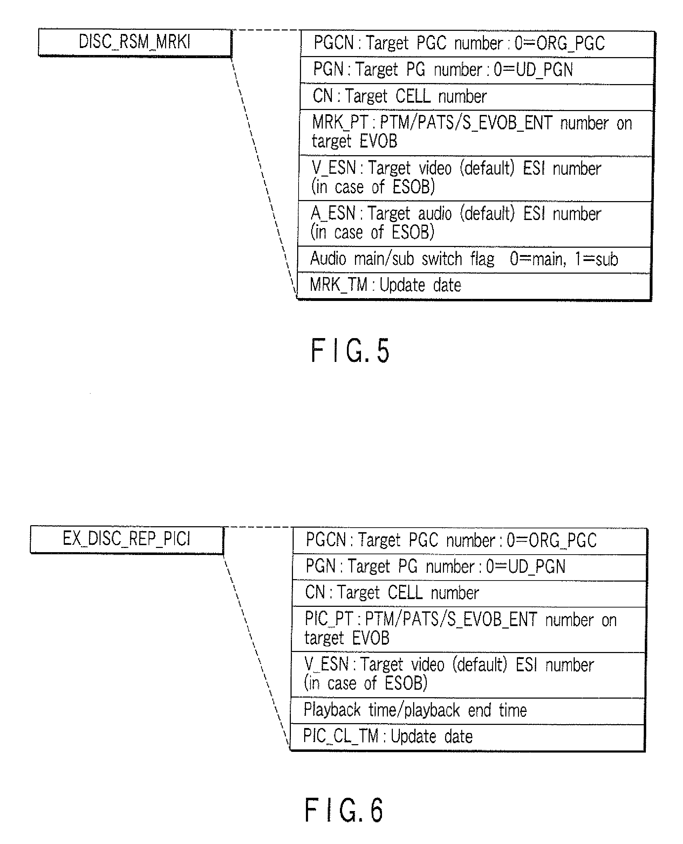

FIG. 5 is an exemplary view for explaining a practical example of the resume mark information (DISC_RSM_MRKI) of the whole disc. The DISC_RSM_MRKI is set to include program chain number PGCN, program number PGN, cell number CN, mark pointer information MRK_PT including playback start PTM and the like (including the PTM/PATS/S_ESOB_ENT number, and the like on a target ESOB), ESI number V ESN of a video stream to be played back, ESI number A_ESN of an audio stream to be played back, main/sub information in case of Dual-Mono (main/sub audio switch flag), date information MRK_TM indicating the date of creation (updating) of that marker, and the like, as information used to restart the paused playback when the playback is made throughout the whole disc.

FIG. 6 is an exemplary view for explaining a practical example of representative picture information (EX_DISC_REP_PICI) of the disc. The EX_DISC_REP_PICI is set to include picture pointer PIC_PT including the start PTM and the like of the representative picture (including the PTM/PATS/S_ESOB_ENT number, and the like on a target ESOB), ESI number V_ESN of a video stream to be played back, the playback time and/or playback end time of the representative picture, date information PIC_CL_TM indicating the date of creation (or updating) of the representative picture, and the like, in addition to program chain number PGCN, program number PGN, and cell number CN of that representative picture.

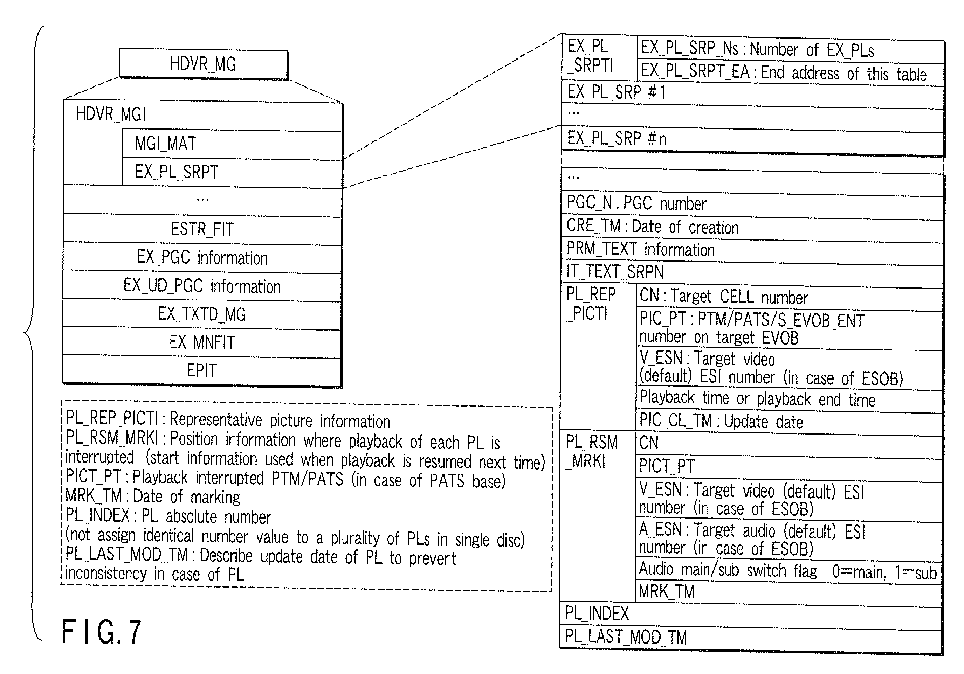

FIG. 7 is an exemplary view for explaining a practical example of the playlist search pointer table (EX_PL_SPRT). The EX_PL_SPRT includes search pointers (EX_PL_SRP#1 to EX_PL_SRP#n) to respective playlists, and each search pointer (EX_PL_SRP) includes a resume marker (PL_RSM_MRKI: a marker indicating the playback location upon pausing playback) for each playlist. As information used to restart playback, this PL_RSM_MRKI is set to include cell number CN corresponding to the resume marker, picture pointer PIC_PT (corresponding to the playback start PTM and the like) corresponding to the resume marker, date information of MRK_TM indicating the date of creation of the marker, ESI number V ESN of a video stream (default stream) to be played back, ESI number A_ESN of an audio stream to be played back, a main/sub switch flag of audio information (main/sub information in case of Dual-Mono) included in the audio stream corresponding to the resume marker, and the like.

Furthermore, each EX PL SPR includes representative picture information (PL_REP_PICTI) of the playlist of interest, which sets representative picture information (a marker of a picture to be displayed as a thumbnail on a title menu or the like) for each playlist. This PL_REP_PICTI is set to include target cell number CN, picture pointer PIC_PT (the start PTM, PATS, E_EVOB_ENT number, and the like of the representative picture of interest) on the target EVOB, ESI number V_ESN of a video stream (default stream) to be played back, the playback time or playback end time of the representative picture of interest, date information PIC_CL_TM indicating the date of creation (updating) of the marker of the representative picture of interest, and the like.

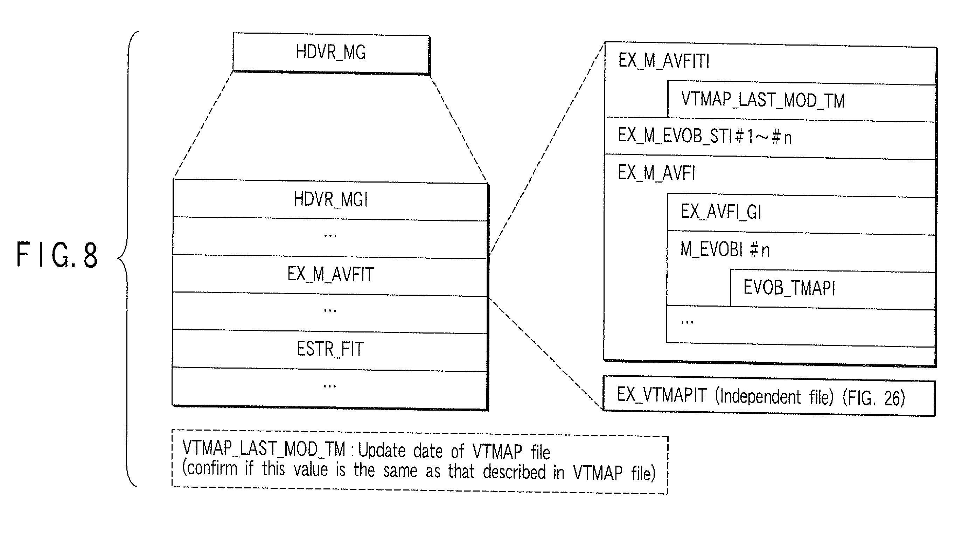

FIG. 8 is an exemplary view for explaining an example of the configuration of another field (EX_M_AVFIT) of one management information (HDVR_MG) in the data structure according to the embodiment. This EX_M_AVFIT includes movie AV file information (EX_M_AVFI), which includes a plurality of pieces of M_EVOBI#1 to M_EVOBI#n as management information for respective EVOBs as many as the number of EVOBs. Each EVOBI includes EVOB_TMAPI used to manage the TMAP of the EVOB, as shown in FIG. 8.

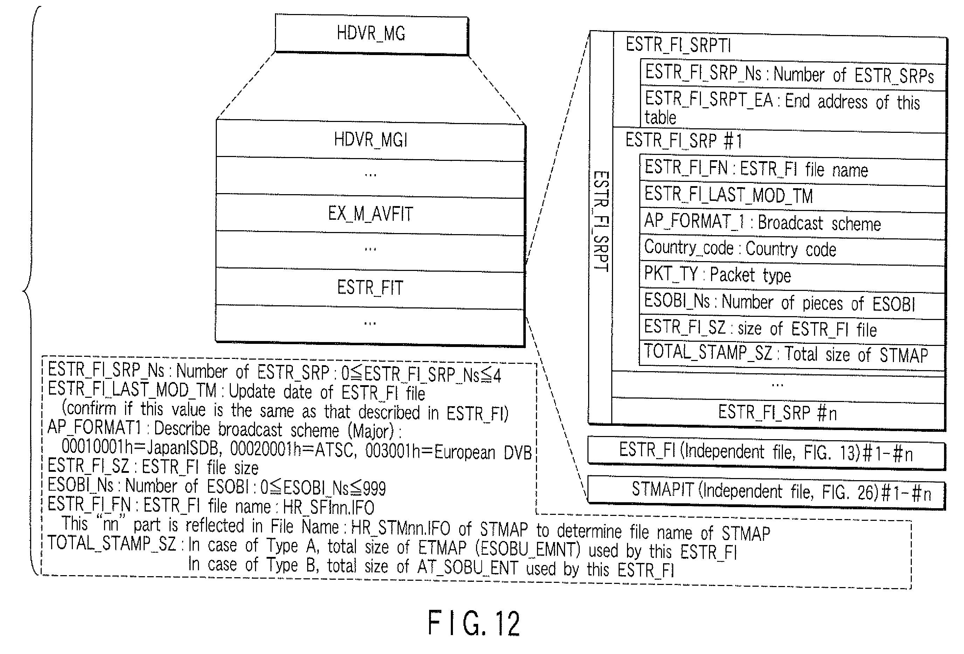

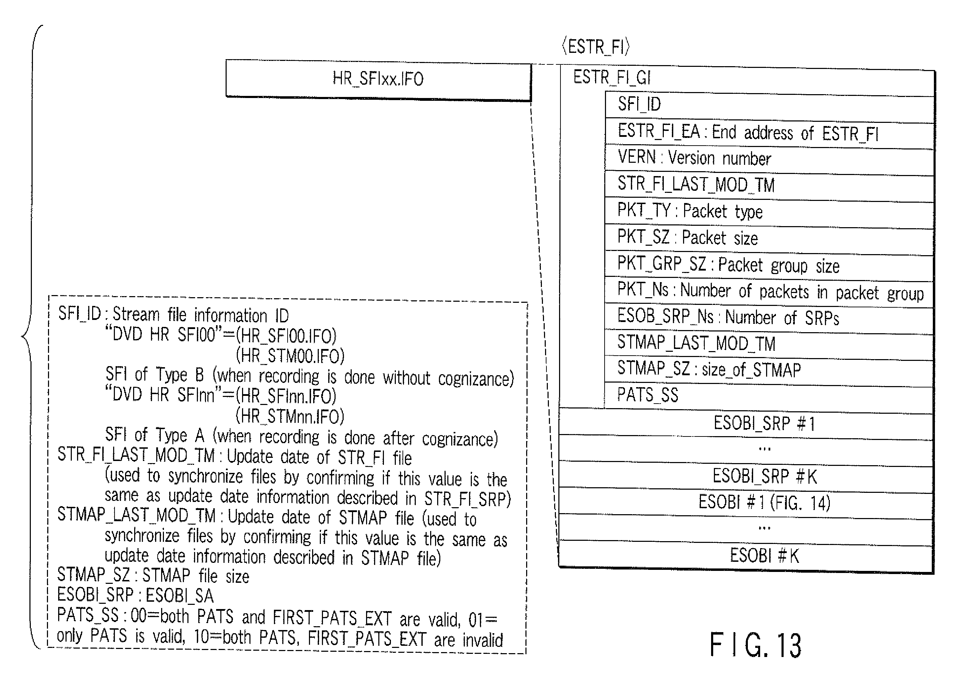

Note that EX_M_AVFITI (VTMAP_LAST_MOD_TM) in FIG. 8 can describe the update date information of a VTMAPT as a TMAP (Time Map) for Video Recording (VR) that performs self recording and playback of an analog input. Also, ESTR_FI_GI (STMAP_LAST_MOD_TM) in FIG. 13 can describe the update date information of an STMAPT as a TMAP for Stream Recording (SR) of digital broadcast recording. As a result, these values (the values of VTMAP_LAST_MOD_TM and/or STMAP_LAST_MOD_TM) are compared with corresponding update date information described in each TMAPT file. If these values are equal to each other, the processing can be proceeded since it is determined that consistency is assured.

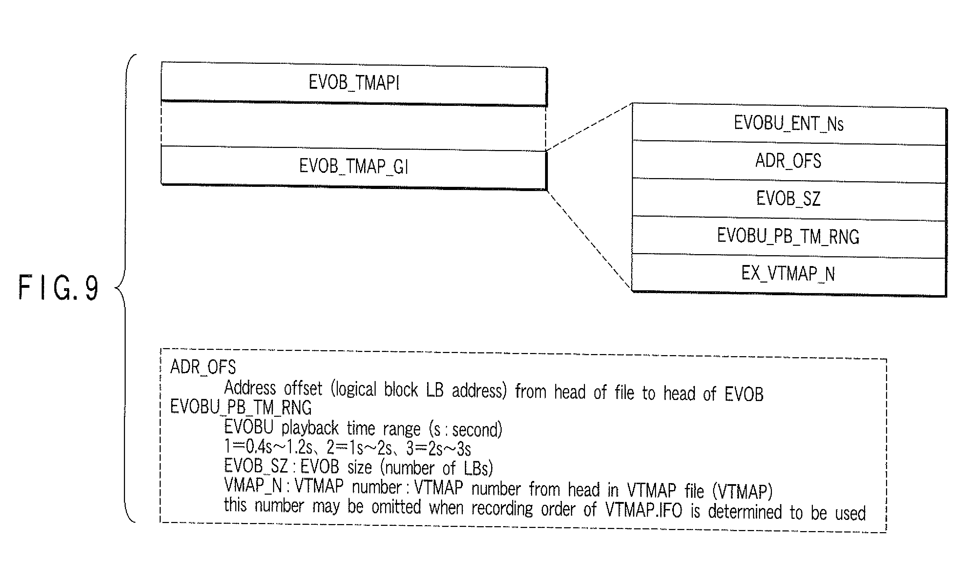

FIG. 9 is an exemplary view for explaining a practical example of the EVOB time map general information (EVOB_TMAP_GI). EVOB time map information (EVOB_TMAPI) includes EVOB_TMAP_GI, as shown in FIG. 9. This EVOB_TMAP_GI records general information used to manage the VTMAPT as an independent file. That is, the EVOB_TMAP_GI is configured to include the total number (EVOBU_ENT_Ns) of entries (EVOBU_ENT) stored in the EVOBU of interest, the start address (ADR_OFS) of the EVOBU of interest, the size (EVOB_SZ) of the EVOBU of interest, EVOBU_PB_TM_RNG that determines the time interval of entries of the EVOBU of interest, the TMAP number (EX_VTMAP_N: which may be omitted if the TMAP number is determined to have one-to-one correspondence from the head of the EVOB) in the VTMAP file, and the like.

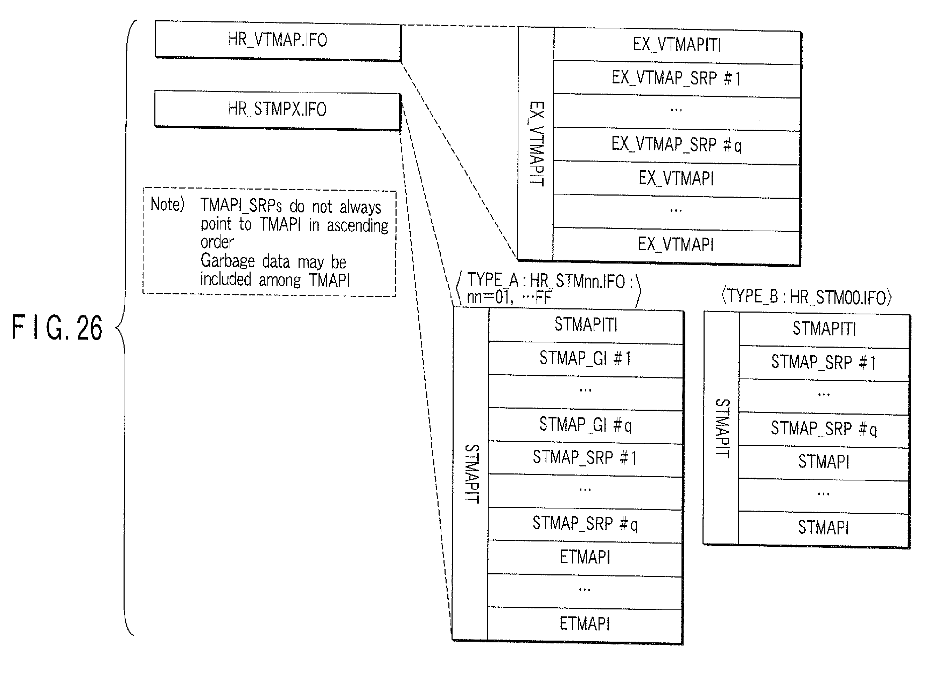

The EVOB_TMAP_GI allows to recognize information of the EVOB without reading out the TMAP file, since the TMAPs are stored in independent files (see FIG. 26). Especially, start address ADR_OFS, size EVOB_SZ, and total number EVOBU_ENT_Ns of entries of the EVOB in the EVOB_TMAP_GI allow to determine the data size to be read out from disc 100, the work RAM size to be assured, and the like before loading the TMAP file main body, thus facilitating the read preparation.

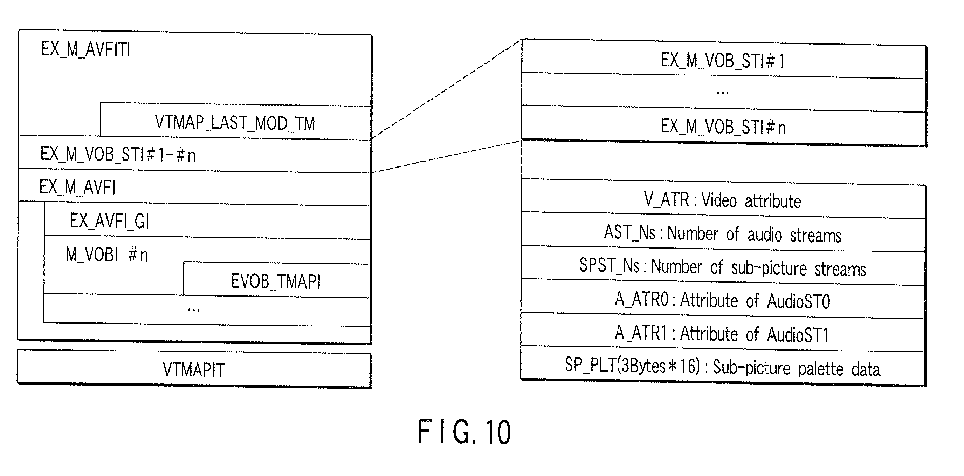

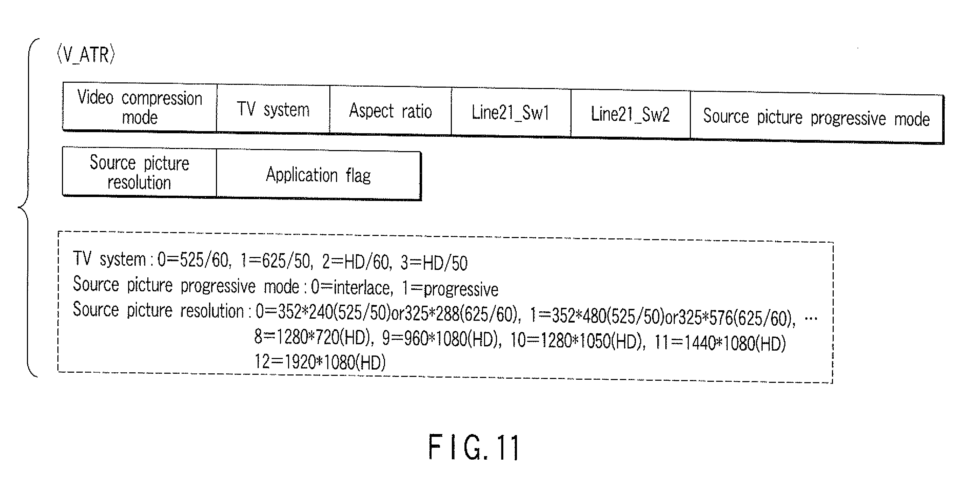

FIG. 10 is an exemplary view for explaining an example of the configuration of EX_M_VOB_STI, and FIG. 11 is an exemplary view for explaining an example of the configuration of a V ATR. As shown in FIG. 10, when the EX_M_VOB_STI is registered, an EVOB designates its corresponding EX_M_VOB_STI by number in M_EVOBI. The structure of this EX_M_VOB_STI includes V_ATR, AST_Ns, SPST_Ns, A_ATRO, A_ATR1, palette information of SP, and the like as in the existing DVD-VR.

As attributes of the EVOB, as shown in FIG. 11, a flag indicating a progressive picture or non-progressive picture is appended to Video attribute information (V ATR), Hi-Vision or High-Definition (HD) is added to "TV system", and the number of types of resolutions increases.

FIG. 12 is an exemplary view for explaining an example of the configuration of the ESTR_FIT. Stream management information is saved in the ESTR_FIT (Extended Stream File Information Table). The ESTR_FIT includes a table (ESTR_FI_SPRT) including one or more file information search pointers, one or more pieces of file information (ESTR_FI included in HR_SFIxx.IFO in FIG. 13), one or more pieces of other file information (STMAPIT included in HR_STMAPx.IFO in FIG. 26), and the like.

In this configuration, there are a plurality of pieces of ESTR_FI because there is one ESTR_FI as management information for digital broadcast for each broadcast station (or each broadcast scheme). Hence, ESTR_FI_SRPT information exists to designate an ESTR_FI file to be used. As shown in FIG. 12, its structure (ESTR_FI_SRPTI) includes the total number (ESTR_F_SRP_Ns) of ESTR_SRPs and the end address (ESTR_FI_SRPT_EA) of the table information of interest. Each ESTR_FI_SRP includes ESTR_FI_FN (ESTR_FI_file_name), ESTR_FI_LAST_MOD_TM (edit update time of the ESTR_FI file), AP_FORMAT_1 (broadcast scheme: Major categories: Japan_ISDB, ATSC, EU_DVB, etc.), Country_code (country code of video recording: e.g., JPN = Japan), PKT_TY (packet type: e.g., 1 = MPEG-TS), ESOBI_Ns (the number ESOBs or the number of AT_SOBs), ESTR_FI_SZ (ESTR_FI file size), and TOTAL_STMAP_SZ (the total size of an STMAP).

Especially, if TOTAL_STMAP_SZ sets a limitation of a maximum size of 2MB or less in the standard, the file size need be confirmed so as not to exceed that size. More specifically, the STMAP need be configured so that it can be mapped on a work RAM of an MPU within a maximum size of 2MB or less. For this purpose, TOTAL_STMAP_SZ allows confirmation of the TMAP size.

Note that the update date information (STMAP_LAST_MOD_TM in FIG. 13) is also set in the ESTR_FI file. When ESTR_FI is changed upon editing, that value is updated. Upon playback, the updated value (ESTR_FI_LAST_MOD_TM) is compared with the value (STMAP_LAST_MOD_TM) in the ESTR_FI file. If the two values are the same, playback is permitted.

The number of pieces of ESTR_FI is, e.g., four or less, and the number of pieces of ESOBI is 999 or less. A part "nn" of ESTR_FI file name: HR_SFInn. IFO is reflected on that of File Name: HR STMnn.IFO of the STMAP, thus determining the file name of the STMAP.

FIG. 13 is an exemplary view for explaining a practical example of the structure of the ESTR_FI file (HR_SFIxx.IFO). The ESTR_FI includes ESTR_FI_GI (General Information), one or more ESOBI_SRPs (Extended Stream Object Information Search Pointers), and one or more pieces of ESOBI (ESOB Information) which are as many as the ESOBI_SRP#ks and are indicated by their values (#k).

The ESTR_FI_GI includes the file name/file number (SFI_ID) of an object managed by the ESTR_FI of interest, the number (ESOBI_SRP_Ns) of ESOBI_SRPs in the ESTR_FI of interest, the Version number (VERN) of the file of interest, a packet type (PKT_TY: e.g., 1 = MPEG-TS), a packet group size (PKT_GP_SZ: e.g., fixed to 16 logical blocks), the number of TS packets in a packet group (PKT_Ns: e.g., 0xAA: fixed to 170 TS packets), the STMAP update time (STMAP_LAST_MOD_TM), an STMAP size (STMAP_SZ), and packet arrival time status (PATS_SS), and the like.

Note that a plurality of pieces of STR_FI can be assured in correspondence with the number of pieces of HR_SFIxx.IFO. These pieces of STR_FI can be prepared for respective broadcast stations and/or broadcast schemes (ARIB for Japan, ATSC for U.S.A., DVB for Europe, and the like). Also, a plurality of time maps (see ETMAPI/STMAPI in FIG.

26) can be provided in correspondence with the plurality of pieces of STR_FI.

In case of a cognizable stream (STRA of TYPE A), a TMAP can be generated on the PTM base. However, in case of a non-cognizable stream (when data cannot be descrambled or when data of a scheme different from the assumed broadcast station is input: STRB of TYPE B), the TMAP may be generated in a reception time (PATS) base in place of PTM base. However, since the PATS is not a playback time, special playback or the like which is accurate in terms of time cannot be made, but rough special playback (fastforwarding playback, rewinding playback, or the like which allows the user to roughly confirm the recorded contents) can be made.

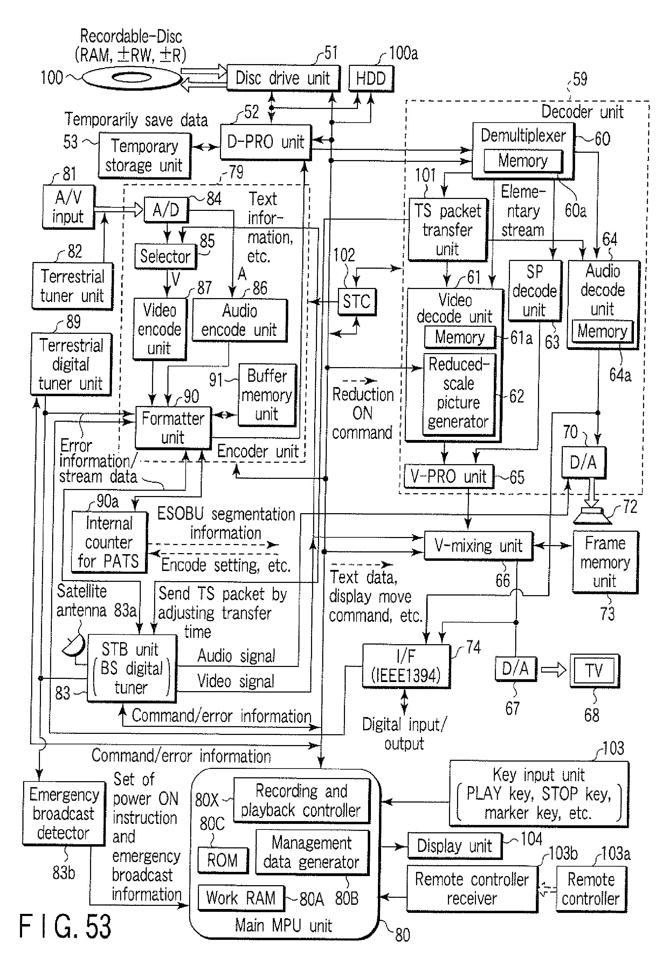

In FIG. 13, PATS_SS includes a value indicating the accuracy of the PATS. For example, when an apparatus shown in FIG. 53 to be described later fetches data itself of a network, IEEE1394, or the like, the PATS includes 4 bytes or is a dummy in some cases. In order to cope with such case, PATS_SS values "00 = both PATS and FIRST_PATS_ EXT are valid: accuracy 6 bytes)", "01 = only PATS is valid: accuracy 4 bytes", and "10 = both PATS and FIRST_PATS_ EXT are invalid: no accuracy" are prepared.

As one of features of digital broadcast, for example, multi-view broadcast is known. In multi-view broadcast, a plurality of video data are broadcasted at the same time (by time sharing), and the user can play back one of these video data of his or her choice. In this manner, the user can select one of a plurality of contents according to his or her taste or the like. For example, when a recorder receives, as one TS, streams X, Y, and Z as multi-view broadcast and stream U as rain attenuation, the control has to be made to allow the user to select and play back a relevant stream upon playback, and to freely switch among streams using a key. To cope with this, grouping information (GPI) is added to achieve this object.

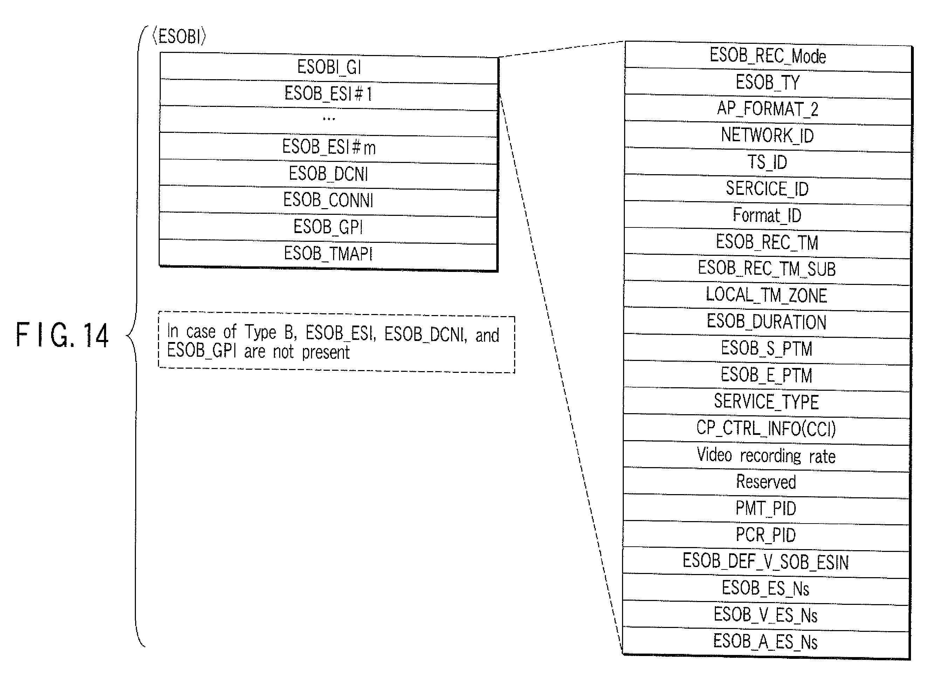

FIG. 14 is an exemplary view for explaining an example of the configuration of ESOBI_GI included in the ESOBI shown in FIG. 13. The ESOBI_GI includes various kinds of information shown in FIG. 14 in the order listed in FIG. 14. That is, the ESOBI includes ESOBI_GI, ESOB_ESI which corresponds to ESOBI_V_ESI (Extended Video Elementary Information), ESOB_A_ESI (Extended Audio Elementary Information), and/or ESOB_OTHER_ESI (Other Elementary Information), ESOB_DCNI (Discontinuity Information), ESOB_CONNI (ESOB Connect Information), ESOB_ES_GPI (ESOB_ES Group Information), ESOB_TMAP (ESOB Time Map), and the like.

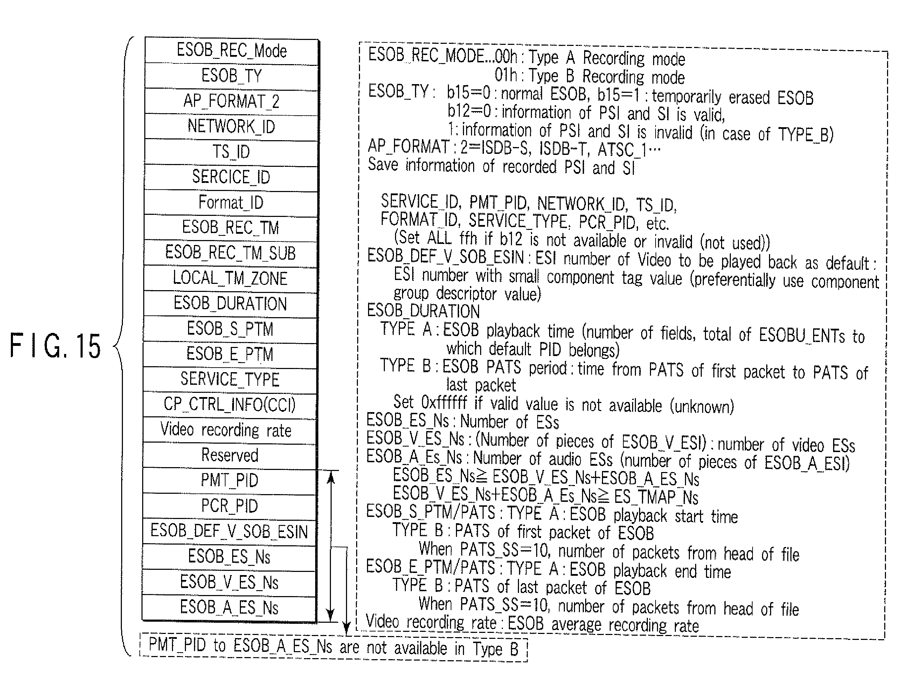

FIG. 15 is an exemplary view for explaining various kinds of information included in the ESOBI_GI. FIG. 15 shows the contents of various kinds of information shown in FIG. 14. That is, the ESOBI_GI includes ESOB_REC_ MODE, ESOB_TY, AP_FORMAT_2 (Minor: 1 = ISDB-S: BS/CS broadcast, 2 = ISDB-T: terrestrial digital broadcast), video recording start time (EVOS_REC_TM), video recording time period (ESOB_DURATION: ALL 0xff if no valid value is available), start Presentation Time (ESOB_S_PTM), end Presentation Time (ESOB_E_PTM), and the like. Furthermore, the ESOBI_GI records SERVICE_ID, PTM_PID, NETWORK ID, TS_ID, FORMAT_ID, SERVICE_TYPE, PCR_ PID, and the like based on PSI and SI values. Moreover, the ESOBI_GI includes ESOB_ES_Ns (the number of ESs selected for video recording), ESOB_V_ES_Ns (the number of ESs for which TMAP data are generated of recorded video ESs), ESOB_A_ES_Ns (the number of ESs for which TMAP data are generated of recorded audio ESs), a recording rate, and the like.

Note that in case of TYPE_B, a stream is often recorded without being cognized. In this case, since it is determined that the PSI and SI values are unknown (or unreliable), SERVICE_ID, PMT_PID, NETWORK_ID, TS_ID, FORMAT_ID, SERVICE_TYPE, PCR_PID, and the like cannot be described. In such case, a flag indicating invalidity of information of PSI and PI can be set in ESOB_TY: b12. In this case, the values of SERVICE_ID, PMT_PID, NETNORK_ ID, TS_ID, FORMAT_ID, SERVICE_TYPE, and PCR_PID become invalid.

In place of the whole flag (b12 of ESOB_TY), invalid values (0xff) may be set for respective values of SERVICE_ ID, PMT_PID, NETMORK_ID, TS_ID, FORMAT_ID, SERVICE_TYPE, and PCR_PID, and these values may be set in case of invalidity. However, even in TYPE_B, PSI and SI values may often be valid.

The ESOB_REC_MODE included in the ESOB_GI indicates the TYPE of stream: 00h = a recording mode of Type A, and 01h = a recording mode of Type B. Type A is a stream whose stream structure is cognizable, and whose management information is managed on the PTM base. On the other hand, Type B is a stream whose structure is not cognizable and, hence, whose management information is managed on the PATS base. For this reason, Type A adopts a TMAP on the PTM base, and Type B adopts a TMAP on the PATS base. Also, the ESOB_TY includes a TE flag indicating temporary erase or not, and a Flag indicating the validity/invalidity of data generated based on the PSI and SI.

Note that ESOB_ES_Ns, ESOB_V_ES_Ns, ESOB_A_ES_Ns, and ES_TMAP_Ns have the following relations:

ESOB_ES_Ns ≥ ESOB_V_ES_Ns + ESOB_A_ES_Ns
ESOB_V_ES_Ns + ESOB_A_ES_Ns ≥ ES_TMAP_Ns

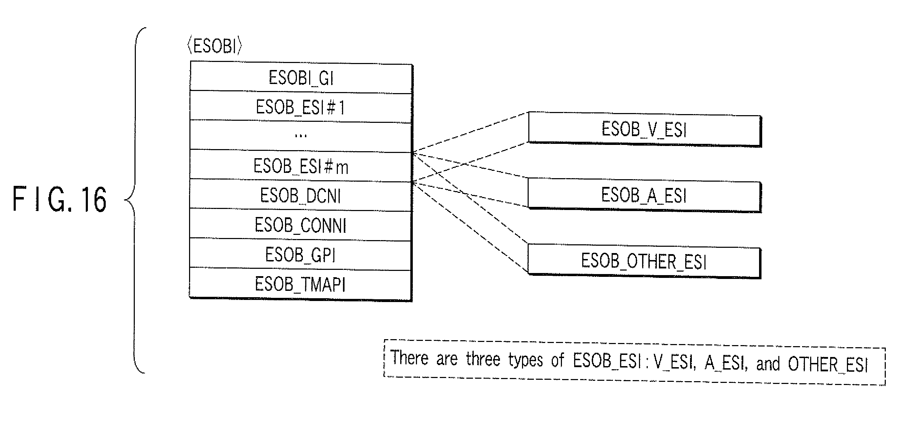

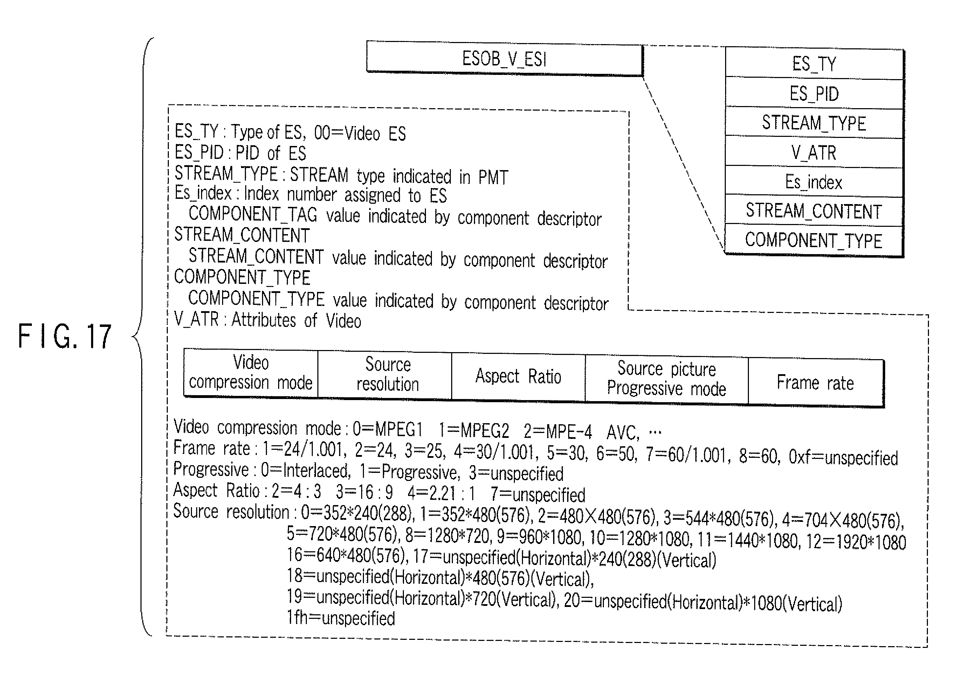

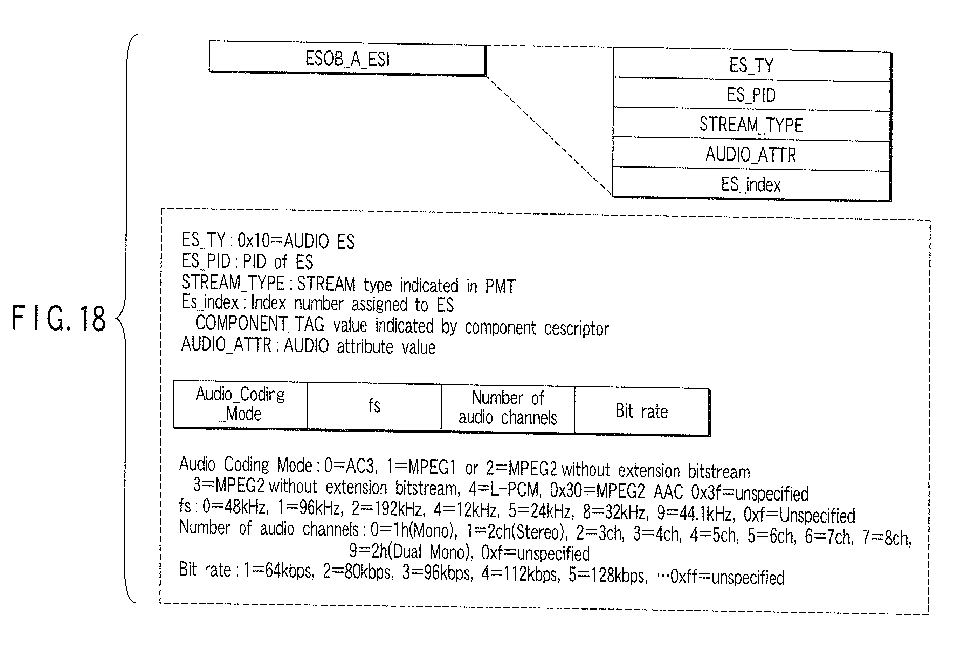

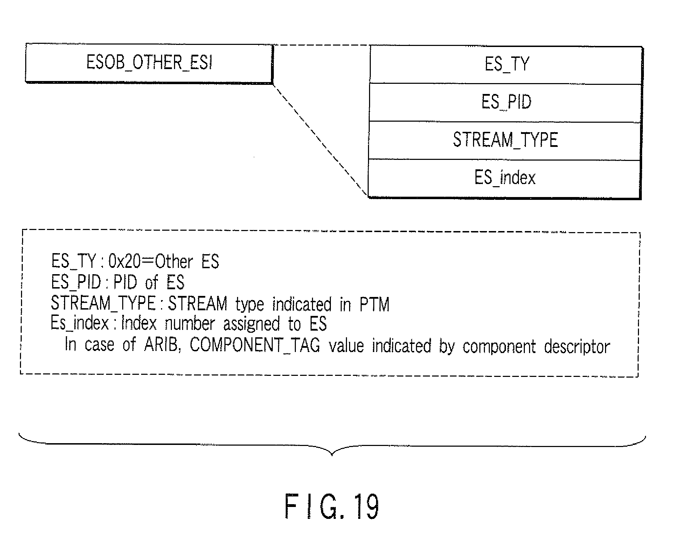

FIG. 16 is an exemplary view for explaining an example of the configuration of the ESOB ESI. As shown in FIG. 16, the ESOB_ESI is classified into three types (ESOB_V_ESI in FIG. 17, ESOB_A_ESI in FIG. 18, and ESOB_ OTHER__ESI in FIG. 19). ESOB_ES_PID (the PID of an ES), STREAM_TYPE (STREAM type indicated in the PMT), STREAM_CONTENT (STREAM_CONTENT value indicated by the component descriptor), COMPONENT_TYPE (the value of COMPONENT_TYPE indicated by the component descriptor), and Es_Index (example: in case of ARIB, the value of COMPONENT_TAG indicated by the component descriptor, i.e., an index number uniquely assigned to an ES in the ESOB of interest) are common to these three different types of ESOB_ESI. Furthermore, V_ATR is added to ESOB_V_ESI.

FIG. 17 is an exemplary view for explaining an example of the configuration of ESOB_V_ESI, and an example of the configuration of video attribute V_ATR included in this ESOB_V_ESI. The V_ATR describes a Video compression mode (the type of compression mode: 1 = MPEG1, 2 = MPEG2, 3 = MPEG4_AVC, 4 = VC-1,...), Aspect Ratio (0 = 4 : 3, 1 = 16 : 9), Source resolution (0 = 352*240 (288), 1 = 352*480 (576), 2 = 480*480 (576), 3 = 544*480 (576), 4 = 704*480 (576), 5 = 720*480 (576), 8 = 1280*720, 9 = 960*1080, 10 = 1280*1080, 11 = 1440*1080, 12 = 1920*1080, 16 = 640*480 (576), 17 = unspecified (Horizontal)*240 (288) (Vertical), 18 = unspecified (Horizontal)*480 (576) (Vertical), 19 = unspecified (Horizontal)*720 (Vertical), 20 = unspecified (Horizontal)*1080 (Vertical), 1fh = unspecified), Source picture progress mode (0 = Interlace, 1 = Progressive, 3 = unspecified), frame rate (1 = 24/1.001, 2 = 24, 3 = 25, 4 = 30/1.001, 5 = 30, 6 = 50, 7 = 60/1.001, 80 = 60, 0xf = unspecified), and the like.

Note that "unspecified" is set to describe it if the contents of an object cannot be examined when it is not determined based only on interpretation of PSI and SI. In ARIB, especially, since the vertical resolution alone is specified but the horizontal resolution is unspecified by interpreting only the descriptor, only the vertical resolution can be described.

FIG. 18 is an exemplary view for explaining an example of the configuration of ESOB_A_ESI, and an example of the configuration of audio attribute AUDIO_ATTR included in this ES08_A_ESI. The A_ESI further includes AUDIO_ATTR (AUDIO attribute values). The AUDIO_ATTR includes an audio coding mode (0 = AC-3, 2 = MPEG1 or MPEG2 without extension bitstream, 3 = MPEG2 with extension bitstream, 4 = L-PCM, 0x30 = MPEG2 AAC, 0x3f = unspecified), Sampling frequency (0 = 48 kHz, 1 = 96 kHz, 2 = 192 kHz, 4 = 12 kHz, 5 = 24 kHz, 8 = 32 kHz, 9 = 44.1 kHz, 0xf = Unspecified), the number of audio channels (0 = 1ch (Mono), 1 = 2ch (Stereo), 2 = 3ch, 3 = 4ch, 4 = 5ch, 5 = 6ch, 6 = 7ch, 7 = 8ch, 9 = 2ch (Dual Mono), 0xf = unspecified), and the like. These values are set based on those of the component descriptor.

FIG. 19 is an exemplary view showing an example of the configuration of ESOB_OTHER_ESI. The ESOB_OTHER_ESI includes ES_TY, ES_PID, STREAM_TYPE, and COMPONENT TAG as in the ESOB_V_EST in FIG. 17 or ESOB_A_ESI in FIG. 18. Note that ESOB_OTHER_ESI may have a reserved area in addition to these areas, and can describe various kinds of information (data encoding identifier, additional information of this identifier, copy control information, etc.) in this reserved area as needed.

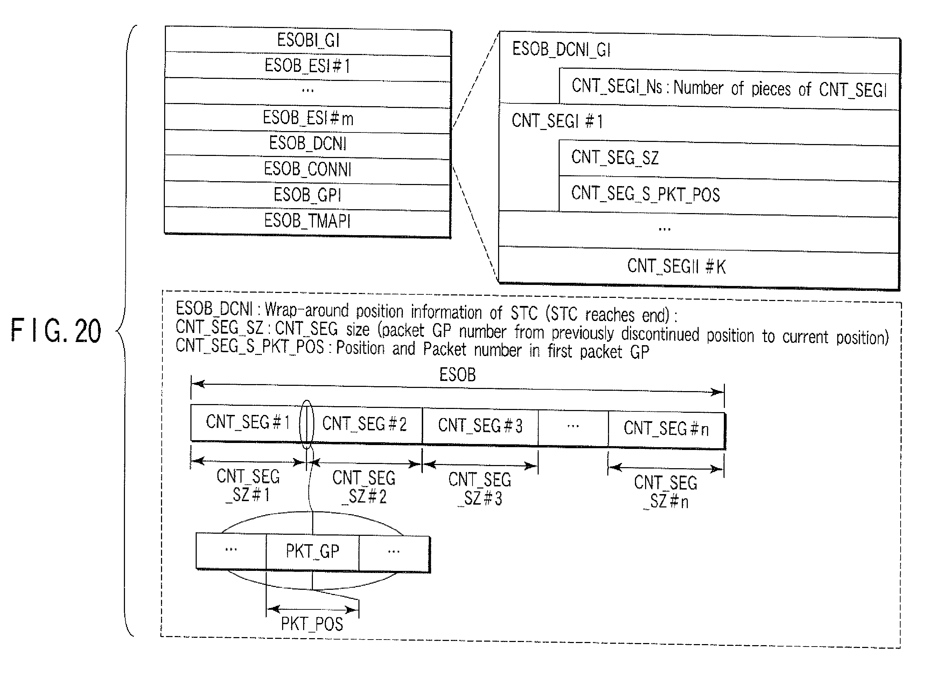

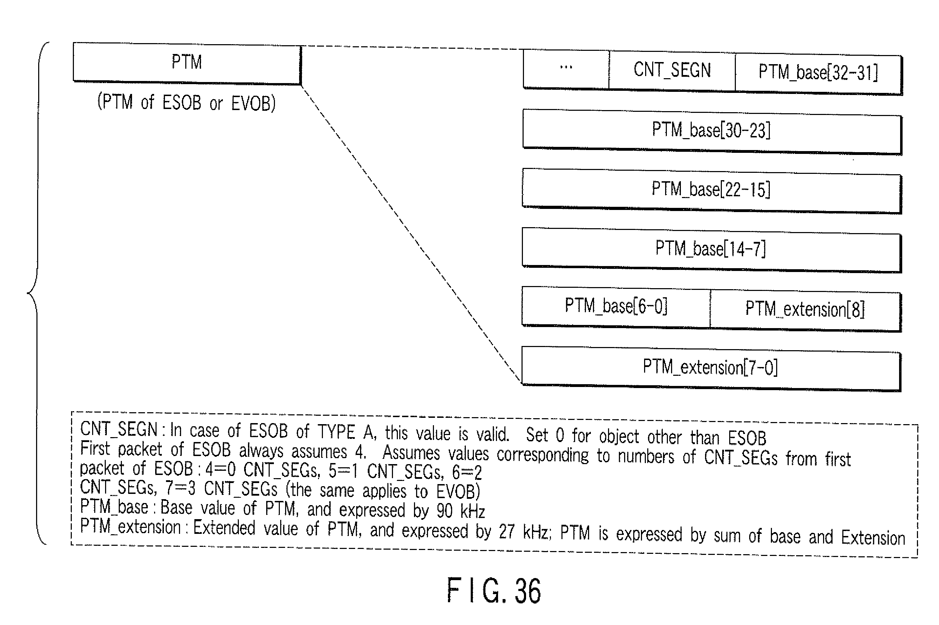

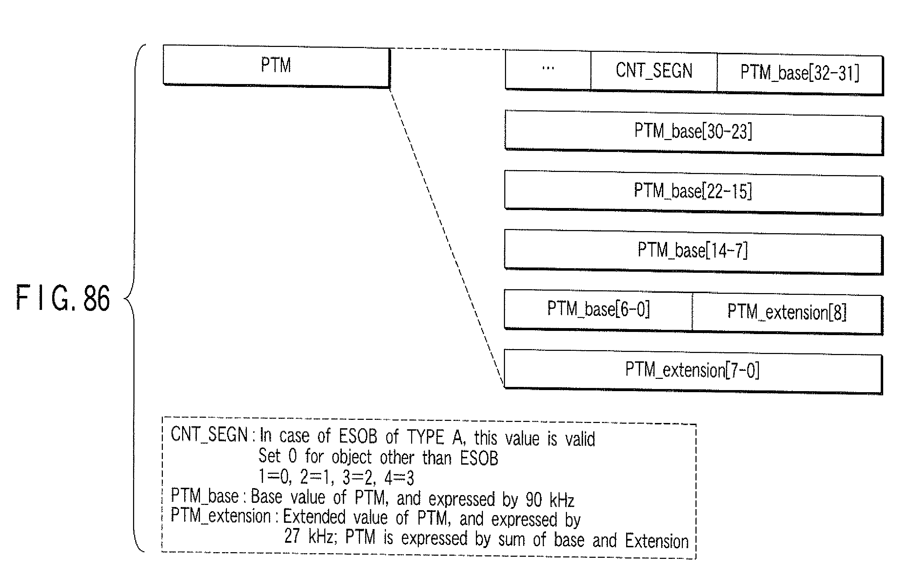

FIG. 20 is an exemplary view for explaining a practical example of the ESOB_DCNI. This ESOB_DCNI (Discontinue Information) includes DCNI_GI and CNT_SEGI#1 to CNT_SEGI#n. The DCNI_GI includes the number (CNT_SEGI_Ns) of pieces of CNT_SEGI. Each CNT_SEGI includes CNT_SEG_SZ (CNT_SEG size: the number of packet groups), and CNT_SEG_PKT_POS (the number of packets of the first CNT_SEG in a packet group). These pieces of information can indicate whether or not the count operation of system time counter STC of the recorder or player reaches an end (wrapped around). In this way, the number of CNT_SEGs from the head of an ESOB is substituted in time information PTM to confirm in advance if STC Wrap-around has occurred, and can be used in TMAP calculations and the like (see FIG. 36 or 86 for the configuration of this PTM).

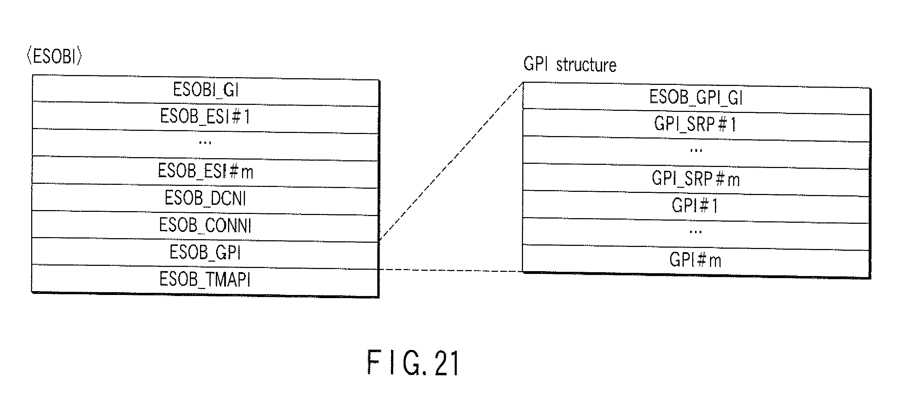

FIG. 21 is an exemplary view for explaining an example of the configuration of ESOB_GPI. The ESOB includes ESOB ES GPI to support multi-view broadcast, rain attenuation broadcast, and multi-program simultaneous video recording. That GPI (Group Information) includes ESOB_GPI_GI, one or more GPI_SRPs, one or more pieces of GPI, and the like.

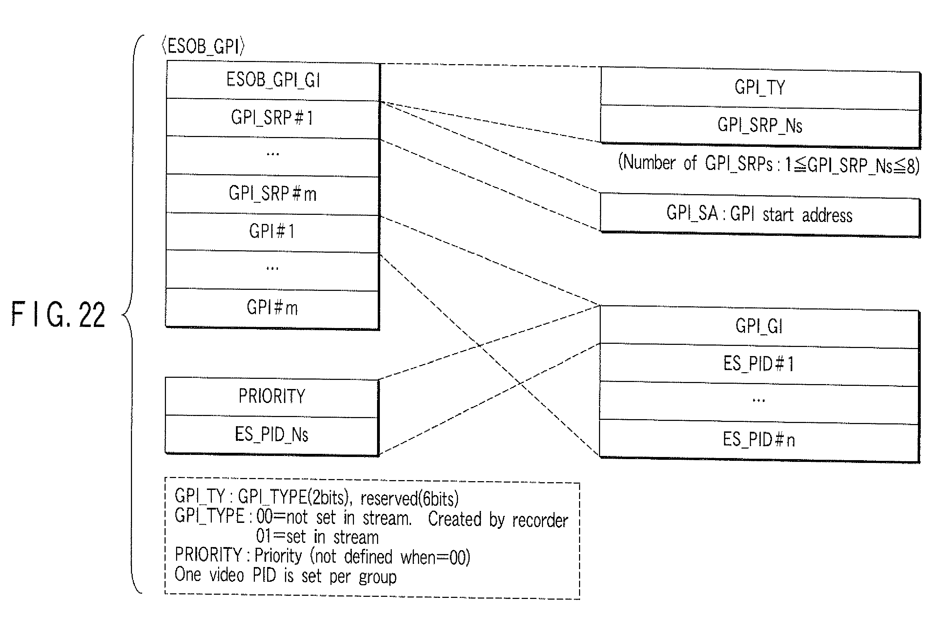

FIG. 22 is an exemplary view for explaining an example of the configuration of ESOB_GPI_GI, each GPI_SRP#, and each GPI#. The ESOB_GPI_GI stores GPI_TY (0 = created within the recorder, 1 = defined upon broadcast), and GPI_SRP_Ns (the number of ES_GPI_SRPs). Each GPI_SRP stores GPI_SA (the start address of the GPI). Each GPI includes GPI_GI and ES_PISs. The GPI_GI includes PRIORITY (priority: 0 if it is not designated, 1 = top priority), and ES_PID_Ns (the number of ESs in the group of interest). If the video PID is stored, it does not belong to an identical GP.

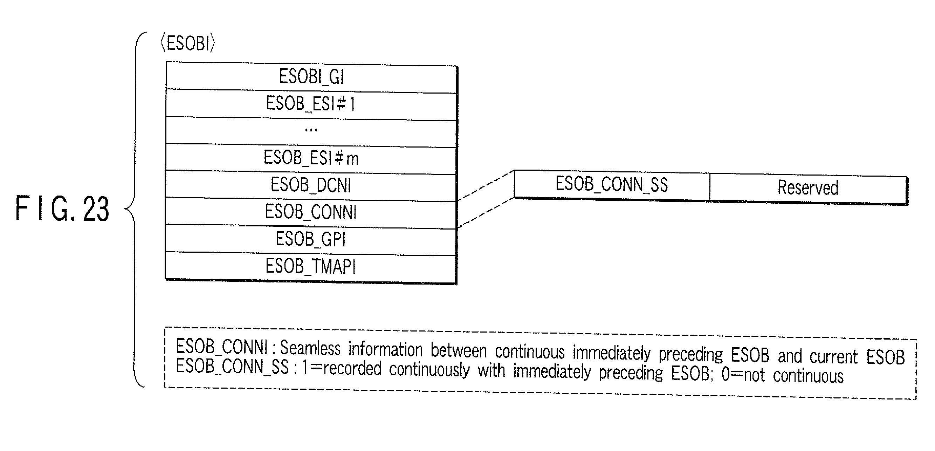

FIG. 23 is an exemplary view for explaining an example of the configuration of the ESOB_CONNI. This ESOB_CONNI (ESOB Connect Information) describes a continuous recording flag (ESOB_CONN_SS) indicating whether or not the ESOB of interest is recorded to be continuous from the immediately preceding ESOB. That is, the ESOB_CONNI can be considered as seamless information with a continuous ESOB one ESOB before. If the ESOB_CONN_SS included in the ESOB_CONNI is "1, it indicates that the ESOB of interest is recorded continuously with the preceding immediately preceding ESOB; otherwise, it indicates that the ESOB of interest is not continuous with the immediately preceding ESOB.

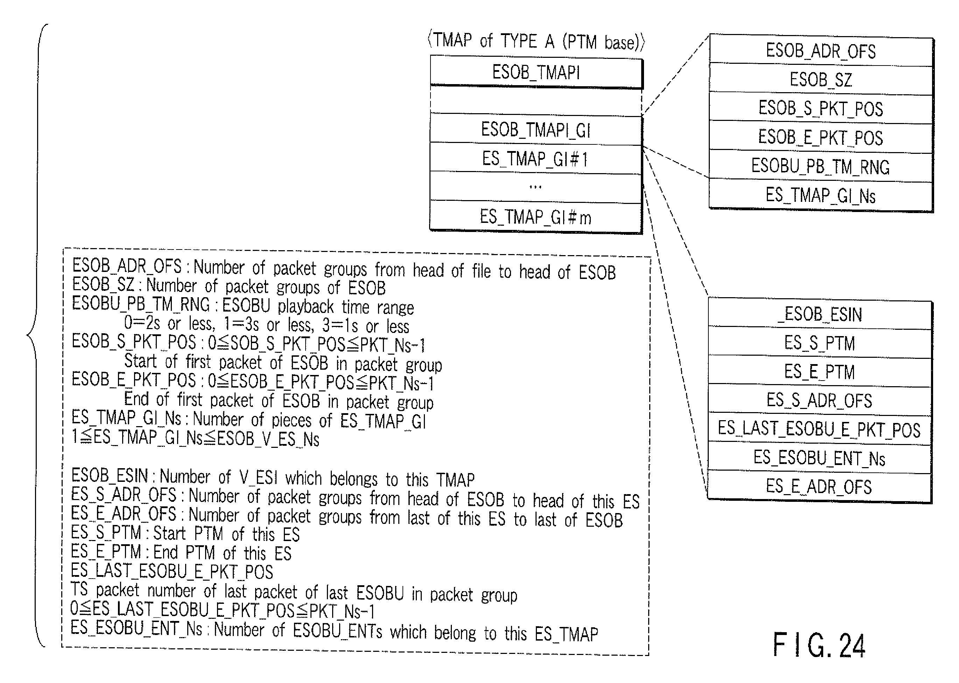

FIG. 24 is an exemplary view for explaining an example of the configuration of the ESOB_TMAP (type A). The ESOB_TMAP includes ESOB_TMAP_GI and one or more pieces of ES_TMAP_GI. Note that ESOB_TMAP_GI has one-to-one correspondence with an STMAPI_SRP in the STMAP file, and the STMAP_SRP has one-to-one correspondence with STMAPI.

The ESOB_TMAP_GI includes ADR_OFS (a packet group number (or LB address) from the head of a file to the head of an ESOB), and also includes, in case of the PTM base, ESOBU_PB_TM_RNG (ESOBU playback time range: 1 = 2s or less, 2 = 3s or less, 3 = 1s or less), ESOB_S_PKT_POS (the start position of the head of an ESOB in a packet group: $0 \le$ ESOB_S_PKT_POS < 169), ESOB_E_PKT_POS (the end position of the head of an ESOB in a packet group: $0 \le$ ESOB_E_PKT_POS $\le$ 159), ESOB_SZ (ESOB size), and ES_TMAP_GI_Ns (the number of ES_ TMAPs that belong to the ESOB of interest. Each ES_TMAPI_GI includes ESIN (the number of an ESI of a target ES of the TMAP of interest), ADR_OFS (logical addresses from the head of an ESOB file to the head of the ES of interest), ES_S_PTM (start PTM), ES_E_PTM (end PTM), ES_ESOBU_ENT_Ns (the number of ESOBU_ENTs), LAST_ESOBu_ E_PKT__POS (position of the last ESOBU in a packet group), and STMAP_N (the number of a TMAP in the STMAPT, which belongs to the ES of interest: this number may be omitted when TMAPs are recorded in turn in each STMAPT).

Note that TMAPI information can be prevented from becoming extremely large by setting ESOBU_PB_TM_ RNG (the same applies to EVOBU_PB_TM_RNG in FIG. 9) even when a video recording time increases. However, since the time interval between neighboring entries broadens, it is more likely to disturb smooth double-speed playback and the like.

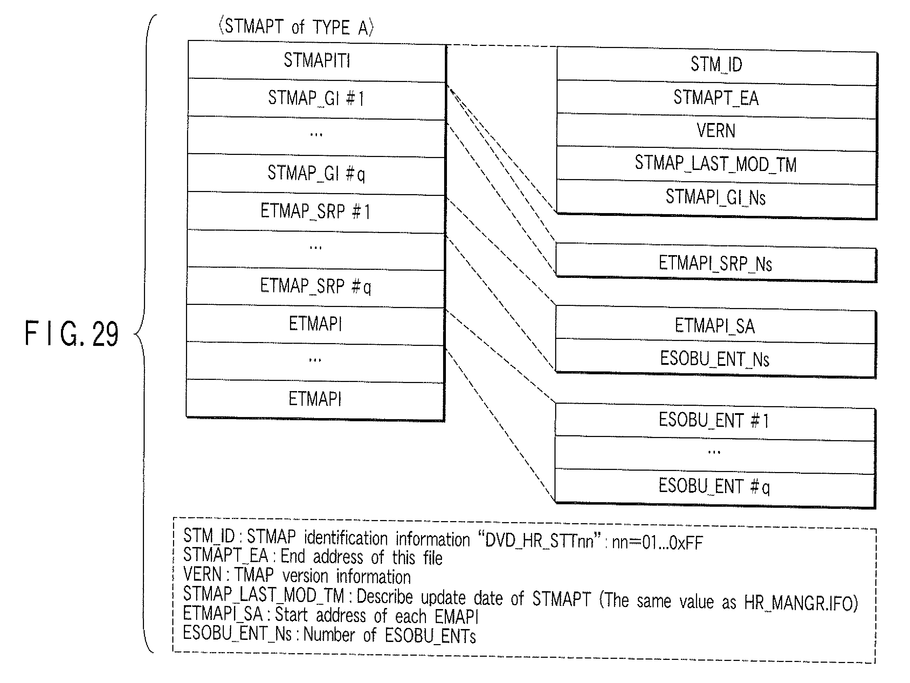

Note that the ESOB_TMAP_GI (FIG. 24) has one-to-one correspondence with STMAP_GI (FIG. 26) in the STMAP file, and the ES_TMAP_GI (FIG. 24) which belongs to the ESOB_TMAP corresponds to ETMAPI (FIG. 26). That is, the value of the number of pieces of ES_TMAP_GI (ES_TMAP_GI_Ns in the ESOB TMAP GI: FIG. 24) matches the number of ETMAPI__SRPs (or the number of pieces of ETMAPI) (ETMAP_SRP_Ns in STMAPI_GI: FIG. 29).

For this reason, when TMAP data are extracted (checked) from the PID data of a Video ES to be played back in an ESOB, ESTMAP_GI having an ESI number corresponding to the PID data of the Video ES to be played back is inspected from those in ESOB_TMAPI, and the numbers (order) in that ESOB are retained. Then, ETMAPI_SRPs are determined in the order in the ESOB in the STMAPI_GI corresponding to the ESOB_TMAP_GI, and ETMAPI is specified based on each SRP information. Which ETMAP_SRP belongs to the STMAP_GI is determined by adding number of ETMAPI_SRPs as that in the STMAPI_GI from the first one.

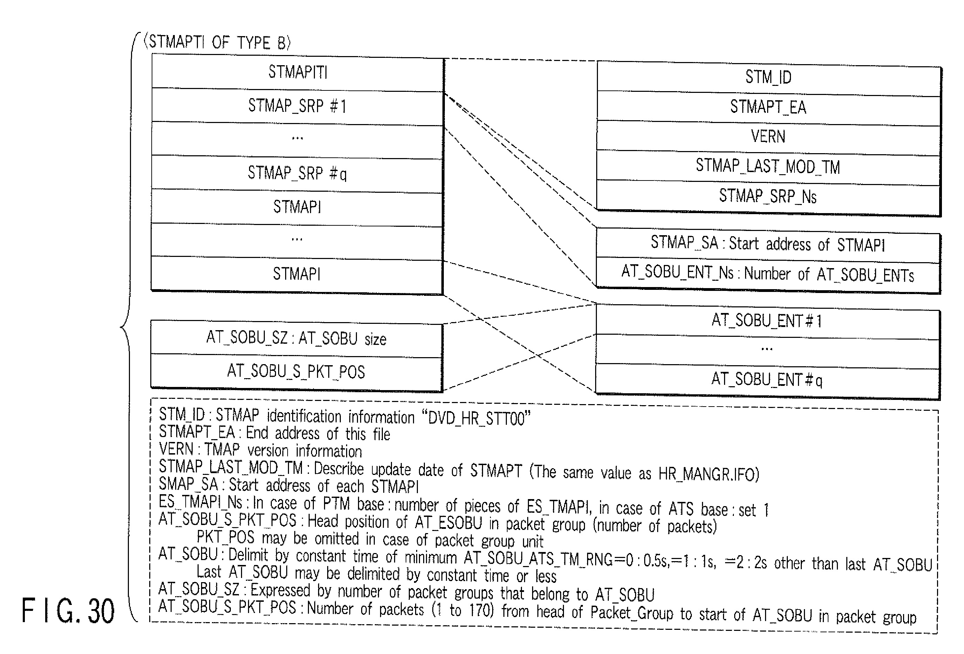

FIG. 25 is an exemplary view for explaining an example of the configuration of the ESOB_TMAP (type B). FIG. 25 (or FIG. 30 to be described later) shows an example of an actual TMAP structure on the PATS base. In FIG. 25, ESOB_ADR_OFS indicates the number (LBN) of logical blocks from the head of a file to that of an ESOB.

ESOB_SZ is the number of packet groups from a packet group to which the head of an AT_SOB belongs to that to which the end of the AT_SOB belongs. ESOBU1_SZ is the number of packet groups from the first packet group of an ESOBU to the last packet group of the ESOBU. Each ESOBU_S_PKT_POS represents the difference between the divisions of the ESOBU and packet group using the number of packets.

Time information is expressed by PATS data to have ESOB_S_PATS as the ESOB start time, and ESOB_E_ PATS as the end time, since it is on the PATS base. However, the ESOB_E_PATS is the PATS (arrival start time) of the last packet of the last Packet group, and is not the last reception end time. The edit processing is done for respective ESOBUs, and the playback start time (CELL_S_PATS of CELLI) is designated. Since the edit processing is done for respective ESOBUs, each ESOB_S_PATS always matches the head of the ESOBU.

In case of the PATS base, the ESOB_TMAP_GI includes ESOB_ADR_OFS (a packet group number (or LB address) from the head of a file to the head of an ESOB), AT_SOBU_TM (arrival time interval of ESOBUs: 0 = 1s, 1 = 2s), ESOB_S_PKT_POS (the start position of the head of an ESOB in a packet group: $0 \le$ ESOB_S_PKT_POS $\le$ 169), ESOB_E_PKT_POS (the end position of the head of an ESOB in a packet group: $0 \le$ ESOB_E_PKT_POS $\le$ 169), AT_ SOBU_ENT_Ns (the number of AT_SOBU_ENTs which belong to the ESOB of interest), and ESOB_SZ (ESOB size). The edit processing is done for respective AT_SOBUs, and the adjustment processing is done based on PATS start time and PATS end time (CELLI).

FIG. 26 is an exemplary view for explaining an example of the configuration of HR_VTMAP.IFO and HR_ STMAPx.IFO included in the DVD_HDVR directory. An STMAPIT is recorded in an area (file) independent from an EX_ VTMAPIT. This STMAPIT (in case of TYPE A) includes STMAPITI, one or more pieces of STMAPI_GI, and one or more ETMAP_SRPs, and a plurality of pieces of ETMAPI as many as the number of ETMAP_SRPs. On the other hand, the STMAPIT (in case of TYPE B) includes STMAPITI, one or more STMAP_SRPs, and a plurality of pieces of STMAPI as many as the number of STMAP_SRPs.

A normal DVD recorder has time map information (TMAPI) as video object (VOB) management information. This information is used to divide an EVOB or ESOB into EVOBUs or ESOBUs, and to allow playback, special playback, and the like using these playback units. However, one piece of information is added per a maximum of 0.5s. For this reason, if the disc size increases or a compression method with high compression efficiency is adopted in the future, the number of pieces of TMAPI increases, and complicated management is done upon execution of edit processing or the like. If the time map information is included in the management information (.IFO), non-related data in other fields need be moved or rewritten every time TMAPI is changed, resulting in poor efficiency. In order to improve such situation, TMAPI is recorded in an independent field (see FIG. 26).

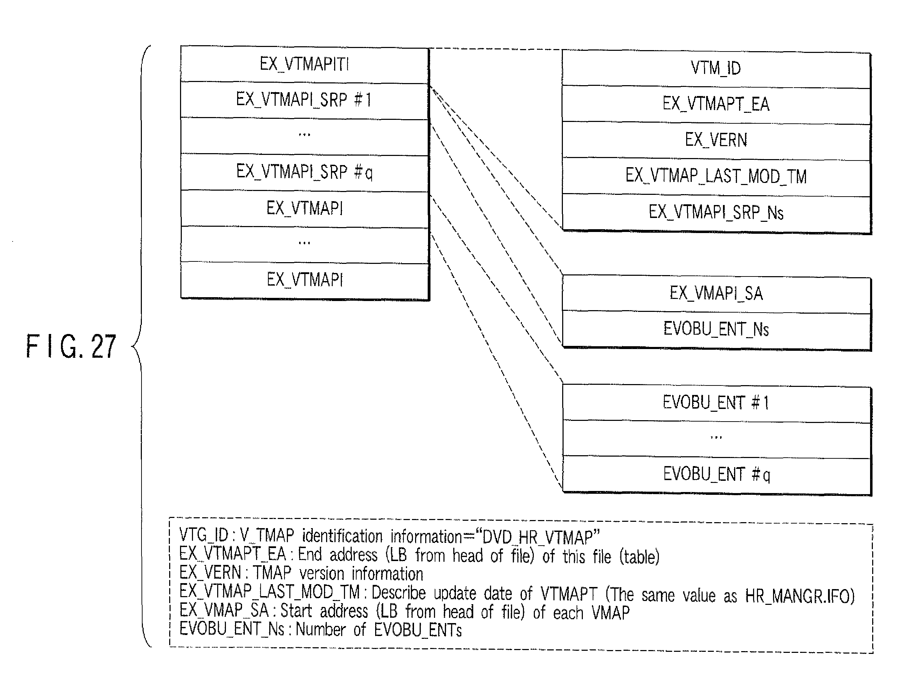

FIG. 27 is an exemplary view for explaining an example of the configuration of EX_VTMAPTI, each EX_VTMAP_ SRP#, and each EX_VTMAPI. The EX_VTMAPTI includes EX_VTMAPITI, EX_VTMAPI_SRPT, and EX_VTMAPI#1 to EX_VTMAPI#n. The EX_VTMAPITI includes VMG_ID (the same value as VMG_ID located at the head of VMGI), EX_VTMAPT_EA (the end address of the VTMAP), EX_VERN (version information of the TMAP), EX_VTMAP_LAST_MOD_TM (update date information of the TMAPT, the same value as HR_MANGR.IFO), and EX_VTMAP_SRPNs (the total number of pieces of search information). The VTMAP_SRPT includes one or more VTMAP_SRPs (search information of respective VTMAPs). Furthermore, each VTMAP_SRP includes VTMAP_SA (the start address of the VTMAP) and EVOBU_ENT_Ns (the total number of EVOBU_ENTs). The VTMAP includes one or more EVOBU_ENTs.

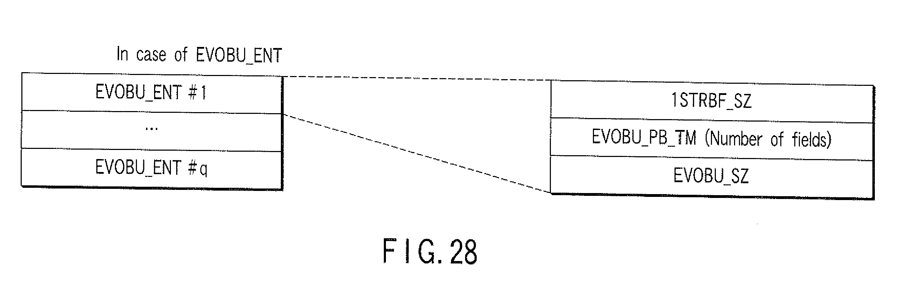

FIG. 28 is an exemplary view for explaining an example of the configuration of the contents of each EVOBU_ENT. Each EVOBU_ENT includes size 1stREF_SZ of the first reference picture in the entry of interest, playback time EVOBU_PB_TM (which can be indicated by the number of fields) of the EVOBU of interest, and size EVOBU_SZ of the EVOBU of interest. Note that the "reference picture" means picture data which can form (or decode) a picture for one frame (or field) by only one compressed picture, and I-picture data corresponds to the reference picture taking MPEG2 as an example.

FIG. 29 is an exemplary view for explaining an example of the configuration of various kinds of information included in an STMAPT (type A). FIG. 30 is an exemplary view for explaining an example of the configuration of various kinds of information included in an STMAPT (type B).

As shown in FIG. 29, STMAPITI of type A on the PTM base includes STMAPIT identification information (STM_ID), end address information (STMAPIT_EA) of the STMAPIT, version information (VERN) of the TMAP of interest, update date information (STMAPI_LAST_MOD_TM: the same value as in VMGI) of the STMAPI, the number of pieces of STMAPI_GI (STMAPI_GI_Ns), and the like. STMAPI_GI includes the number of ETMAPI_SRPs (ETMAPI_SRP_Ns) which belong to the STMAPI_GI, and ETMAPs which belong to the STMAP are determined in the number sequence from the first one. The ETMAPI_SRP includes start address information (ETMAPI_SA) to ETMAPI, and the number of ESOBU_ENTs (ESOBU_ENT_Ns). The ETMAPI includes one or more ESOBU_ENTs. Note that garbage data may be inserted among ESOBU_ENTs.

On the other hand, as shown in FIG. 30, STMAPITI of type B on the PATS base includes STMAPIT identification information (STM_ID), end address information (STMAPIT_EA) of the STMAPIT, version information (VERN) of the TMAP of interest, update date information (STMAPI_LAST_MOD_TM: the same value as in VMGI) of the STMAPI, STMAPI__SRP_Ns (the number of pieces of TMAP_SRPI = the number of pieces of TMAPI), and the like. An STMAPI_SRP includes start address information (STMAPI_SA) to STMAPI and the number of AT_SOBU_ENTs (AT_SOBU_ENT_Ns). STMAPI includes one or more AT_SOBU_ENTs. Each AT__SOBU_ENT includes an AT_SOBU size (AT_SOBU_SZ) and AT_SOBU_S_PKT_POS which expresses the start position of the AT_SOBU of interest from the head of a packet group by the number of packets.

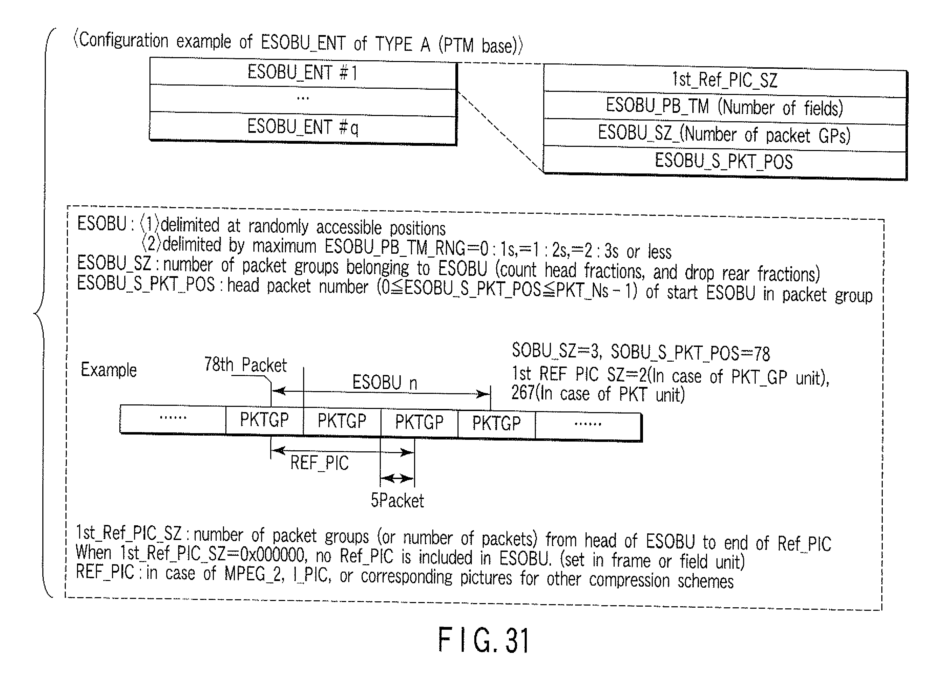

FIG. 31 is an exemplary view for explaining an example (an example of type A) of the configuration of the contents of each ESOBU_ENT. The ESOBU_ENT on the PTM base includes 1st Ref PIC SZ (end address information from the head of the ESOBU: LB units) of the first reference picture (I-picture or the like) in the entry, ESOBU playback time ESOBU_PB_TM (the number of fields), ESOBU size ESOBU_SZ (the number of packet groups that belong to the ESOBU of interest), and ESOBU_S_PKT_POS (the number of packets from the head of a packet group that stores the first packet of the ESOBU of interest).

In case of time search, an ESOBU corresponding to a target time is calculated by accumulating ESOBU_PB_TM data, and the playback start PTM is converted into the number of fields from the head of that ESOBU. Note that the target address is given by:

$$A = ESOB\_ADR\_OFS + ES\_ADR\_OFS \text{ of target ES}$$
$$+ \sum_{N=1}^{k-1} ESOBU\_SZ(N) \times 16 + 1$$

where K is the target ESOBU, and A is the target address. Furthermore, the first packet becomes a packet corresponding to the value of ESOBU_S_PKT_POS, and this address is accessed.

On the other hand, there are two types of AT_SOBU_ENTs (FIG. 30) on the PATS base, i.e., that in a packet unit and that in a packet group unit. In case of the packet unit, accurate addresses can be obtained, but the number of AT_SOBU_ENTs increases. In case of the packet group unit, the number of ESOBU_ENTs is small, but addresses can only specify packet groups.

In case of the packet unit, each AT_SOBU_ENT is configured by AT_ESOBU_SZ and AT_SOBU_S_PKT_POS. The AT_ESOBU_S_PKT_POS indicates the first packet position of the AT_SOBU in the Packet_Group by the number of packets.

In case of the packet group unit, each AT_SOBU_ENT is be configured by AT_ESOBU_SZ. In this case, AT_SOB_S_PKT_POS and AT_SOB_E_PKT_POS are fixed to zero.

The ESOB_TMAP_GI describes ADR_OFS, AT__SOB_SZ, AT_SOB_PKT_POS as values associated with those of the whole AT_SOB.

$$AT\_ADR\_E\_OFS$$

$$= AT\_SOB\_SZ - (AT\_ADR\_S\_OFS + \sum_{N=1}^{k-i} AT\_SOBU\_SZ(N) + 1)$$

Note that inequalities AT_SOB_SZ > AT_ADR_S_OFS, AT_SOB_SZ > AT_SOBU_SZ, and the like hold.

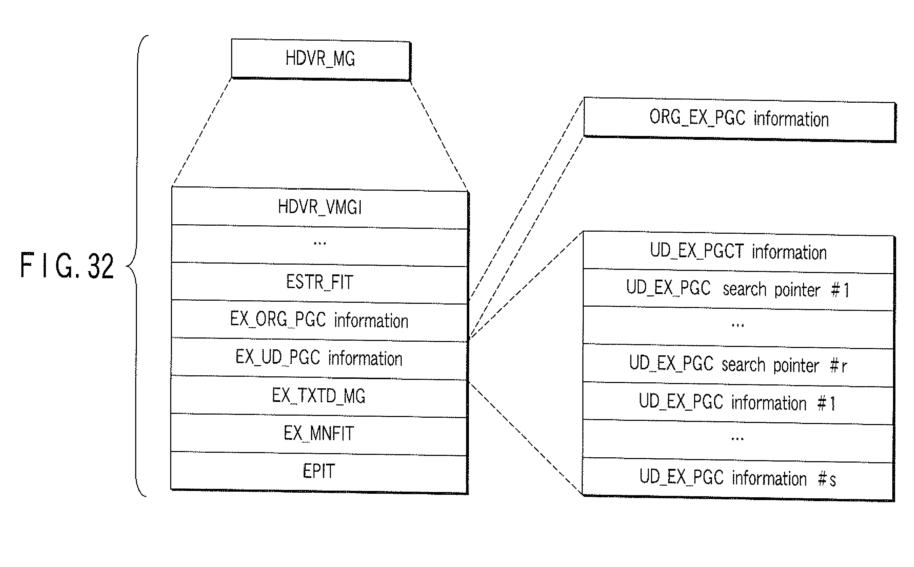

FIG. 32 is an exemplary view for explaining an example of the configuration of PGC information (EX_ORG_ PGC information and EX playlist information/EX UD PGC information) included in HDVR_VMG. EX_PGC information as playback information has the same format as a normal VR format, and ORG_EX_PGC information is automatically generated by an apparatus upon video recording and is set in the order of video recording. UD_EX_PGC information is generated according to a playback order which is freely added by the user, and is called a playlist. These two formats have a common format in EX_PGC level, and FIGS. 32 to 35 show that EX_PGC format.

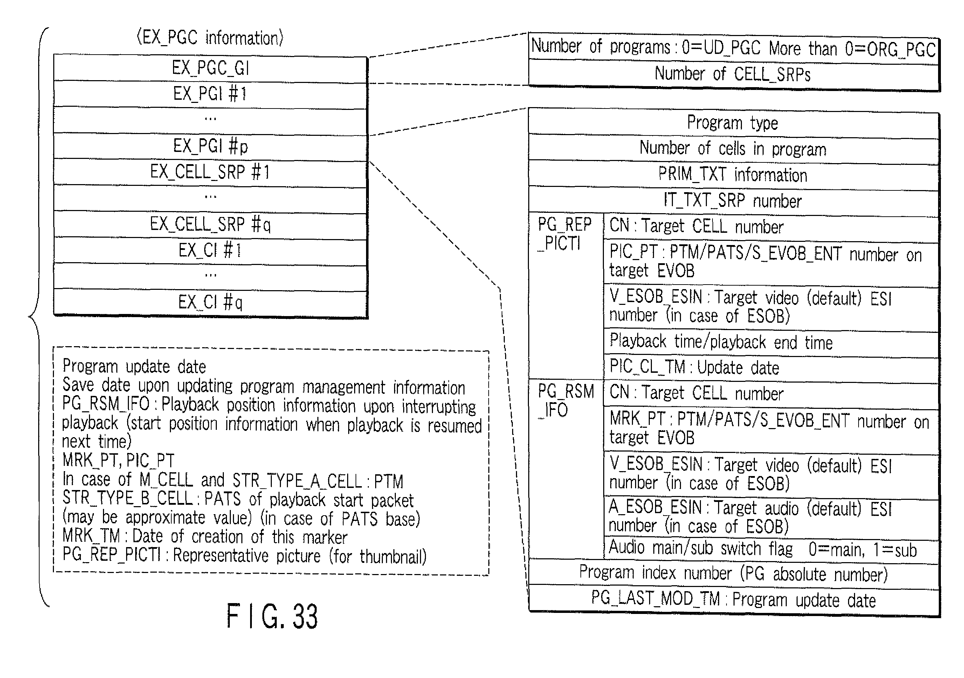

FIG. 33 is an exemplary view for explaining a practical example of EX_PGI. Note that EX_PG information (each EX_PGI) saves update date information (PG_LAST_MOD_TM) of this EX_PG. This information can identify when this EX_PG was edited. Text information uses primary text information (PRM_TXTI) for a program name. An item text (IT_ TXT) field saves other kinds of information (director name, leading actor name,...) to save other kinds of text information. The EX_PGI of interest is set with a search pointer (SRP) number of the IT_TXT field which saves these kinds of information to establish a link. Furthermore, a program (PG) number (EX_PG number) is set in IT_TXT data. Note that the EX_PG number is an absolute number from the beginning of recording on this disc, and is an index number which remains unchanged even after other EX_PGs are deleted.

The EX_PGI also includes RSM_MRKI (included in PT_SRP) to provide a resume marker (a marker indicating the playback location upon interrupting playback) for each program as in the playlist. As information used to restart playback, an EX_CELL number, playback start PTM and date information indicating the date of creation of that marker, an ESI number of a video stream to be played back, an ESI number of an audio stream to be played back, and main/sub information in case of Dual-Mono are set. This information is used as title resume.

Furthermore, the EX_PGI includes PG__REP_PICTI, which is set with representative picture information (a marker of a picture to be displayed as a thumbnail on a title menu or the like) for each PG. This PG_REP_PICTI is set with a cell number, start PTM, date information of the date of creation of that marker, and an ESI number of a video stream to be played back.

In order to utilize manufacturer's information (MNFI or MNI stored in the EX_MNFIT in FIG. 4 or the like) provided to implement functions unique to the manufacturer, the EX_PGI in FIG. 33 is set with an MNFI search pointer (not shown), and an EX_PG number can also be set in the MNFI information. In this way, the EX_PGCI/EX_PGI in FIG. 33 can be linked with data in the MNFI information (not shown).

Furthermore, when PG update date information (program update date information at the end in the PGI in FIG. 33) is set in both the MNFI and IT_TXT, whether or not the edit processing has been made by an apparatus of another manufacturer can be verified by checking if these times (the set update date and current time) match upon menu display.

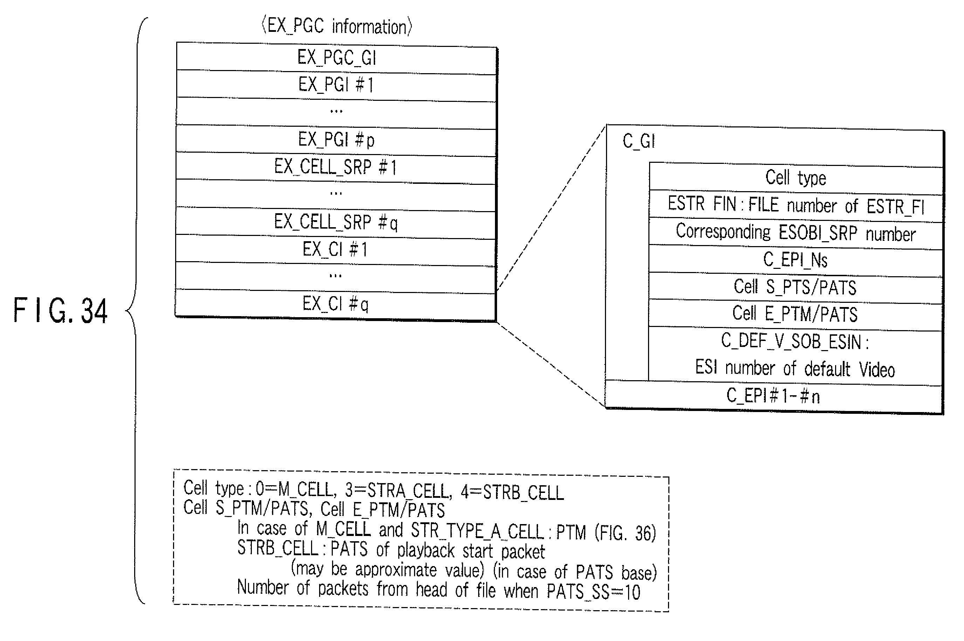

FIG. 34 is an exemplary view for explaining a practical example of EX_CI. In EX_CELL information (EX_CI), ESOB and AT_SOB types are added to the cell type, and an ESOB number, start time, end time, packet group number (GP number) to be played back, and the like can be designated. The start and end times can be expressed by either the playback time (in case of the PTM base) or PATS time (in case of the PATS base).

When time is designated by a playback time = real time upon playback, the same access method as in the existing DVD-Video recording (DVD-VR) is allowed although stream recording that records incoming bitstreams intact is made. Since the user can designate a recording position using a playback time, a user's desire can be perfectly reflected. However, this method can be adopted only when the stream contents can be sufficiently cognizable. If the contents of the recorded stream are not sufficiently cognizable, a time has to be designated using a transfer time of a stream packet (MPEG-TS packet in case of digital broadcast recording).

If the recording position is designated using a playback time while the contents of the recorded stream are not sufficiently cognizable, playback cannot always be started from the head of I-picture data. If a frame at the playback start position is not that of 1-picture, decoding starts from the immediately preceding I-picture, and display of a playback video picture starts when the target frame is decoded. In this way, a picture can be presented to the user as if playback were started from the designated frame.

As for an ID to be referred to in the playback processing or the like, a method of setting the PID of a representative one of streams to be played back, a method of setting the ID of a component group in case of multi-view TV or the like, and a method of designating an ESI number (example: FIG. 34) are available (in case of the PID setting method, a method of describing the ID using 13-bit real data, a method of describing the order in the PTM, a method of describing the value of a component tag, and the like are available). Also, in still another method, a reference GRP number (or GRP_SRP number) may be set to switch groups.

By assigning a unique ID number (PG_INDEX: EX_PGT#p, and the like in FIG. 34) to each EX_PG, the EX_PG and EX_CELL data can be designated using numbers which remain unchanged even when middle programs and cells are deleted. The EX_CELL information (EX_CI) is set with the file number (ESTR_FI number) of a stream to be played back, and the ESOB_SRP number of the corresponding ESOB. Furthermore, the EX_CELL information includes information C_EPI (Entry Point Information) of a cell entry point corresponding to each chapter.

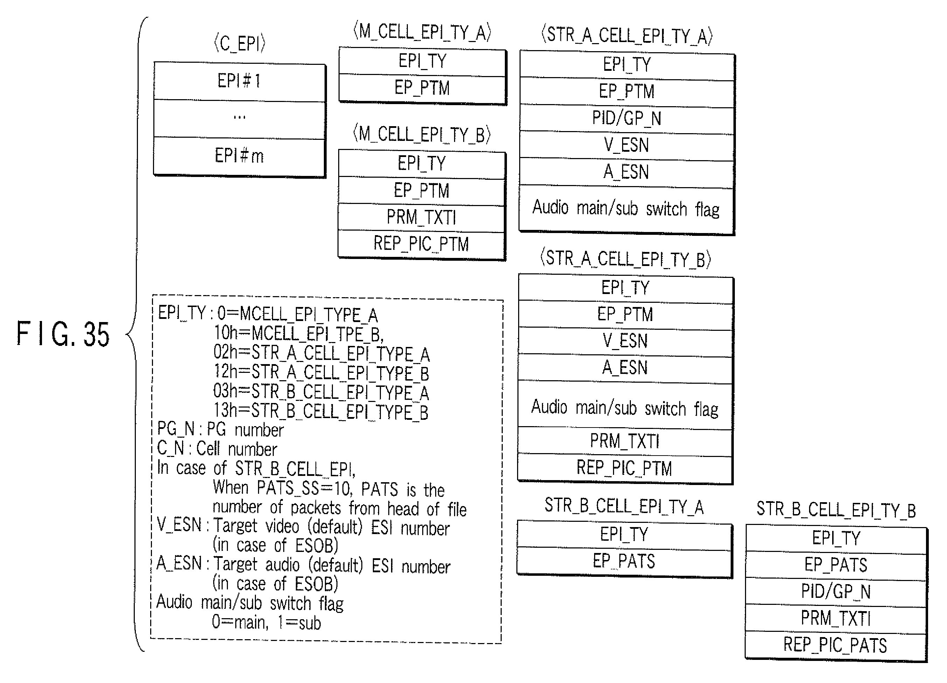

FIG. 35 is an exemplary view for explaining a practical example of C_EPI. There are two types of C_EPI for each cell type, i.e., a total of six types of C_EPI. M_CELL_EPI_TY_A includes EPI_TY (EPI type information), and a PTM to which an EP is assigned. M_CELL_EPI_TY_B additionally includes PRM_TXTI (text information) and REP_PIC_PTM (thumbnail pointer).

STR_A_CELL_EPI_TY_A (ESOB TYPE A) includes EPI_TY (EPI type information), a PTM to which an EP is assigned, a corresponding PID and GP number (PID/GP_N), an ESI number of an ES to which that ES is assigned, an ESI number of an audio ES, and main/sub information in case of Dual-MoNo. STR_A_CELL_EPI_TY_B further includes PRM_TXTI (text information) and REP_PIC_PTM (thumbnail pointer) (no PID and GI_N are included in TY_B).

STR_B_CELL_EPI_TY_A (ESOB TYPE B) includes EPI_TY (EPI type information) and a PATS to which an EP is assigned. STR_B_CELL_EPI_TY_B also includes a PID to which that ES is assigned, PRM_TXTI (text information), and REP_PIC_PTM (thumbnail pointer).

FIG. 36 is an exemplary view for explaining an example of the configuration of the PTM (Presentation Time) of an ESOB (or EVOB). This time information PTM includes information CNT_SEGN indicating the number of continuous segments CNT_SEG (the number of CNT_SEGs from the head of the ESOB), PTM_base that roughly counts on a 90-kHz base, and PTM_extention which finely counts on a 27-MHz base. An actual time based on the PTM is expressed by a value as the sum of PTM_base and PTM_extension. As an ESOB, type A which undergoes playback management based on this PTM (PTM_base + PTM_extension) and type B which undergoes playback management based on the PATS (Packet Arrival Time) are available.

For example, information CNT_SEGN indicating the number of CNT_SEGs from the head of the ESOB can be set as follows. That is, in case of an ESOB of type A, the value of CNT_SEGN is valid, but CNT_SEGN is set to zero for objects other than the ESOB. As the values of valid CNT_SEGN, for example, when CNT_SEGN = 4, the number of CNT_SEGs in the ESOB of interest is zero; when CNT_SEGN = 5, the number of CNT_SEGs in the ESOB of interest is 1; when CNT_SEGN = 6, the number of CNT_SEGs in the ESOB of interest is 2; and when CNT_SEGN = 7, the number of CNT_SEGs in the ESOB of interest is 3.

The example of the ESOB has been described. In case of an EVOB, the PTM can also have the same data structure. The number of CNT_SEGs (CNT_SEGN) from the head of an ESOB is substituted in time information PTM to confirm in advance if STC Wrap-around has occurred, and can be used in TMAP calculations and the like.

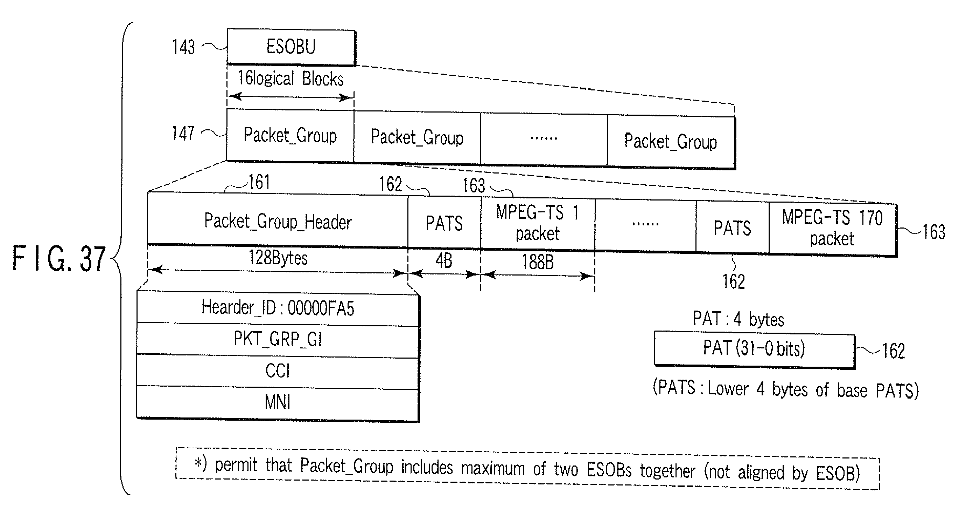

FIG. 37 is an exemplary view for explaining an example of the configuration of a stream object data unit (ESOBU). As shown in FIGS. 37 to 40, a Packet_Group_Header sets Header_ID (0x00000FA5) at the head of a packet group, and includes packet group general information PKT_GRP_GI, copy management information CCI or CPI (Copy Control Information or Contents Protection Information), and manufacturer's information MNI (or MNFI).

Note that the lower 4 bytes unique to each PATS 162 are included in that PATS, but the upper 2 bytes of the first PATS are included in First_PATS_EXT described in the packet group general information (PKT_GRP_GI) in Packet_Group_Header 161. With this configuration, the data size can be reduced compared to a case wherein 6-byte packet arrival times are independently described in respective PATS data.

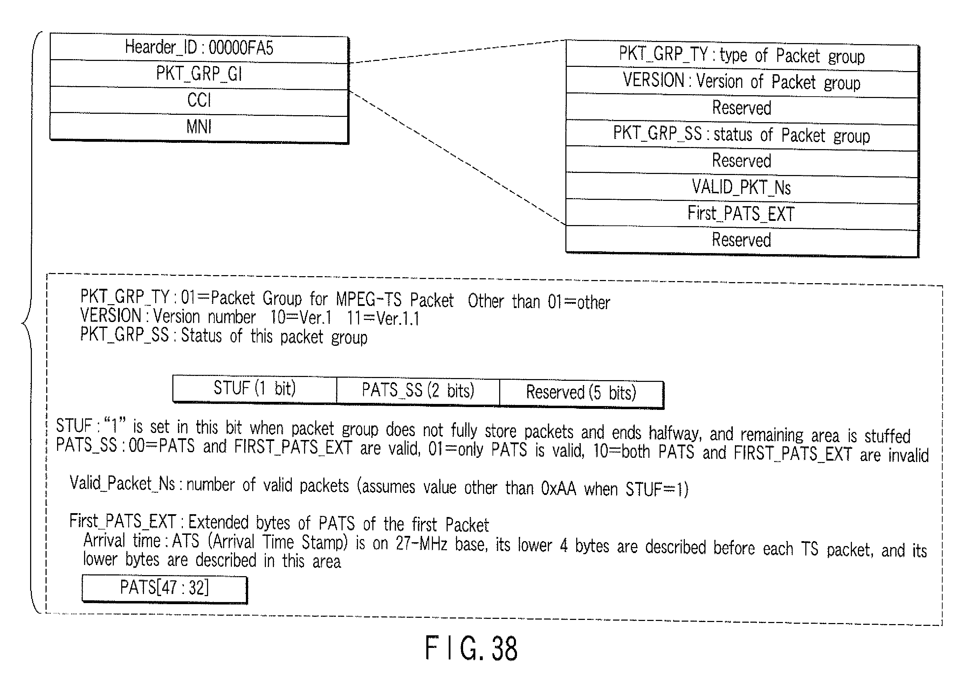

FIG. 38 is an exemplary view for explaining a practical example of the PKT_GRP_GI. The PKT_GRP_GI includes packet group type PKT_GRP_TY (1 = MPEG_TS), packet group version number VERSION, status information PKT_GRP_SS of the packet group, and the number Valid_PKT_Ns of valid packets in the packet group, upper 2 bytes FIRST_PATS_EXT of the PATS for the first packet, and the like.

Furthermore, the PKT_GRP_SS includes bit STUF indicating if stuffing is done (if this STUF bit is set, it indicates that the Valid_PKT_Ns assumes a value other than 0xAA and PATS_SS. Note that the PATS_SS includes a value indicating the accuracy of the PATS (when PATS_SS = 00, both PATS and FIRST_PATS_EXT are valid and accuracy = 6 bytes is set; when PATS_SS = 01, only PATS is valid and accuracy = 4 bytes is set; and when PATS_SS = 10, both PATS and FIRST_PATS_EXT are invalid and no accuracy is set).

Note that extended bytes FIRST_PATS_EXT of the PATS of the first packet include the upper 2 bytes of the arrival time of the packet at the head of the packet group, and the remaining 4 bytes are assigned before each packet. In this manner, the playback process with an accurate time is allowed.

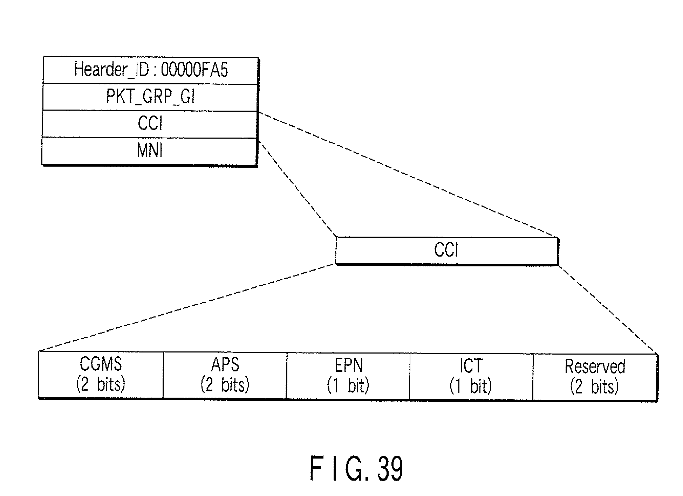

FIG. 39 is an exemplary view for explaining an example of the configuration of CP_CTL_INFO (copy control information: to be abbreviated as CCI or CPI as needed) included in a Packet_Group_Header. The CP_CTL_INFO is stored in CCI (or CPI) or the like in a Packet_Group_Header, and the copy control of packet groups is done by the CCI in the Packet_Group_Header. The values of this CCI (or CPI) are set by a digital copy control descriptor and content use descriptor. The contents of the CCI are: CGMS (0 = copy never; 1 = copy free); APS (0 = no APS, 1 = append APS type 1, 2 = append APS type 2, 3 = append APS type 3); EPN (0 = contents protection (Internet output protection), 1 = no contents protection); and ICT (0 = resolution constraint, 1 = no constraint).

Alternatively, CCI (or CPI) may store digital copy control (00 = copy never, 01 = copy once, 11 = copy free), analog copy control (00 = no APS, 01 = APS type 1, 10 = APS type 2, 11 = APS type 3), EPN (0 = contents protection, 1 = no contents protection), and ICT (0 = analog video output resolution constraint, 1 = no constraint). Note that APS is an abbreviation for "Analog Protection System", and the embodiment assumes Macrovision(R).

Also, the copy control information (CCI or CPI) is set on the management information side (ESOBI_GI: FIG. 14) to perform copy management (copyright management) for the whole system, or the CCI (or CPI) is set on both the management information side and the object side (Packet_Group: FIGS. 37 and 39) to perform copy management (copyright management) in two levels in preference to the object side (Packet_Group). More specifically, a title menu uses the CCI of the ESOBI_GI, and an actual apparatus operation can execute processing in preference to the Packet_Groups.

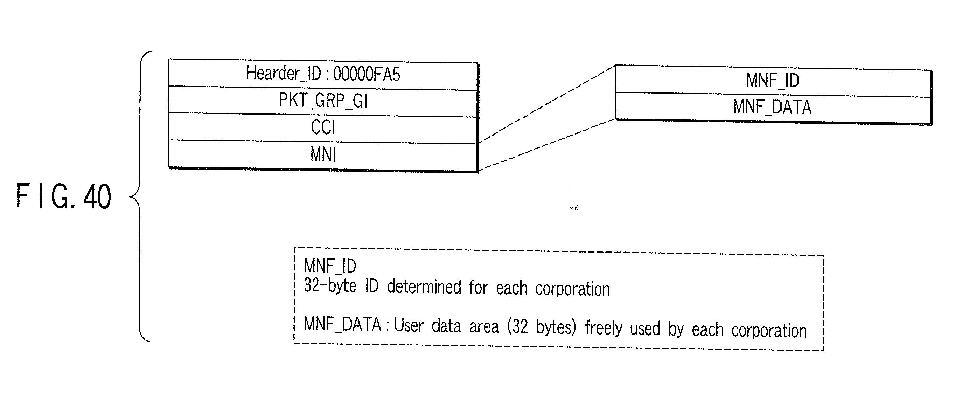

FIG. 40 is an exemplary view for explaining a practical example of the manufacturer's information (MNI or MNFI). The MNI or MNFI includes MNF_ID and MNF_DATA. The MNF__ID is a value representing each manufacturer (vendor). The MNF_DATA after the MNF_ID is a data field which can be freely set for each vendor.

That is, a recorder may have unique functions which are not described in the DVD format depending on the manufacturers and models, and may be differentiated from other manufacturers. In this case, manufacturer unique information need be embedded in object data in some cases. Hence, in this embodiment, MNI (Manufacturer's Information) is assured in a Packet_Group_Header as its field.

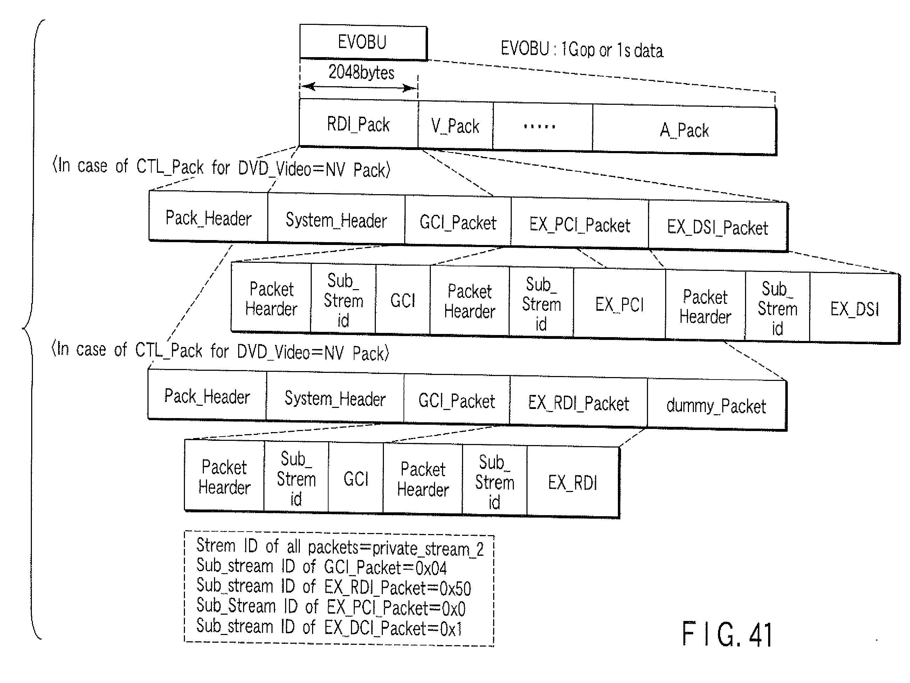

FIG. 41 is an exemplary view for explaining an example of the configuration of an EVOBU. The EVOBU adopts the following arrangement to maintain compatibility to HD_DVO-VIDEO and HD_DVD-VR as the standards of the next generation. That is, the configuration of control pack CLT_PACK to be allocated at the head of the EVOBU includes a GCI_Packet, EX_PCI_Packet, and EX_DSI_Packet and is called an NV pack in case of HD_DVD-VIDEO (STD: Standard-VTS/ADV: Advanced-VTS). Also, control pack CLT_PACK includes a GCI_Packet, EX_RDI_Packet, and dummy_Packet and is called an RDI pack in case of HD_DVD-VR (INT: Interoperable-VTS/VR).

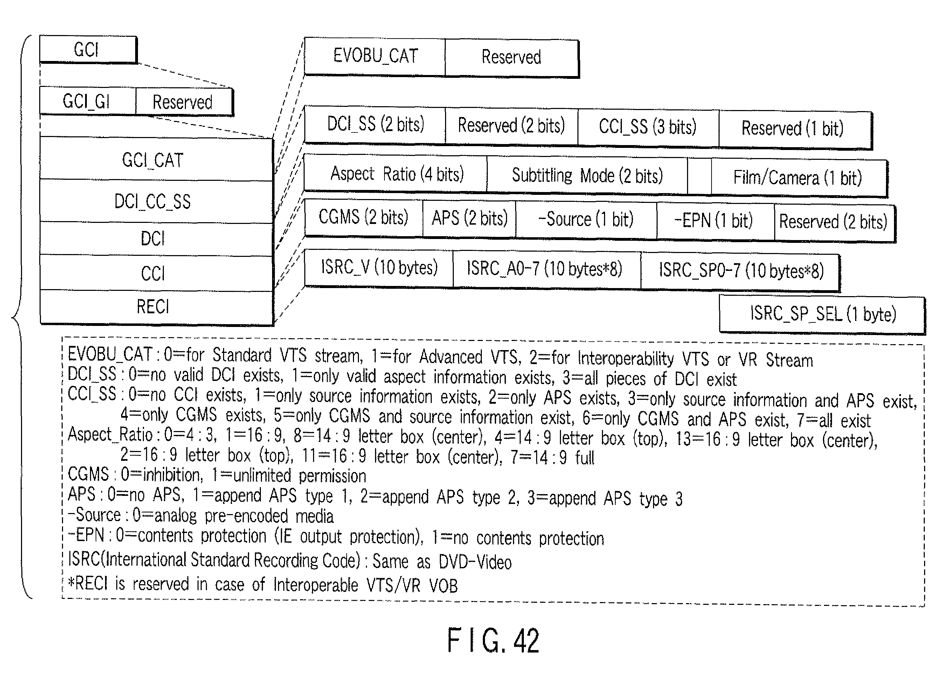

FIG. 42 is an exemplary view for explaining an example of the configuration of GCI (General Control Information) of the EVOBU shown in FIG. 41. The structure of the GCI commonly used in all streams includes GCI_CAT, DCI, CCI (or CPI), and RECI. As shown in FIG. 42, the GCI_CAT includes EVOB_CAT, which indicates a CTL pack type, which is used to determine whether the EVOB of interest forms an HD_DVD-VR stream or an HD_DVD-VIDEO stream.

DCI_CC_SS (a flag indicating the presence of DCI and CCI) includes DCI_SS and CCI_SS. The DCI_SS sets "0 = no valid DCI exists, 1 = only valid aspect information exists, 3 = all pieces of DCI exist", and CCI_SS sets "0 = no valid CCI exists, 1 = only source information exists, 2 = only APS exists, 3 = only source information and APS exist, 4 = only CGMS exists, 5 = only CGMS and source information exist, 6 = only CGMS and APS exist, 7 = all exist".

The DCI (Display Control Information) includes Aspect_Ratio (0 = 4 : 3, 1 = 16 : 9, 8 = 14 : 9 letter box (center), 4 = 14 : 9 letter box (top), 13 = 16 : 9 letter box (center), 2 = 16 : 9 letter box (top), 11 => 16 : 9 letter box (center), 7 = 14 : 9 full), Subtitling Mode (0 = non-open subtitle, 1 = subtitles in active image area, 2 = subtitles out of active image area), and film/camera (0 = camera mode: the source is a camera, 1 = film mode: the source is a film).

The CCI (Copy Control Information) or CPI (Contents Protection Information) includes CGMS (0 = copy never; 1 = copy free), APS (0 = no APS, 1 = append APS type 1, 2 = append APS type 2, 3 = append APS type 3), -Source (0 = analog pre-encoded media), and -EPN (1 = contents protection (protection upon home network output), 0 = no contents protection).

The RECI includes International Standard Recording Codes, the contents of which are the same as those in DVD-VIDEO.

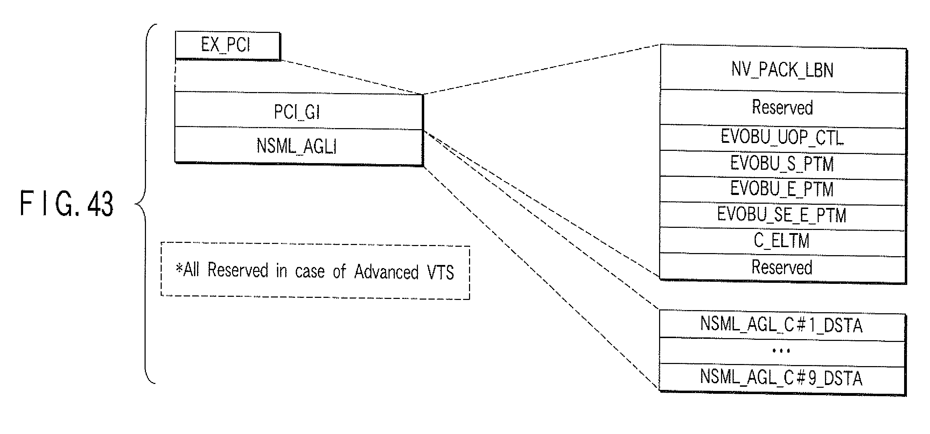

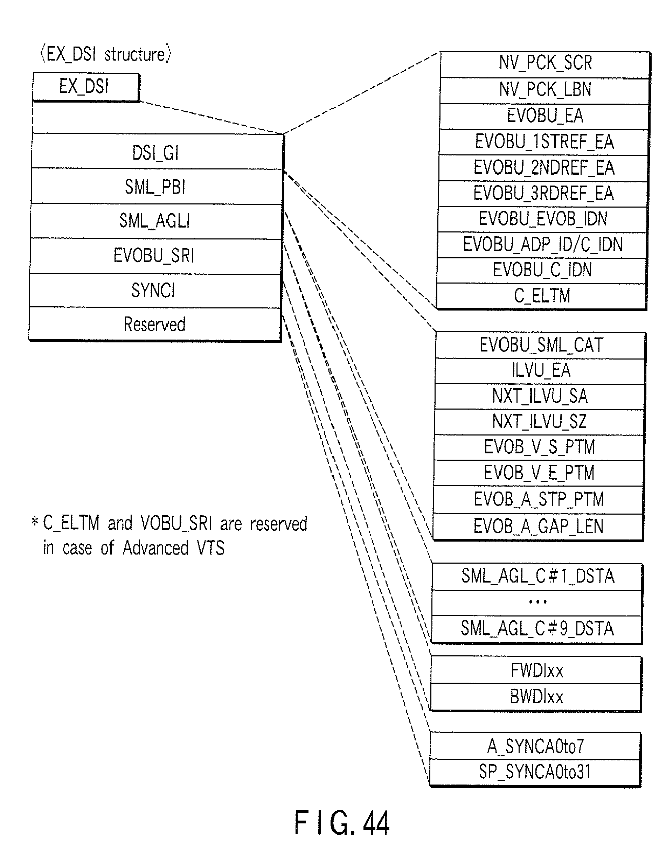

FIG. 43 is an exemplary view for explaining an example of the configuration of EX_PCI of the EVOBU. FIG. 44 is an exemplary view for explaining an example of the configuration of EX_DSI of the EVOBU. The EX_PCI includes the same contents as those of a PCI Packet of DVD-VIDEO, and the EX_DSI also includes the same contents as those of the PCI Packet of DVD-VIDEO.

That is, as shown in FIG. 43, general information (PCI_GI) in the EX_PCI includes the logical block number (NV PACK LBN) of a navigation pack as a control pack, information (EVOBU_UOP_CTL) that controls the availability of user manipulations of the EVOBU, an EVOBU playback start time (EVOBU_S_PTM), an EVOBU playback end time (EVOBU_E_PTM), an end time (EVOBU_SE_E_PTM) of the sequence end in the EVOBU, and a cell elapsed time (C_ELTM).

Non-seamless angle information (NSML_AGLI) in the EX_PCI includes jump addresses (NSML_AGL_C#1_DSTA to NSML_AGL_C#9_DSTA) of a maximum of nine non-seamless angle cells.

On the other hand, as shown in FIG. 44, general information (DSI_GI) in the EX_DSI includes an SCR base (NV_PCK_SCR) of a navigation pack, the logical block number (NV_PCK_LBN) of the navigation pack, the end address (EVOBU_EA) of the EVOBU, the end address (EVOBU_1STREF_EA) of the first reference picture (I-pic, etc.) in the EVOBU, the end address (EVOBU_2NDREF_EA) of the second reference picture in the EVOBU, the end address (EVOBU_3RDREF_EA) of the third reference picture in the EVOBU, the object ID number (EVOBU_EVOB_IDN) of the EVOBU, EVOBU_ADP_ID (adaptive disc type: 0 = applied to a DVD Read-Only Disc; 1 = applied to DVD-R or DVD-RW Disc)/C_IDN (the ID number of a CELL that includes the DSI), the cell ID number (EVOBU_C_IDN) of the EVOBU, and a cell elapsed time (C_ELTM).

Seamless playback information (SML_PBI) in the EX_DSI includes a category (EVOBU_SML_CAT) of a seamless EVOBU, the end address (ILVU_EA) of an interleaved unit, the start address (NXT_ILVU_SA) of the next interleaved unit, the size (NXT_ILVU_SZ) of the next interleaved unit, a video start time (EVOB_V_S_PTM) in an EVOB, a video end time (EVOB_V_E_PTM in the EVOB, an audio stop time (EVOB_A_STP_PTM) in the EVOB, and an audio gap length (EVOB_A_GAP_LEN) in the EVOB.

Seamless angle information (SML AGLI) in the EX_DSI includes jump addresses (SML_AGL_C#1_DSTA to SML_AGL_C#9_DSTA) of a maximum of nine seamless angle cells.

EVOBU search information (EVOBU_SRI) in the EX_DSI describes start addresses before and after the playback start time of an EVOBU that includes the EX_DSI in predetermined time units (e.g., in integer multiple units of 0.5 sec). More specifically, the start address before the playback start time of the EVOBU that includes the EX_DSI is described using FWDIxx, and that after the playback start time of the EVOBU that includes the EX DSI is described using BWDIxx.

Sync information (SYNCI) in the EX_DSI includes address information of audio data and sub-picture data synchronized with video data of the EVOBU that includes the EX_DSI. More specifically, the SINCI includes the addresses (A_SYNCAO to A_SYNCA7) of a maximum of eight target audio packs, and the addresses (SP__SYNCAO to SP_SYNCA31) of a maximum of 32 target sub-picture packs.

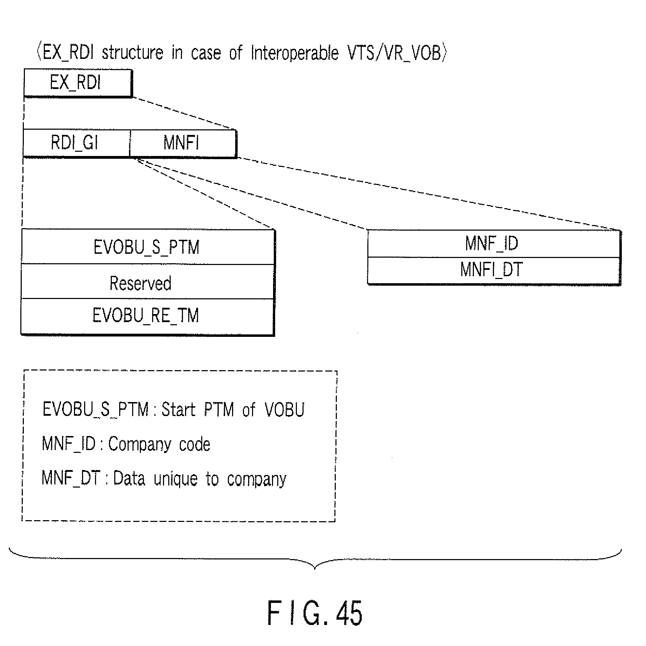

FIG. 45 is an exemplary view for explaining an example of the configuration of Ex_RDI in case of an Interoperable VTS/VR_VOB. The EX_RDI includes RDI_GI and MNFI. Note that RDI_GI describes a PTM (EVOBU_S_PTM) of a start Video frame of the EVOBU interest, and a recording time (EVOBU_RE_TM) of that EVOBU. The MNFI includes a company code and data.

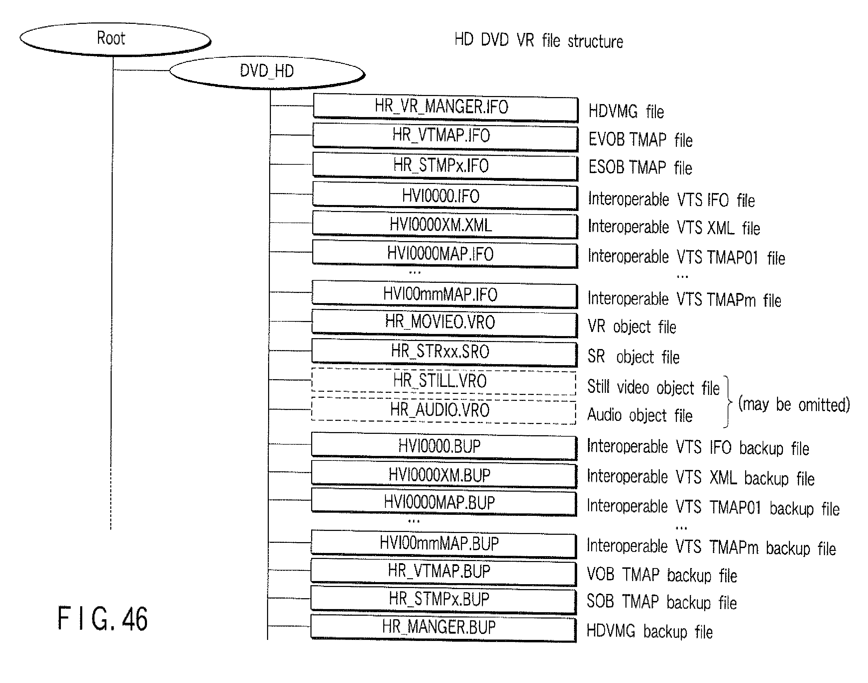

FIG. 46 is an exemplary view for explaining the file structure of HD_DVD-VR according to another embodiment (corresponding to FIG. 3 except for an interoperable file). This file DVD_HD directory stores an HD_VMG file, EVOB_TMAP file, ESOB_TMAP file, interoperable VTS.IFO file, interoperable VTS.XML (or JAVA(R)) file, interoperable VTS_TMAP01 file,..., interoperable VTS_TMAPm file, VR object file, SR object file, still video object file (which may be omitted), audio object file, interoperable VTS IFO backup file (which may be omitted), interoperable VTS.XML backup file, interoperable VTS_TMAP01 backup file,..., interoperable VTS_TMAPm backup file, EVOB_TMAP backup file, ESOB_TMAP backup file, HD_VMG backup file, and the like.

Note that "interoperable VTS (INT-VTS)" is provided as a bridge used to play back EVOB data of HD_DVD-VR by an HD_DVD-VIDEO player. The INT-VTS has a configuration as shown in FIG. 46 to assure compatibility to the HD_DVD-VIDEO player. The "interoperable VTS (INT-VTS)" can be generated by converting management information of HD_DVD-VR to attain matching with HD_DVD-VIDEO.

FIGS. 47A to 47D are exemplary views for explaining an example of the relationship between the ESOB_SZ and ESOB_S_PKT_POS. The relationship among the ESOB_SZ, ESOB_S_PKT_POS, ESOB_E_PKT_POS, and the number of packet groups is as shown in FIGS. 47A to 47D. Note that one packet group size is specified by 4 TS packets for the sake of simplicity.

In FIG. 47A, an ESOB starts from the middle of packet group #1, passes over packet group #2, and continues to the middle of packet group #3. In this case, ESOB_SZ = 2 since packet group #1 + packet group #2, and packet group #3 is not counted. The ESOB_S_PKT_POS = 2 since the ESOB starts from the third packet in packet group #1, and the ESOB_E_PKT_POS = 3 since the ESOB continues to the third packet of packet group #3.

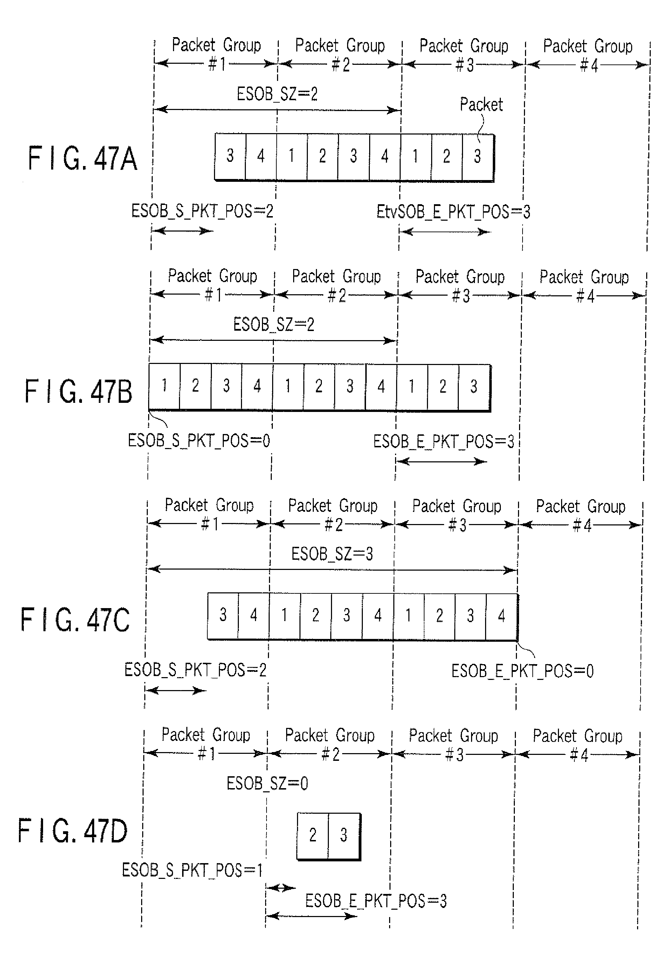

In FIG. 47B, since the first packet of an ESOB matches that of packet group #1, ESOB_S_PKT_POS = 0. In FIG. 47C, since the last packet of an ESOB matches that of packet group #3, ESOB_SZ = 3 and ESOB_E_PKT_POS = 0. In FIG. 47D, since an ESOB is short by one pack, ESOB_SZ = 0, ESOB_S_PKT_POS = 1, and ESOB_E_PKT_POS = 3.

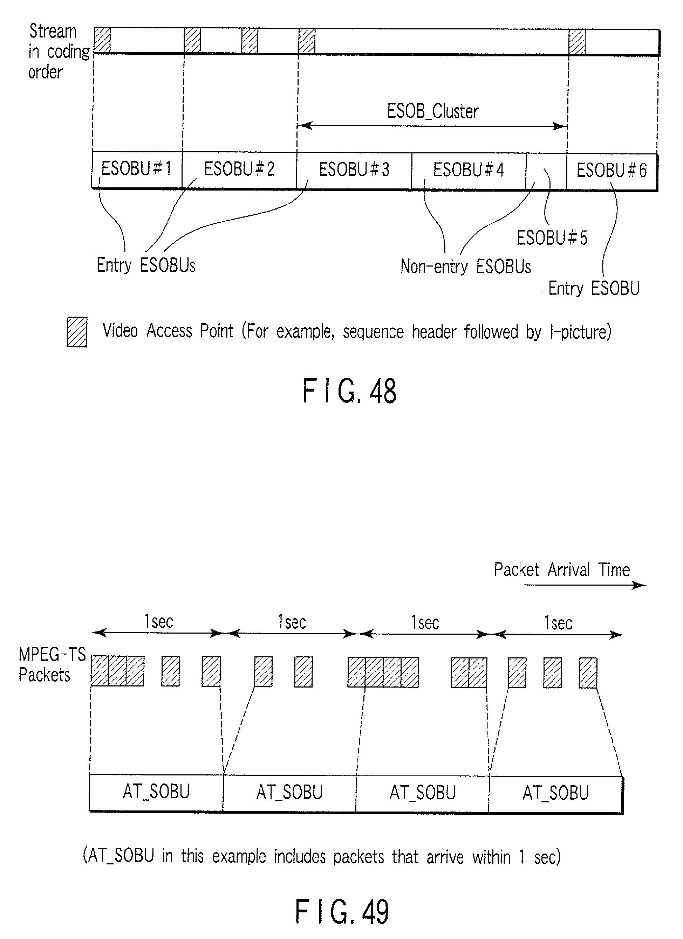

In this embodiment, a concept called "ESOBU_Cluster" has been introduced, as shown in FIG. 48. The ESOBU_Cluster is normally the same as an ESOBU. However, when no reference picture REF-PIC (I-picture in MPEG2) is included in an ESOBU, ESOBUs including a previous ESOBU until next REF-PIC appears are defined as one Cluster. In case of special playback (fastforwarding or rewinding playback), data access is made using this Cluster as a unit. In other words, an ESOBU which has the REF-PIC (an ESOBU with non-zero 1ST_REF_SZ: ENTRY_ESOBU) is always set at the forefront of the Cluster, and an ESOBU having no REF-PIC (1ST_REF_SZ = 0: NON-ENTRY_ESOBU) follows.

Note that the REF-PIC means a Picture which corresponds to I-PIC in case of the conventional MPEG2 compression method, and can form one frame (field) by only this picture. Since the embodiment supports a plurality of image compression methods (MPEG4-AVC, VC-1, and the like), since a picture corresponding to I-PIC has to be defined even in a stream which is encoded by a method other than MPEG2, "REF-PIC" is used as a more generic term in place of I-PIC.

FIG. 49 is an exemplary view for explaining an example of the relationship between the AT_SOBU and packets. As exemplified in FIG. 49, packets which are received within a predetermined period of time (the value of AT_SOBU_ TM: 1 sec in the example of FIG. 49) are saved as an AT_SOBU.

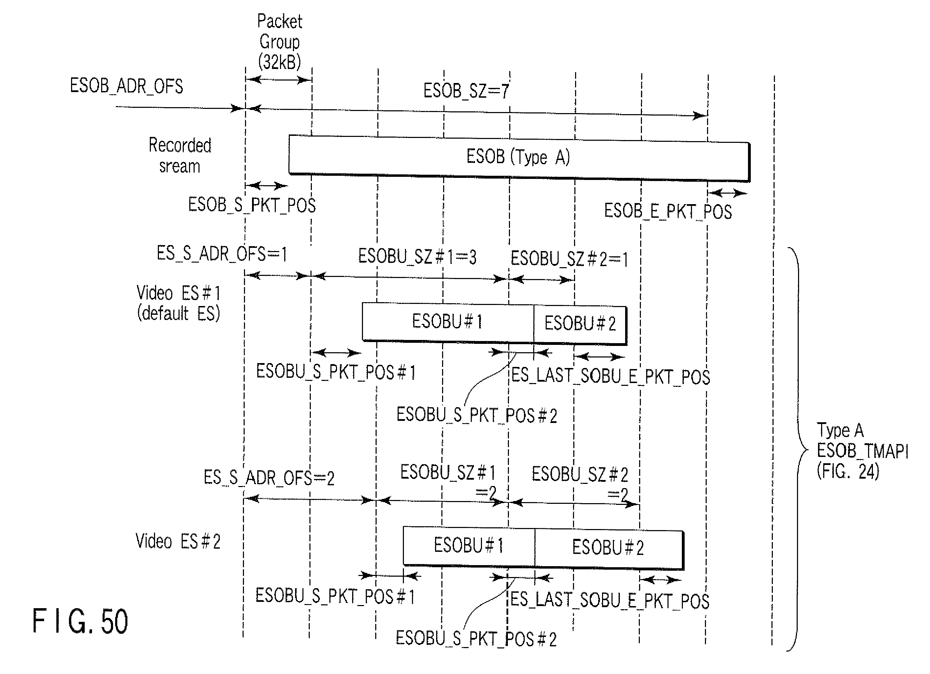

FIG. 50 is an exemplary view for explaining an example of the relationship among the ESOBU_SZ, ESOBU-S-PKT-POS, and ES_LAST_SOBU_E_PKT_POS. The relationship among the ESOBU_SZ, ESOBU_S_PKT_POS, ES_LAST_SOBU_E_PKT_POS, and the number of packet groups is as shown in FIG. 50. In Video_ES#1 (at least one Video-ES includes an ESTMAP), since the ESOBU_SZ of ESOBU#1 is defined from a PACKET_GROUP to which the first packet of ESOBU#1 belongs to the third PACKET_GROUP ahead of it, and ESOBU_SZ#1 = 3, and the ESOBU_ S_PKT_POS is defined by the value of the number of packets from the first packet of the PACKET_GROUP to the first packet of ESOBU#1. Likewise, ESOBU_SZ#2 = 1. As the ES_LAST_SOBU_E_PKT_POS, the number of packets from the first packet of a PACKET_GROUP to which the last packet of ESOBU#2 as the last ESOBU to the last Packet of ESOBU#2 is set. The first ES_ADR_OFS is a difference value from the first Packet of an ESOB to the first ESOBU of each ES. In FIG. 50, this difference is one Packet_Group.

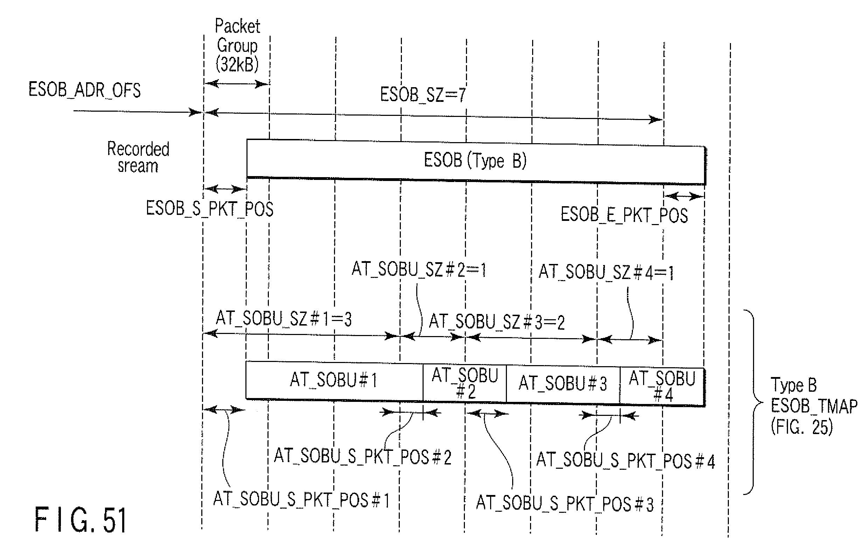

FIG. 51 is an exemplary view for explaining an example of the relationship between the AT_SOBU_SZ and AT_SOBU_S_PKT_POS. Since the AT_SOBU_SZ of AT_SOBU#1 is defined from a PACKET_GROUP to which the first packet of AT_SOBU#1 belongs to the third PACKET_GROUP ahead of it, as shown in FIG. 51, AT_SOBU_SZ#1 = 3. The AT_SOBU_S_PKT_POS assumes the value of the number of packets from the first packet of the PACKET_ GROUP to that of ESOBU#1.

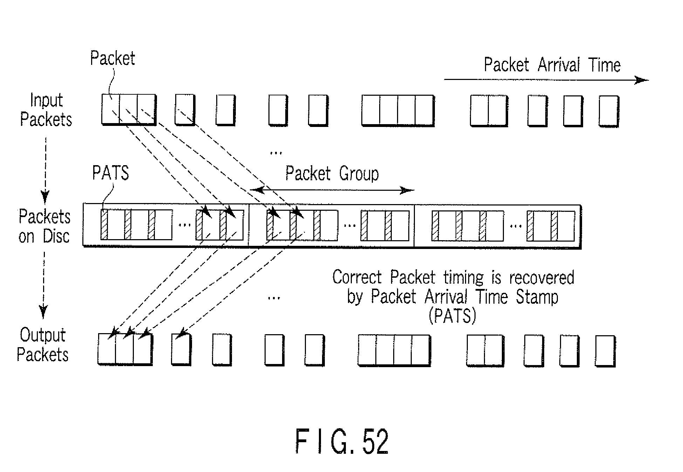

FIG. 52 is an exemplary view for explaining an example of the relationship between TS packets and packet groups. The relationship between Packet_Groups and Ts_Packets is as shown in FIG. 52. Since a Packet_Group defines a disc recording unit, TS_Packets are appended with PATS data as transmission time data and are recorded while being packed in each Packet_Group. Upon playback, the TS_Packets are read out for respective Packet_Groups, and are played back according to the PATS time data. In this way, the TS_Packets can be played back while keeping the time intervals upon reception.

FIG. 53 is a block diagram for explaining an example of the apparatus which records and plays back AV information (digital TV broadcast program or the like) on an information storage medium (optical disc, hard disc, or the like) using the data structure according to the embodiment. As shown in FIG. 53, this recording and playback apparatus comprises an MPU unit, display unit, decoder unit, encoder unit, TV tuner unit, STC (System Time Counter) unit, D-PRO unit, temporary storage unit, disc drive unit, key input unit, V-mixing unit, frame memory unit, TV digital-to-analog unit, terrestrial digital tuner unit, 1394 I/F unit, Ethernet I/F unit, remote controller receiver, STB unit (BS digital tuner or the like), emergency broadcast detection unit, and HDD unit. In this arrangement, the functions of a streamer are added to a recordable and reproducible DVD recorder.

The encoder unit includes an analog-to-digital unit, video encode unit, audio encode unit, SP encode unit, formatter unit, and buffer memory unit. The decoder unit includes a demultiplexer, video decode unit, SP decode unit, audio decode unit, TS packet transfer unit, V-PRO unit, and audio digital-to-analog unit. Furthermore, an antenna for receiving digital broadcast is connected to the STB unit. Note that the STC unit is configured to count on a 27-MHz base.

The flow of signals upon recording is, for example, as follows. That is, TS packet data received by the STB unit (or terrestrial digital tuner) are packed into packet groups by the formatter unit and the packet groups are saved in the temporary storage unit. When the saved packet groups reach a predetermined size, they are recorded on the disc. Internal counter 90a for PATS is connected to this formatter unit 90. The arrival time of each TS packet is counted by PATS counter 90a, and that count value is appended to the head of each TS packet when the packet is buffered. This counter 90a can perform fine adjustment of count intervals by PCR (or SCR) values, but never loads the PCR (or SCR) values unlike STC 102.

As the operations to be executed at that time, upon reception of TS packets, a group is formed every 170 packets, and a Packet_Group_Header is generated.

In this case, only the upper 2 bytes (First_Pats_Ext) of the PATS of the first packet of the packet group are stored in the header, and only the lower 4 bytes of each of other PATS are saved together with the TS packet (before the TS packet: in the PATS). An analog signal input from the terrestrial tuner or line input is converted into a digital signal by the analog-to-digital unit. That digital signal is input to respective encoder units. That is, a video signal is input to the video encode unit, an audio signal is input to the audio encode unit, and text data of, e.g., teletext broadcasting is input to an SP encode unit. The video signal is compressed by MPEG, the audio signal is compressed by AC3 or MPEG audio, and the text data is compressed by runlength coding.

Each encoder unit (for VR) packs compressed data to form 2084-byte packets and inputs them to the formatter unit. The formatter unit packs and multiplexes the packets as a program stream, and sends it to the D-PRO unit.

The D-PRO unit forms ECC blocks for every 16 logical blocks, appends error correction data to them, and records the ECC packets on the disc via the disc drive unit. When the disc drive unit is busy due to seek, track jump, and the like, data are stored in an HDD buffer unit, and wait until the DVD-RAM disc drive unit is ready. Furthermore, the formatter unit generates each segmentation information during video recording, and periodically sends it to the MPU unit (GOP head interrupt or the like). The segmentation information includes the number of packs of an EVOBU (ESOBU), the end address of I-picture data from the head of the EVOBU (ESOBU), the playback time of the EVOBU (ESOBU), and the like.

In the flow of signals upon playback, data are read out from the disc by the disc drive unit, undergo error correction by the D-PRO unit, and are then input to the decode unit. The MPU unit determines the type of input data (i.e., VR or SR data) (based on Cell TYPE), and sets that type in the decoder unit before playback. In case of SR data, the MPU unit determines the PID to be played back based on the ESI number to be played back, determines the PIDs of items (video, audio, and the like) to be played back based on that PTM, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 I/F unit) in the form of TS packets in the order they arrived. The respective decode units execute decoding, and decoded data are converted into an analog signal by the digital-to-analog unit, thus displaying data on the TV. In case of VR data, the demultiplexer sends data to the respective decode units according to the fixed IDs. The respective decode units execute decoding, and decoded data are converted into an analog signal by the digital-to-analog unit, thus displaying data on the TV.

Upon playback, pack data read out from the disc are interpreted by the demultiplexer. Packs that store TS packets are sent to the TS packet transfer unit, and are then sent to the decoders, thus playing back data. When pack data are transferred to the STB unit (or are transmitted to an external apparatus such as a digital TV or the like), the TS packet transfer unit transfers only TS packets at the same time intervals as that when they arrived (see FIG. 52). The STB unit decodes to generate an AV signal, which is displayed on the TV via the video encoder unit in the streamer.

The features of medium 100 (100a) used in the apparatus of FIG. 53 will be briefly summarized below. That is, this medium has management area 130 and data area 131. Data is separately recorded on the data area as a plurality of object data (ESOB), and each object data includes a group of data units (ESOBUs). One data unit (ESOBU) includes packet groups each of which is formed by converting a MPEG-TS compatible digital broadcast signal into TS packets and packing a plurality of packets (see FIGS. 1 and 37). On the other hand, management area 130 has EX_PGC information (EX_PGCI) as information used to manage the playback sequence. This EX_PGC information includes EX_CELL information (EX_CI). Furthermore, management area 130 has information used to manage object data (ESOB).

The apparatus shown in FIG. 53 can make stream recording on medium 100 (100a) with the above data structure in addition to video recording. In this case, in order to extract program map table PTM and service information SI from a TS packet stream, MPU unit 80 is configured to have a service information extraction unit (not shown; firmware that forms management data generation unit 80B). Also, MPU unit 80 is configured to have an attribute information generation unit (not shown; firmware that partially forms management data generation unit SOB) that generates attribute information (PCR pack number, PCR LB count number, and the like) based on information extracted by the service information extraction unit.

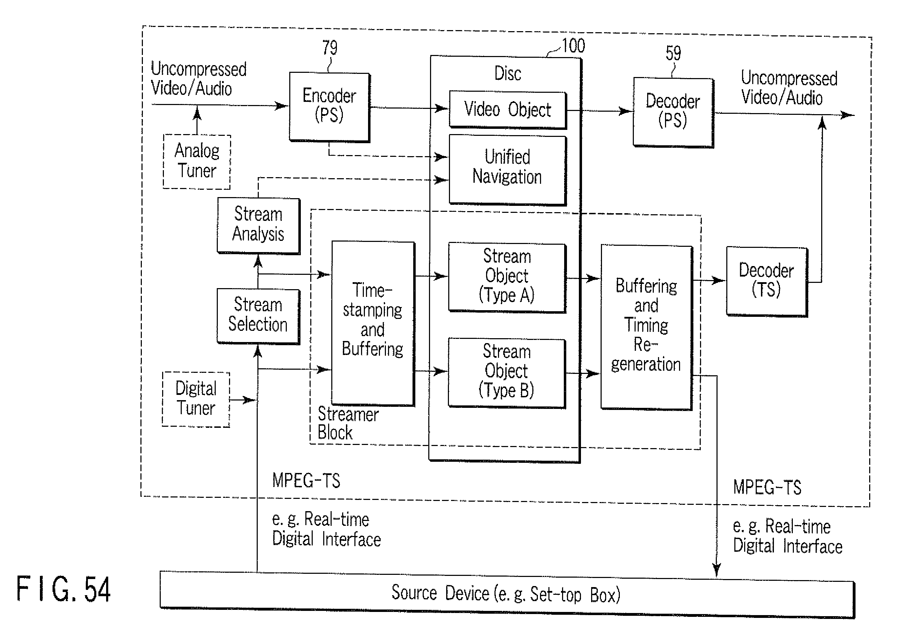

FIG. 54 is a block diagram for explaining an example of a system model of a recorder. This system model includes two systems, i.e., a recording and playback system (VR system) based on MPEG-PS, and that (SR system) based on MPEG-TS. The SR system is compatible to two types, i.e., stream recording of type A (PTM base) and that of type B (PATS base).

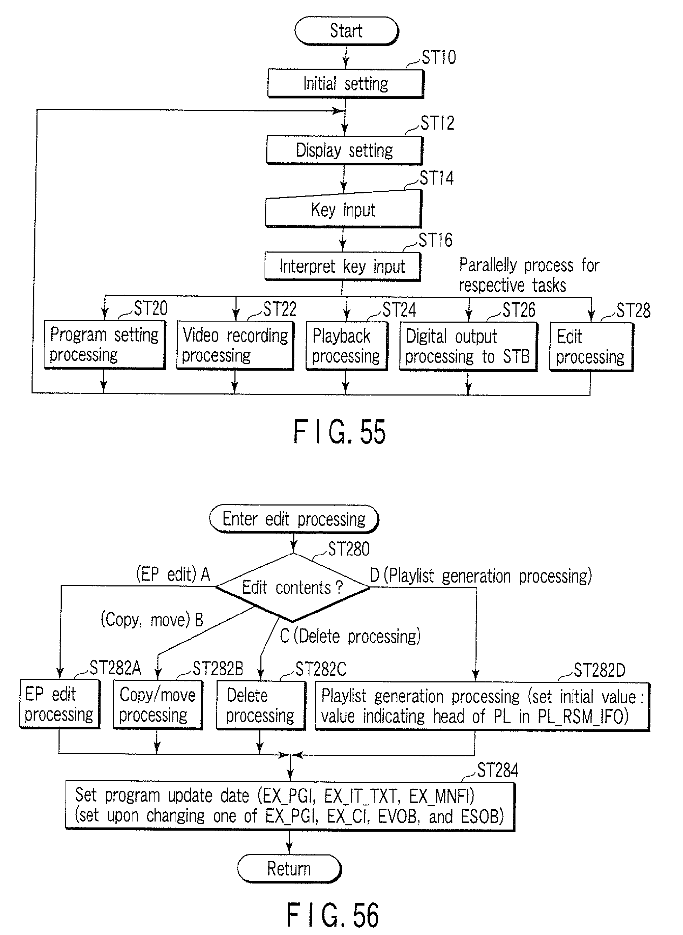

FIG. 55 is a flowchart (overall operation processing flow) for explaining an example of the overall operation of the apparatus shown in FIG. 53. In this case, data processes include five different processes, i.e., a video recording process, playback process, data transfer process (a digital output process to the STB or the like), program setting process, and edit process. For example, when the power switch of the apparatus in FIG. 53 is turned on, MPU unit 80 makes initial settings (upon factory shipment or after user's settings) (block ST10). MPU unit 80 also makes display settings (block ST12) and waits for a user's operation. If the user has made a key input from key input unit 103 or remote controller 103a (block ST14), MPU unit 80 interprets the contents of that key input (block ST16). The following five data processes are executed as needed in accordance with this input key interpretation result.

That is, if the key input is, for example, a key operation made to set timer program recording, program setting processing starts (block ST20). If the key input is a key operation made to start video recording, video recording processing starts (block ST22). If the key input is a key operation made to start playback, playback processing starts (block ST24). If the key input is a key input made to output digital data to the STB, digital output processing starts (block ST26). If the key input is a key operation of edit processing, the edit processing starts (block ST28).

The processes in blocks ST20 to ST28 are parallelly executed as needed for respective tasks. For example, the processing for outputting digital data to the STB (ST26) is parallelly executed during the playback processing (ST24). Or new program setting processing (ST20) can be parallelly executed during the video recording processing (ST22) which is not timer program recording. Or by utilizing the feature of disc recording that allows high-speed access, the playback processing (ST24) and digital output processing (ST26) can be parallelly executed during the video recording processing (ST22). Also, the disc edit processing (block ST28) can be executed during video recording on the HDD.

FIG. 56 is a flowchart (edit operation processing flow) for explaining an example of the edit processing (ST28). When the control enters the edit processing, the flow branches to one of four processes (one of A to D) (block ST280) in accordance with the edit contents. Upon completion of one of entry point edit processing (block ST282A), copy and move processing (block ST282B), delete processing (block ST282C), and playlist generation processing (block ST282D), the program update date by this edit processing is set in respective pieces of management information (EX_PGI, EX_IT_TXT, EX_MNFI) (block ST284).

When one of the program information EX_PGI, cell information EX_CI, or EVOB/ESOB has been changed, this program update date may be set. When EVOBI and/or ESOBI have/has been changed, the edit times/time (EDIT_TIME) of the EVOBI and/or ESOBI can be set in ESOB_EDIT_TIME (not shown) or the like. Alternatively, this program update date may be set.

In this connection, in the process in block ST284, the manufacturer ID of the apparatus that has made the operation in one of blocks ST282A to ST282D may be set in an editor ID (LAST_MNF_ID). Every time one of the PGI, CI, and SOB (or VOB) has been changed, this editor ID can be set (or updated) to the ID information of the apparatus used at that time.

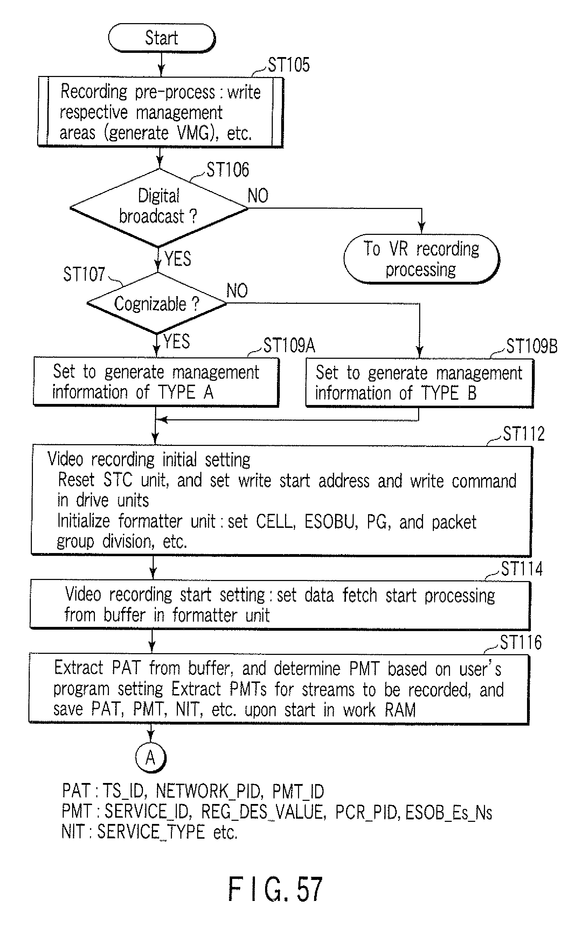

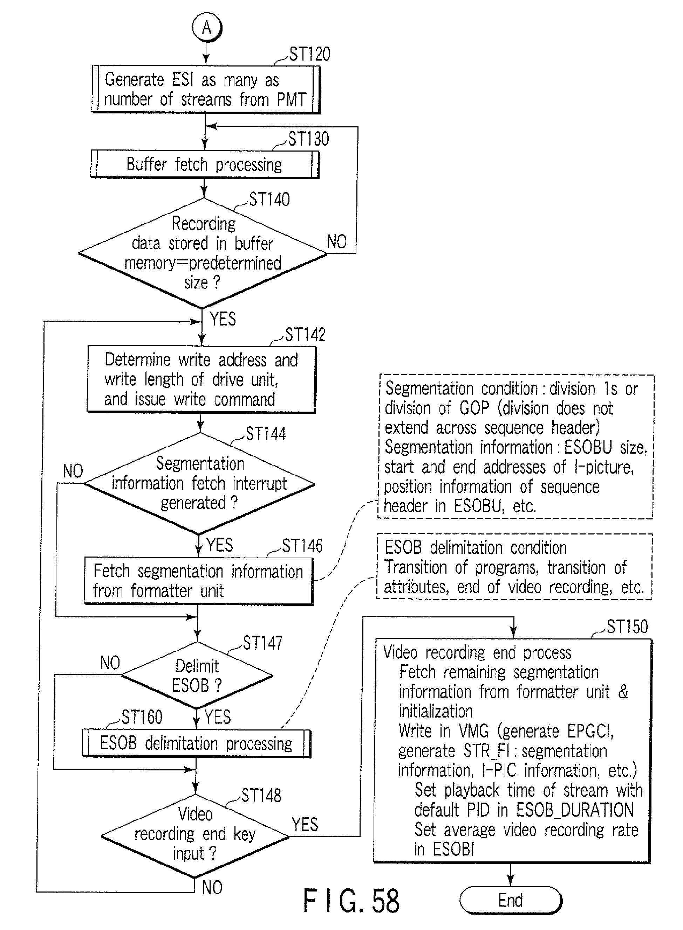

FIGS. 57 and 58 are flowcharts for explaining an example of the video recording operation of the apparatus in FIG. 53. Data processes upon stream recording are as follows.

d1) A program to be recorded is determined using an EPG (Electronic Program Guide) in the program setting processing, reception of that program starts, and the determined program is recorded.

d2) Upon reception of a recording command from key input unit 103, MPU unit 80 loads management data from disc 100 (or HDD unit 100a) via disc drive unit 51 and determines a write area. At this time, the MPU unit checks the file system to determine whether or not recording can be proceeded. If recording cannot be proceeded, the MPU unit displays a message that advises accordingly so that the user can abort the recording processing. On the other hand, if recording can be proceeded, the MPU unit executes pre-recording processing (block ST105 in FIG. 57). In this processing, MPU unit 80 determines the recording position, generates management information (HDVR_MG, etc.), and writes relevant information in respective management areas. In this case, if data to be recorded is not digital broadcast data (e.g., an analog video input or analog TV broadcast) (NO in block ST106), video recording (VR) can be adopted as the recording format in place of stream recording (SR). In this case, the control branches to VR recording processing.

d3) If data to be recorded is digital broadcast data (YES in block ST106), MPU unit 80 checks if the stream to be recorded is cognizable. If the stream to be recorded is cognizable (YES in block ST107), MPU unit 80 makes settings to generate management information as a type A stream on the PTM base (block ST109A); otherwise (NO in block ST107), MPU unit 80 makes settings to generate management information as a type B stream on the PATS base (block ST109B). After that, the MPU unit sets the write start address of stream data (video data) in disc drive unit 51, thus preparing for data recording (block ST112).

d4) In this preparation process, the MPU unit resets the count time of STC unit 102. Note that STC unit 102 is a system timer, and recording and/or playback are or is done with reference to this STC value.

d5) The PAT of a program to be recorded is loaded to determine the PID used to fetch the PTM of the target program. Then, the target PTM is loaded to determine the PIDs of data (video, audio) to be decoded (to be recorded). At this time, the PAT and PTM are saved in work RAM unit 80A of MPU unit 80, and they (PAT, PTM) are written in the management information (HDVR_MG). At this time, VMG file data is written in the file system (see FIG. 3 or 46), and pertinent information is written in VMGI (HDVR_MGI in FIG. 4).

d6) Video recording settings are made in respective units (block ST114). At this time, a segmentation setting of data and a reception setting of TS packets are made in formatter unit 90. Also, the PID of data to be recorded is set to record only a target video stream. Furthermore, buffer 91 is set to start holding of TS packets (block ST116). Then, formatter unit 90 starts its operation as follows.

d7) ESOB_ESI is generated based on the PTM (block ST120 in FIG. 38).

d8) Next, a TS packet stream to be recorded is fetched onto buffer 91 (block ST130). If data stored in buffer 91 reaches a predetermined size (YES in block ST140), ECC processing is done via D-PRO unit 52, thus recording the data that have undergone the ECC processing on disc 100 (and/or 100a) (block ST142).

d9) During video recording, segmentation information is saved in work RAM 80A of MPU unit 80 periodically (before buffer RAM 91 of formatter unit 90 becomes full of data) (YES in block ST144; block ST146). The segmentation information to be saved is ESOBU segmentation information, which includes the ESOBU start address, ESOBU pack length, I-Pic (reference picture) end address, the ESOBU arrival time (PATS), or the like.

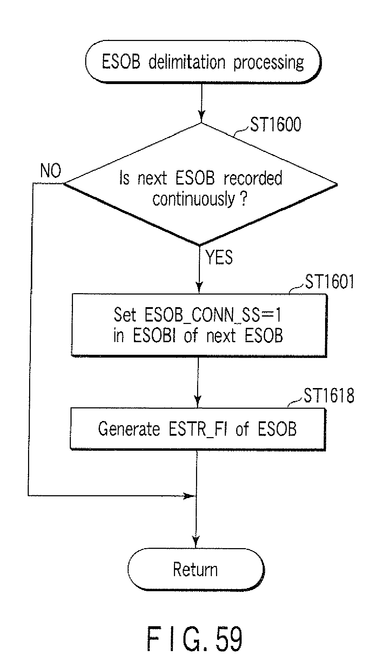

d10) After the segmentation information is saved in work RAM 80A (block ST146) or if the save timing of the segmentation information is not reached (NO in block ST144), MPU unit 80 checks if ESOB data are to be delimited. If ESOB data are to be delimited (YES in block ST147), the MPU unit executes ESOB delimitation processing (FIG. 59).

d11) It is checked if video recording is to end (if the user has pressed a video recording end key or if no recordable space of the disc (100 or 100a) remains). If video recording is to end (YES in block ST148), the remaining segmentation information is fetched from formatter unit 90, and is added to work RAM 80A. These data are recorded in management data (VMGI or HDVR_MGI), the average recording rate upon video recording is recorded, and the remaining information is recorded in the file system (block ST150).

d12) if video recording is not to end (NO in block ST148), the control returns to d8) to continue the data fetch and write processes.

In order to display the contents of stream data, whose video recording is in progress, on the TV or the like, the stream data to be recorded is sent to decoder unit 59 simultaneously with D-PRO unit 52, so as to make simultaneous video recording monitor. In this case, MPU unit 80 makes settings upon playback in decoder unit 59, which then automatically executes playback processing. D-PRO unit 52 forms ECC groups by combining, e.g., every 16 packs of stream data to be recorded, appends ECC data to each group, and sends them to disc drive unit 51 (and/or HDD 100a). When disc drive unit 51 is not ready to record on disc 100, D-PRO unit 52 transfers the ECC groups to temporary storage unit 53 and waits until disc drive unit 51 is ready to record. When disc drive unit 51 is ready, D-PRO unit 52 starts recording onto disc 100. As temporary storage unit 53, a large-capacity memory is assumed since it needs to hold recording data for several minutes or longer by high-speed access. Note that MPU unit 80 can make read and write accesses to D-PRO unit 52 via a dedicated microcomputer bus, so as to read and write the file management area and the like.

The flow of signals upon recording will be briefly summarized below. That is, MPEG-TS packet data received by STB 83 (or terrestrial digital tuner 89) are converted into packet groups by formatter 90, and the packet groups are saved in buffer 91. When data stored in buffer 91 reach a predetermined size (for one or an integer multiple of CDA size), they are recorded on the disc (100 and/or 100a).

FIG. 59 is a flowchart (ESOB delimitation processing flow) for explaining an example of the ESOB delimitation processing (block ST160). An example of the ESOB delimitation processing will be described below.

e1) It is checked if data is to be continuously recorded. If data is not to be continuously recorded (NO in block ST1600), this processing ends.

e2) If it is determined that data is to be continuously recorded (YES in block ST1600), "1" is set in ESOB__CONN_ SS (FIG. 23) in ESOBI in the next ESOB (block ST1601).

e3) ESTR_FI of the ESOB of interest is set (ST1618), thus ending this process.

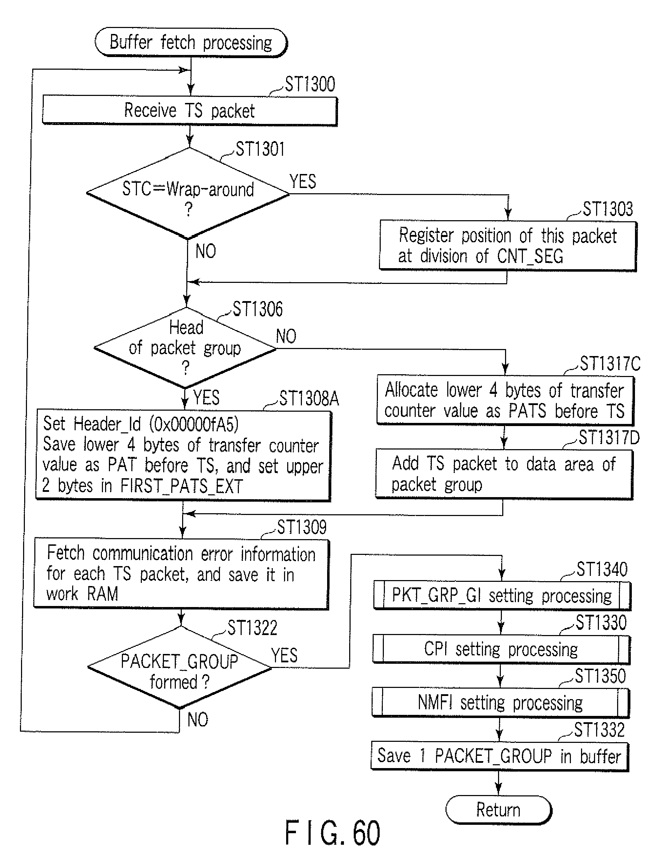

FIG. 60 is a flowchart (buffer fetch processing flow for managing 6 bytes of PATS data) for explaining an example of the contents of the buffer fetch processing (block ST130). Upon recording, TS packet data received by the STB unit (or terrestrial digital tuner) are converted into packet groups by the formatter unit, and are saved in the work RAM. When data saved in the work RAM reach a predetermined size (for one or an integer multiple of CDA size), they are recorded on the disc. As the operations at that time, upon reception of TS packets, a group is formed every 170 packets, and a packet group header is generated. More specifically, the following operation is made.

f1) A TS packet is received (block ST1300).

f2) It is checked if the STC has reached an end (Wrap-around). If the STC has reached an end (YES in block ST1301), a CNT_SEG is generated based on position information of the TS packet at the time of Wrap-around. In this manner, position information CNT_SEG_S__PKT_POS (see FIG. 20) of the TS packet at the time when the time count of STC unit 102 has reached an end is registered in management information CNT_SEGI (block ST1303). If the STC has not reached an end (the continuous count of the STC is still in progress) (NO in block ST1301), or if CNT_SEGI has been registered, the control advances to the next block.

f3) If the packet of interest is the first one of a packet group (YES in block ST1306), Header_ID: 0x00000fa5 is set (block ST1308A); otherwise (NO in block ST1306), the control advances to step f6).

f4) In block ST1308A, PATS data is used as the arrival time of the TS packet, the lower 4 bytes of the PATS data are allocated before that TS packet, and the upper 2 bytes of the first PATS data are set in the Packet_Group_ Header as FIRST_PATS_EXT.

f5) In the TS packet fetched in the TS packet data area, the lower 4 bytes of the PATS data are appended before that TS packet (block ST1317C), and the TS packet is set in a packet group data area (block ST1317D).

f6) It is checked if a packet group is formed (if 170 TS packets are grouped). If a packet group is not formed yet (NO in block ST1322), the flow returns to f1) . If the packet group is formed (YES in block ST1322), PKT_GRP_GI setting processing (block ST1340), CCI or CPI processing (ST1330), and MNFI processing (ST1350) are executed, and group data for one packet group are temporarily saved in buffer RAM 91 (block ST1332).

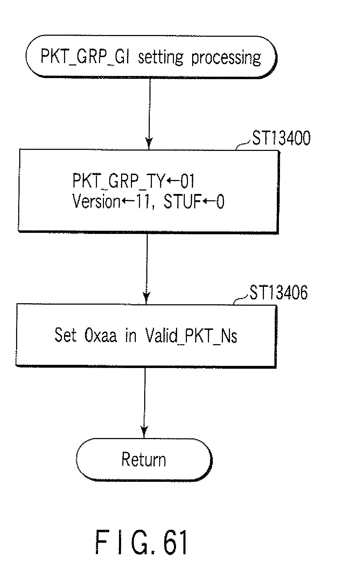

FIG. 61 is a flowchart (PKT_GRP_GI setting processing flow) for explaining an example of the packet group general information setting processing (block ST1340).

g1) The packet type is checked. If the packet type indicates an MPEG-TS packet, a value "01" is set in PKT_GRP_TY; otherwise, a value suited to that type is set in PKT_GRP_TY (block ST13400).

g2) A value (e.g., "11") corresponding to the BOOK version of the standard of interest is set in VERSION, and a STUF bit indicating if stuffing is done is set (to be, e.g., "0") (block ST13400).

g3) If 0 is set in the STUF bit, "0xaa" is set in Valid_PKT_Ns (including the number of valid packets in a packet group and the upper 2 bytes of PATS data appended to the first packet) (block ST13406).

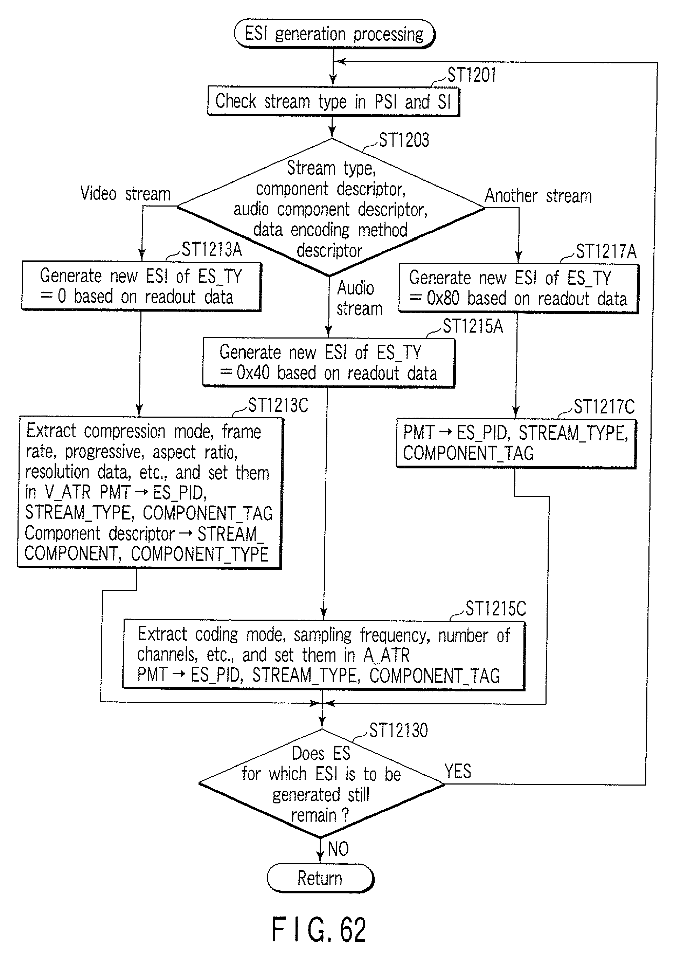

FIG. 62 is a flowchart (ESI setting processing flow) for explaining an example of the contents of the stream information (ESI) generation processing (block ST120).

h1) PSI and SI are examined to check the number of set streams (block ST1201).

h2) f4) and f5) are repeated in correspondence with the number of set streams (in case of YES in block ST12130).

h3) A stream type is checked based on PSI and SI (block ST1203) to determine if the stream of interest is a video or audio stream, or another type of stream to branch the control to the next stream check processes.

h4) In this case, the stream type is categorized to MPEG1 video, MPEG2 video, MPEG1 audio, MPEG2 audio,..., and internal data are checked depending on the determined type to read out respective kinds of attribute information.

h5) In case of a video stream, ES_TY = 0 (block ST1213A), and respective kinds of attribute information are set (especially, resolution data, aspect information, and the like are extracted) to generate V_ATR (block ST1213C). The control then advances to f8).

h6) In case of an audio stream, ES_TY = 0x40 (block ST1215A), and respective kinds of attribute information are set (especially, the coding mode, sampling frequency, the number of channels, and the like are extracted) to generate A_ATR (block ST1215C). The control then advances to f8).

h7) In case of another kind of stream, ES_TY = 0x80 (block ST1217A), and respective kinds of attribute information are set (block ST1217C). The control then advances to f8).

h8) It is checked if streams for which ESI is to be generated still remain. If such streams remain, the control returns to check the next stream (NO in block ST1230).

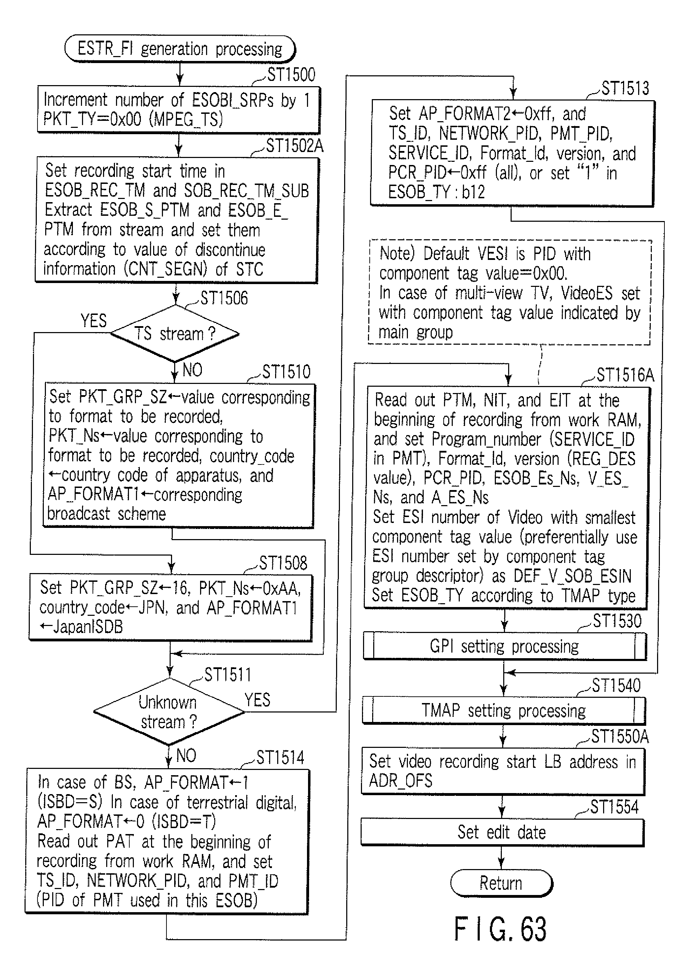

FIG. 63 is a flowchart for explaining an example of stream file information (ESTR_FI) generation processing in the video recording end processing (block ST150).

j1) The number of search pointers (ESOBI_SRP) is increased by one to add another ESOBI, an area for that ESOBI is assured, and 0: MPEG_TS is set in PKT_TY (block ST1500).

j2) The video recording time is set in ESOB_REC_TM (block ST1502A). Note that the internal clock of the apparatus is set and corrected based on a TDT (Time Data Table), so that an accurate time can always be obtained.

j3) In this case, ESOB_S_PTM and ESOB_E_PTM data are extracted from the stream, and STC discontinuity information (e.g., CNT_SEGN in FIG. 36) is checked to set the start PTM and end PTM of an ESOB corresponding to the ESOBI added in j1) (block ST1502A).

j4) If the stream type is a TS stream (ARIB, DVB) (YES in block ST1506), "188" is set in AP_PKT_SZ and "16" is set in PKT_GRP_SZ (block ST1508A); otherwise (NO in block ST1506), a value corresponding to the broadcast scheme is set in AP_PKT_SZ (block ST1510). For example, in block ST1508A JPN (Japan) is set as country_code, and JapanISDB is set as AP_FORMAT1. Also, in block ST1510 the country code (e.g., USA) of the apparatus of interest is set as country_code, and the corresponding broadcast scheme (e.g., ATSC) is set as AP_FORMAT1.

j5) It is checked if PSI information and SI information are valid. If the PSI information and SI information are invalid (i.e., an unknown stream: NO in block ST1511), "1" is set in ESOB_TY: b12 or 0xff is set in respective values (block ST1513), and the control advances to j9).

j6) If the PSI information and SI information are valid (that is, a known stream: NO in block ST1511), TS_ID, NETWORK_PID, and PTM_ID (the PID of PTM data used by the ESOB of interest: there are two description methods of the PID: a method of describing the PID using 13-bit real data, and a method of describing the order in the PTM) are set based on PAT data (block ST1514).

j7) Program_Number (SERVICE_ID in PTM), PCR_PID, and the like are set based on PTM data. Furthermore, as for FORMAT_ID and VERSION, default values in the apparatus (in case of the built-in tuner) or Registration_Descriptor values sent via a digital input (in case of an external digital input) are set. Also, ESOB_TY is set according to the TMAP type (block ST1516A).

j8) Moreover, the number of recorded ESs, the number of Video ESs, and the number of audio ESs are set (block ST1516A). (The PTM is set with information: the number of all broadcasted ESs, but since not all ESs are always recorded upon video recording, the number of recorded ESs is set.)

j9) GPI setting processing (ST1530), TMAP setting processing (block ST1540), and the like are executed, and TMAPI is generated for each stream based on each segmentation information.

j10) The video recording start LB address is set in ADR_OFS (block ST1550A), and a default PID is set. Note that the default video PID corresponds to that with a smallest component tag value or the ESI number of a stream corresponding to a component tag described in a main component group in case of multi-view TV.

j11) An edit date is set (block ST1554).

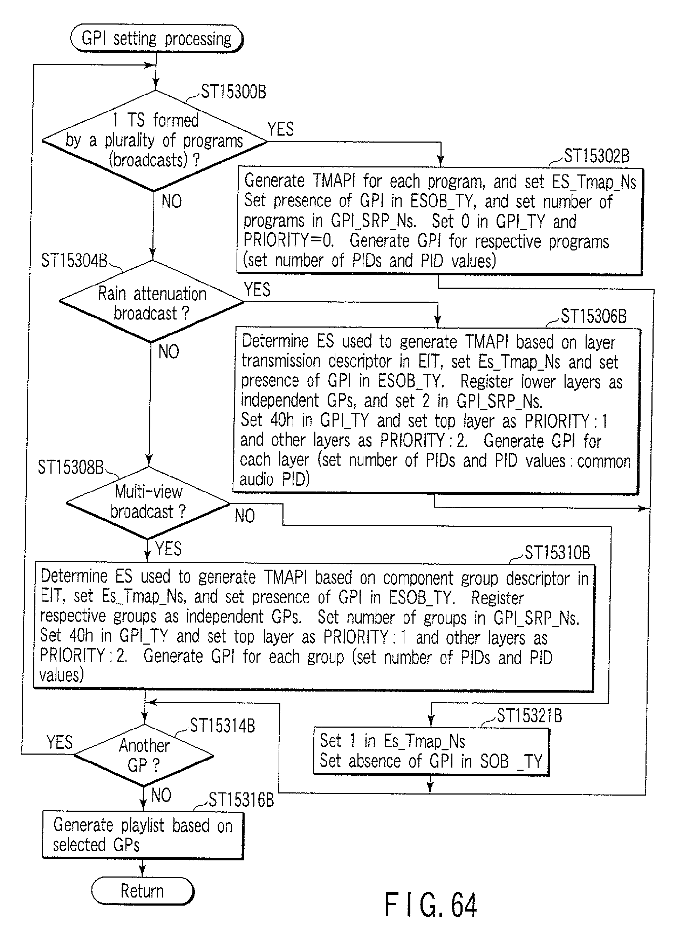

FIG. 64 is a flowchart for explaining an example of the GPI setting processing (block ST1530). This GPI setting processing can be executed as follows.

k1) A stream type is checked (block ST15300B).

k2) If a plurality of programs form one stream (YES in block ST15300B), information indicating the presence of GPI is set in ESOB_TY, GPI_TY = 0, PRIORITY = 0 for all programs, one GPI is generated per program, and the number of groups is set (block ST15302B). The control then advances to k5).

k3) In case of rain attenuation broadcast (YES in block ST15304B), information indicating the presence of GPI is set in ESOB_TY, GPI_TY = 40h, the top layer is set to be PRIORITY: 1, and other layers are set to be PRIORITY: 2. One GPI is generated per layer, and the number of groups is set (block ST15306B). The control then advances to k5).

k4) In case of multi-view broadcast (YES in block ST15308B), information indicating the presence of GPI is set in ESOB_TY, GPI_TY = 40h, the top layer is set to be PRIORITY: 1, other layers are set to be PRIORITY: 2, and one GPI is generated per view (block ST15310B). Otherwise (NO in block ST15308B), 1 is set in ES_TMAP_Ns and information indicating the absence of GPI is set in ESOB_TY (block ST15312B). It is checked if ESs to be grouped (GP) still remain. If such ESs still remain (YES in block ST15314B), the control returns to k1); otherwise (NO in block ST15314B), the number of groups is set, and the control advances to k5).

k5) It is checked if another group (GP) remains. If such group remains, the control returns to k1); otherwise, a playlist is generated based on the PID of the currently selected group (block ST15316B), thus ending this processing.

k6) In this way, if playback is made using the currently selected group, the playlist automatically generated in block ST15316B can be played back.

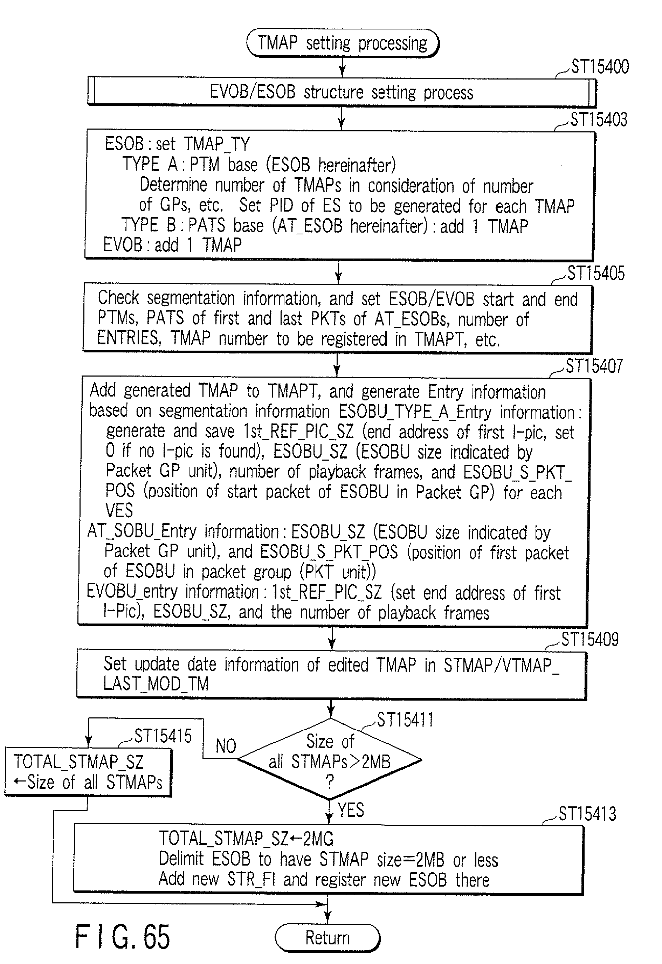

FIG. 65 is a flowchart for explaining the TMAP setting processing (block ST1540). An example of the TMAP setting processing will be described below.

m1) The ESOB/EVOB structure is determined (block ST15400) .

m2) In case of the ESOB, TMAP_TY is determined (block ST15403). If this ESOB is on the PTM base, ESs used to generate an STMAP are determined in consideration of the number of GPs, the number of ESs (the number of video ESs) is set as the number of TMAPs, and ES_PID to be generated is set for each TMAP. (However, one TMAP need not always be assigned to one GP. If no TMAP is available, another ES_TMAP of the identical ESOB is used to implement playback, search, special playback, and the like.) On the other hand, in case of an ESOB (AT_ESOB) on the PATS base or EVOB, one TMAP is added (see FIG. 25 for the data structure of a TMAP on the PATS base).

m3) The ESOB (PTM base)/EVOB start and end times, the start and end times for each TMAP, the number of entries, the arrival time of the first packet of the ESOB (PATS base), the arrival time of the last packet of the ESOB, and the like are set based on segmentation information (block ST15405).

m4) A TMAPT is added, and ENTRY information (in case of an ESOB) is generated based on segmentation information. That is, 1ST_REF_PIC_SZ (the end address of the first I-pic of a target VES; if no I-Pic is available, zero is set), ESOBU_SZ (indicating the ESOBU size by PacketGP units), and ESOBU_S_PKT_POS (the head position of an SOBU in a PacketGP) are set for each VIDEO_ES. As ENTRY information in case of an AT_SOBU, AT_SOBU_SZ (indicating the ESOBU size by PKT units) and AT_SOBU_S_PKT_POS (the position of the first packet of the AT_SOBU in a packet group (PKT unit)) are set. Furthermore, as ENTRY information in case of an EVOBU, 1ST_REF_PIC_SZ (set the end address of the first I-pic), EVOBU_SZ, the number of playback frames, and the like are set (block ST15407). Note that TMAPT information is recorded as an independent file.

m5) The STMAP edit date is updated (block ST15409).

m6) It is checked if the sum total of the STMAP data of the STR_FI of interest exceeds 2MB. If the sum total exceeds 2MB (YES in block ST15411), "2MB" (or the sum value of an ESOB segmented at 2MB) is set in TOTAL_STMAP_SZ, and an ESOB is segmented not to exceed 2MB. New STR_FI is generated, and a new ESOB is registered there (block ST15413), thus ending this processing.

m7) If the sum total does not exceed 2MB (NO in block ST15411), the sum total of STMAPs is set in TOTAL_STMAP_SZ (block ST15415), thus ending this processing.

With the above processing, the sum total of STMAPs can be prevented from exceeding 2MB (the upper limit of an available memory size) (the sum total of STMPAPs is expected to equal the sum of previous TOTAL_STMAP_SZ and STMAP_SZ of the currently added ESOB).

As a method of setting the STMAP size to fall within 2MB, a method of increasing the number of pieces of STR_FI by segmenting an ESOB into two objects as in the above processing, a method of increasing the number of pieces of STR_FI without segmenting an ESOB, and registering the ESOB in that information, and a method of broadening the STMAP interval by changing ESOBU_PB_TM_RNG may be used.

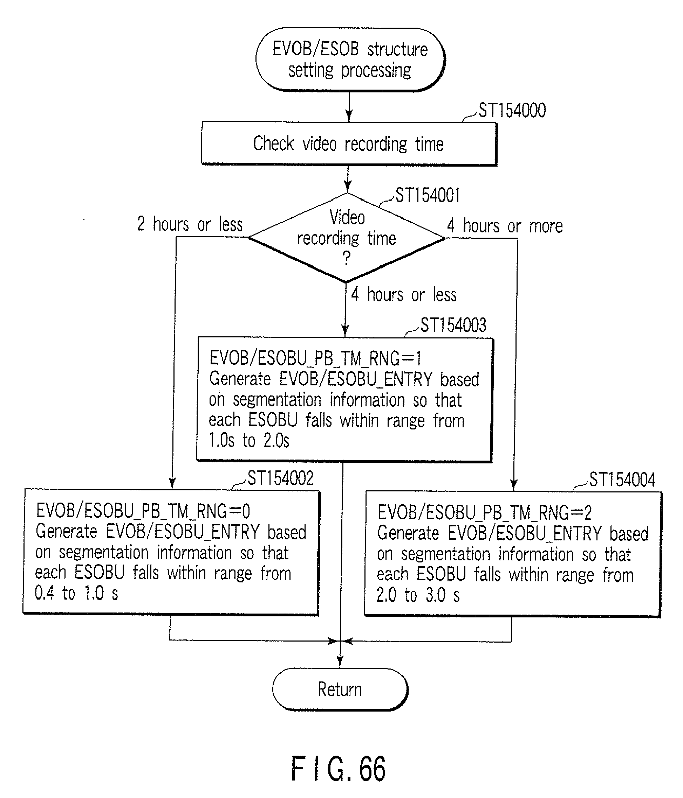

FIG. 66 is a flowchart for explaining the EVOB/ESOB structure setting processing (block ST15400). An example of the EVOB/ESOB structure setting processing will be described below.

n1) The recorded time is checked (block ST154000). If the recorded time is equal to or shorter than two hours, the control advances to n2); if it falls within the range from two to four hours, the control advances to n3); or if it is equal to or longer than four hours, the control advances to n4) (block ST154001).

n2) "0" is set in EVOB/ESOB_PB_TM_RNG, and EVOBU/ESOBU_ENT data are generated based on segmentation information (information of 0.4s to 1s) so that each ESOBU has a time range of 0.4s to 1s (block ST154002). The control then advances to n5).

n3) "1" is set in EVOB/ESOB_PB_TM_RNG, and EVOBU/ESOBU_ENT data are generated based on segmentation information (information of 0.4s to 1.0s) so that each ESOBU has a time range of 1.0s to 2.0s (block ST154003;. The control then advances to n5).

n4) "2" is set in EVOB/ESOB_PB_TM_RNG, and EVOBU/ESOBU_ENT data are generated based on segmentation information (information of 0.4s to 1.0s) so that each ESOBU has a time range of 2.0s to 3.0s (block ST154004). The control then advances to n5).

n5) This processing ends.

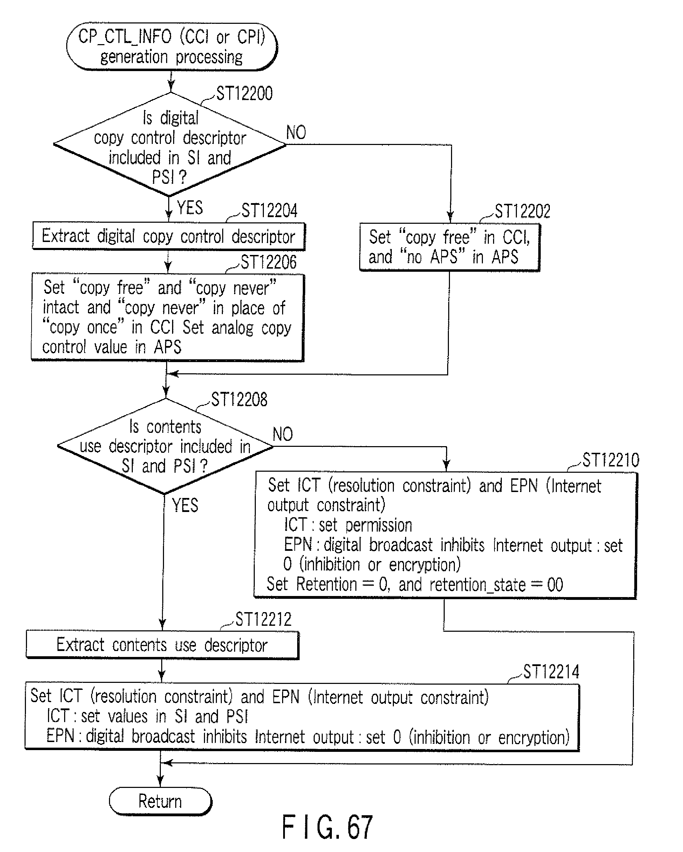

FIG. 67 is a flowchart for explaining the CP_CTL_INFO (CCI or CPI) generation processing (block ST1220). An example of the CP_CTL_INFO setting processing will be described below.

p1) It is checked if the latest PTM and EIT include copy information (digital copy control descriptors). If copy information is included (YES in block ST12200), the copy control descriptors are extracted (block ST12204), and CCI (APS, digital copy control information, etc.) is formed and set based on the extracted information (block ST12206). The control then advances to p3). At this time, "1" is set in PKT_GRP_GI: STUF, and the number of valid packets is set in PKT_GRP_GI: VALID_PKT_Ns.

p2) If no copy information is included in the received TS packet (NO in block ST12200), "copy free" is set (block ST12202).

p3) It is checked if the latest PTM and EIT include contents use descriptors. If the contents use descriptors are included (YES in block ST12208), the contents use descriptors are extracted (block ST12212), and ICT and EPN are set based on the extracted information (block ST12214A).

p4) If no contents use descriptors are included (NO in block ST12208), ICT and EPN are formed as "copy free" (block ST12210). Note that the ICT, EPN, and the like in block ST12214A or ST12210 have been described in the description of CCI with reference to FIG. 39.

Another example of the CCI setting processing will be additionally explained below.

1) It is checked if the latest PTM and EIT include copy information. If copy information is included, copy information is formed and set based on that information. The control then advances to 3).

2) if the received TS packet does not include any copy information, the same information as in the previous pack is formed as copy information.

3) It is checked if the latest PTM and EIT include contents use descriptors. If the contents use descriptors are included, the following processing is made. That is, if the values of the contents use descriptors have changed in the middle of a packet group, dummy data is inserted in the previous packet group to form a new packet group after the changed position, and CCI is set based on that information. At this time, 1 is set in PKT_GRP_GI: STUF, and the number of valid packets is set in PKT_GRP_GI: VALID_PKT_Ns.

4) If the received TS packet does not include any copy information, CCI or CPI is formed as "copy free".

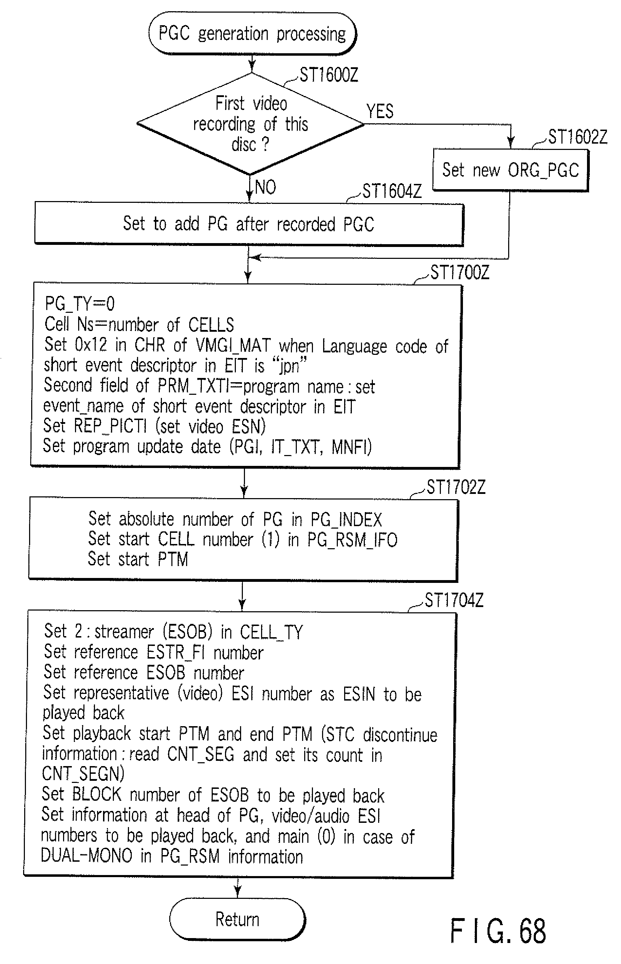

FIG. 68 is a flowchart for explaining an example of the program chain (PGC) generation processing (including program setting processing) in the video recording end processing (block ST150). An example of the PGC generation processing will be described below.

q1) It is checked if a disc of interest undergoes the first video recording. If the disc of interest undergoes the first video recording (YES in block ST16002), new ORG_PGC is generated (block ST1602Z): otherwise (NO in block ST1600Z), a setting is made to add program PG after the already recorded PGC (ORG_PGC) (block ST16042).

q2) Erase permission: 0 is set in PG_TY, the number of CELLs is set in Cell_Ns, and the video ESI number is also set (block ST1700Z).

q3) In the setting of block ST1700Z, if the digital broadcast to be recorded is ARIB, and if language_code in a short event descriptor in an EIT is "jpn", "0x12" is set in CHR in VMG_MAT, EVENT_NAME is set in the second field of PRM_TXTI, and representative picture information is set in REP_PICTI.

q4) The absolute number of PG is set in PG_INDEX to allow another application software or the like to refer to each PG (block ST1702Z). In this case, the start cell number and start time (start PTM) are set in resume information (PG_RSM_IFO).

q5) Information indicating a streamer is set in CELL_TY (e.g., cell type included in cell information EX_CI in FIG. 34) (block ST1704Z).

q6) In the setting of block ST1704Z, the reference ESOB number is set, the representative (video) ES number (ESIN) is set as the ES to be played back, and the number of pieces of entry point information EPI (FIG. 35), playback start and end PTMs, and entry points EPs are set. Furthermore, discontinuous segments CNT_SEG exemplified in FIG. 20 are read, the number of CNT_SEGs is set in, e.g., CNT_SEGN in FIG. 36, and the block number of the ESOB to be played back is also set.

q7) Moreover, in the setting of block ST1704Z, start information is set in RG_RSM_INF (playback start PTM, video ESI number, audio ESI number, main/sub information of Dual-Mono) so that playback can start from the head of the program. The factors of automatic EP assignment in the video and time relationships are a constant time and a video mode change (an aspect ratio, and large motion vectors), and the first packet (the first packet of a sequence header, the first packet of I-PIC) of the first packet (Unit Start Indicator) GOP of a video frame is combined with these conditions. Furthermore, the factors of automatic EP assignment in the audio relationship are a change in audio (a change in audio volume or the like)/audio mode (ST/MONO), and the first packet (Unit Start Indicator, frame header) of an audio frame is combined with these conditions.

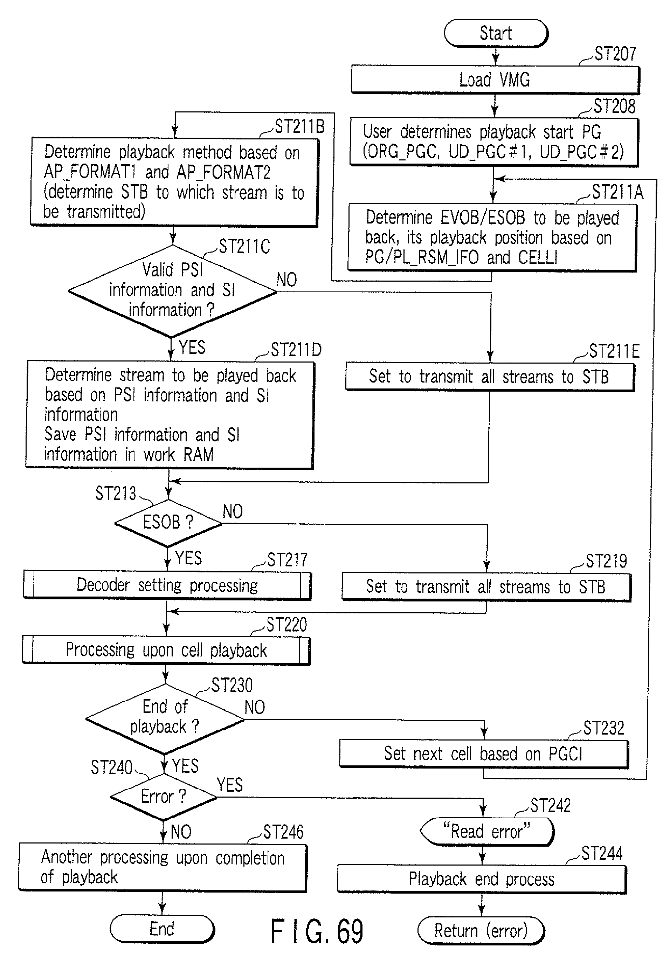

FIG. 69 is a flowchart (overall playback operation flow) for explaining an example of the playback operation. The data processes upon playback are executed as follows.

r1) Disc check processing is made first to check if the disc of interest is a Recordable/Rewritable Disc (R, RW, RAM). If the disc of interest is not a Recordable/Rewritable Disc, a message that advises accordingly is returned, and the processing ends.

r2) If the disc of interest is a Recordable/Rewritable Disc, the file system of the disc is read out to check if data has already been recorded (block ST207). If no data is recorded, a message "no data is recorded" is displayed, thus ending the processing.

r3) The VMG file is loaded (block ST207) and programs and cells to be played back are determined (they are determined as defaults or are selected by the user) (block ST208). In this case, if playback processing in the recorded order is selected, playback is made according to ORG_PGCI; if playback processing for each program (edited by the user) is to be made, playback is made according to UD_PGC (playlist) with a number corresponding to the program to be played back.

r4) The ESOB/EVOB to be played back, playback start PTM, and the like are determined based on title information (if PSI information and SI information are unknown, the setting is made to execute only transfer processing to the STB), resume information (PL_RSM_IFO, PG_RSM_IFO), cell information EX_CI) to be played back, and the like, and a playback start file pointer (logical address) and ESI of a stream to be played back are determined based on the playback start PTM. Furthermore, respective decoder units are set based on STI and ESI values to prepare for playback (block ST211A).

r5) Next, a playback method is determined based on AP_FORMAT1 and AP_FORMAT2 (see FIGS. 12 and 15) (to determine a playback stream to be sent to the STB) (block ST211B).

r6) If PSI information and SI information are valid (YES in block ST211C), a stream to be played back is determined based on the PSI information and SI information, and the PSI information and SI information are saved in the work RAM (block ST211D). If the PSI information and SI information are invalid (NO in block ST211C), a setting is made to transmit all streams to the STB (block ST211E).

r7) Processing upon playback start is executed. It is checked if an object to be played back is an ESOB. Even if the object to be played back is an ESOB (YES in block ST213), decoder setting processing starts (block ST217); otherwise (NO in block ST213), only TS packet transmission processing is executed (block ST219).

r8) Next, cell playback processing is executed (block ST220), and it is then checked if playback is to end. If playback is to end (YES in block ST230), error check processing is executed. If any error is found (YES in block ST240), a message that advises accordingly is displayed (block ST242), and playback end processing is executed (block ST244). If no error is found (NO in block ST240), anther playback end processing is executed (block ST246), thus ending this operation.

r9) If playback is not to end (NO in block ST230), the next cell is determined based on PGCI (block ST232), and the flow returns to block ST211A. It is checked if the settings of decoder unit 59 (block ST217) have been changed. If the settings of decoder unit 59 have been changed, changed attributes are set in decoder unit 59 so as to change decoder settings in response to the next sequence end code.

r10) The same processes (blocks ST211A to ST232) are repeated while checking if playback is to end (block ST230).

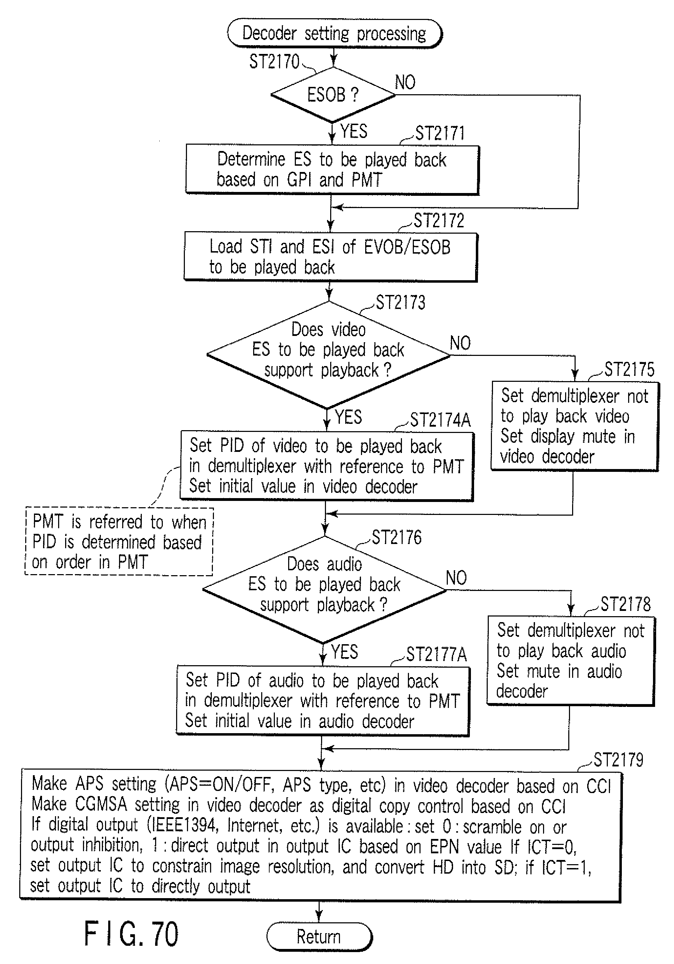

FIG. 70 is a flowchart for explaining the decoder setting processing (ST217). An example of the decoder setting processing will be described below.

s1) If an object to be played back is an ESOB (YES in block ST2170), a group to be played back is determined, and ESs to be played back are determined in accordance with GPI (block ST2171). If an object to be played back is an EVOB (NO in block ST2170), the control skips block ST2171.

s2) Attribute information (STI, ESI) of the ESOB (or EVOB) to be played back is loaded (block ST2172).

s3) It is checked if the ESOB (or EVOB) to be played back has a format supported by the recorder (the apparatus in FIG. 53, FIG. 54, or the like). If the format is unsupported (NO in block ST2173), apparatus settings are made not to play back the ESOB and display mute is set (block ST2175).

s4) If video data to be played back can be played back (YES in block ST2173), playback preparation is made (block ST2174A). In this case, the PID can be used intact if the 13-bit PID is set. However, the PID is determined with reference to PTM data if it is set based on the order in the PTM data.

s5) It is checked if audio data to be played back can be played back. If the audio data can be played back (YES in block ST2176), playback preparation is made (block ST2177A). In this case, the PID can be used intact if the 13-bit PID is set. However, the PID is determined with reference to PTM data if it is set based on the order in the PTM data. If the audio data cannot be played back (NO in block ST2176), apparatus settings are made not to play back the audio data and audio mute is set (block ST2178).

s6) Copy control processing is executed based on CCI or CPI information which includes the contents generated in the processing of, e.g., FIG. 67 (block ST2179).

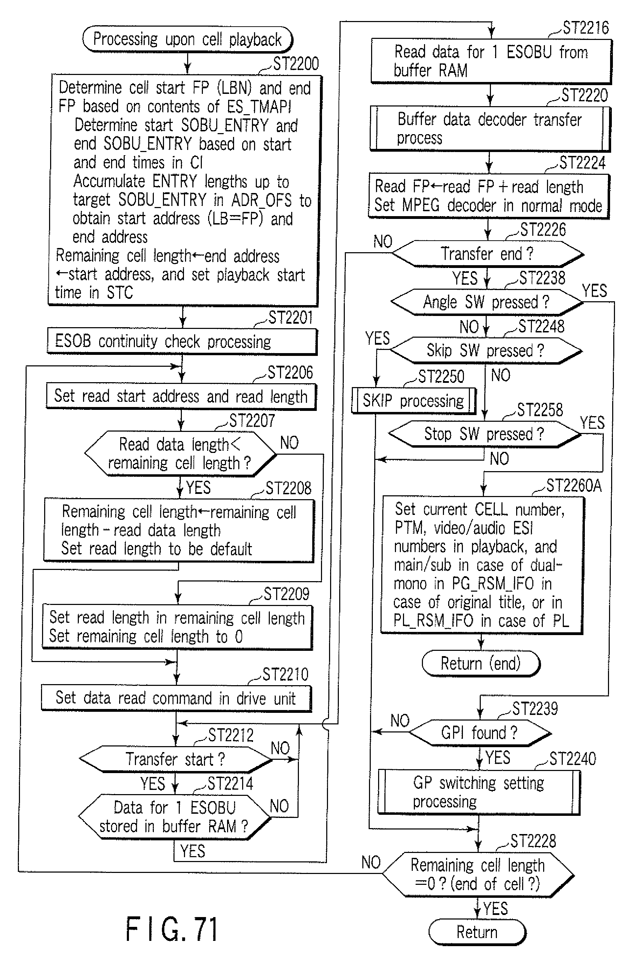

FIG. 71 is a flowchart for explaining an example of the processing upon cell playback. The cell playback processing is executed as follows.

t1) Start file pointer FP (logical block number LBN) and end file pointer FP (logical block number LBN) of EX CELL are determined based on the contents of TMAPI. Furthermore, start ESOBU_ENTRY and end ESOBU_ENTRY are determined based on the start and end times in EX_CI, and the data lengths of entries until target ESOBU_ENTRY are accumulated in ADR_OFS, thus obtaining a start address (LB = FP) and end address. The remaining EX_CELL length is calculated by subtracting the start address from the end address, and the playback start time is set in the STC (block ST2200). The PID to be played back is determined and is set in the decoder (STB, digital tuner). In this case, the PID can be used intact if the 13-bit PID is set. However, the PID is determined with reference to PTM data if it is set based on the order in the PTM data.

t2) ESOB continuity check processing is executed (block ST2201) .

t3) Read processing during playback is executed to determine the read address and read size based on the start file pointer (block ST2206).

t4) The read unit size to be read out is compared with the remaining cell length. If the remaining cell length is larger than the read unit size (YES in block ST2207), a value obtained by subtracting the read unit size to be read out from the remaining cell length is set as the remaining cell length (block ST2208). If the remaining cell length is smaller than the read unit size (NO in block ST2207), the read unit size is set to be the remaining cell length, and the remaining cell length is set to be zero (block ST2209).

t5) The read length is set to be a read unit length, and the read address, read length, and read command are set in the disc drive unit (block ST2210).

t6) If data transfer starts (YES in block ST2212), the control waits until data for one ESOBU are stored. If data for one ESOBU are stored (YES in block ST2214), data for one ESOBU are loaded from the buffer (block ST2216), and buffer decoder transfer processing is executed (block ST2220). After read file pointer FP is incremented and the MPEG decoder is set in a normal mode (block ST2224), the control advances to t7).

t7) It is checked if transfer is complete. If transfer is complete (YES in block ST2226), the control advances to t8).

t8) It is checked if an angle key or the like has been pressed. If the angle key has been pressed (YES in block ST2238), it is checked if GPI is available. If GPI is available (YES in block ST2239), GP switching processing is executed (block ST2240); otherwise (NO in block ST2239), the control advances to the processing in block ST2228 without any process.

t9) If the angle key or the like has not been pressed (NO in block ST2238), it is checked if a Skip SW has been pressed. If the Skip SW has been pressed (YES in block ST2248), SKIP processing is executed (block ST2250).

t10) If the Skip SW has not been pressed (NO in block ST2248), it is checked if a STOP SW has been pressed. If the STOP SW has been pressed (YES in block ST2258), resume information (RSM_IFO) is saved in PG_RSM_IFO in case of title playback or in PL_RSM_IFO in case of playlist playback, and end processing is executed (block ST2260A) .

t11) If the STOP SW has not been pressed (NO in block ST2258), the remaining cell length is checked. If the remaining cell length is not "0", i.e., if the current cell is not the last one (NO in block ST2228), the flow returns to block ST2206; if it is "0" (YES in block ST2228), this processing ends.

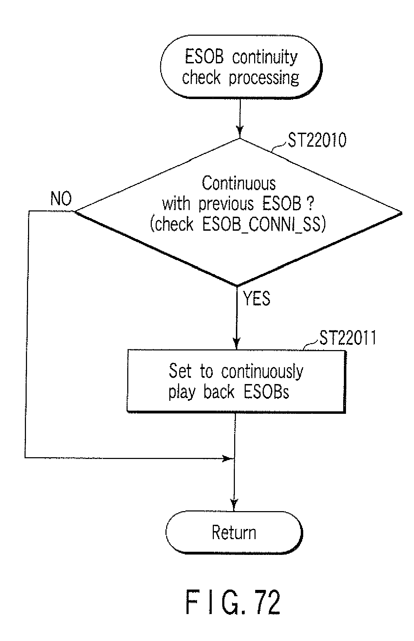

FIG. 72 is a flowchart for explaining the ESOB continuity check processing (ST2201). The ESOB continuity check processing upon playback is executed, for example, as follows.

u1) It is checked if the current ESOB is continuously recorded with the previous ESOB (ESOB_CONNI in FIG. 23). If the two ESOBs are not continuously recorded (NO in block ST22010), this processing ends.

u2) If the two ESOBs are continuously recorded (YES in block ST22010), a setting is made to continuously play back the two ESOBs (to stop processing for, e.g., inserting a black frame between ESOBs until playback starts) (block ST22011).

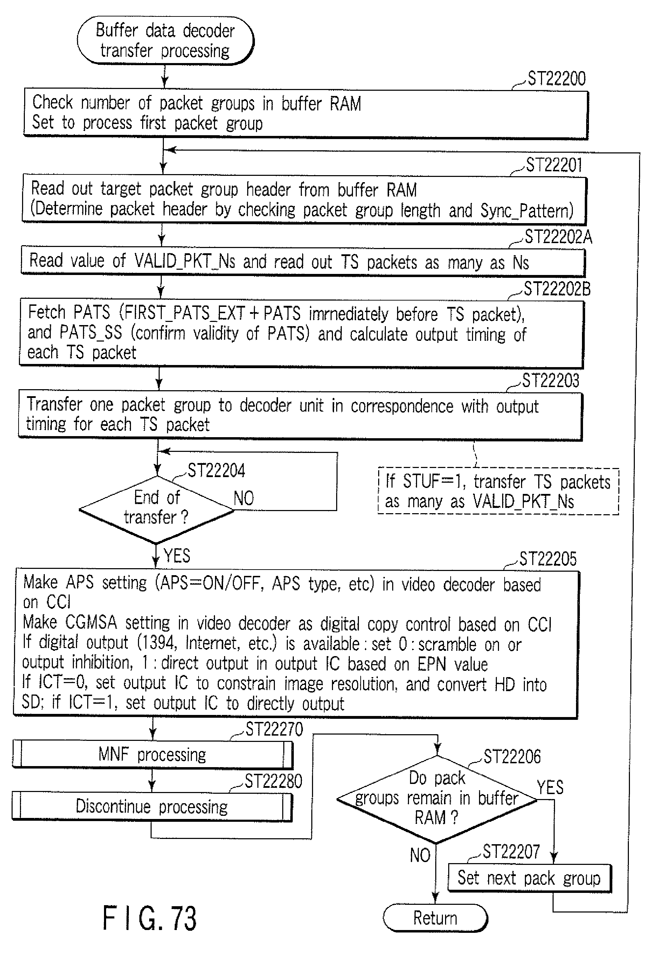

FIG. 73 is a flowchart for explaining the data transfer processing from the buffer RAM to the decoder. An example of the buffer data decoder transfer processing will be described below.

v1) The number of packet groups in the buffer RAM is checked. If no packet group is found, the control skips the processing in FIG. 73. If one or more packet groups are stored in the buffer RAM, a setting is made to process the first packet group (block ST22200).

v2) A target packet group is read out from the buffer RAM (block ST22201). The head of the packet group is detected based on the packet group length and Header_ID (FIG. 37) which serves as Sync_Pattern.

v3) The STUF bit (FIG. 38) of the packet group header is checked. If "1" is set, valid packets are extracted in accordance with the value of VALID_PKT_Ns (block ST22202A). If "1" is not set in the STUF bit, it is determined that 170 packets are valid.

v4) Each TS packet is sent to the decoder unit (STB unit) at a time which is calculated using FIRST_PATS_EXT as the upper 2 bytes of PATS data of the first packet of the packet group and the lower 4 bytes of PATS data of the TS packet allocated immediately before that packet (block ST22202B). In other words, the PATS accuracy is detected based on PATS_SS, a transfer time of each TS packet is calculated from the PATS data (FIRST_PATS_EXT + PATS of the immediately preceding TS packet: in case of 4-byte accuracy) and PATS_SS (block ST22202B), and each TS packet is sent to the decoder unit (STB unit) at that time (block ST22203).

In case of the 6-byte accuracy, the transfer time of each TS packet is calculated using FIRST_PATS_EXT as the upper 2 bytes of PATS data of the first packet of the packet group, and the lower 4 bytes of PATS data of the TS packet allocated immediately before that packet. In case of 4-byte accuracy, PATS data is calculated from the immediately preceding PATS data in consideration of carry. In case of no accuracy, after packet data is extracted, a TS packet is output as soon as a request is received.

v5) Upon completion of packet transfer to the decoder unit (YES in block ST22204), copy control setting processing (CCI or CPI processing) is executed (block ST22205).

v6) After that, it is checked if manufacturer information MNF is available. If manufacturer information MNF is available, it is checked if its manufacturer ID matches that of the manufacturer of the apparatus of interest. If the two IDs match, data of manufacturer information MNF is loaded to execute predetermined processing (processing unique to each manufacturer) (block ST22270).

v7) Next, discontinue processing is executed (block ST22280).

v8) The control waits for completion of transfer, and it is checked if packet groups still remain in the buffer RAM. If no packet group remains in the buffer RAM (NO in block ST22206), this processing ends.

v9) If packet groups still remain in the buffer RAM (YES in block ST22206), a setting is made to process the next packet group (block ST22207), and the flow returns to block ST22201.

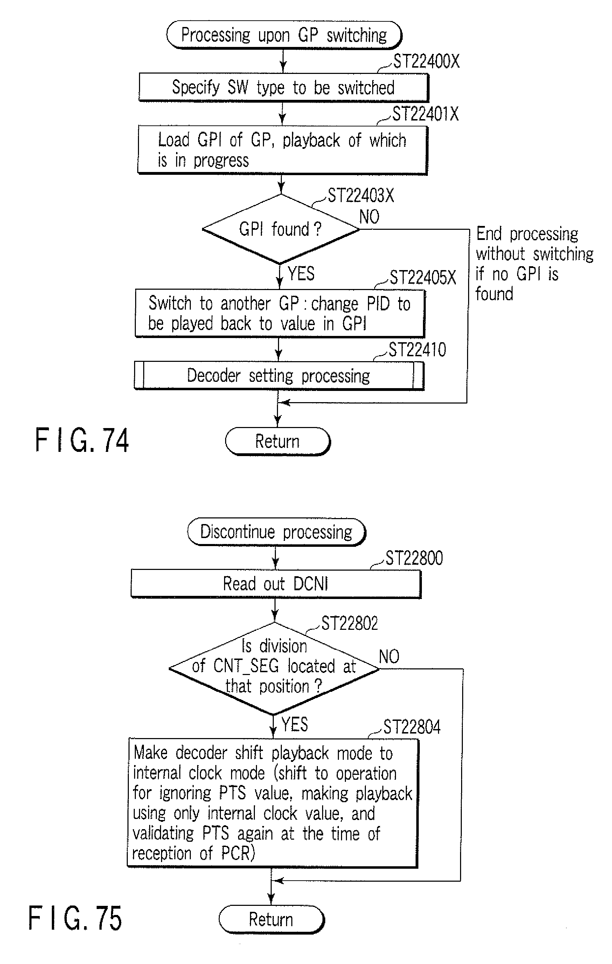

FIG. 74 is a flowchart for explaining an example of the GP switching setting processing. The GP switching processing is executed, for example, as follows.

x1) The type of selector switch SW is checked (block ST22400X).

x2) Grouping information GPI of packet group GP whose playback is currently in progress is loaded (block ST22401X).

x3) It is checked if the GPI is stored. If no GPI is stored (NO in block ST22403X), this processing ends.

x4) If the GPI is stored (YES in block ST22403X), the GPI information is loaded to switch another GP (block ST22405X), and decoder setting processing is executed (block ST22410).

FIG. 75 is a flowchart for explaining an example of the discontinue processing. An example of the discontinue processing will be described below.

y1) Discontinuity information DCNI is read out and checked (block ST22800). If a CNT_SEG gap is found at the playback position (YES in block ST22802), the playback mode of the decoder is shifted to an internal clock mode (an operation mode that ignores the PTS value, makes playback using only internal clock values, and enables PTS data again at the time of reception of PCR data: external sync mode) (block ST22804), thus ending this processing.

y2) If no CNT_SEG gap is found at the playback position (NO in block ST22802), this processing ends without any processing.

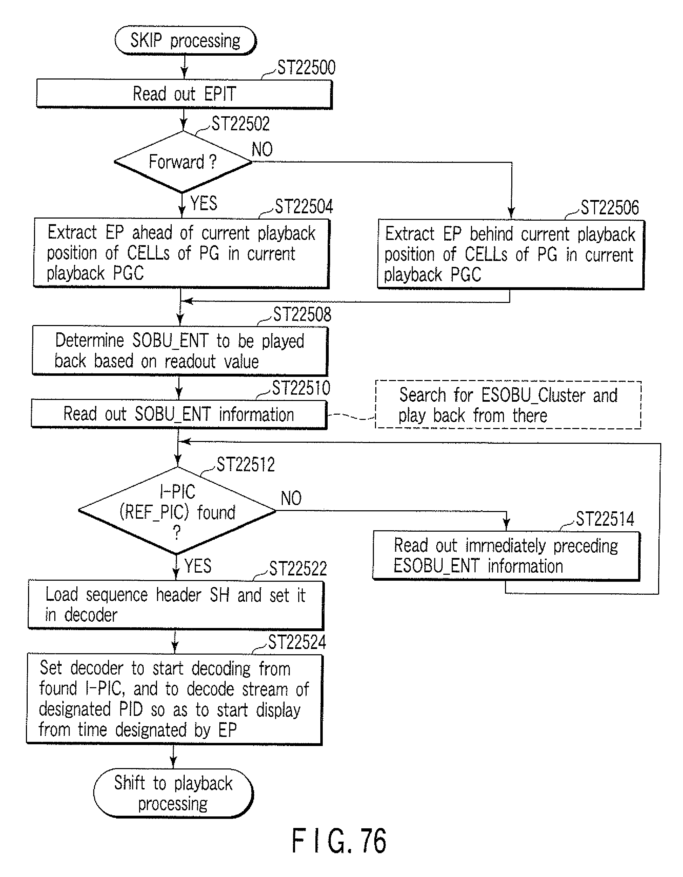

FIG. 76 is a flowchart for explaining an example of the skip processing. The skip processing can be executed as follows.

z1) Entry point information table EPIT is loaded (block ST22500).

z2) The SKIP direction (determined by the type of SKIP key) is checked. If the SKIP direction is a forward direction (YES in block ST22502), entry point EP which is located after the current playback position and has the same PID as the current playback FID is searched for, and its information is loaded (block ST22504). On the other hand, if the SKIP direction is a backward direction (NO in block ST22502), entry point EP which is located before the current playback position and has the same PID as the current playback PID is searched for, and its information is loaded (block ST22506).

z3) An ESOBU_ENT to be played back is determined based on the detected EPI (block ST22508).

z4) ESOBU_ENT information is loaded to determine the playback start time (STC) (block ST22510). In this case, an ESOBU_Cluster (FIG. 48) is searched for, and playback starts from there.

z5) It is checked if the target ESOBU_ENT includes I-PIC (by checking if 1ST_REF_SZ = 0). If the target ESOBU_ENT includes no I-PIC (NO in block ST22512), the immediately preceding ESOBU_ENT information of the identical group is loaded (block ST22514) to repeat the processes in blocks ST22512 to ST22514.

z6) If the target ESOBU_ENT includes I-PIC (or reference picture) (YES in block ST22512), sequence header SH in the ESOBU_ENT is loaded and is set in the decoder (block ST22522). Then, the I-PIC (or reference picture) found previously is read out, and the decoder is set to start decoding from that position, and to start display from the playback time designated by the EP (block ST22514), thus shifting to normal playback processing.

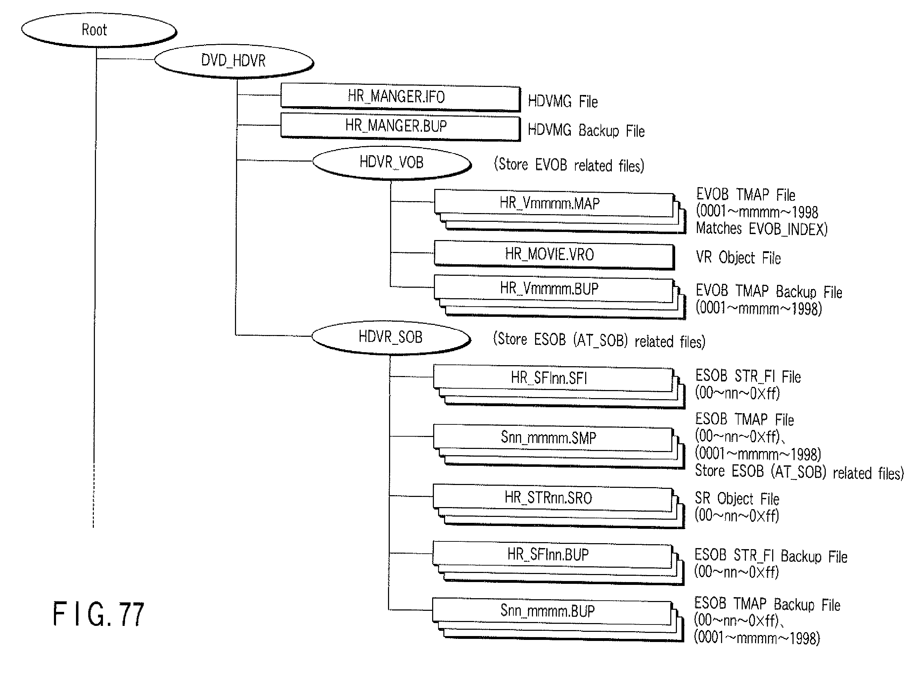

FIG. 77 is an exemplary view sowing another example of FIG. 3 or FIG. 46. That is, as shown in FIG. 77, a method that adopts hierarchical directories and manages EVOB files and SOB files using independent directories may be used. With this structure, management can be easily done for respective objects, and when data is converted into HD_DVD-VIDEO data, contents of the HDVR_VOB directory need only be converted.

HR_MANGER.IFO is stored in the DVD_HDVR directory, and EVOB OBJECT files and TMAP files HR Vmmmm.MAP (mmmmm includes the same numbers as those of VOB_INDEX: 1 to 1998) for respective EVOBs are stored in the HDVR_VOB directory. Also, ESOB OBJECT files, ESOB (AT_SOB) management files HR_SFInn.SFI (when nn = 00, TYPE_B, when nn = 01 to 0xff, TYPE_A), and TMAP files Snn_mmmmm.SMP (when nn = 00, TYPE_B, when nn = 01 to 0xff, TYPE_A; mmmmm includes the same numbers as those of EVOB (AT_SOB)_INDEX: 1 to 1998) for respective ESOBs are stored in the HDVR_SOB directory.

In this case, in order to further improve the affinity for the HD_DVD-VIDEO, a common VTMAP structure may be adopted. Changes to be made in such case will be described below.

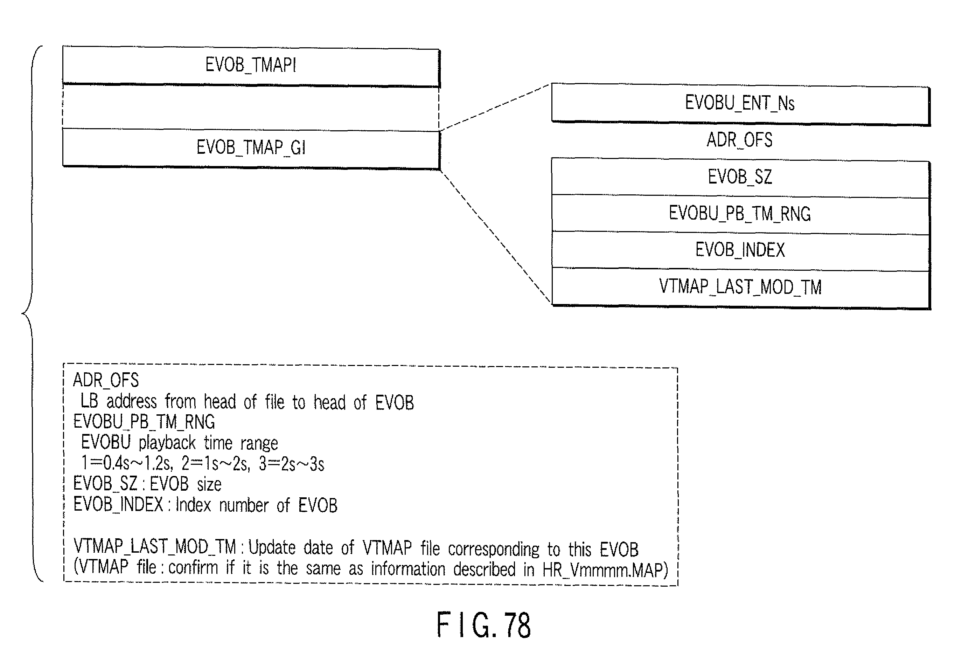

FIG. 78 is an exemplary view for explaining another example of FIG. 9. In consideration of compatibility to the HD_DVD-VIDEO, TMAP files are generated for respective EVOBs or ESOBs. For this purpose, in FIG. 78, EVOB_INDEX and VTMAP_LAST_MOD_TM are added to the EVOB_TMAPI data structure. These pieces of information indicate the INDEX number used to specify each EVOB, and the VTMAP update time stored at this position since the VTMAP is added for each EVOB. Note that the INDEX number is assigned every time an EVOB is generated, and does not overlap in the DISC. Even if a given INDEX number is deleted, that number is never used again. That is, the INDEX number is used to uniquely specify an EVOB.

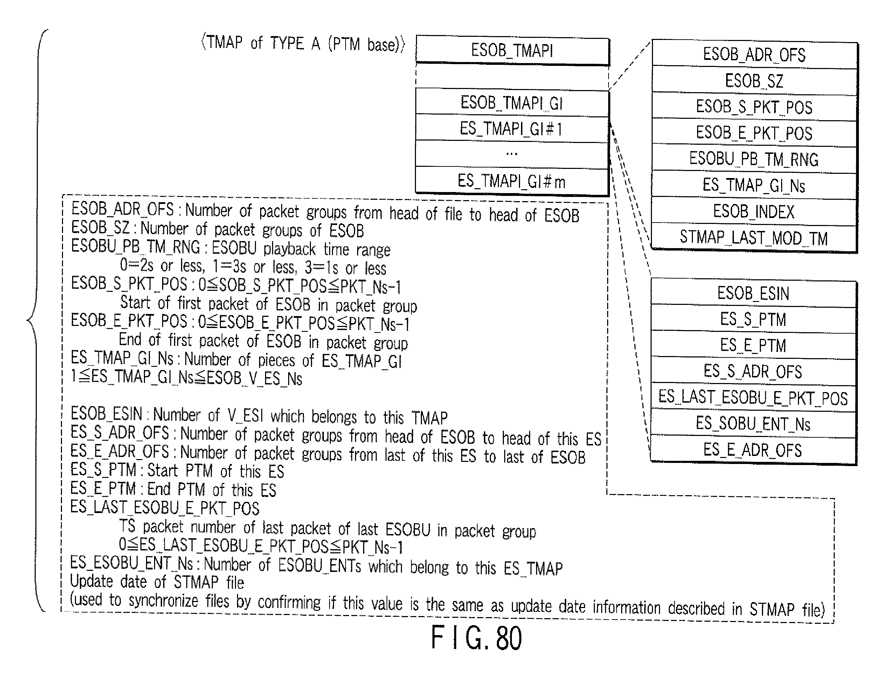

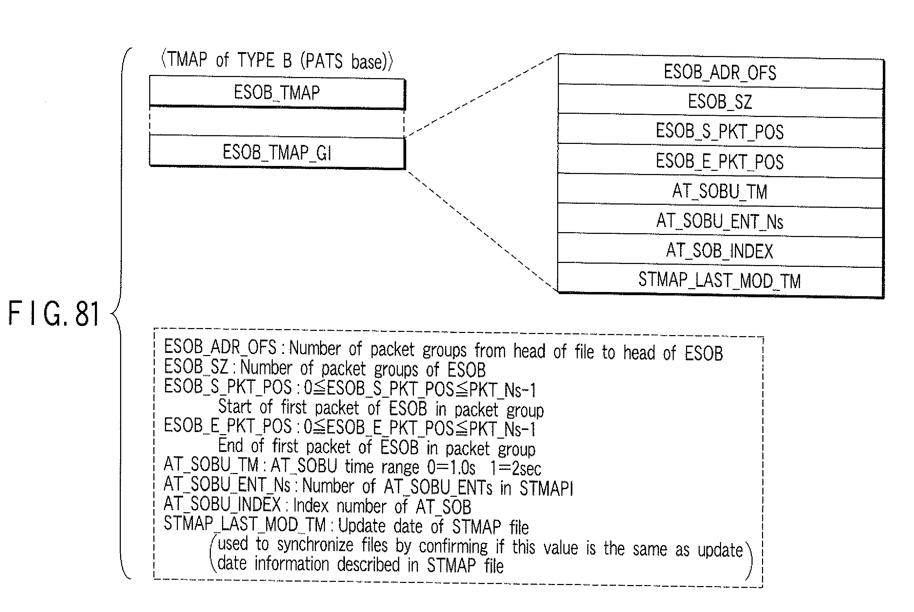

FIG. 80 is an exemplary view for explaining another example of FIG. 24. FIG. 81 is an exemplary view for explaining another example of FIG. 25. That is, ESOB_INDEX and STMAP_LAST_MOD_TM are similarly added to the ESOB_TMAPI of TYPE_A, and AT_SOB_INDEX and STMAP_LAST_MOD_TM are similarly added to the ESOB_TMAPI of TYPE_B.

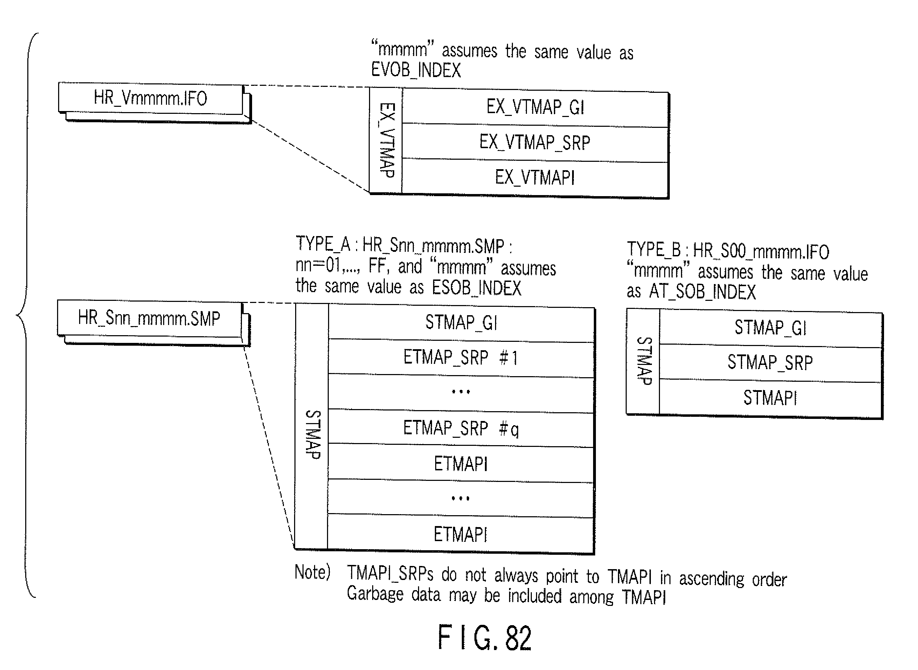

FIG. 82 is an exemplary view for explaining an example of the TMAP file structure. As shown in FIG. 82, in the TMAP file structure, one file corresponds to one EVOB (ESOB or AT_SOB), and each TMAP file includes TMAP_GI, TMAP_SRP, and TMAPI. In case of an SOB of TYPE_A, a plurality of ES_TMAP files may exist (to support multi-view broadcast, rain attenuation broadcast, and the like). In other cases, there is only one TMAPI, but the same structure as that of the HD_DVD-VIDEO is adopted since the TMAP_SRP is stored.

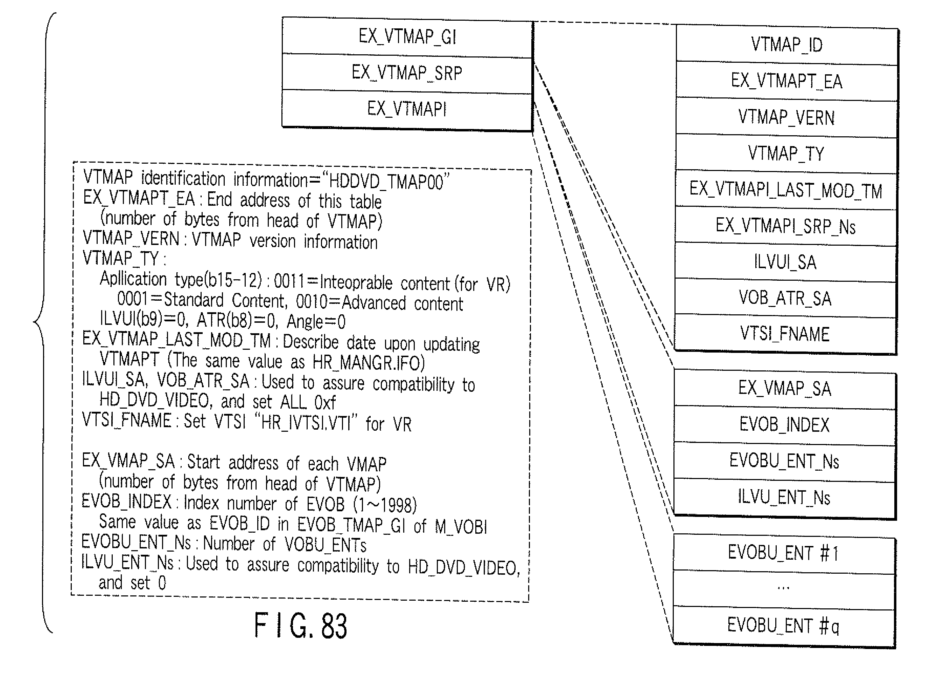

FIG. 83 is an exemplary view for explaining another example of FIG. 27, and the EX_VTMAP structure is as shown in FIG. 83. To the EX_VTMAP_GI, VTMAP_TY, ILVUI_SA, EVOB_ATR_SA, and VTSI_FNAME are added. These pieces of information are added in consideration of compatibility to Video (DVD-Video and/or HD_DVD-Video), 0x3 is set in the VTMAP_TY, and zero is set in the ILVUI_SA and VOB_ATR_SA (to indicate that there is no interleaved unit, and the TMAP does not include any ATR information). In the VTSI_FNAME, the file name of VTSI of the interoperable content like "HR_IVTSI.VTI" is set.

In the EX_VTMAP_SRP, EVOB_INDEX and ILVU_ENT_Ns are added. The EVOB_INDEX is an index number of an EVOB, and this value and the EVOB_INDEX in the EVOB_TMAPI in the M_AVFIT are referred to when a TMAP is read out. In this way, the EVOB having the EVOB_INDEX of the same value is determined as that as an object for this TMAP. Note that zero is set in the ILVU_ENT_Ns (to indicate that there is no ILVU_ENT).

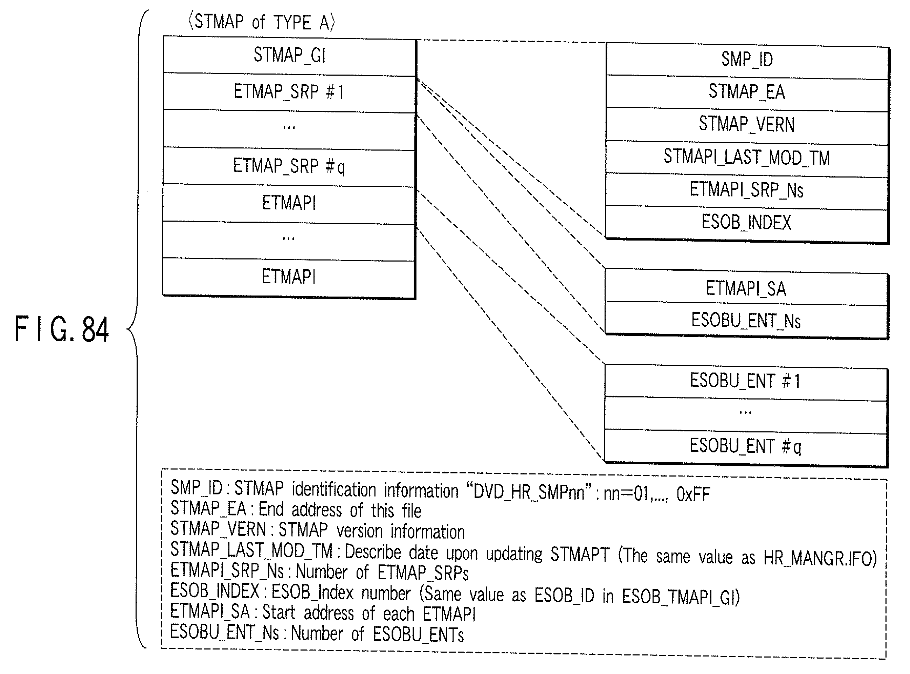

FIG. 84 is an exemplary view for explaining another example of FIG. 29. In the ESOB_TMAP of an ESOB of TYPE_A, as shown in FIG. 84, ES_TMAPI_SRP_Ns and ESOB_INDEX are added to the ESOB_TMAP_GI. The number of ESs for which TMAP data are generated is set in the ES_TMAPI_SRP_Ns. This ESOB_INDEX is compared with that in ESOB_TMAPGI of the ESOB_TMAPI. Then, an ESOB to which the ESOB_INDEX of the same value belongs is determined as that to which that TMAP belongs (the same applies to an EVOB). The reason why the ESOB_INDEX is stored in the STMAP_GI but it is not stored in the ES_TMAP_SRP is that the ESOB_INDEX is assigned for each ESOB. If the ESOB_INDEX is stored in the ES_TMAP_SRP, it may be changed for each ES. Therefore, the ESOB_INDEX is stored in the STMAP_GI.

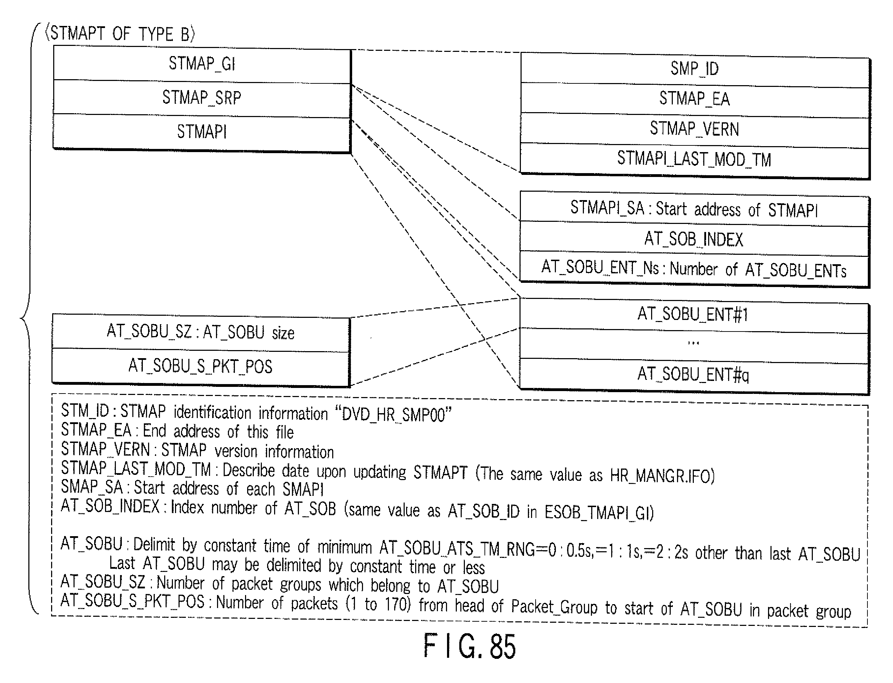

FIG. 85 is an exemplary view for explaining another example of FIG. 30. In the STMAP of an AT-SOB of TYPE_B, as shown in FIG. 85, AT_SOB_INDEX is added to the STMAP_GI. The AT_SOB_INDEX is compared to that in ESOB_TMAPGI of the ESOB_TMAPI. Then, an AT_SOB to which the AT_SOB_INDEX with the same value is determined as the one to which that TMAP belongs (the same applies to an EVOB).

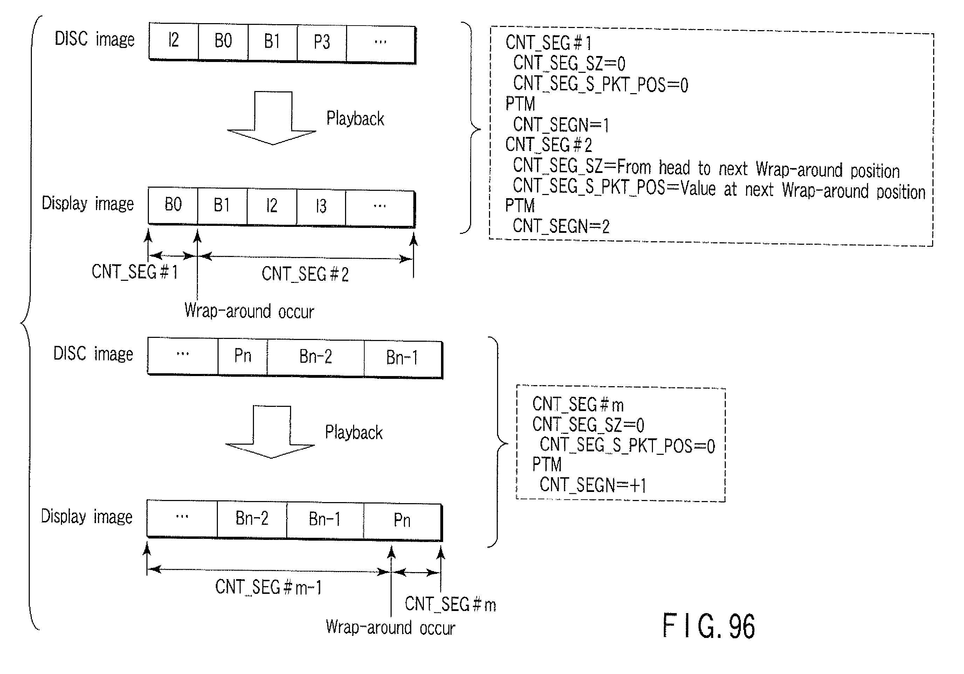

FIG. 96 is an exemplary view for explaining a special case of CNT_SEG. As shown in FIG. 96, in the ESOB_DCNI, since the playback order and recording order of pictures have a difference at the head and last parts of an ESOB, special processing is needed. The upper part of FIG. 96 corresponds to head processing, and its lower part corresponds to processing upon ending. If the recording order of pictures is I, B, B, P,... at the head of an ESOB, their playback order often becomes B, B, I, P,.... At this time, if carry of the PTM occurs at B1, CNT_SEG#1 with CNT_SEG_SZ = 0 is generated. If the recording order of pictures is B, B, P,... at the last of the ESOB, their playback order often becomes B, B, P,.... If carry of the PTM occurs in the middle of the P-picture, CNT_SEG#1 with CNT_SEG_SZ = 0 is generated.

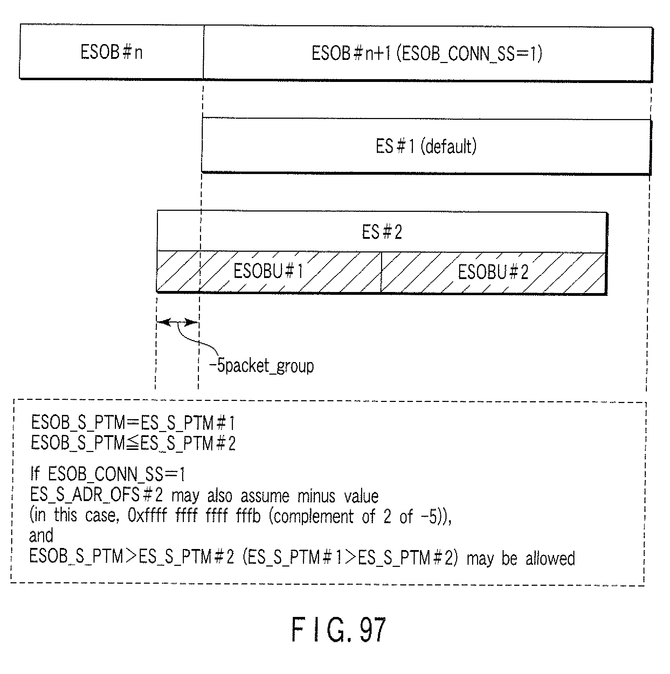

The ESOB_CONNI which has been described previously with reference to FIG. 23 is information indicating whether or not the current ESOB is recorded to be continuous from the immediately preceding ESOB, and allows continuous playback of them upon playback. (However, whether or not this continuous playback becomes seamless depends on the processing performance of a recorder.) The relationship between the position information and time information of ESOBs having the ESOB_CONNI and a plurality of ESs is as shown in FIGS. 97 to 100.

FIG. 97 is an exemplary view for explaining an example of the relationship of the SOB start positions according to the ESOB_CONNI. As for the head parts of ESOBs, as shown in FIG. 97, the relationship in a normal case (when ESOB_CONN_SS = 0) satisfies:

ESOB_S_PTM = ES_S_PTM#1
ESOB_S_PTM ≤ ES_S_PTM#2
ES_S_ADR_OFS#2 ≥ 0

In addition to the above conditions, the relationship when ESOB_CONN_SS = 1 (when the current ESOB has the continuous recording relationship with the immediately preceding ESOB) may also satisfy:

ES_S_ADR_OFS#2 may also assume a minus value (expressed by a complement of 2) (in this case, 0xffff ffff ffff fffb (a complement of 2 of -5)), and

ESOB_S_PTM > ES_S_PTM#2 (ES_S_PTM#1 > ES_S_PTM#2) may be allowed

That is, an ES other than a default ES can be set to protrude toward the continuously recorded SOB.

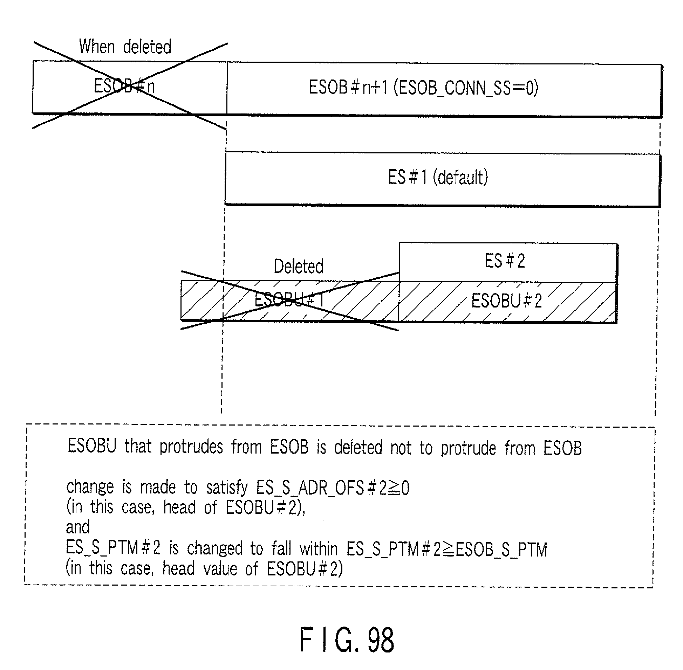

FIG. 98 is an exemplary view for explaining an example of the relationship of the SOB start positions according to the ESOB_CONNI upon editing. When an ESOB before the current ESOB is deleted, the following changes are made:

a change is made to satisfy ES_S_ADR_OFS#2 ≥ 0 (in this case, the head of ESOBU#2), and

ES_S_PTM#2 is changed to fall within ES_S_PTM#2 $\geq$ ESOB_S_PTM (in this case, the head value of ESOBU#2)

The ESOBU that protrudes from the ESOB is deleted not to protrude from the ESOB. (In order to prevent the ESOBU from protruding from the ESOB, the ESOBU may be edited, and if the next I-picture in the ESOBU exists in the ESOB, the ESOBU_ENT may be reconfigured from there.)

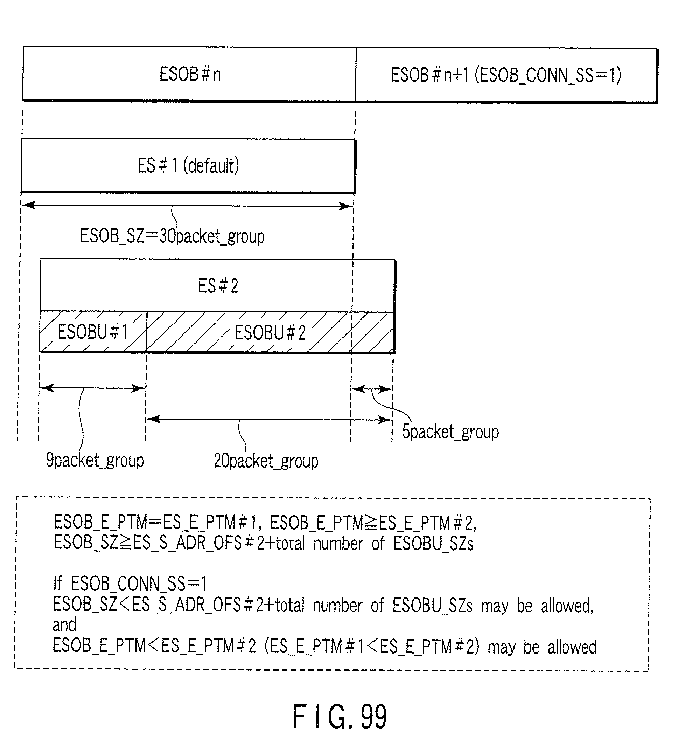

FIG. 99 is an exemplary view for explaining the relationship of the SOB end positions according to the ESOB_CONNI. As shown in FIG. 99, the relationship in a normal case (when ESOB_CONN_SS = 0) satisfies:

ESOB_E_PTM = ES_E_PTM#1
ESOB_E_PTM $\geq$ ES_E_PTM#2
ESOB_SZ $\geq$ ES_S_ADR_OFS#2 + the total number of ESOBU_SZs

However, in addition to the above conditions, the relationship when ESOB_COMN_SS = 1 (in case of the continuous recording relationship with the subsequent ESOB) may satisfy:

ESOB_SZ < ES_S_ADR_OFS#2 + the total number of ESOBU_SZs may be allowed, and
ESOB_E_PTM < ES_E_PTM#2 (ES_E_PTM#1 < ES_E_PTM#2) may be allowed

That is, an ES other than a default ES can be set to protrude toward the continuously recorded SOB.

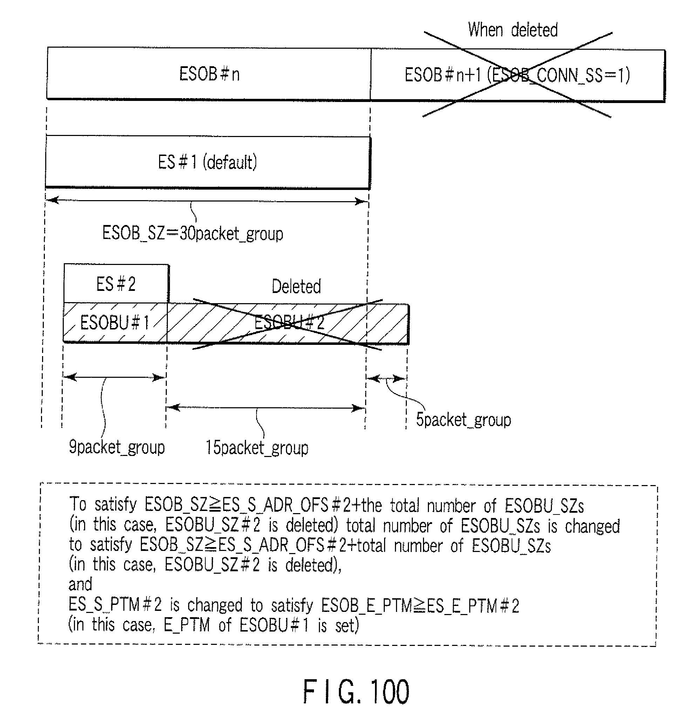

FIG. 100 is an exemplary view for explaining an example of the relationship of the SOB end positions according to the ESOB_CONNI upon editing. When the subsequent ESOB is deleted, as shown in FIG. 100, the following changes are made:

the total number of ESOBU_SZs is changed to satisfy ESOB_SZ $\geq$ ES_S_ADR_OFS#2 + the total number of ESOBU_SZs (in this case, ESOBU_SZ#2 is deleted), and
ES_S_PTM#2 is changed to satisfy ESOB_E_PTM $\geq$ ES_E_PTM#2 (in this case, the E_PTM of ESOBU#1 is set)

The ESOBU that protrudes from the ESOB is deleted not to protrude from the ESOB. (In order to prevent the ESOBU from protruding from the ESOB, the ESOBU may be edited, and the ESOBU_ENT may be reconfigured to fall within the ESOB.)

With the above processing, all non-default V-ESs (video elementary streams) in ESOBs are registered in the ES-TMAP, and all V-ESs can be designated among the ESOBs which can be continuously played back. In this way, in contents which can play back a plurality of Video-ESs like in a multi-view function or the like among ESOBs to be continuously played back, playback of non-default V-ESs can be prevented from being discontinued among the ESOBs.

FIG. 86 is an exemplary view for explaining another example of FIG. 36. The differences of FIG. 86 from FIG. 36 are the following points. That is, in the example of FIG. 86, CNT_SEGN = 1 indicates that the number of CNT_SEGs in the ESOB of interest is zero; CNT_SEGN = 2 indicates that the number of CNT_SEGs in the ESOB of interest is 1; CNT_SEGN = 3 indicates that the number of CNT_SEGs in the ESOB of interest is 2; and CNT_SEGN = 7 indicates that the number of CNT_SEGs in the ESOB of interest is 3.

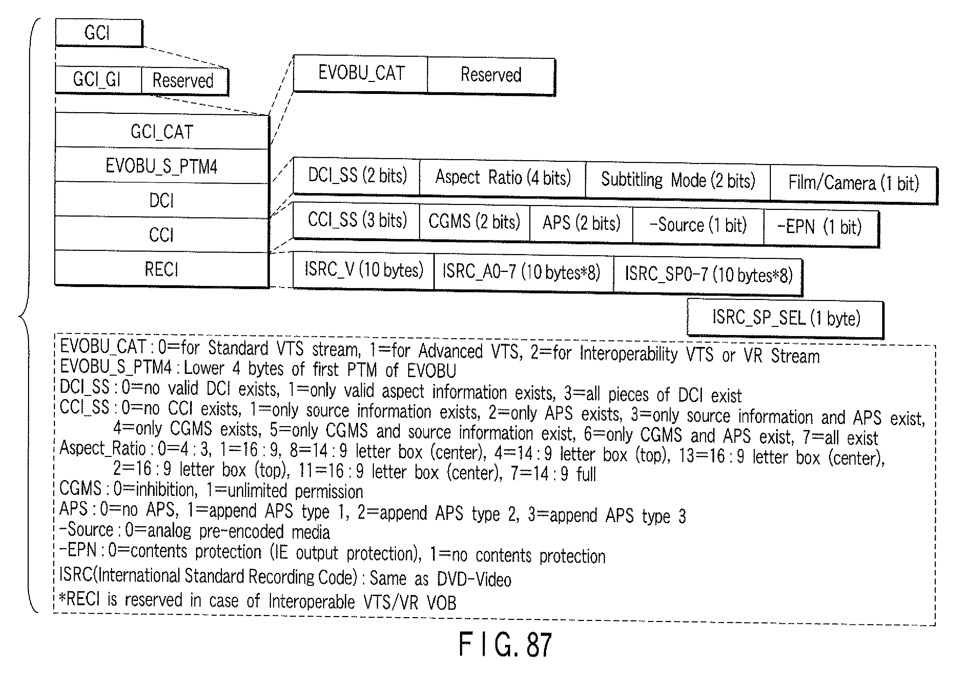

FIG. 87 is an exemplary view for explaining another example of FIG. 42. To the GCI_GI in the RDI pack in the VOB OBJECT data, as shown in FIG. 87, EVOBU_S_PTM4 is added. With this PTM, the PTM of the first VIDEO in an EVOBU can be detected, and when playback is to start from an EVOBU in the middle of the EVOB, this value can be read to start playback. In this way, the EX_VTMAP can be used in the HD_DVD-VIDEO without being changed, transition to the HD_DVD-VIDEO can be made with less efforts, and HDVR data can be played back by a DVD-PLAYER.

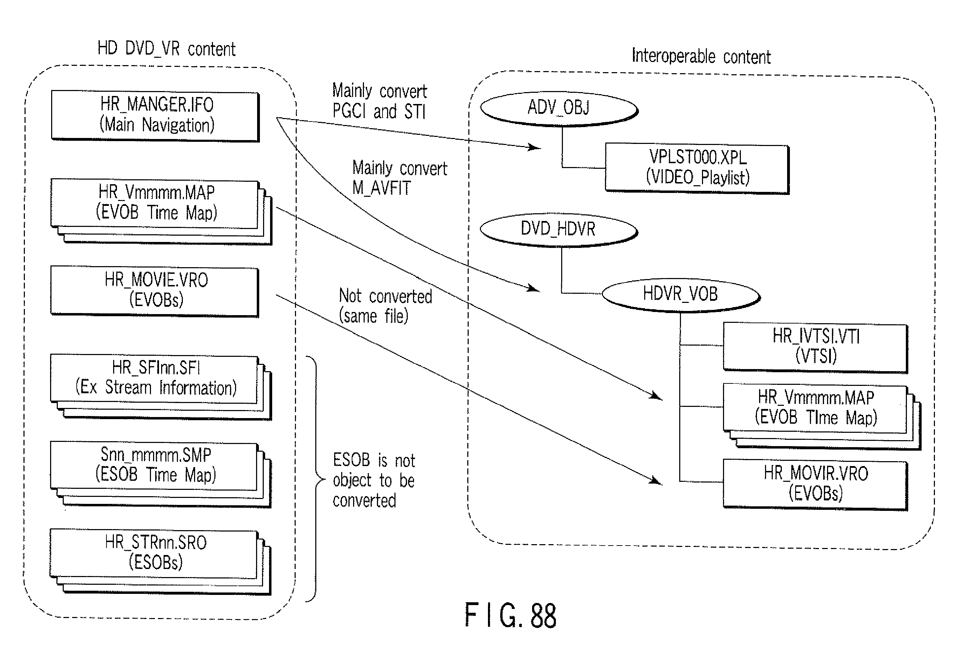

FIG. 88 is an exemplary view for explaining a conversion example of an interoperable content. Generation of management information according to the HD_DVD-VIDEO so as to allow the DVD-PLAYER to execute playback processing will be referred to as "interoperable content generation processing" hereinafter. As the contents of this processing, as shown in FIG. 88, VTSI and a VIDEO_PLAYLIST are generated and saved based on management information of an EVOB in that of the HD_DVD-VR. M_CELLI in the PGCI and information of a PG to which that cell belongs and the like are extracted, attribute information is extracted from the STI to generate a VIDEO_PLAYLIST file (XML file), and the VTSI (HR_IVTSI.VTI) is generated based on the M_AVFIT.

FIG. 79 is an exemplary view for explaining another example of FIG. 77. FIG. 79 shows the structure of files generated in the above example.

A Player reads out a target EX_VTMAP (HR_Vmmmm.MAP) according to a VOB_PLAYLIST, determines an EVOB based on the EVOB_INDEX value in it, reads out management information VTSI of the EVOB, and plays back an EVOB file (HR_MOVIE.VRO) according to these pieces of management information.

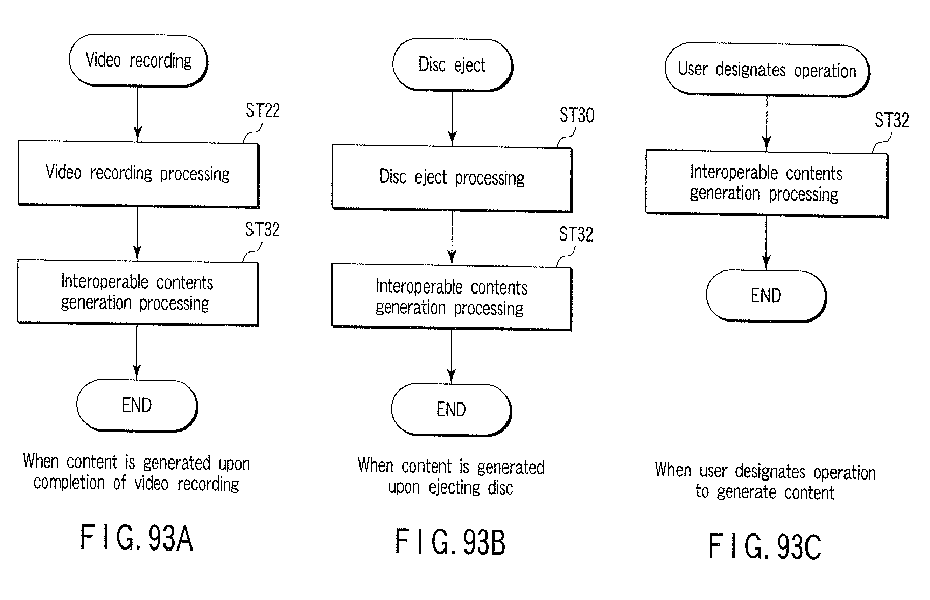

In case of the VR, an EVOB to be played back is determined based on the PGCI, the management information and EX_VTMAP of the EVOB to be played back are read out from the M_AVFIT, and the EVOB file is played back according to the readout information. However, in case of the HD_DVD-VIDEO, an EX_VTMAP of an EVOB to be played back is determined and loaded from the VIDEO_PLAYLIST, target EVOB information is loaded from management data in the VTSI based on the EVOB_INDEX value in the EX_VTMAP, and the EVOB file (HR_MOVIE.VRO) is played back. In this manner, the ways to use the EX_VTMAP are different in the HD_DVD-VR and HD_DVD-VIDEO, which have the reverse lookup relationship. For this reason, the VTMAP, VMGI, and VTSI have structures that allow the reverse lookup. Note that a plurality of execution timings of the interoperable content generation processing may be considered, as shown in FIGS. 93A to 93C.

FIGS. 93A to 93C are flowcharts for explaining processing timing examples of generation of an interoperable content. As the first method of the plurality of interoperable content generation processing timings which may be considered, the generation processing is automatically done (block ST32) after completion of the VR video recording processing (block ST22), as shown in FIG. 93A. In this case, the generated disc can always be played back by the PLAYER, but the end of the video recording processing gets late.

As the second method of the plurality of interoperable content generation processing timings which may be considered, the generation processing is automatically done (block ST32) at the time of disc eject processing (block ST30), as shown in FIG. 93B. In this case as well, the generated disc can always be played back by the PLAYER, but the eject processing gets late.

As the third method of the plurality of interoperable content generation processing timings which may be considered, options such as DVD-VIDEO compatibility processing and the like which are normally prepared in a DVD-Video player are provided, and the user selects that processing to intentionally execute the processing (block ST32). In this case, the operation time of another processing can be prevented from getting late, and the user selects this processing to wait for that processing time. In this case, the disk cannot always be played back by the PLAYER, and only the disk that has undergone the processing (block ST32) can be played back.

Cautions about the processing upon conversion will be listed below.

* A VIDEO_PLAYLIST file (XML) is stored under the directory "ADV_OBJ".
* The file name of the VIDEO_PLAYLIST file is set to be "VPLST000.XPL".
* A VTSI file is stored under the directory "DVD_HDVR/HDVR_VOB".
* The file name of the VTSI file is set to be "HR_IVTSI.VTI".
* VOB files and TMAP files are used intact.

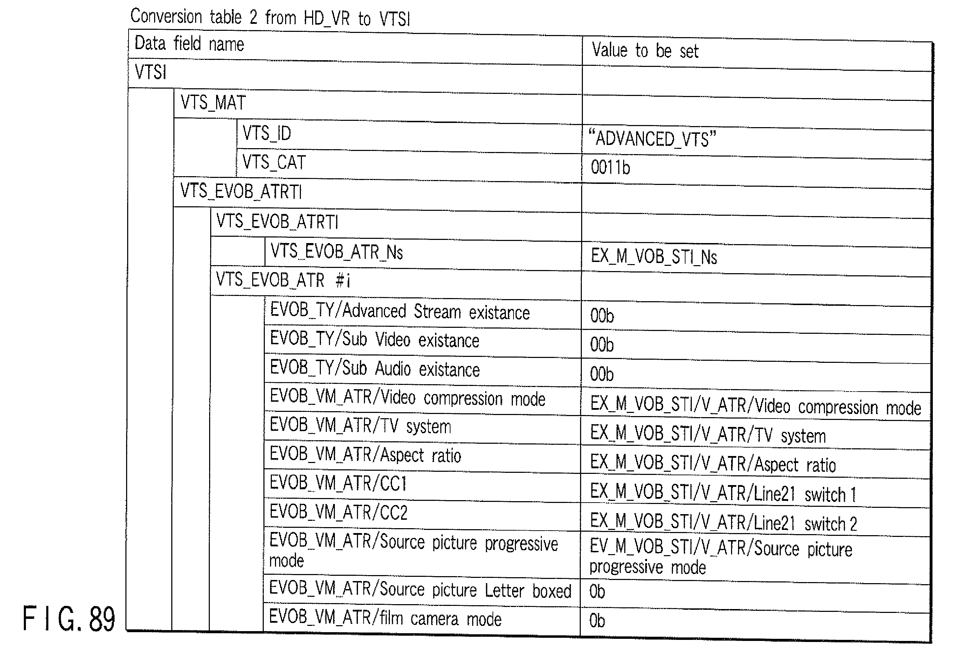

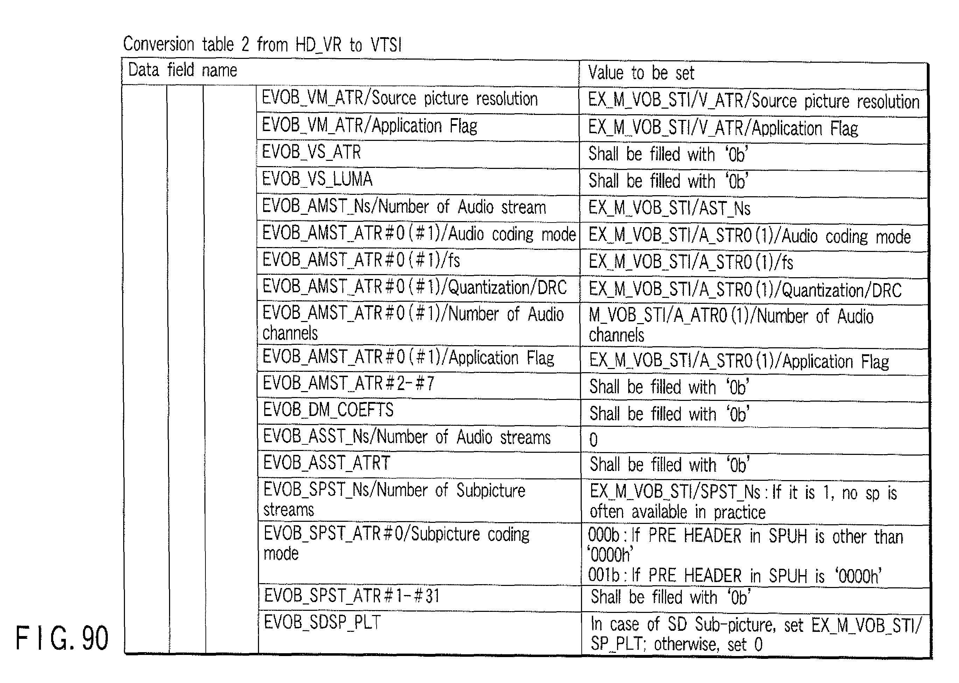

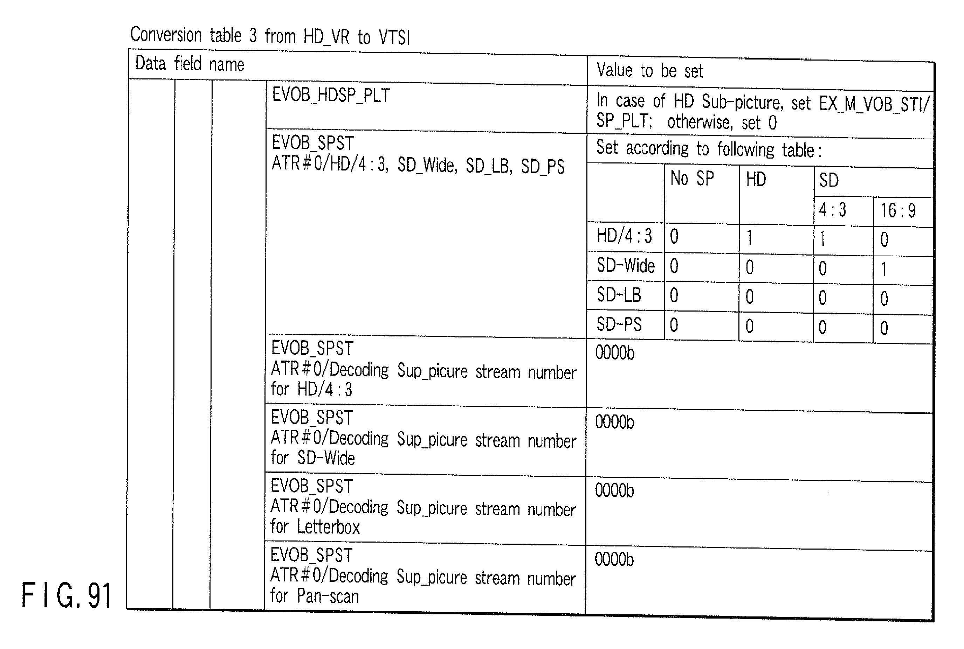

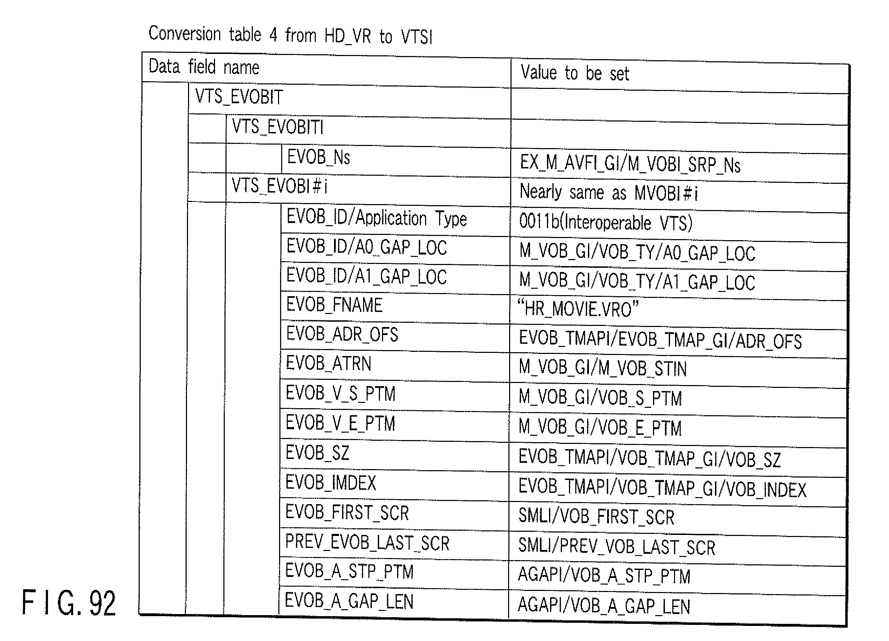

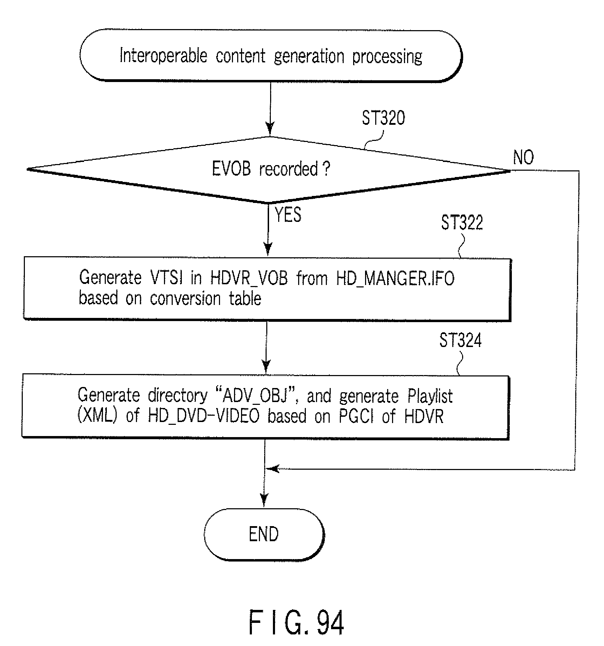

FIG. 94 is a flowchart for explaining an example of the interoperable content generation processing. An example of practical conversion processing will be described below with reference to conversion tables 1 to 4 shown in FIGS. 89, 90, 91, and 92.

1) It is checked if an EVOB is recorded (block ST328). If no EVOB is recorded (NO in block ST320), this processing ends.
2) If the EVOB is recorded (YES in block ST320), VTSI is generated from management information of the EVOB according to conversion tables 1 to 4 shown in FIGS. 89 to 92 based on the M_AVFIT (block ST322). (Since the VTMAP and VRO files have compatibility, and can be used intact, no processing is executed for them.)
3) A VIDEO_PLAYLIST is generated according to PGCI and STI data (block ST324), thus ending this processing.

A conversion example of an actual VIDEO_PLAYLIST will be described below. Note that conversion is done while taking account of the followings.

* "Title" matches a Program (PG) or Playlist (PL) of the HD_DVD-VR.
* Each "Chapter" matches an Entry Point (M_C_EPI) of the HD_DVD-VR. If no EP is available, a Chapter element may be appended to the head or end of the title.
* "displayName" in the Playlist matches a Disc Representative Name (DISC_REP_NM) of the HD_DVD-VR.
* "displayName" in the Title matches Primary Text Information (PRM_TEXTI) in the Program (PG) or Playlist (PL) of the HD_DVD-VR.
* "displayName" in the Chapter matches Primary Text Information (PRM_TEXTI) in the Entry Point (M_C_EPI: Type EP_B) of the HD_DVD-VR.
* "titleDuration" in the Title is derived from the C_V_S_PTM and C_V_E_PTM of the HD_DVD-VR.
* "titleTimeBegin" and "titleTimeEnd" of a Primary Audio Video Clip are derived from the C_V_S_PTM and C_V_E_PTM of the HD_DVD-VR.
* "clipTimeBegin" of the Primary Audio Video Clip is derived from C_V_S_PTM and VOB_S_PTM of the HD_DVD-VR.
* "titleTimeBegin" of the Chapter is derived from the EP_PTM, C_V_S_PTM, and C_V_E_PTM of the HD_DVD-VR.
* An ESOB and AT_SOB are not objects to be converted.

* A temporary erase EVOB is not included in the interoperable content.
* The total number of P-EVOBs is smaller than that of EVOBs of the HD_DVD-VR.

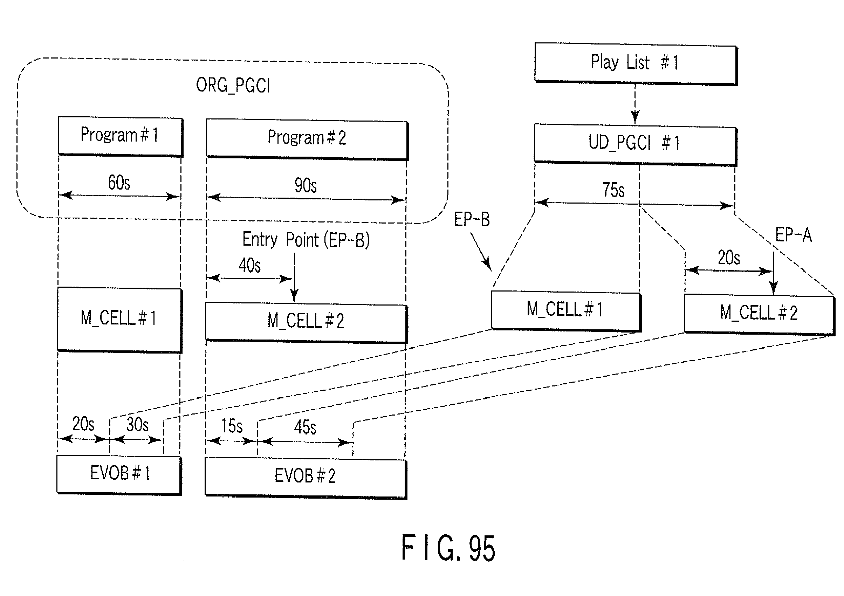

FIG. 95 is an exemplary view for explaining the PGC configuration of the HD_VR. Based on the aforementioned cautions, if PGCI shown in FIG. 95 exists, the following VIDEO_PLAYLIST is generated.

```
<?xml version="1.0" encoding="UTF-8"
standalone="yes"?>
<Playlist majorVersion="1" minorVersion="0"
```

```
diplayName="Disc name (DISC_REP_NM)"
type="Interoperable"
xmlns="http://www.dvdforum.org/2005/HDDVDVideo/Playlist
">


        <Configuration>
            <StreamingBuffer size="0"/>
            <Aperture size="1920x1080"/>
            <MainVideoDefaultColor color="107F7F"/>
        </Configuration>


        <MediaAttributeList>
            <VideoAttributeItem index="1"
codec="AVC"/>
            <VideoAttributeItem index="2" codec="VC-
1"/>
            <AudioAttributeItem index="1"
codec="LPCM"/>
            <AudioAttributeItem index="2" codec="AC-
3"/>
        </MediaAttributeList>


        <TitleSet timeBase="60fps">


            <Title id="Title001" titleNumber="1"
type="Original" titleDuration="00:01:00:00"
onEnd="Title002" displayName="Original Title 1
(PRM_TXTI in PGI#1)">
                <PrimaryAudioVideoClip id="Clip1"
dataSource="Disc" titleTimeBegin="00:00:00:00"
clipTimeBegin="00:00:00:00" titleTimeEnd="00:01:00:00"
src="file:///dvddisc/DVD_HDVR/HDVR_VOB/HR_V0001.MAP">
                    <Video track="1" mediaAttr="1"/>
                    <Audio track="1" streamNumber="1"
mediaAttr="1"/>
                </PrimaryAudioVideoClip>
```

```
            <ChapterList>
                <Chapter id="Chapter0001"
    titleTimeBegin="00:00:00:00"/>
            </ChapterList>
        </Title>

            <Title id="Title002" titleNumber="2"
    type="Original" titleDuration="00:01:30:00"
    onEnd="Title003" displayName="Original Title 2
    (PRM_TXTI in PGI#2)">
                <PrimaryAudioVideoClip id="Clip2"
    dataSource="Disc" titleTimeBegin="00:00:00:00"
    clipTimeBegin="00:00:00:00" titleTimeEnd="00:01:30:00"
    src="file:///dvddisc/DVD_HDVR/HDVR_VOB/HR_V0002.MAP">
                    <Video track="1" mediaAttr="2"/>
                    <Audio track="1" streamNumber="1"
    mediaAttr="2"/>
                </PrimaryAudioVideoClip>

            <ChapterList>
                <Chapter id="Chapter0002"
    titleTimeBegin="00:00:00:00"/>
                <Chapter id="Chapter0003"
    titleTimeBegin="00:00:40:00" displayName="Chapter name
    3 (PRM_TXTI in M_C_EPI)"/>
            </ChapterList>
        </Title>

            <Title id="Title003" titleNumber="3"
    type="UserDefined" titleDuration="00:01:15:00"
    displayName="Play List Title 1 (PRM_TXTI in PL_SRP#1)">
                <PrimaryAudioVideoClip id="Clip3"
    dataSource="Disc" titleTimeBegin="00:00:00:00"
    clipTimeBegin="00:00:20:00" titleTimeEnd="00:00:30:00"
    src="file:///dvddisc/DVD_HDVR/HDVR_VOB/HR_V0001.MAP">
                    <Video track="1" mediaAttr="1"/>
                    <Audio track="1" streamNumber="1"
```

```
mediaAttr="1"/>
                </PrimaryAudioVideoClip>

                <PrimaryAudioVideoClip id="Clip4"
dataSource="Disc" titleTimeBegin="00:00:30:00"
clipTimeBegin="00:00:15:00" titleTimeEnd="00:01:15:00"
src="file:///dvddisc/DVD_HDVR/HDVR_VOB/HR_V0002.MAP">
                <Video track="1" mediaAttr="2"/>
                <Audio track="1" streamNumber="1"
mediaAttr="2"/>
                </PrimaryAudioVideoClip>

                <ChapterList>
                <Chapter id="Chapter0004"
titleTimeBegin="00:00:00:00" displayName="Chapter name
4 (PRM_TXTI in M_C_EPI)"/>
                <Chapter id="Chapter0005"
titleTimeBegin="00:00:50:00"/>
                </ChapterList>
            </Title>
        </TitleSet>
    </Playlist>
```

With the aforementioned processing, transition to the DVD-PLAYER can be relatively easily implemented.

<Outline>

1. In a digital recorder (DVD streamer or the like) which can record digital streams, if Wrap-around of the STC has occurred, that position is set in ESOBI as CNT_SEG, and the CNT_SEG count information from the head of the ESOB is appended to each PTM.

2. In the digital recorder (DVD streamer or the like) which can record digital streams, an ESI number used in a video stream upon playback is appended to each representative picture information so as to specify a video stream.

3. In the digital recorder (DVD streamer or the like) which can record digital streams, an ESI number used in a video stream upon playback, an ESI number used in an audio stream, and main/sub information when audio is Dual-Mono are appended to each resume information so as to specify a stream to be played back.

4. In the digital recorder (DVD streamer or the like) which can record digital streams, an ESI number used in a video stream upon playback, an ESI number used in an audio stream, and main/sub information when audio is Dual-Mono are appended to each EP information so as to specify a stream to be played back.

5. An STC continuous flag and/or PATS continuous flag and its offset value are appended as seamless information indicating continuity among logically continuous ESOBs in addition to a continuous recording flag.

<Effect of Embodiment (s)>

[0230]    * Whether or not STC Wrap-around has occurred can be detected based on only playback information before execution of playback.

**[0231]** * If continuity among a plurality of ESOBs is detected and ESOBs are continuous, cases that can seamlessly connect a plurality of ESOBs can increase. That is, the frequency of occurrence of a situation in which the control waits for playback processing at a joint portion of a plurality of ESOBs which are detected to be continuous (a still picture is inserted) can be lowered than in a case wherein the invention is not practiced.

<Corresponding example Between Embodiments and Inventions>

<Information Storage Medium (Part

1) ... TOTAL_STAMP_SZ in FIG. 12>

In an information storage medium (100 in FIG. 1) configured to record a predetermined digital stream signal, the information storage medium has a management area (111, 130 in FIG. 1; DVD_HDVR in FIG. 3; HDVR_MG in FIG. 12) and a data area (131 to 133 in FIG. 1), the data area (131 to 133 in FIG. 1) is configured to separately record data of the digital stream signal as a plurality of objects (ESOBs, etc.),
the management area (DVD_HDVR in FIG. 3) is configured to have management information (HR_SFIxx.IFO in FIG. 3) for each output source (broadcast station) of the digital broadcast signal or for each broadcast scheme (ARIB for Japan, ATSC for U.S.A., DVB for Europe, and the like) of the digital stream signal, and to have time map information (HR_STMAPx.IFO in FIG. 3) for each output source (broadcast station) of the digital broadcast signal or for each broadcast scheme of the digital stream signal, and
the management information (HDVR_MG in FIG. 12) for each output source (broadcast station) of the digital broadcast signal or for each broadcast scheme of the digital stream signal is configured to include information (TOTAL_STAMP_ SZ in FIG. 12; ST15411 in FIG. 65 upon recording) indicating a size of the time map information.

<Information Storage Medium (Part

2)... TYPE_B/ESOB_TY/b12 in FIG. 15...Invalid values of PSI Information and SI Information>

(PSI = Program Specific Information) (SI = Service Information)

In an information storage medium (100 in FIG. 1) configured to record a digital stream signal which is encoded by MPEG and is output from a broadcast station,
the information storage medium has a management area (111, 130 in FIG. 1; DVD_HDVR in FIG. 3; HDVR_MG in FIG. 12) and a data area (131 to 133 in FIG. 1), the data area (131 to 133 in FIG. 1) is configured to separately record data of the digital stream signal as a plurality of objects (ESOBs, etc.),
the management area (DVD_HDVR in FIG. 3) is configured to have management information (HR_SFIxx.IFO in FIG. 3) for each broadcast station or for each broadcast scheme (ARIB for Japan, ATSC for U.S.A., DVB for Europe, and the like) of the digital stream signal, and to have management information of a type (TYPE_B) that does not specify the broadcast station or the broadcast scheme (ARIB or the like), and the management information (ESOB_TY in FIG. 15) of the type (TYPE_B) that does not specify the broadcast station or the broadcast scheme is configured to include information (ESOB_TY: b12 = "1" or invalid values of PSI information and SI information: ST1513 in FIG. 63 upon recording: ST211C in FIG. 69 upon playback) indicating invalidity of information (PSI, SI) associated with broadcast contents.

<Information Storage Medium (Part 3)...HDVR_MG in FIG. 8/EX_MB_VOB_STI in FIG. 10/V_ATR in FIG. 11>

In an information storage medium (100 in FIG. 1) configured to record MPEG transport stream (TS) data and MPEG program stream (PS) data as a predetermined digital stream signal,
the information storage medium has a management area (111 , 130 in FIG. 1; DVD_HDVR in FIG. 3; HDVR_MG in FIG. 8/EX_MB_VOB_STI in FIG. 10) and a data area (131 to 133 in FIG. 1),
the data area (131 to 133 in FIG. 1) is configured to separately record the MPEG transport stream (TS) data and the MPEG program stream (PS) data in independent files (SR Object File; VR Object File in FIG. 3) as a plurality of objects (ESOBs, EVOBs),
the management area (DVD_HDVR in FIG. 3; HDVR_MG in FIGS. 8 and 12) is configured to record management information (HR_MANGER.IFO) that manages the entire digital stream signal, management information (ESTR_FIT in FIG. 12) for the MPEG transport stream (TS) data, and management information (EX_M_AVFIT in FIG. 8) for the MPEG program stream (PS) data, and

the management information (DVD_HDVR in FIG. 3; V_ATR in FIG. 11) is configured to describe at least one of information (source picture progressive mode) indicating whether or not the digital stream signal of interest is a progressive mode signal and information (source picture resolution) indicating whether or not the digital stream signal of interest is a Hi-Vision signal.

<When Resolution Information in FIG. 17 is Only Vertical Resolution in Information Storage Medium (Part 3)>

The management information (ESTR_FIT in FIG. 12; ESOBI in FIG. 13; ESOB_ESI in FIG. 16; ESOB_V_ESI/V_ATR in FIG. 17) for the MPEG transport stream (TS) data includes information which does not specify any horizontal resolution and designates the source resolution by a vertical resolution.

<Information Storage Medium (Part 4)>

In an information storage medium which is configured to have a file structure (FIG. 79) that manages first high-definition video information (HD_DVD-VR; HDVR_VOB/HDVR_SOB) which can be recorded by the user and second high-definition video information (HD_DVD-VIDEO; ADV_OBJ) which can be provided by contents providers, and to record a predetermined digital stream signal including the first high-definition video information (HD_DVD-VR) and the second high-definition video information (HD_DVD-VIDEO),
the information storage medium has a management area and a data area, and the data area is configured to separately record data of the digital stream signal as a plurality of objects (HDVR_VOB, HDVR_SOB, ADV_OBJ),
the management area stores management information (ESOB related files in FIG. 79 = HR_SFIxx.IFO in FIG. 3, etc.) for each output source of the digital stream signal including the first high-definition video information (HD_DVD-VR) or for each broadcast scheme of the digital stream signal, and also time map information (VSOB related files in FIG. 79 = HR_Vmmmm.MAP, etc.) for each output source of the digital stream signal including the first high-definition video information (HD_DVD-VR) or for each broadcast scheme of the digital stream signal, and
the management area is configured to further include management information (VIDEO_PLAYLIST, VTSI) used to manage playback of the digital stream signal including the second high-definition video information (HD_DVD-VIDEO).

<Information Storage Medium (Part 5)>

In an information storage medium configured to record a predetermined digital stream signal,
the information storage medium has a management area and a data area, and the data area is configured to separately record data of the digital stream signal as a plurality of objects (HDVR_VOB, HDVR_SOB),
the management area stores management information for each output source of the digital stream signal or for each broadcast scheme of the digital stream signal, and also time map information (HR__Vmmmm.IFO = HR_Vmmmm. MAP and HR_Snn_mmmm. SMP in FIGS. 77 and 82) for each output source of the digital stream signal or for each broadcast scheme of the digital stream signal, and
the time map information (HR_Vmmmm.MAP and HR_Snn_mmmm.SMP) is configured to include index information (EVOB_INDEX in FIG. 83, ESOB_INDEX in FIG. 84) used to specify the objects (HDVR_VOB, HDVR_SOB).

<Recording Method using Information Storage Medium>

An information recording method (FIGS. 57 and 58) for recording the digital stream signal on the data area.

<Playback Method using Information Storage Medium>

An information playback method (FIG. 69) for playing back the digital stream signal from the data area.

<Recording Apparatus using Information Storage Medium>

An information recording apparatus (the encoder side in FIG. 53) comprising an arrangement for recording the digital stream signal on the data area.

<Playback Apparatus using Information Storage Medium>

An information playback apparatus (the decoder side in FIG. 53) comprising an arrangement for playing back the digital stream signal from the data area.

[Effects of Embodiment]

Since the management area stores the management information (ESOB related files in FIG. 79) of the first high-definition video information (HD_DVD-VR) and the management information (VIDEO_PLAYLIST, VTSI) used to manage playback of the digital stream signal including the second high-definition video information (HD_DVD-VIDEO), both the contents (HD_DVD-VR) to be recorded and played back by the user and those (HD_DVD-VIDEO) provided by providers can be managed together.

Note that the invention is not limited to the aforementioned embodiments, and various modifications may be made based on techniques available at that time without departing from the scope of the invention when it is practiced at present or in the future.

The respective embodiments may be combined as needed as much as possible, and combined effects can be obtained in such case. Furthermore, the embodiments include inventions of various stages, and various inventions can be extracted by appropriately combining a plurality of constituent elements disclosed in this application. For example, even when some constituent elements are omitted from all the constituent elements disclosed in the embodiments, an arrangement from which those constituent elements are omitted can be extracted as an invention.

**Claims**

1.  An information storage medium configured to have a file structure that manages first high-definition video information (HD_DVD-VR; HDVR_VOB/HDVR_SOB) for a recorder and second high-definition video information (HD_DVD-VIDEO; ADV_OBJ) for a player, and configured to record a predetermined digital stream signal including the first high-definition video information (HD_DVD-VR) and the second high-definition video information (HD_DVD-VIDEO), **characterized in that**
    the information storage medium is configured to have a management area and a data area, and the data area is configured to separately record data of the digital stream signal as at least one object (HDVR_VOB, HDVR_SOB, ADV_OBJ),
    the management area is configured to store management information (HR_SFIxx.IFO, etc.) for each output source of the digital stream signal including the first high-definition video information (HD_DVD-VR) or for each broadcast scheme of the digital stream signal, and also configured to store time map information (HR_Vmmmm.MAP, etc.) for each output source of the digital stream signal including the first high-definition video information (HD_DVD-VR) or for each broadcast scheme of the digital stream signal, and
    the management area is configured to further include management information (VIDEO_PLAYLIST, VTSI) used to manage playback of the digital stream signal including the second high-definition video information (HD_DVD-VIDEO).

2.  The medium of claim 1, **characterized in that**
    the time map information (HR_Vmmmm.MAP and HR_Snn_mmmm.SMP) is configured to include index information (EVOB_INDEX, ESOB_INDEX) used to specify the objects (HDVR_VOB, HDVR_SOB).

3.  A recording method using an information storage medium of claim 1 or 2, **characterized by** comprising:

    recording (ST106-ST148) the digital stream signal in the data area; and
    recording (ST150) the management information in the management area.

4.  A reproducing method using an information storage medium of claim 1 or 2, **characterized by** comprising:

    reproducing (ST207) the management information from the management area; and
    reproducing (ST208-ST232) the digital stream signal from the data area.

5.  A recording apparatus using an information storage medium of claim or 2, **characterized by** comprising:

    a first recorder arrangement (51-53, 79) configured to record the digital stream signal in the data area; and
    a second recorder arrangement (51-53, 80) configured to record the management information in the management area.

6.  A reproducing apparatus using an information storage medium of claim 1 or 2, **characterized by** comprising:

a first reproducer arrangement (51-53, 80) configured to reproduce the management information from the management area; and
a second reproducer arrangement (51-53, 59) configured to reproduce the digital stream signal from the data area.

Disc-shaped information storage medium 100

(a)

(b)

| Lead-in area | Volume/file structure information area | Data area | Lead-out area |
|---|---|---|---|

110     111     112     113

(c)

| General computer information recording area | AV data recording area | General computer information recording area |
|---|---|---|

120     121     122

(d)

| AV data management information recording area | ROM_Video Object group recording area | VR Object group recording area | Stream Object group recording area |
|---|---|---|---|

130     131     132   133

(e)

| EVideo· Object (EVOB) | ... | EVideo· Object (EVOB) | | EStream· Object (ESOB) | ... | EStream· Object (ESOB) |
|---|---|---|---|---|---|---|

140     140     141     141

(f)

| EVOBU | ... | EVOBU | | ESOBU | ... | ESOBU |
|---|---|---|---|---|---|---|

142     142     143     143

(g)

| RDI_Pack | V_Pack | A_Pack | ... | | Packet_Group | ... | Packet_Group |
|---|---|---|---|---|---|---|---|

144   145   146     147     147

Packet_Group length=16 logical blocks

(h)

| Packet_Group Header | PATS | MPEG-TS packet | PATS | MPEG-TS packet | ... | PATS | MPEG-TS packet |
|---|---|---|---|---|---|---|---|

161   162   163     162   163     162   163

# FIG. 1

Playback management information layer 10

| Program chain (PGC) | | | | | | | 11 |

| Program | | | | Program | | | Program | 12 |

| 13 | 13 | 13 | 12 | 13 | 12 | | 13 | |
| Cell | Cell | Cell | | Cell | | | Cell | Cell | 13 |

Playback time : designate playback location of CELL by PTS

21

Stream object management information layer 20

EVOB management information layer 23

| ESOBI | | ESOBI | | |
| ESOBUI | ··· | ESOBUI | ESOBUI | ······ | 21 |

| EVOBI | ···· 24 |
| EVOBU | ··· | EVOBU | 25 |

25

141

Global information 22

EStream object layer 30

141

| ESOB | | ESOB | | ··· 141 |

143

| EVOB | ··· 140 |

| ESOBU | | ESOBU | ESOBU | ··· | ESOBU | ··· |

143

| EVOBU | ··· 142 |

147 32768 Bytes 147 147

| Packet_Group | Packet_Group | ····· | For constant playback time | Packet_Group |

147

| Pack | Pack | ··· |

EVOB layer 35

152 Bytes 161 4 Bytes 162 188 Bytes 163 163

| Packet_Group Header | PATS | TS Packet_1 | ··· | TS Packet_170 |

F I G. 2

```
  ┌──────┐
  │ Root │
  └──┬───┘
     │   ┌──────────┐
     ├───┤ DVD_HDVR │
     │   └────┬─────┘
     │        │    ┌─────────────────────┐
     │        ├────┤    HR_MANGER.IFO     │   HDVMG File
     │        │    └─────────────────────┘
     │        │    ┌─────────────────────┐
     │        ├────┤    HR_VTMAP.IFO      │   EVOB TMAP File
     │        │    └─────────────────────┘
     │        │    ┌─────────────────────┐
     │        ├────┤    HR_STMAPx.IFO     │   ESOB TMAP File
     │        │    └─────────────────────┘
     │        │    ┌─────────────────────┐
     │        ├────┤     HR_SFIx.IFO      │   ESOB STR_FI File
     │        │    └─────────────────────┘
     │        │    ┌─────────────────────┐
     │        ├────┤    HR_MOVIEO.VRO     │   VR Object File
     │        │    └─────────────────────┘
     │        │    ┌─────────────────────┐
     │        ├────┤    HR_STRxx.SRO      │   SR Object File
     │        │    └─────────────────────┘
     │        │    ┌ ─ ─ ─ ─ ─ ─ ─ ─ ─ ─ ┐
     ┊        ├────  HR_STILL.VRO         │   Still Video Object file (option)
     ┊        │    └ ─ ─ ─ ─ ─ ─ ─ ─ ─ ─ ┘
              │    ┌ ─ ─ ─ ─ ─ ─ ─ ─ ─ ─ ┐
              ├────  HR_AUDIO.VRO         │   Audio object file (option)
              │    └ ─ ─ ─ ─ ─ ─ ─ ─ ─ ─ ┘
              │    ┌─────────────────────┐
              ├────┤    HR_VTMAP.BUP      │   EVOB TMAP Backup File
              │    └─────────────────────┘
              │    ┌─────────────────────┐
              ├────┤    HR_STMPx.BUP      │   ESOB TMAP Backup File
              │    └─────────────────────┘
              │    ┌─────────────────────┐
              ├────┤     HR_SFIx.BUP      │   ESOB STR_FI Backup File
              │    └─────────────────────┘
              │    ┌─────────────────────┐
              └────┤    HR_MANGER.BUP     │   HDVMG Backup File
                   └─────────────────────┘
```

# F I G. 3

```
                  ┌─────────────────────┐
                  │      HDVR_MG        │
                  └─────────────────────┘
```

| Disc management identification information (VMG_ID) |
|---|
| HR_MANGR_EA |
| HDVR_MGI_EA |
| ... |
| Version information |
| DISC_RSM_MRKI |
| EX_DISC_REP_PICI |
| ... |
| Stream object management information start address (ESTR_FIT_SA) |
| ... |
| Original PG information start address (EX-ORG_PGCI_SA) |
| UD_PGC information start address (EX-UD_PGCIT_SA) |

HDVR_MGI

| MGI_MAT |
| EX_PL_SRPT |
| ... |
| ESTR_FIT |
| EX_ORG_PGC information |
| EX_UD_PGC information |
| EX_TXTD_MG |
| EX_MNFIT |

HR_MANGR_EA : Address from head of file to last of MNFIT
HDVR_MGI_EA : Address from head of file to last of HDVR_MGI

F I G. 4

| DISC_RSM_MRKI | | PGCN : Target PGC number : 0=ORG_PGC |
|---|---|---|
| | | PGN : Target PG number : 0=UD_PGN |
| | | CN : Target CELL number |
| | | MRK_PT : PTM/PATS/S_EVOB_ENT number on target EVOB |
| | | V_ESN : Target video (default) ESI number (in case of ESOB) |
| | | A_ESN : Target audio (default) ESI number (in case of ESOB) |
| | | Audio main/sub switch flag   0=main, 1=sub |
| | | MRK_TM : Update date |

F I G. 5

| EX_DISC_REP_PICI | | PGCN : Target PGC number : 0=ORG_PGC |
|---|---|---|
| | | PGN : Target PG number : 0=UD_PGN |
| | | CN : Target CELL number |
| | | PIC_PT : PTM/PATS/S_EVOB_ENT number on target EVOB |
| | | V_ESN : Target video (default) ESI number (in case of ESOB) |
| | | Playback time/playback end time |
| | | PIC_CL_TM : Update date |

F I G. 6

EP 1 763 033 A1

HDVR_MG

HDVR_MGI

| MGI_MAT |
| EX_PL_SRPT |
| ... |
| ESTR_FIT |
| EX_PGC information |
| EX_UD_PGC information |
| EX_TXTD_MG |
| EX_MNFIT |
| EPIT |

PL_REP_PICTI : Representative picture information
PL_RSM_MRKI : Position information where playback of each PL is
interrupted (start information used when playback is resumed next time)
PICT_PT : Playback interrupted PTM/PATS (in case of PATS base)
MRK_TM : Date of marking
PL_INDEX : PL absolute number
(not assign identical number value to a plurality of PLs in single disc)
PL_LAST_MOD_TM : Describe update date of PL to prevent
inconsistency in case of PL

| EX_PL _SRPTI | EX_PL_SRP_Ns : Number of EX_PLs |
| | EX_PL_SRPT_EA : End address of this table |
| EX_PL_SRP #1 | |
| ... | |
| EX_PL_SRP #n | |

| ... | |
| PGC_N : PGC number | |
| CRE_TM : Date of creation | |
| PRM_TEXT information | |
| IT_TEXT_SRPN | |
| PL_REP _PICTI | CN : Target CELL number |
| | PIC_PT : PTM/PATS/S_EVOB_ENT number on target EVOB |
| | V_ESN : Target video (default) ESI number (in case of ESOB) |
| | Playback time or playback end time |
| | PIC_CL_TM : Update date |
| PL_RSM _MRKI | CN |
| | PICT_PT |
| | V_ESN : Target video (default) ESI number (in case of ESOB) |
| | A_ESN : Target audio (default) ESI number (in case of ESOB) |
| | Audio main/sub switch flag  0=main, 1=sub |
| | MRK_TM |
| PL_INDEX | |
| PL_LAST_MOD_TM | |

FIG. 7

# FIG.8

| HDVR_MG |
| --- |

| HDVR_MGI |
| --- |
| ... |
| EX_M_AVFIT |
| ... |
| ESTR_FIT |
| ... |

| EX_M_AVFITI | | |
| --- | --- | --- |
| | VTMAP_LAST_MOD_TM | |
| EX_M_EVOB_STI#1~#n | | |
| EX_M_AVFI | | |
| | EX_AVFI_GI | |
| | M_EVOBI #n | |
| | | EVOB_TMAPI |
| | ... | |

| EX_VTMAPIT (Independent file) (FIG. 26) |
| --- |

VTMAP_LAST_MOD_TM : Update date of VTMAP file
(confirm if this value is the same as that described in VTMAP file)

FIG.9

Boxes: EVOB_TMAPI, EVOB_TMAP_GI

EVOBU_ENT_Ns
ADR_OFS
EVOB_SZ
EVOBU_PB_TM_RNG
EX_VTMAP_N

ADR_OFS
  Address offset (logical block LB address) from head of file to head of EVOB
EVOBU_PB_TM_RNG
  EVOBU playback time range (s : second)
  1=0.4s~1.2s, 2=1s~2s, 3=2s~3s
EVOB_SZ : EVOB size (number of LBs)
VMAP_N : VTMAP number : VTMAP number from head in VTMAP file (VTMAP)
  this number may be omitted when recording order of VTMAP.IFO is determined to be used

**FIG. 10**

EX_M_AVFITI

VTMAP_LAST_MOD_TM

EX_M_VOB_STI#1-#n

EX_M_AVFI

EX_AVFI_GI

M_VOBI #n

EVOB_TMAPI

...

VTMAPIT

EX_M_VOB_STI#1

...

EX_M_VOB_STI#n

V_ATR : Video attribute

AST_Ns : Number of audio streams

SPST_Ns : Number of sub-picture streams

A_ATR0 : Attribute of AudioST0

A_ATR1 : Attribute of AudioST1

SP_PLT(3Bytes＊16) : Sub-picture palette data

⟨V_ATR⟩

| Video compression mode | TV system | Aspect ratio | Line21_Sw1 | Line21_Sw2 | Source picture progressive mode |
|---|---|---|---|---|---|

| Source picture resolution | Application flag |
|---|---|

TV system : 0=525/60, 1=625/50, 2=HD/60, 3=HD/50
Source picture progressive mode : 0=interlace, 1=progressive
Source picture resolution : 0=352*240(525/50)or325*288(625/60), 1=352*480(525/50)or325*576(625/60), ⋯
8=1280*720(HD), 9=960*1080(HD), 10=1280*1050(HD), 11=1440*1080(HD)
12=1920*1080(HD)

F I G. 11

EP 1 763 033 A1

HDVR_MG

HDVR_MGI

...

EX_M_AVFIT

...

ESTR_FIT

...

ESTR_FI_SRPT

ESTR_FI_SRPTI

ESTR_FI_SRP_Ns : Number of ESTR_SRPs

ESTR_FI_SRPT_EA : End address of this table

ESTR_FI_SRP #1

ESTR_FI_FN : ESTR_FI file name

ESTR_FI_LAST_MOD_TM

AP_FORMAT_1 : Broadcast scheme

Country_code : Country code

PKT_TY : Packet type

ESOBI_Ns : Number of pieces of ESOBI

ESTR_FI_SZ : size of ESTR_FI file

TOTAL_STAMP_SZ : Total size of STMAP

...

ESTR_FI_SRP #n

ESTR_FI (Independent file, FIG. 13) #1–#n

STMAPIT (Independent file, FIG. 26) #1–#n

ESTR_FI_SRP_Ns : Number of ESTR_SRP : 0≦ESTR_FI_SRP_Ns≦4
ESTR_FI_LAST_MOD_TM : Update date of ESTR_FI file
   (confirm if this value is the same as that described in ESTR_FI)
AP_FORMAT1 : Describe broadcast scheme (Major) :
   00010001h=JapanISDB, 00020001h=ATSC, 003001h=European DVB
ESTR_FI_SZ : ESTR_FI file size
ESOBI_Ns : Number of ESOBI : 0≦ESOBI_Ns≦999
ESTR_FI_FN : ESTR_FI file name : HR_SFInn.IFO
   This "nn" part is reflected in File Name : HR_STMnn.IFO of STMAP to determine file name of STMAP
TOTAL_STAMP_SZ : In case of Type A, total size of ETMAP (ESOBU_EMNT) used by this ESTR_FI
                In case of Type B, total size of AT_SOBU_ENT used by this ESTR_FI

F I G. 12

⟨ESTR_FI⟩

| HR_SFIxx.IFO |
| --- |

| ESTR_FI_GI |
| --- |
| SFI_ID |
| ESTR_FI_EA : End address of ESTR_FI |
| VERN : Version number |
| STR_FI_LAST_MOD_TM |
| PKT_TY : Packet type |
| PKT_SZ : Packet size |
| PKT_GRP_SZ : Packet group size |
| PKT_Ns : Number of packets in packet group |
| ESOB_SRP_Ns : Number of SRPs |
| STMAP_LAST_MOD_TM |
| STMAP_SZ : size_of_STMAP |
| PATS_SS |

| ESOBI_SRP #1 |
| --- |
| ... |
| ESOBI_SRP #K |
| ESOBI #1 (FIG. 14) |
| ... |
| ESOBI #K |

SFI_ID : Stream file information ID
    "DVD HR SFI00"=(HR_SFI00.IFO)
                (HR_STM00.IFO)
    SFI of Type B (when recording is done without cognizance)
    "DVD HR SFInn"=(HR_SFInn.IFO)
                (HR_STMnn.IFO)
    SFI of Type A (when recording is done after cognizance)
STR_FI_LAST_MOD_TM : Update date of STR_FI file
    (used to synchronize files by confirming if this value is the
    same as update date information described in STR_FI_SRP)
STMAP_LAST_MOD_TM : Update date of STMAP file (used to
    synchronize files by confirming if this value is the same as
    update date information described in STMAP file)
STMAP_SZ : STMAP file size
ESOBI_SRP : ESOBI_SA
PATS_SS : 00=both PATS and FIRST_PATS_EXT are valid, 01=
only PATS is valid, 10=both PATS, FIRST_PATS_EXT are invalid

F I G. 13

EP 1 763 033 A1

〈ESOBI〉

| ESOBI_GI |
|---|
| ESOB_ESI#1 |
| ... |
| ESOB_ESI#m |
| ESOB_DCNI |
| ESOB_CONNI |
| ESOB_GPI |
| ESOB_TMAPI |

In case of Type B, ESOB_ESI, ESOB_DCNI, and ESOB_GPI are not present

**FIG. 14**

| ESOB_REC_Mode |
|---|
| ESOB_TY |
| AP_FORMAT_2 |
| NETWORK_ID |
| TS_ID |
| SERCICE_ID |
| Format_ID |
| ESOB_REC_TM |
| ESOB_REC_TM_SUB |
| LOCAL_TM_ZONE |
| ESOB_DURATION |
| ESOB_S_PTM |
| ESOB_E_PTM |
| SERVICE_TYPE |
| CP_CTRL_INFO(CCI) |
| Video recording rate |
| Reserved |
| PMT_PID |
| PCR_PID |
| ESOB_DEF_V_SOB_ESIN |
| ESOB_ES_Ns |
| ESOB_V_ES_Ns |
| ESOB_A_ES_Ns |

EP 1 763 033 A1

# FIG. 15

| |
|---|
| ESOB_REC_Mode |
| ESOB_TY |
| AP_FORMAT_2 |
| NETWORK_ID |
| TS_ID |
| SERCICE_ID |
| Format_ID |
| ESOB_REC_TM |
| ESOB_REC_TM_SUB |
| LOCAL_TM_ZONE |
| ESOB_DURATION |
| ESOB_S_PTM |
| ESOB_E_PTM |
| SERVICE_TYPE |
| CP_CTRL_INFO(CCI) |
| Video recording rate |
| Reserved |
| PMT_PID |
| PCR_PID |
| ESOB_DEF_V_SOB_ESIN |
| ESOB_ES_Ns |
| ESOB_V_ES_Ns |
| ESOB_A_ES_Ns |

PMT_PID to ESOB_A_ES_Ns are not available in Type B

ESOB_REC_MODE...00h : Type A Recording mode
                          01h : Type B Recording mode
ESOB_TY : b15=0 : normal ESOB, b15=1 : temporarily erased ESOB
              b12=0 : information of PSI and SI is valid,
                     1 : information of PSI and SI is invalid (in case of TYPE_B)
AP_FORMAT : 2=ISDB-S, ISDB-T, ATSC_1···
Save information of recorded PSI and SI

  SERVICE_ID, PMT_PID, NETWORK_ID, TS_ID,
  FORMAT_ID, SERVICE_TYPE, PCR_PID, etc.
    (Set ALL ffh if b12 is not available or invalid (not used))
ESOB_DEF_V_SOB_ESIN : ESI number of Video to be played back as default :
    ESI number with small component tag value (preferentially use component
    group descriptor value)
ESOB_DURATION
  TYPE A : ESOB playback time (number of fields, total of ESOBU_ENTs to
                which default PID belongs)
  TYPE B : ESOB PATS period : time from PATS of first packet to PATS of
                last packet
  Set 0xffffff if valid value is not available (unknown)
ESOB_ES_Ns : Number of ESs
ESOB_V_ES_Ns : (Number of pieces of ESOB_V_ESI) : number of video ESs
ESOB_A_Es_Ns : Number of audio ESs (number of pieces of ESOB_A_ESI)
    ESOB_ES_Ns≧ ESOB_V_ES_Ns+ESOB_A_ES_Ns
    ESOB_V_ES_Ns+ESOB_A_Es_Ns≧ ES_TMAP_Ns
ESOB_S_PTM/PATS : TYPE A : ESOB playback start time
    TYPE B : PATS of first packet of ESOB
        When PATS_SS=10, number of packets from head of file
ESOB_E_PTM/PATS : TYPE A : ESOB playback end time
    TYPE B : PATS of last packet of ESOB
        When PATS_SS=10, number of packets from head of file
Video recording rate : ESOB average recording rate

EP 1 763 033 A1

<ESOBI>

ESOBI_GI

ESOB_ESI #1

...

ESOB_ESI #m

ESOB_DCNI

ESOB_CONNI

ESOB_GPI

ESOB_TMAPI

ESOB_V_ESI

ESOB_A_ESI

ESOB_OTHER_ESI

There are three types of ESOB_ESI : V_ESI, A_ESI, and OTHER_ESI

F I G. 16

# FIG. 17

| ESOB_V_ESI |
|---|

| |
|---|
| ES_TY |
| ES_PID |
| STREAM_TYPE |
| V_ATR |
| Es_index |
| STREAM_CONTENT |
| COMPONENT_TYPE |

ES_TY : Type of ES, 00=Video ES
ES_PID : PID of ES
STREAM_TYPE : STREAM type indicated in PMT
Es_index : Index number assigned to ES
  COMPONENT_TAG value indicated by component descriptor
STREAM_CONTENT
  STREAM_CONTENT value indicated by component descriptor
COMPONENT_TYPE
  COMPONENT_TYPE value indicated by component descriptor
V_ATR : Attributes of Video

| Video compression mode | Source resolution | Aspect Ratio | Source picture Progressive mode | Frame rate |
|---|---|---|---|---|

Video compression mode : 0=MPEG1  1=MPEG2  2=MPE-4  AVC, ···
Frame rate : 1=24/1.001, 2=24, 3=25, 4=30/1.001, 5=30, 6=50, 7=60/1.001, 8=60, 0xf=unspecified
Progressive : 0=Interlaced, 1=Progressive, 3=unspecified
Aspect Ratio : 2=4 : 3  3=16 : 9  4=2.21 : 1  7=unspecified
Source resolution : 0=352*240(288), 1=352*480(576), 2=480×480(576), 3=544*480(576), 4=704×480(576),
            5=720*480(576), 8=1280*720, 9=960*1080, 10=1280*1080, 11=1440*1080, 12=1920*1080
            16=640*480(576), 17=unspecified(Horizontal)*240(288)(Vertical)
            18=unspecified(Horizontal)*480(576)(Vertical),
            19=unspecified(Horizontal)*720(Vertical), 20=unspecified(Horizontal)*1080(Vertical)
            1fh=unspecified

EP 1 763 033 A1

F I G. 18

| ESOB_A_ESI |
|---|

| |
|---|
| ES_TY |
| ES_PID |
| STREAM_TYPE |
| AUDIO_ATTR |
| ES_index |

ES_TY : 0x10=AUDIO ES
ES_PID : PID of ES
STREAM_TYPE : STREAM type indicated in PMT
Es_index : Index number assigned to ES
  COMPONENT_TAG value indicated by component descriptor
AUDIO_ATTR : AUDIO attribute value

| Audio_Coding _Mode | fs | Number of audio channels | Bit rate |
|---|---|---|---|
| | | | |

Audio Coding Mode : 0=AC3, 1=MPEG1 or 2=MPEG2 without extension bitstream
  3=MPEG2 without extension bitstream, 4=L-PCM, 0x30=MPEG2 AAC 0x3f=unspecified
fs : 0=48kHz, 1=96kHz, 2=192kHz, 4=12kHz, 5=24kHz, 8=32kHz, 9=44.1kHz, 0xf=Unspecified
Number of audio channels : 0=1h(Mono), 1=2ch(Stereo), 2=3ch, 3=4ch, 4=5ch, 5=6ch, 6=7ch, 7=8ch,
          9=2h(Dual Mono), 0xf=unspecified
Bit rate : 1=64kbps, 2=80kbps, 3=96kbps, 4=112kbps, 5=128kbps, ···0xff=unspecified

| ESOB_OTHER_ESI |
|:---:|

| ES_TY |
|:---:|
| ES_PID |
| STREAM_TYPE |
| ES_index |

ES_TY : 0x20=Other ES
ES_PID : PID of ES
STREAM_TYPE : STREAM type indicated in PTM
Es_index : Index number assigned to ES
   In case of ARIB, COMPONENT_TAG value indicated by component descriptor

FIG. 19

EP 1 763 033 A1

# FIG. 20

| ESOBI_GI |
|---|
| ESOB_ESI #1 |
| ... |
| ESOB_ESI #m |
| ESOB_DCNI |
| ESOB_CONNI |
| ESOB_GPI |
| ESOB_TMAPI |

| ESOB_DCNI_GI |
|---|
| CNT_SEGI_Ns : Number of pieces of CNT_SEGI |
| CNT_SEGI #1 |
| CNT_SEG_SZ |
| CNT_SEG_S_PKT_POS |
| ... |
| CNT_SEGII #K |

ESOB_DCNI : Wrap-around position information of STC (STC reaches end) :
CNT_SEG_SZ : CNT_SEG size (packet GP number from previously discontinued position to current position)
CNT_SEG_S_PKT_POS : Position and Packet number in first packet GP

ESOB

| CNT_SEG #1 | CNT_SEG #2 | CNT_SEG #3 | ... | CNT_SEG #n |
|---|---|---|---|---|

CNT_SEG _SZ#1    CNT_SEG _SZ#2    CNT_SEG _SZ#3    CNT_SEG _SZ#n

| ... | PKT_GP | ... |
|---|---|---|

PKT_POS

⟨ESOBI⟩

| ESOBI_GI |
|---|
| ESOB_ESI#1 |
| ... |
| ESOB_ESI#m |
| ESOB_DCNI |
| ESOB_CONNI |
| ESOB_GPI |
| ESOB_TMAPI |

GPI structure

| ESOB_GPI_GI |
|---|
| GPI_SRP#1 |
| ... |
| GPI_SRP#m |
| GPI#1 |
| ... |
| GPI#m |

FIG. 21

⟨ESOB_GPI⟩

| ESOB_GPI_GI |
|---|
| GPI_SRP#1 |
| ... |
| GPI_SRP#m |
| GPI#1 |
| ... |
| GPI#m |

| GPI_TY |
|---|
| GPI_SRP_Ns |

(Number of GPI_SRPs : $1 \leqq GPI\_SRP\_Ns \leqq 8$)

| GPI_SA : GPI start address |
|---|

| GPI_GI |
|---|
| ES_PID#1 |
| ... |
| ES_PID#n |

| PRIORITY |
|---|
| ES_PID_Ns |

GPI_TY : GPI_TYPE(2bits), reserved(6bits)
GPI_TYPE : 00=not set in stream.  Created by recorder
        01=set in stream
PRIORITY : Priority (not defined when=00)
One video PID is set per group

F I G. 22

EP 1 763 033 A1

## F I G. 23

⟨ESOBI⟩

| ESOBI_GI |
|:---:|
| ESOB_ESI#1 |
| ... |
| ESOB_ESI#m |
| ESOB_DCNI |
| ESOB_CONNI |
| ESOB_GPI |
| ESOB_TMAPI |

| ESOB_CONN_SS | Reserved |
|:---:|:---:|

ESOB_CONNI : Seamless information between continuous immediately preceding ESOB and current ESOB
ESOB_CONN_SS : 1=recorded continuously with immediately preceding ESOB; 0=not continuous

⟨TMAP of TYPE A (PTM base)⟩

| ESOB_TMAPI |
| --- |

| ESOB_TMAPI_GI |
| --- |
| ES_TMAP_GI#1 |
| ... |
| ES_TMAP_GI#m |

| ESOB_ADR_OFS |
| --- |
| ESOB_SZ |
| ESOB_S_PKT_POS |
| ESOB_E_PKT_POS |
| ESOBU_PB_TM_RNG |
| ES_TMAP_GI_Ns |

| _ESOB_ESIN |
| --- |
| ES_S_PTM |
| ES_E_PTM |
| ES_S_ADR_OFS |
| ES_LAST_ESOBU_E_PKT_POS |
| ES_ESOBU_ENT_Ns |
| ES_E_ADR_OFS |

ESOB_ADR_OFS : Number of packet groups from head of file to head of ESOB
ESOB_SZ : Number of packet groups of ESOB
ESOBU_PB_TM_RNG : ESOBU playback time range
     0=2s or less, 1=3s or less, 3=1s or less
ESOB_S_PKT_POS : $0 \leqq SOB\_S\_PKT\_POS \leqq PKT\_Ns-1$
     Start of first packet of ESOB in packet group
ESOB_E_PKT_POS : $0 \leqq ESOB\_E\_PKT\_POS \leqq PKT\_Ns-1$
     End of first packet of ESOB in packet group
ES_TMAP_GI_Ns : Number of pieces of ES_TMAP_GI
$1 \leqq ES\_TMAP\_GI\_Ns \leqq ESOB\_V\_ES\_Ns$

ESOB_ESIN : Number of V_ESI which belongs to this TMAP
ES_S_ADR_OFS : Number of packet groups from head of ESOB to head of this ES
ES_E_ADR_OFS : Number of packet groups from last of this ES to last of ESOB
ES_S_PTM : Start PTM of this ES
ES_E_PTM : End PTM of this ES
ES_LAST_ESOBU_E_PKT_POS
TS packet number of last packet of last ESOBU in packet group
$0 \leqq ES\_LAST\_ESOBU\_E\_PKT\_POS \leqq PKT\_Ns-1$
ES_ESOBU_ENT_Ns : Number of ESOBU_ENTs which belong to this ES_TMAP

F I G. 24

# FIG. 25

⟨TMAP of TYPE B (PATS base)⟩

| ESOB_TMAP |
| --- |

| ESOB_TMAP_GI |
| --- |

| ESOB_ADR_OFS |
| --- |
| ESOB_SZ |
| ESOB_S_PKT_POS |
| ESOB_E_PKT_POS |
| AT_SOBU_TM |
| AT_SOBU_ENT_Ns |

ESOB_ADR_OFS : Number of packet groups from head of file to head of ESOB
ESOB_SZ : Number of packet groups of ESOB
ESOB_S_PKT_POS : 0≦ESOB_S_PKT_POS≦PKT_Ns-1
      Start of first packet of ESOB in packet group
ESOB_E_PKT_POS : 0≦ESOB_E_PKT_POS≦PKT_Ns-1
      End of first packet of ESOB in packet group
AT_SOBU_TM : AT_SOBU time range 0=1.0s 1=2sec
AT_SOBU_ENT_Ns : Number of AT_SOBU_ENTs in STMAPI
(AT=Arrival Time based)

EP 1 763 033 A1

FIG.26

HR_VTMAP.IFO

HR_STMPX.IFO

Note) TMAPI_SRPs do not always point to TMAPI in ascending order
Garbage data may be included among TMAPI

EX_VTMAPIT

EX_VTMAPITI
EX_VTMAP_SRP #1
...
EX_VTMAP_SRP #q
EX_VTMAPI
...
EX_VTMAPI

⟨TYPE_A : HR_STMnn.IFO : nn=01, ...FF⟩

STMAPIT

STMAPITI
STMAP_GI #1
...
STMAP_GI #q
STMAP_SRP #1
...
STMAP_SRP #q
ETMAPI
...
ETMAPI

⟨TYPE_B : HR_STM00.IFO⟩

STMAPIT

STMAPITI
STMAP_SRP #1
...
STMAP_SRP #q
STMAPI
...
STMAPI

FIG. 27

| EX_VTMAPITI |
| EX_VTMAPI_SRP #1 |
| ... |
| EX_VTMAPI_SRP #q |
| EX_VTMAPI |
| ... |
| EX_VTMAPI |

| VTM_ID |
| EX_VTMAPT_EA |
| EX_VERN |
| EX_VTMAP_LAST_MOD_TM |
| EX_VTMAPI_SRP_Ns |

| EX_VMAPI_SA |
| EVOBU_ENT_Ns |

| EVOBU_ENT #1 |
| ... |
| EVOBU_ENT #q |

VTG_ID : V_TMAP identification information="DVD_HR_VTMAP"
EX_VTMAPT_EA : End address (LB from head of file) of this file (table)
EX_VERN : TMAP version information
EX_VTMAP_LAST_MOD_TM : Describe update date of VTMAPT (The same value as HR_MANGR.IFO)
EX_VMAP_SA : Start address (LB from head of file) of each VMAP
EVOBU_ENT_Ns : Number of EVOBU_ENTs

EP 1 763 033 A1

In case of EVOBU_ENT

| EVOBU_ENT #1 |
|---|
| ... |
| EVOBU_ENT #q |

| 1STRBF_SZ |
|---|
| EVOBU_PB_TM (Number of fields) |
| EVOBU_SZ |

F I G. 28

EP 1 763 033 A1

EP 1 763 033 A1

F I G. 29

⟨STMAPT of TYPE A⟩

| STMAPITI |
| --- |
| STMAP_GI #1 |
| ... |
| STMAP_GI #q |
| ETMAP_SRP #1 |
| ... |
| ETMAP_SRP #q |
| ETMAPI |
| ... |
| ETMAPI |

| STM_ID |
| --- |
| STMAPT_EA |
| VERN |
| STMAP_LAST_MOD_TM |
| STMAPI_GI_Ns |

| ETMAPI_SRP_Ns |
| --- |

| ETMAPI_SA |
| --- |
| ESOBU_ENT_Ns |

| ESOBU_ENT #1 |
| --- |
| ... |
| ESOBU_ENT #q |

STM_ID : STMAP identification information "DVD_HR_STTnn" : nn=01...0xFF
STMAPT_EA : End address of this file
VERN : TMAP version information
STMAP_LAST_MOD_TM : Describe update date of STMAPT (The same value as HR_MANGR.IFO)
ETMAPI_SA : Start address of each EMAPI
ESOBU_ENT_Ns : Number of ESOBU_ENTs

〈STMAPTI OF TYPE B〉

| STMAPITI |
| --- |
| STMAP_SRP #1 |
| ... |
| STMAP_SRP #q |
| STMAPI |
| ... |
| STMAPI |

| STM_ID |
| --- |
| STMAPT_EA |
| VERN |
| STMAP_LAST_MOD_TM |
| STMAP_SRP_Ns |

| STMAP_SA : Start address of STMAPI |
| --- |
| AT_SOBU_ENT_Ns : Number of AT_SOBU_ENTs |

| AT_SOBU_SZ : AT_SOBU size |
| --- |
| AT_SOBU_S_PKT_POS |

| AT_SOBU_ENT #1 |
| --- |
| ... |
| AT_SOBU_ENT #q |

STM_ID : STMAP identification information "DVD_HR_STT00"
STMAPT_EA : End address of this file
VERN : TMAP version information
STMAP_LAST_MOD_TM : Describe update date of STMAPT (The same value as HR_MANGR.IFO)
SMAP_SA : Start address of each STMAPI
ES_TMAPI_Ns : In case of PTM base : number of pieces of ES_TMAPI, in case of ATS base : set 1
AT_SOBU_S_PKT_POS : Head position of AT_ESOBU in packet group (number of packets)
    PKT_POS may be omitted in case of packet group unit
AT_SOBU : Delimit by constant time of minimum AT_SOBU_ATS_TM_RNG=0 : 0.5s,=1 : 1s, =2 : 2s other than last AT_SOBU
    Last AT_SOBU may be delimited by constant time or less
AT_SOBU_SZ : Expressed by number of packet groups that belong to AT_SOBU
AT_SOBU_S_PKT_POS : Number of packets (1 to 170) from head of Packet_Group to start of AT_SOBU in packet group

F I G. 30

⟨Configuration example of ESOBU_ENT of TYPE A (PTM base)⟩

| ESOBU_ENT #1 |
|---|
| ... |
| ESOBU_ENT #q |

| 1st_Ref_PIC_SZ |
|---|
| ESOBU_PB_TM (Number of fields) |
| ESOBU_SZ_(Number of packet GPs) |
| ESOBU_S_PKT_POS |

ESOBU : ⟨1⟩delimited at randomly accessible positions
⟨2⟩delimited by maximum ESOBU_PB_TM_RNG=0 : 1s,=1 : 2s,=2 : 3s or less
ESOBU_SZ : number of packet groups belonging to ESOBU (count head fractions, and drop rear fractions)
ESOBU_S_PKT_POS : head packet number ($0 \leqq$ ESOBU_S_PKT_POS $\leqq$ PKT_Ns $-1$) of start ESOBU in packet group

Example        78th Packet

SOBU_SZ=3, SOBU_S_PKT_POS=78
1st REF PIC SZ=2(In case of PKT_GP unit),
267(In case of PKT unit)

ESOBU n

| ...... | PKTGP | PKTGP | PKTGP | PKTGP | ...... |
|---|---|---|---|---|---|

REF_PIC

5Packet

1st_Ref_PIC_SZ : number of packet groups (or number of packets) from head of ESOBU to end of Ref_PIC
When 1st_Ref_PIC_SZ=0x000000, no Ref_PIC is included in ESOBU. (set in frame or field unit)
REF_PIC : in case of MPEG_2, I_PIC, or corresponding pictures for other compression schemes

F I G. 31

EP 1 763 033 A1

# FIG. 32

| HDVR_MG |
| --- |

| ORG_EX_PGC information |
| --- |

| HDVR_VMGI |
| --- |
| ... |
| ESTR_FIT |
| EX_ORG_PGC information |
| EX_UD_PGC information |
| EX_TXTD_MG |
| EX_MNFIT |
| EPIT |

| UD_EX_PGCT information |
| --- |
| UD_EX_PGC search pointer #1 |
| ... |
| UD_EX_PGC search pointer #r |
| UD_EX_PGC information #1 |
| ... |
| UD_EX_PGC information #s |

EP 1 763 033 A1

〈EX_PGC information〉

| EX_PGC_GI |
| --- |
| EX_PGI #1 |
| ... |
| EX_PGI #p |
| EX_CELL_SRP #1 |
| ... |
| EX_CELL_SRP #q |
| EX_CI #1 |
| ... |
| EX_CI #q |

| Number of programs : 0=UD_PGC More than 0=ORG_PGC |
| --- |
| Number of CELL_SRPs |

| Program type | |
| --- | --- |
| Number of cells in program | |
| PRIM_TXT information | |
| IT_TXT_SRP number | |
| PG_REP _PICTI | CN : Target CELL number |
| | PIC_PT : PTM/PATS/S_EVOB_ENT number on target EVOB |
| | V_ESOB_ESIN : Target video (default) ESI number (in case of ESOB) |
| | Playback time/playback end time |
| | PIC_CL_TM : Update date |
| PG_RSM _IFO | CN : Target CELL number |
| | MRK_PT : PTM/PATS/S_EVOB_ENT number on target EVOB |
| | V_ESOB_ESIN : Target video (default) ESI number (in case of ESOB) |
| | A_ESOB_ESIN : Target audio (default) ESI number (in case of ESOB) |
| | Audio main/sub switch flag  0=main, 1=sub |
| Program index number (PG absolute number) | |
| PG_LAST_MOD_TM : Program update date | |

Program update date
Save date upon updating program management information
PG_RSM_IFO : Playback position information upon interrupting playback (start position information when playback is resumed next time)
MRK_PT, PIC_PT
In case of M_CELL and STR_TYPE_A_CELL : PTM
STR_TYPE_B_CELL : PATS of playback start packet
(may be approximate value) (in case of PATS base)
MRK_TM : Date of creation of this marker
PG_REP_PICTI : Representative picture (for thumbnail)

FIG. 33

EP 1 763 033 A1

# FIG. 34

〈EX_PGC information〉

| EX_PGC_GI |
|---|
| EX_PGI #1 |
| ... |
| EX_PGI #p |
| EX_CELL_SRP #1 |
| ... |
| EX_CELL_SRP #q |
| EX_CI #1 |
| ... |
| EX_CI #q |

C_GI

| Cell type |
|---|
| ESTR FIN : FILE number of ESTR_FI |
| Corresponding ESOBI_SRP number |
| C_EPI_Ns |
| Cell S_PTS/PATS |
| Cell E_PTM/PATS |
| C_DEF_V_SOB_ESIN : ESI number of default Video |
| C_EPI#1-#n |

Cell type : 0=M_CELL, 3=STRA_CELL, 4=STRB_CELL
Cell S_PTM/PATS, Cell E_PTM/PATS
    In case of M_CELL and STR_TYPE_A_CELL : PTM (FIG. 36)
    STRB_CELL : PATS of playback start packet
        (may be approximate value) (in case of PATS base)
    Number of packets from head of file when PATS_SS=10

# FIG. 35

⟨C_EPI⟩

| EPI#1 |
|---|
| ... |
| EPI#m |

⟨M_CELL_EPI_TY_A⟩

| EPI_TY |
|---|
| EP_PTM |

⟨M_CELL_EPI_TY_B⟩

| EPI_TY |
|---|
| EP_PTM |
| PRM_TXTI |
| REP_PIC_PTM |

⟨STR_A_CELL_EPI_TY_A⟩

| EPI_TY |
|---|
| EP_PTM |
| PID/GP_N |
| V_ESN |
| A_ESN |
| Audio main/sub switch flag |

⟨STR_A_CELL_EPI_TY_B⟩

| EPI_TY |
|---|
| EP_PTM |
| V_ESN |
| A_ESN |
| Audio main/sub switch flag |
| PRM_TXTI |
| REP_PIC_PTM |

STR_B_CELL_EPI_TY_A

| EPI_TY |
|---|
| EP_PATS |

STR_B_CELL_EPI_TY_B

| EPI_TY |
|---|
| EP_PATS |
| PID/GP_N |
| PRM_TXTI |
| REP_PIC_PATS |

```
EPI_TY : 0=MCELL_EPI_TYPE_A
         10h=MCELL_EPI_TPE_B,
         02h=STR_A_CELL_EPI_TYPE_A
         12h=STR_A_CELL_EPI_TYPE_B
         03h=STR_B_CELL_EPI_TYPE_A
         13h=STR_B_CELL_EPI_TYPE_B
PG_N : PG number
C_N : Cell number
In case of STR_B_CELL_EPI,
         When PATS_SS=10, PATS is the
         number of packets from head of file
V_ESN : Target video (default) ESI number
         (in case of ESOB)
A_ESN : Target audio (default) ESI number
         (in case of ESOB)
Audio main/sub switch flag
         0=main, 1=sub
```

EP 1 763 033 A1

| PTM | | |
|---|---|---|
| (PTM of ESOB or EVOB) | | |

| ... | CNT_SEGN | PTM_base[32–31] |
|---|---|---|

| PTM_base[30–23] | |
|---|---|

| PTM_base[22–15] | |
|---|---|

| PTM_base[14–7] | |
|---|---|

| PTM_base[6–0] | PTM_extension[8] |
|---|---|

| PTM_extension[7–0] | |
|---|---|

CNT_SEGN : In case of ESOB of TYPE A, this value is valid. Set 0 for object other than ESOB
First packet of ESOB always assumes 4. Assumes values corresponding to numbers of CNT_SEGs from first packet of ESOB : 4=0 CNT_SEGs, 5=1 CNT_SEGs, 6=2 CNT_SEGs, 7=3 CNT_SEGs (the same applies to EVOB)
PTM_base : Base value of PTM, and expressed by 90 kHz
PTM_extension : Extended value of PTM, and expressed by 27 kHz; PTM is expressed by sum of base and Extension

F I G. 36

FIG. 37

143 — ESOBU

16logical Blocks

147 — | Packet_Group | Packet_Group | ...... | Packet_Group |

~161   162~   163~

| Packet_Group_Header | PATS | MPEG-TS 1 packet | ...... | PATS | MPEG-TS 170 packet | ~163

128Bytes | 4B | 188B

162

Hearder_ID : 00000FA5
PKT_GRP_GI
CCI
MNI

PAT : 4 bytes

| PAT (31-0 bits) | ~162

(PATS : Lower 4 bytes of base PATS)

*) permit that Packet_Group includes maximum of two ESOBs together (not aligned by ESOB)

EP 1 763 033 A1

| Hearder_ID : 00000FA5 |
|---|
| PKT_GRP_GI |
| CCI |
| MNI |

| PKT_GRP_TY : type of Packet group |
|---|
| VERSION : Version of Packet group |
| Reserved |
| PKT_GRP_SS : status of Packet group |
| Reserved |
| VALID_PKT_Ns |
| First_PATS_EXT |
| Reserved |

PKT_GRP_TY : 01=Packet Group for MPEG-TS Packet  Other than 01=other
VERSION : Version number  10=Ver.1  11=Ver.1.1
PKT_GRP_SS : Status of this packet group

| STUF (1 bit) | PATS_SS (2 bits) | Reserved (5 bits) |
|---|---|---|

STUF : "1" is set in this bit when packet group does not fully store packets and ends halfway, and remaining area is stuffed
PATS_SS : 00=PATS and FIRST_PATS_EXT are valid, 01=only PATS is valid, 10=both PATS and FIRST_PATS_EXT are invalid

Valid_Packet_Ns : number of valid packets (assumes value other than 0xAA when STUF=1)

First_PATS_EXT : Extended bytes of PATS of the first Packet
   Arrival time : ATS (Arrival Time Stamp) is on 27-MHz base, its lower 4 bytes are described before each TS packet, and its lower bytes are described in this area

| PATS[47 : 32] |
|---|

FIG. 38

EP 1 763 033 A1

| Hearder_ID : 00000FA5 |
|:---:|
| PKT_GRP_GI |
| CCI |
| MNI |

| CCI |
|:---:|

| CGMS<br>(2 bits) | APS<br>(2 bits) | EPN<br>(1 bit) | ICT<br>(1 bit) | Reserved<br>(2 bits) |
|:---:|:---:|:---:|:---:|:---:|

F I G. 39

# F I G. 40

| Hearder_ID : 00000FA5 |
| PKT_GRP_GI |
| CCI |
| MNI |

| MNF_ID |
| MNF_DATA |

MNF_ID
32-byte ID determined for each corporation

MNF_DATA : User data area (32 bytes) freely used by each corporation

EP 1 763 033 A1

EP 1 763 033 A1

| EVOBU | EVOBU : 1Gop or 1s data |

2048bytes

| RDI_Pack | V_Pack | ..... | A_Pack |

⟨In case of CTL_Pack for DVD_Video=NV Pack⟩

| Pack_Header | System_Header | GCI_Packet | EX_PCI_Packet | EX_DSI_Packet |

| Packet Hearder | Sub_ Strem id | GCI | Packet Hearder | Sub_ Strem id | EX_PCI | Packet Hearder | Sub_ Strem id | EX_DSI |

⟨In case of CTL_Pack for DVD_Video=NV Pack⟩

| Pack_Header | System_Header | GCI_Packet | EX_RDI_Packet | dummy_Packet |

| Packet Hearder | Sub_ Strem id | GCI | Packet Hearder | Sub_ Strem id | EX_RDI |

Strem ID of all packets=private_stream_2
Sub_stream ID of GCI_Packet=0x04
Sub_stream ID of EX_RDI_Packet=0x50
Sub_Stream ID of EX_PCI_Packet=0x0
Sub_stream ID of EX_DCI_Packet=0x1

F I G. 41

EP 1 763 033 A1

| GCI | | |
|-----|---|---|

| EVOBU_CAT | Reserved |
|-----------|----------|

| GCI_GI | Reserved |
|--------|----------|

| DCI_SS (2 bits) | Reserved (2 bits) | CCI_SS (3 bits) | Reserved (1 bit) |
|-----------------|-------------------|-----------------|------------------|

| GCI_CAT | | |
|---------|---|---|

| Aspect Ratio (4 bits) | Subtitling Mode (2 bits) | | Film/Camera (1 bit) |
|-----------------------|--------------------------|---|---------------------|

| DCI_CC_SS | | |
|-----------|---|---|

| CGMS (2 bits) | APS (2 bits) | -Source (1 bit) | -EPN (1 bit) | Reserved (2 bits) |
|---------------|--------------|------------------|--------------|-------------------|

| DCI | | |
|-----|---|---|

| ISRC_V (10 bytes) | ISRC_A0-7 (10 bytes*8) | ISRC_SP0-7 (10 bytes*8) |
|-------------------|------------------------|-------------------------|

| CCI | | |
|-----|---|---|

| RECI | | |
|------|---|---|

| ISRC_SP_SEL (1 byte) |
|----------------------|

EVOBU_CAT : 0=for Standard VTS stream, 1=for Advanced VTS, 2=for Interoperability VTS or VR Stream
DCI_SS : 0=no valid DCI exists, 1=only valid aspect information exists, 3=all pieces of DCI exist
CCI_SS : 0=no CCI exists, 1=only source information exists, 2=only APS exists, 3=only source information and APS exist,
    4=only CGMS exists, 5=only CGMS and source information exist, 6=only CGMS and APS exist, 7=all exist
Aspect_Ratio : 0=4 : 3, 1=16 : 9, 8=14 : 9 letter box (center), 4=14 : 9 letter box (top), 13=16 : 9 letter box (center),
    2=16 : 9 letter box (top), 11=16 : 9 letter box (center), 7=14 : 9 full
CGMS : 0=inhibition, 1=unlimited permission
APS : 0=no APS, 1=append APS type 1, 2=append APS type 2, 3=append APS type 3
-Source : 0=analog pre-encoded media
-EPN : 0=contents protection (IE output protection), 1=no contents protection
ISRC(International Standard Recording Code) : Same as DVD-Video
*RECI is reserved in case of Interoperable VTS/VR VOB

F I G. 42

FIG. 43

EX_PCI

PCI_GI

NSML_AGLI

*All Reserved in case of Advanced VTS

NV_PACK_LBN

Reserved

EVOBU_UOP_CTL

EVOBU_S_PTM

EVOBU_E_PTM

EVOBU_SE_E_PTM

C_ELTM

Reserved

NSML_AGL_C#1_DSTA

...

NSML_AGL_C#9_DSTA

EP 1 763 033 A1

⟨EX_DSI structure⟩

| EX_DSI |
| --- |

| NV_PCK_SCR |
| --- |
| NV_PCK_LBN |
| EVOBU_EA |
| EVOBU_1STREF_EA |
| EVOBU_2NDREF_EA |
| EVOBU_3RDREF_EA |
| EVOBU_EVOB_IDN |
| EVOBU_ADP_ID/C_IDN |
| EVOBU_C_IDN |
| C_ELTM |

| DSI_GI |
| --- |
| SML_PBI |
| SML_AGLI |
| EVOBU_SRI |
| SYNCI |
| Reserved |

| EVOBU_SML_CAT |
| --- |
| ILVU_EA |
| NXT_ILVU_SA |
| NXT_ILVU_SZ |
| EVOB_V_S_PTM |
| EVOB_V_E_PTM |
| EVOB_A_STP_PTM |
| EVOB_A_GAP_LEN |

\* C_ELTM and VOBU_SRI are reserved
in case of Advanced VTS

| SML_AGL_C#1_DSTA |
| --- |
| ... |
| SML_AGL_C#9_DSTA |

| FWDIxx |
| --- |
| BWDIxx |

| A_SYNCA0to7 |
| --- |
| SP_SYNCA0to31 |

FIG. 44

⟨EX_RDI structure in case of Interoperable VTS/VR_VOB⟩

| EX_RDI |
| --- |

| RDI_GI | MNFI |
| --- | --- |

| EVOBU_S_PTM |
| --- |
| Reserved |
| EVOBU_RE_TM |

| MNF_ID |
| --- |
| MNFI_DT |

EVOBU_S_PTM : Start PTM of VOBU

MNF_ID : Company code

MNF_DT : Data unique to company

# F I G. 45

F I G. 46

FIG. 47A

Packet Group #1 | Packet Group #2 | Packet Group #3 | Packet Group #4

ESOB_SZ=2

Packet

| 3 | 4 | 1 | 2 | 3 | 4 | 1 | 2 | 3 |

ESOB_S_PKT_POS=2

EtvSOB_E_PKT_POS=3

FIG. 47B

Packet Group #1 | Packet Group #2 | Packet Group #3 | Packet Group #4

ESOB_SZ=2

| 1 | 2 | 3 | 4 | 1 | 2 | 3 | 4 | 1 | 2 | 3 |

ESOB_S_PKT_POS=0

ESOB_E_PKT_POS=3

FIG. 47C

Packet Group #1 | Packet Group #2 | Packet Group #3 | Packet Group #4

ESOB_SZ=3

| 3 | 4 | 1 | 2 | 3 | 4 | 1 | 2 | 3 | 4 |

ESOB_S_PKT_POS=2

ESOB_E_PKT_POS=0

FIG. 47D

Packet Group #1 | Packet Group #2 | Packet Group #3 | Packet Group #4

ESOB_SZ=0

| 2 | 3 |

ESOB_S_PKT_POS=1

ESOB_E_PKT_POS=3

Stream in coding order

ESOB_Cluster

| ESOBU#1 | ESOBU#2 | ESOBU#3 | ESOBU#4 | | ESOBU#6 |

Entry ESOBUs

Non-entry ESOBUs

ESOBU#5

Entry ESOBU

▨ Video Access Point (For example, sequence header followed by I-picture)

## F I G. 48

Packet Arrival Time

1sec　　1sec　　1sec　　1sec

MPEG-TS Packets

| AT_SOBU | AT_SOBU | AT_SOBU | AT_SOBU |

(AT_SOBU in this example includes packets that arrive within 1 sec)

## F I G. 49

F I G. 50

EP 1 763 033 A1

FIG. 51

Packet

Packet Arrival Time

Input
Packets

PATS

Packet Group

Packets
on Disc

...

Correct Packet timing is recovered
by Packet Arrival Time Stamp
(PATS)

...

Output
Packets

# FIG. 52

F I G. 53

EP 1 763 033 A1

FIG. 54

Start

ST10
Initial setting

ST12
Display setting

ST14
Key input

ST16
Interpret key input

Parallelly process for respective tasks

| ST20 | ST22 | ST24 | ST26 | ST28 |
|---|---|---|---|---|
| Program setting processing | Video recording processing | Playback processing | Digital output processing to STB | Edit processing |

F I G. 55

Enter edit processing

ST280

(EP edit) A

Edit contents ?

D (Playlist generation processing)

(Copy, move) B

C (Delete processing)

ST282A
EP edit processing

ST282B
Copy/move processing

ST282C
Delete processing

ST282D
Playlist generation processing (set initial value : value indicating head of PL in PL_RSM_IFO)

ST284
Set program update date (EX_PGI, EX_IT_TXT, EX_MNFI) (set upon changing one of EX_PGI, EX_CI, EVOB, and ESOB)

Return

F I G. 56

Start

ST105

Recording pre-process : write
respective management
areas (generate VMG), etc.

ST106

Digital
broadcast ? —— NO

YES

To VR recording
processing

ST107

Cognizable ? —— NO

YES

ST109A

Set to generate management
information of TYPE A

ST109B

Set to generate management
information of TYPE B

ST112

Video recording initial setting
  Reset STC unit, and set write start address and write command
  in drive units
  Initialize formatter unit : set CELL, ESOBU, PG, and packet
  group division, etc.

ST114

Video recording start setting : set data fetch start processing
from buffer in formatter unit

ST116

Extract PAT from buffer, and determine PMT based on user's
program setting Extract PMTs for streams to be recorded, and
save PAT, PMT, NIT, etc. upon start in work RAM

A

PAT : TS_ID, NETWORK_PID, PMT_ID
PMT : SERVICE_ID, REG_DES_VALUE, PCR_PID, ESOB_Es_Ns
NIT : SERVICE_TYPE etc.

F I G. 57

A

ST120
Generate ESI as many as number of streams from PMT

ST130
Buffer fetch processing

ST140
Recording data stored in buffer memory=predetermined size ? — NO

YES

ST142
Determine write address and write length of drive unit, and issue write command

ST144
Segmentation information fetch interrupt generated ? — NO

YES ST146
Fetch segmentation information from formatter unit

Segmentation condition : division 1s or division of GOP (division does not extend across sequence header)
Segmentation information : ESOBU size, start and end addresses of I-picture, position information of sequence header in ESOBU, etc.

ESOB delimitation condition
Transition of programs, transition of attributes, end of video recording, etc.

ST147
NO — Delimit ESOB ?

ST160 YES
ESOB delimitation processing

ST148
Video recording end key input ? — YES

NO

ST150
Video recording end process
  Fetch remaining segmentation information from formatter unit & initialization
  Write in VMG (generate EPGCI, generate STR_FI : segmentation information, I-PIC information, etc.)
    Set playback time of stream with default PID in ESOB_DURATION
    Set average video recording rate in ESOBI

F I G. 58    End

F I G. 59

Buffer fetch processing

ST1300
Receive TS packet

ST1301
STC=Wrap-around ?
— YES → ST1303
Register position of this packet at division of CNT_SEG

NO

ST1306
Head of packet group ?
— NO → ST1317C
Allocate lower 4 bytes of transfer counter value as PATS before TS

ST1317D
Add TS packet to data area of packet group

YES

ST1308A
Set Header_Id (0x00000fA5)
Save lower 4 bytes of transfer counter value as PAT before TS, and set upper 2 bytes in FIRST_PATS_EXT

ST1309
Fetch communication error information for each TS packet, and save it in work RAM

ST1322
PACKET_GROUP formed ?
— YES →

NO

ST1340
PKT_GRP_GI setting processing

ST1330
CPI setting processing

ST1350
NMFI setting processing

ST1332
Save 1 PACKET_GROUP in buffer

Return

F I G. 60

```
     ┌─────────────────────────────────────┐
     │  PKT_GRP_GI setting processing      │
     └─────────────────────────────────────┘
                      │
                      │              ST13400
                      ▼
     ┌─────────────────────────────────────┐
     │        PKT_GRP_TY←01                 │
     │     Version←11, STUF←0               │
     └─────────────────────────────────────┘
                      │
                      │              ST13406
                      ▼
     ┌─────────────────────────────────────┐
     │     Set 0xaa in Valid_PKT_Ns        │
     └─────────────────────────────────────┘
                      │
                      ▼
              ┌───────────────┐
              │    Return     │
              └───────────────┘
```

# F I G. 61

ESI generation processing

ST1201

Check stream type in PSI and SI

ST1203

Stream type,
component descriptor,
audio component descriptor,
data encoding method
descriptor

Video stream

Another stream

ST1213A

Generate new ESI of ES_TY
= 0 based on readout data

Audio
stream

ST1217A

Generate new ESI of ES_TY
= 0x80 based on readout data

ST1215A

Generate new ESI of ES_TY
= 0x40 based on readout data

ST1213C

Extract compression mode, frame
rate, progressive, aspect ratio,
resolution data, etc., and set them
in V_ATR PMT → ES_PID,
STREAM_TYPE, COMPONENT_TAG
Component descriptor → STREAM_
COMPONENT, COMPONENT_TYPE

ST1217C

PMT → ES_PID, STREAM_TYPE,
COMPONENT_TAG

ST1215C

Extract coding mode, sampling frequency, number of
channels, etc., and set them in A_ATR
PMT → ES_PID, STREAM_TYPE, COMPONENT_TAG

ST12130

Does ES
for which ESI is to be
generated still
remain ?

YES

NO

Return

F I G. 62

ESTR_FI generation processing

**ST1500**
Increment number of ESOBI_SRPs by 1
PKT_TY=0x00 (MPEG_TS)

**ST1502A**
Set recording start time in
ESOB_REC_TM and SOB_REC_TM_SUB
Extract ESOB_S_PTM and ESOB_E_
PTM from stream and set them
according to value of discontinue
information (CNT_SEGN) of STC

**ST1506**
TS stream ?
YES

NO **ST1510**
Set PKT_GRP_SZ←value corresponding
to format to be recorded,
PKT_Ns←value corresponding to
format to be recorded, country_code
←country code of apparatus, and
AP_FORMAT1←corresponding
broadcast scheme

**ST1508**
Set PKT_GRP_SZ←16, PKT_Ns←0xAA,
country_code←JPN, and AP_FORMAT1
←JapanISDB

**ST1511**
Unknown
stream ?
YES

NO **ST1514**
In case of BS, AP_FORMAT←1
(ISBD=S) In case of terrestrial digital,
AP_FORMAT←0 (ISBD=T)
Read out PAT at the beginning of
recording from work RAM, and set
TS_ID, NETWORK_PID, and PMT_ID
(PID of PMT used in this ESOB)

**ST1513**
Set AP_FORMAT2←0xff, and
TS_ID, NETWORK_PID, PMT_PID,
SERVICE_ID, Format_Id, version, and
PCR_PID←0xff (all), or set "1" in
ESOB_TY : b12

Note) Default VESI is PID with
component tag value=0x00.
In case of multi-view TV, VideoES set
with component tag value indicated by
main group

**ST1516A**
Read out PTM, NIT, and EIT at the
beginning of recording from work RAM,
and set Program_number (SERVICE_ID
in PMT), Format_Id, version (REG_DES
value), PCR_PID, ESOB_Es_Ns, V_ES_
Ns, and A_ES_Ns
Set ESI number of Video with smallest
component tag value (preferentially use
ESI number set by component tag
group descriptor) as DEF_V_SOB_ESIN
Set ESOB_TY according to TMAP type

**ST1530**
GPI setting processing

**ST1540**
TMAP setting processing

**ST1550A**
Set video recording start LB address in
ADR_OFS

**ST1554**
Set edit date

Return

F I G. 63

GPI setting processing

ST15300B

1 TS formed by a plurality of programs (broadcasts) ?

YES → ST15302B

Generate TMAPI for each program, and set ES_Tmap_Ns Set presence of GPI in ESOB_TY, and set number of programs in GPI_SRP_Ns. Set 0 in GPI_TY and PRIORITY=0. Generate GPI for respective programs (set number of PIDs and PID values)

NO

ST15304B

Rain attenuation broadcast ?

YES → ST15306B

Determine ES used to generate TMAPI based on layer transmission descriptor in EIT, set Es_Tmap_Ns and set presence of GPI in ESOB_TY. Register lower layers as independent GPs, and set 2 in GPI_SRP_Ns. Set 40h in GPI_TY and set top layer as PRIORITY : 1 and other layers as PRIORITY : 2. Generate GPI for each layer (set number of PIDs and PID values : common audio PID)

NO

ST15308B

Multi-view broadcast ?

NO

YES → ST15310B

Determine ES used to generate TMAPI based on component group descriptor in EIT, set Es_Tmap_Ns, and set presence of GPI in ESOB_TY. Register respective groups as independent GPs. Set number of groups in GPI_SRP_Ns. Set 40h in GPI_TY and set top layer as PRIORITY : 1 and other layers as PRIORITY : 2. Generate GPI for each group (set number of PIDs and PID values)

ST15314B

YES — Another GP ?

NO

ST15321B

Set 1 in Es_Tmap_Ns Set absence of GPI in SOB _TY

ST15316B

Generate playlist based on selected GPs

Return

F I G. 64

FIG. 65

**TMAP setting processing**

ST15400
EVOB/ESOB structure setting process

ST15403
ESOB : set TMAP_TY
TYPE A : PTM base (ESOB hereinafter)
Determine number of TMAPs in consideration of number
of GPs, etc. Set PID of ES to be generated for each TMAP
TYPE B : PATS base (AT_ESOB hereinafter) : add 1 TMAP
EVOB : add 1 TMAP

ST15405
Check segmentation information, and set ESOB/EVOB start and end
PTMs, PATS of first and last PKTs of AT_ESOBs, number of
ENTRIES, TMAP number to be registered in TMAPT, etc.

ST15407
Add generated TMAP to TMAPT, and generate Entry information
based on segmentation information ESOBU_TYPE_A_Entry information :
generate and save 1st_REF_PIC_SZ (end address of first I-pic, set
0 if no I-pic is found), ESOBU_SZ (ESOBU size indicated by
Packet GP unit), number of playback frames, and ESOBU_S_PKT_
POS (position of start packet of ESOBU in Packet GP) for each
VES
AT_SOBU_Entry information : ESOBU_SZ (ESOBU size indicated by
Packet GP unit), and ESOBU_S_PKT_POS (position of first packet
of ESOBU in packet group (PKT unit))
EVOBU_entry information : 1st_REF_PIC_SZ (set end address of first
I-Pic), ESOBU_SZ, and the number of playback frames

ST15409
Set update date information of edited TMAP in STMAP/VTMAP_
LAST_MOD_TM

ST15411
Size of
all STMAPs>2MB
?

NO → ST15415
TOTAL_STMAP_SZ
←Size of all STMAPs

YES → ST15413
TOTAL_STMAP_SZ←2MG
Delimit ESOB to have STMAP size=2MB or less
Add new STR_FI and register new ESOB there

**Return**

EVOB/ESOB structure
setting processing

ST154000

Check video recording time

ST154001

2 hours or less | Video recording time ? | 4 hours or more

4 hours or less

ST154003

EVOB/ESOBU_PB_TM_RNG=1
Generate EVOB/ESOBU_ENTRY based
on segmentation information so that
each ESOBU falls within range from
1.0s to 2.0s

ST154002

EVOB/ESOBU_PB_TM_RNG=0
Generate EVOB/ESOBU_ENTRY based
on segmentation information so that
each ESOBU falls within range from
0.4 to 1.0 s

ST154004

EVOB/ESOBU_PB_TM_RNG=2
Generate EVOB/ESOBU_ENTRY based
on segmentation information so that
each ESOBU falls within range from
2.0 to 3.0 s

Return

F I G. 66

F I G. 67

PGC generation processing

ST1600Z

First video
recording of this
disc ?

YES

ST1602Z

Set new ORG_PGC

NO

ST1604Z

Set to add PG after recorded PGC

ST1700Z

PG_TY=0
Cell Ns=number of CELLS
Set 0x12 in CHR of VMGI_MAT when Language code of
short event descriptor in EIT is "jpn"
Second field of PRM_TXTI=program name : set
event_name of short event descriptor in EIT
Set REP_PICTI (set video ESN)
Set program update date (PGI, IT_TXT, MNFI)

ST1702Z

Set absolute number of PG in PG_INDEX
Set start CELL number (1) in PG_RSM_IFO
Set start PTM

ST1704Z

Set 2 : streamer (ESOB) in CELL_TY
Set reference ESTR_FI number
Set reference ESOB number
Set representative (video) ESI number as ESIN to be
played back
Set playback start PTM and end PTM (STC discontinue
information : read CNT_SEG and set its count in
CNT_SEGN)
Set BLOCK number of ESOB to be played back
Set information at head of PG, video/audio ESI
numbers to be played back, and main (0) in case of
DUAL-MONO in PG_RSM information

Return

F I G. 68

Start

Load VMG ST207

User determines playback start PG
(ORG_PGC, UD_PGC#1, UD_PGC#2) ST208

Determine EVOB/ESOB to be played back, its playback position based on PG/PL_RSM_IFO and CELLI ST211A

Determine playback method based on AP_FORMAT1 and AP_FORMAT2 (determine STB to which stream is to be transmitted) ST211B

Valid PSI information and SI information? ST211C — NO

Set to transmit all streams to STB ST211E

YES

Determine stream to be played back based on PSI information and SI information
Save PSI information and SI information in work RAM ST211D

ESOB? ST213 — NO

Set to transmit all streams to STB ST219

YES

Decoder setting processing ST217

Processing upon cell playback ST220

End of playback? ST230 — NO

Set next cell based on PGCI ST232

YES

Error? ST240 — YES

"Read error" ST242

NO

Another processing upon completion of playback ST246

Playback end process ST244

End

F I G. 69

Return (error)

EP 1 763 033 A1

**Decoder setting processing**

ST2170
**ESOB ?** → NO

↓ YES ST2171

**Determine ES to be played back based on GPI and PMT**

ST2172

**Load STI and ESI of EVOB/ESOB to be played back**

ST2173

**Does video ES to be played back support playback ?** → NO → ST2175

**Set demultiplexer not to play back video Set display mute in video decoder**

↓ YES ST2174A

**Set PID of video to be played back in demultiplexer with reference to PMT Set initial value in video decoder**

PMT is referred to when PID is determined based on order in PMT

ST2176

**Does audio ES to be played back support playback ?** → NO → ST2178

**Set demultiplexer not to play back audio Set mute in audio decoder**

↓ YES ST2177A

**Set PID of audio to be played back in demultiplexer with reference to PMT Set initial value in audio decoder**

ST2179

**Make APS setting (APS=ON/OFF, APS type, etc) in video decoder based on CCI Make CGMSA setting in video decoder as digital copy control based on CCI If digital output (IEEE1394, Internet, etc.) is available : set 0 : scramble on or output inhibition, 1 : direct output in output IC based on EPN value If ICT=0, set output IC to constrain image resolution, and convert HD into SD; if ICT=1, set output IC to directly output**

F I G. 70

**Return**

Processing upon cell playback

ST2200

Determine cell start FP (LBN) and end FP based on contents of ES_TMAPI
  Determine start SOBU_ENTRY and end SOBU_ENTRY based on start and end times in CI
  Accumulate ENTRY lengths up to target SOBU_ENTRY in ADR_OFS to obtain start address (LB=FP) and end address
Remaining cell length←end address ←start address, and set playback start time in STC

ST2201

ESOB continuity check processing

ST2206

Set read start address and read length

ST2207

Read data length< remaining cell length ?  NO

YES  ST2208

Remaining cell length←remaining cell length – read data length
Set read length to be default

ST2209

Set read length in remaining cell length
Set remaining cell length to 0

ST2210

Set data read command in drive unit

ST2212

Transfer start ?  NO

YES  ST2214

Data for 1 ESOBU stored in buffer RAM ?  NO

YES

ST2216

Read data for 1 ESOBU from buffer RAM

ST2220

Buffer data decoder transfer process

ST2224

Read FP←read FP + read length
Set MPEG decoder in normal mode

ST2226

NO  Transfer end ?

YES  ST2238

Angle SW pressed ?  YES

NO  ST2248

YES  Skip SW pressed ?

ST2250  NO

SKIP processing

ST2258  YES

Stop SW pressed ?

NO

ST2260A

Set current CELL number, PTM, video/audio ESI numbers in playback, and main/sub in case of dual-mono in PG_RSM_IFO in case of original title, or in PL_RSM_IFO in case of PL

Return (end)

ST2239

NO  GPI found ?

YES  ST2240

GP switching setting processing

ST2228

NO  Remaining cell length =0 ? (end of cell ?)

YES

Return

FIG. 71

ESOB continuity
check processing

ST22010

Continuous
with previous ESOB ?
(check ESOB_CONNI_SS)

NO

YES

ST22011

Set to continuously
play back ESOBs

Return

F I G. 72

**Buffer data decoder transfer processing**

ST22200
Check number of packet groups in buffer RAM
Set to process first packet group

ST22201
Read out target packet group header from buffer RAM
(Determine packet header by checking packet group length and Sync_Pattern)

ST22202A
Read value of VALID_PKT_Ns and read out TS packets as many as Ns

ST22202B
Fetch PATS (FIRST_PATS_EXT + PATS immediately before TS packet),
and PATS_SS (confirm validity of PATS) and calculate output timing of
each TS packet

ST22203
Transfer one packet group to decoder unit in correspondence with output
timing for each TS packet

ST22204
End of transfer ? — NO

If STUF=1, transfer TS packets
as many as VALID_PKT_Ns

YES

ST22205
Make APS setting (APS=ON/OFF, APS type, etc) in video decoder based
on CCI
Make CGMSA setting in video decoder as digital copy control based on CCI
If digital output (1394, Internet, etc.) is available : set 0 : scramble on or
output inhibition, 1 : direct output in output IC based on EPN value
If ICT=0, set output IC to constrain image resolution, and convert HD into
SD; if ICT=1, set output IC to directly output

ST22270
MNF processing

ST22280
Discontinue processing

ST22206
Do pack groups remain in buffer RAM ? — YES

NO

ST22207
Set next pack group

Return

# F I G. 73

Processing upon GP switching

ST22400X
Specify SW type to be switched

ST22401X
Load GPI of GP, playback of which is in progress

ST22403X
GPI found ? — NO → End processing without switching if no GPI is found

YES

ST22405X
Switch to another GP : change PID to be played back to value in GPI

ST22410
Decoder setting processing

Return

**F I G. 74**

Discontinue processing

ST22800
Read out DCNI

ST22802
Is division of CNT_SEG located at that position ? — NO

YES

ST22804
Make decoder shift playback mode to internal clock mode (shift to operation for ignoring PTS value, making playback using only internal clock value, and validating PTS again at the time of reception of PCR)

Return

**F I G. 75**

FIG. 76

F I G. 77

EP 1 763 033 A1

EVOB_TMAPI

EVOB_TMAP_GI

EVOBU_ENT_Ns
ADR_OFS
EVOB_SZ
EVOBU_PB_TM_RNG
EVOB_INDEX
VTMAP_LAST_MOD_TM

ADR_OFS
 LB address from head of file to head of EVOB
EVOBU_PB_TM_RNG
 EVOBU playback time range
 1=0.4s~1.2s, 2=1s~2s, 3=2s~3s
EVOB_SZ : EVOB size
EVOB_INDEX : Index number of EVOB

VTMAP_LAST_MOD_TM : Update date of VTMAP file corresponding to this EVOB
(VTMAP file : confirm if it is the same as information described in HR_Vmmmm.MAP)

FIG.78

Root

DVD_HDVR

...

HDVR_VOB — (Store EVOB related files)

HR_Vmmmm.MAP — EVOB TMAP File (0001~mmmm~1998 Matches EVOB_INDEX)

HR_MOVIE.VRO — VR Object File

HR_Vmmmm.BUP — EVOB TMAP Backup File (0001~mmmm~1998)

HR_IVTSI.VTI — VTSI file (file added to assure compatibility)

HDVR_SOB — (Store ESOB related files)

... — ESOB and AT_SOB related files

ADV_OBJ

VPLST000.XPL — VIDEO_Playlist file (file added to assure compatibility)

FIG. 79

⟨TMAP of TYPE A (PTM base)⟩

| ESOB_TMAPI |
| --- |

| ESOB_TMAPI_GI |
| --- |
| ES_TMAPI_GI#1 |
| ... |
| ES_TMAPI_GI#m |

| ESOB_ADR_OFS |
| --- |
| ESOB_SZ |
| ESOB_S_PKT_POS |
| ESOB_E_PKT_POS |
| ESOBU_PB_TM_RNG |
| ES_TMAP_GI_Ns |
| ESOB_INDEX |
| STMAP_LAST_MOD_TM |

| ESOB_ESIN |
| --- |
| ES_S_PTM |
| ES_E_PTM |
| ES_S_ADR_OFS |
| ES_LAST_ESOBU_E_PKT_POS |
| ES_SOBU_ENT_Ns |
| ES_E_ADR_OFS |

ESOB_ADR_OFS : Number of packet groups from head of file to head of ESOB
ESOB_SZ : Number of packet groups of ESOB
ESOBU_PB_TM_RNG : ESOBU playback time range
        0=2s or less, 1=3s or less, 3=1s or less
ESOB_S_PKT_POS : 0≦SOB_S_PKT_POS≦PKT_Ns-1
        Start of first packet of ESOB in packet group
ESOB_E_PKT_POS : 0≦ESOB_E_PKT_POS≦PKT_Ns-1
        End of first packet of ESOB in packet group
ES_TMAP_GI_Ns : Number of pieces of ES_TMAP_GI
1≦ES_TMAP_GI_Ns≦ESOB_V_ES_Ns

ESOB_ESIN : Number of V_ESI which belongs to this TMAP
ES_S_ADR_OFS : Number of packet groups from head of ESOB to head of this ES
ES_E_ADR_OFS : Number of packet groups from last of this ES to last of ESOB
ES_S_PTM : Start PTM of this ES
ES_E_PTM : End PTM of this ES
ES_LAST_ESOBU_E_PKT_POS
        TS packet number of last packet of last ESOBU in packet group
        0≦ES_LAST_ESOBU_E_PKT_POS≦PKT_Ns-1
ES_ESOBU_ENT_Ns : Number of ESOBU_ENTs which belong to this ES_TMAP
Update date of STMAP file
(used to synchronize files by confirming if this value is the same as update date information described in STMAP file)

F I G. 80

EP 1 763 033 A1

EP 1 763 033 A1

F I G. 81

⟨TMAP of TYPE B (PATS base)⟩

| ESOB_TMAP |
| --- |
| ESOB_TMAP_GI |

| |
| --- |
| ESOB_ADR_OFS |
| ESOB_SZ |
| ESOB_S_PKT_POS |
| ESOB_E_PKT_POS |
| AT_SOBU_TM |
| AT_SOBU_ENT_Ns |
| AT_SOB_INDEX |
| STMAP_LAST_MOD_TM |

ESOB_ADR_OFS : Number of packet groups from head of file to head of ESOB
ESOB_SZ : Number of packet groups of ESOB
ESOB_S_PKT_POS : $0 \leqq ESOB\_S\_PKT\_POS \leqq PKT\_Ns-1$
    Start of first packet of ESOB in packet group
ESOB_E_PKT_POS : $0 \leqq ESOB\_E\_PKT\_POS \leqq PKT\_Ns-1$
    End of first packet of ESOB in packet group
AT_SOBU_TM : AT_SOBU time range 0=1.0s  1=2sec
AT_SOBU_ENT_Ns : Number of AT_SOBU_ENTs in STMAPI
AT_SOBU_INDEX : Index number of AT_SOB
STMAP_LAST_MOD_TM : Update date of STMAP file
    (used to synchronize files by confirming if this value is the same as update
     date information described in STMAP file)

EP 1 763 033 A1

"mmmm" assumes the same value as
EVOB_INDEX

HR_Vmmmm.IFO

| EX_VTMAP | EX_VTMAP_GI |
| | EX_VTMAP_SRP |
| | EX_VTMAPI |

TYPE_A : HR_Snn_mmmm.SMP :
nn=01,..., FF, and "mmmm" assumes
the same value as ESOB_INDEX

TYPE_B : HR_S00_mmmm.IFO
"mmmm" assumes the same value
as AT_SOB_INDEX

HR_Snn_mmmm.SMP

| STMAP | STMAP_GI |
| | ETMAP_SRP #1 |
| | ... |
| | ETMAP_SRP #q |
| | ETMAPI |
| | ... |
| | ETMAPI |

| STMAP | STMAP_GI |
| | STMAP_SRP |
| | STMAPI |

Note)   TMAPI_SRPs do not always point to TMAPI in ascending order
Garbage data may be included among TMAPI

F I G. 82

| EX_VTMAP_GI |
| EX_VTMAP_SRP |
| EX_VTMAPI |

| VTMAP_ID |
| EX_VTMAPT_EA |
| VTMAP_VERN |
| VTMAP_TY |
| EX_VTMAPI_LAST_MOD_TM |
| EX_VTMAPI_SRP_Ns |
| ILVUI_SA |
| VOB_ATR_SA |
| VTSI_FNAME |

| EX_VMAP_SA |
| EVOB_INDEX |
| EVOBU_ENT_Ns |
| ILVU_ENT_Ns |

| EVOBU_ENT #1 |
| ... |
| EVOBU_ENT #q |

VTMAP identification information="HDDVD_TMAP00"
EX_VTMAPT_EA : End address of this table
    (number of bytes from head of VTMAP)
VTMAP_VERN : VTMAP version information
VTMAP_TY :
    Apllication type(b15-12) : 0011=Inteoprable content (for VR)
        0001=Standard Content, 0010=Advanced content
    ILVUI(b9)=0, ATR(b8)=0, Angle=0
EX_VTMAP_LAST_MOD_TM : Describe date upon updating
    VTMAPT (The same value as HR_MANGR.IFO)
ILVUI_SA, VOB_ATR_SA : Used to assure compatibility to
    HD_DVD_VIDEO, and set ALL 0xf
VTSI_FNAME : Set VTSI "HR_IVTSI.VTI" for VR

EX_VMAP_SA : Start address of each VMAP
    (number of bytes from head of VTMAP)
EVOB_INDEX : Index number of EVOB (1~1998)
    Same value as EVOB_ID in EVOB_TMAP_GI of M_VOBI
EVOBU_ENT_Ns : Number of VOBU_ENTs
ILVU_ENT_Ns : Used to assure compatibility to HD_DVD_VIDEO,
    and set 0

F I G. 83

FIG. 84

〈STMAP of TYPE A〉

| STMAP_GI |
|---|
| ETMAP_SRP #1 |
| ... |
| ETMAP_SRP #q |
| ETMAPI |
| ... |
| ETMAPI |

| SMP_ID |
|---|
| STMAP_EA |
| STMAP_VERN |
| STMAPI_LAST_MOD_TM |
| ETMAPI_SRP_Ns |
| ESOB_INDEX |

| ETMAPI_SA |
|---|
| ESOBU_ENT_Ns |

| ESOBU_ENT #1 |
|---|
| ... |
| ESOBU_ENT #q |

SMP_ID : STMAP identification information "DVD_HR_SMPnn" : nn=01,..., 0xFF
STMAP_EA : End address of this file
STMAP_VERN : STMAP version information
STMAP_LAST_MOD_TM : Describe date upon updating STMAPT (The same value as HR_MANGR.IFO)
ETMAPI_SRP_Ns : Number of ETMAP_SRPs
ESOB_INDEX : ESOB_Index number (Same value as ESOB_ID in ESOB_TMAPI_GI)
ETMAPI_SA : Start address of each ETMAPI
ESOBU_ENT_Ns : Number of ESOBU_ENTs

(STMAPT OF TYPE B)

| STMAP_GI |
|---|
| STMAP_SRP |
| STMAPI |

| SMP_ID |
|---|
| STMAP_EA |
| STMAP_VERN |
| STMAPI_LAST_MOD_TM |

| STMAPI_SA : Start address of STMAPI |
|---|
| AT_SOB_INDEX |
| AT_SOBU_ENT_Ns : Number of AT_SOBU_ENTs |

| AT_SOBU_SZ : AT_SOBU size |
|---|
| AT_SOBU_S_PKT_POS |

| AT_SOBU_ENT#1 |
|---|
| ... |
| AT_SOBU_ENT#q |

STM_ID : STMAP identification information "DVD_HR_SMP00"
STMAP_EA : End address of this file
STMAP_VERN : STMAP version information
STMAP_LAST_MOD_TM : Describe date upon updating STMAPT (The same value as HR_MANGR.IFO)
SMAP_SA : Start address of each SMAPI
AT_SOB_INDEX : Index number of AT_SOB (same value as AT_SOB_ID in ESOB_TMAPI_GI)

AT_SOBU : Delimit by constant time of minimum AT_SOBU_ATS_TM_RNG=0 : 0.5s,=1 : 1s,=2 : 2s other than last AT_SOBU
　　　Last AT_SOBU may be delimited by constant time or less
AT_SOBU_SZ : Number of packet groups which belong to AT_SOBU
AT_SOBU_S_PKT_POS : Number of packets (1 to 170) from head of Packet_Group to start of AT_SOBU in packet group

# FIG. 85

# FIG. 86

| PTM |
|-----|

| ... | CNT_SEGN | PTM_base[32-31] |
|-----|----------|-----------------|

| PTM_base[30-23] |
|-----------------|

| PTM_base[22-15] |
|-----------------|

| PTM_base[14-7] |
|----------------|

| PTM_base[6-0] | PTM_extension[8] |
|---------------|------------------|

| PTM_extension[7-0] |
|--------------------|

CNT_SEGN : In case of ESOB of TYPE A, this value is valid
           Set 0 for object other than ESOB
           1=0, 2=1, 3=2, 4=3
PTM_base : Base value of PTM, and expressed by 90 kHz
PTM_extension : Extended value of PTM, and expressed by
                27 kHz; PTM is expressed by sum of base and Extension

EP 1 763 033 A1

```
GCI
```

| GCI_GI | Reserved |
| --- | --- |

| EVOBU_CAT | Reserved |
| --- | --- |

| GCI_CAT |
| --- |
| EVOBU_S_PTM4 |
| DCI |
| CCI |
| RECI |

| DCI_SS (2 bits) | Aspect Ratio (4 bits) | Subtitling Mode (2 bits) | Film/Camera (1 bit) |
| --- | --- | --- | --- |

| CCI_SS (3 bits) | CGMS (2 bits) | APS (2 bits) | -Source (1 bit) | -EPN (1 bit) |
| --- | --- | --- | --- | --- |

| ISRC_V (10 bytes) | ISRC_A0-7 (10 bytes*8) | ISRC_SP0-7 (10 bytes*8) |
| --- | --- | --- |

| ISRC_SP_SEL (1 byte) |
| --- |

EVOBU_CAT : 0=for Standard VTS stream, 1=for Advanced VTS, 2=for Interoperability VTS or VR Stream
EVOBU_S_PTM4 : Lower 4 bytes of first PTM of EVOBU
DCI_SS : 0=no valid DCI exists, 1=only valid aspect information exists, 3=all pieces of DCI exist
CCI_SS : 0=no CCI exists, 1=only source information exists, 2=only APS exists, 3=only source information and APS exist,
    4=only CGMS exists, 5=only CGMS and source information exist, 6=only CGMS and APS exist, 7=all exist
Aspect_Ratio : 0=4 : 3, 1=16 : 9, 8=14 : 9 letter box (center), 4=14 : 9 letter box (top), 13=16 : 9 letter box (center),
    2=16 : 9 letter box (top), 11=16 : 9 letter box (center), 7=14 : 9 full
CGMS : 0=inhibition, 1=unlimited permission
APS : 0=no APS, 1=append APS type 1, 2=append APS type 2, 3=append APS type 3
-Source : 0=analog pre-encoded media
-EPN : 0=contents protection (IE output protection), 1=no contents protection
ISRC(International Standard Recording Code) : Same as DVD-Video
*RECI is reserved in case of Interoperable VTS/VR VOB

F I G. 87

HD_DVD_VR content

HR_MANGER.IFO
(Main Navigation)

HR_Vmmmm.MAP
(EVOB Time Map)

HR_MOVIE.VRO
(EVOBs)

HR_SFInn.SFI
(Ex Stream Information)

Snn_mmmm.SMP
(ESOB Time Map)

HR_STRnn.SRO
(ESOBs)

Mainly convert
PGCI and STI

Mainly convert
M_AVFIT

Not converted
(same file)

ESOB is not
object to be
converted

Interoperable content

ADV_OBJ

VPLST000.XPL
(VIDEO_Playlist)

DVD_HDVR

HDVR_VOB

HR_IVTSI.VTI
(VTSI)

HR_Vmmmm.MAP
(EVOB TIme Map)

HR_MOVIR.VRO
(EVOBs)

F I G. 88

EP 1 763 033 A1

Conversion table 2 from HD_VR to VTSI

| Data field name | | | | Value to be set |
|---|---|---|---|---|
| VTSI | | | | |
| | VTS_MAT | | | |
| | | VTS_ID | | "ADVANCED_VTS" |
| | | VTS_CAT | | 0011b |
| | VTS_EVOB_ATRTI | | | |
| | | VTS_EVOB_ATRTI | | |
| | | | VTS_EVOB_ATR_Ns | EX_M_VOB_STI_Ns |
| | | VTS_EVOB_ATR #i | | |
| | | | EVOB_TY/Advanced Stream existance | 00b |
| | | | EVOB_TY/Sub Video existance | 00b |
| | | | EVOB_TY/Sub Audio existance | 00b |
| | | | EVOB_VM_ATR/Video compression mode | EX_M_VOB_STI/V_ATR/Video compression mode |
| | | | EVOB_VM_ATR/TV system | EX_M_VOB_STI/V_ATR/TV system |
| | | | EVOB_VM_ATR/Aspect ratio | EX_M_VOB_STI/V_ATR/Aspect ratio |
| | | | EVOB_VM_ATR/CC1 | EX_M_VOB_STI/V_ATR/Line21 switch 1 |
| | | | EVOB_VM_ATR/CC2 | EX_M_VOB_STI/V_ATR/Line21 switch 2 |
| | | | EVOB_VM_ATR/Source picture progressive mode | EV_M_VOB_STI/V_ATR/Source picture progressive mode |
| | | | EVOB_VM_ATR/Source picture Letter boxed | 0b |
| | | | EVOB_VM_ATR/film camera mode | 0b |

FIG. 89

EP 1 763 033 A1

Conversion table 2 from HD_VR to VTSI

| Data field name | | | | Value to be set |
|---|---|---|---|---|
| | | | EVOB_VM_ATR/Source picture resolution | EX_M_VOB_STI/V_ATR/Source picture resolution |
| | | | EVOB_VM_ATR/Application Flag | EX_M_VOB_STI/V_ATR/Application Flag |
| | | | EVOB_VS_ATR | Shall be filled with '0b' |
| | | | EVOB_VS_LUMA | Shall be filled with '0b' |
| | | | EVOB_AMST_Ns/Number of Audio stream | EX_M_VOB_STI/AST_Ns |
| | | | EVOB_AMST_ATR#0(#1)/Audio coding mode | EX_M_VOB_STI/A_STR0(1)/Audio coding mode |
| | | | EVOB_AMST_ATR#0(#1)/fs | EX_M_VOB_STI/A_STR0(1)/fs |
| | | | EVOB_AMST_ATR#0(#1)/Quantization/DRC | EX_M_VOB_STI/A_STR0(1)/Quantization/DRC |
| | | | EVOB_AMST_ATR#0(#1)/Number of Audio channels | M_VOB_STI/A_ATR0(1)/Number of Audio channels |
| | | | EVOB_AMST_ATR#0(#1)/Application Flag | EX_M_VOB_STI/A_STR0(1)/Application Flag |
| | | | EVOB_AMST_ATR#2-#7 | Shall be filled with '0b' |
| | | | EVOB_DM_COEFTS | Shall be filled with '0b' |
| | | | EVOB_ASST_Ns/Number of Audio streams | 0 |
| | | | EVOB_ASST_ATRT | Shall be filled with '0b' |
| | | | EVOB_SPST_Ns/Number of Subpicture streams | EX_M_VOB_STI/SPST_Ns : If it is 1, no sp is often available in practice |
| | | | EVOB_SPST_ATR#0/Subpicture coding mode | 000b : If PRE HEADER in SPUH is other than '0000h' 001b : If PRE HEADER in SPUH is '0000h' |
| | | | EVOB_SPST_ATR#1-#31 | Shall be filled with '0b' |
| | | | EVOB_SDSP_PLT | In case of SD Sub-picture, set EX_M_VOB_STI/SP_PLT; otherwise, set 0 |

F I G. 90

EP 1 763 033 A1

Conversion table 3 from HD_VR to VTSI

| Data field name | | | | Value to be set |
|---|---|---|---|---|
| | | | EVOB_HDSP_PLT | In case of HD Sub-picture, set EX_M_VOB_STI/SP_PLT; otherwise, set 0 |
| | | | EVOB_SPST ATR#0/HD/4:3, SD_Wide, SD_LB, SD_PS | Set according to following table: |

Set according to following table:

| | No SP | HD | SD | |
|---|---|---|---|---|
| | | | 4:3 | 16:9 |
| HD/4:3 | 0 | 1 | 1 | 0 |
| SD-Wide | 0 | 0 | 0 | 1 |
| SD-LB | 0 | 0 | 0 | 0 |
| SD-PS | 0 | 0 | 0 | 0 |

| Data field name | | | | Value to be set |
|---|---|---|---|---|
| | | | EVOB_SPST ATR#0/Decoding Sup_picure stream number for HD/4:3 | 0000b |
| | | | EVOB_SPST ATR#0/Decoding Sup_picure stream number for SD-Wide | 0000b |
| | | | EVOB_SPST ATR#0/Decoding Sup_picure stream number for Letterbox | 0000b |
| | | | EVOB_SPST ATR#0/Decoding Sup_picure stream number for Pan-scan | 0000b |

FIG. 91

EP 1 763 033 A1

Conversion table 4 from HD_VR to VTSI

| Data field name | | | | Value to be set |
|---|---|---|---|---|
| | VTS_EVOBIT | | | |
| | | VTS_EVOBITI | | |
| | | | EVOB_Ns | EX_M_AVFI_GI/M_VOBI_SRP_Ns |
| | | VTS_EVOBI#i | | Nearly same as MVOBI#i |
| | | | EVOB_ID/Application Type | 0011b(Interoperable VTS) |
| | | | EVOB_ID/A0_GAP_LOC | M_VOB_GI/VOB_TY/A0_GAP_LOC |
| | | | EVOB_ID/A1_GAP_LOC | M_VOB_GI/VOB_TY/A1_GAP_LOC |
| | | | EVOB_FNAME | "HR_MOVIE.VRO" |
| | | | EVOB_ADR_OFS | EVOB_TMAPI/EVOB_TMAP_GI/ADR_OFS |
| | | | EVOB_ATRN | M_VOB_GI/M_VOB_STIN |
| | | | EVOB_V_S_PTM | M_VOB_GI/VOB_S_PTM |
| | | | EVOB_V_E_PTM | M_VOB_GI/VOB_E_PTM |
| | | | EVOB_SZ | EVOB_TMAPI/VOB_TMAP_GI/VOB_SZ |
| | | | EVOB_IMDEX | EVOB_TMAPI/VOB_TMAP_GI/VOB_INDEX |
| | | | EVOB_FIRST_SCR | SMLI/VOB_FIRST_SCR |
| | | | PREV_EVOB_LAST_SCR | SMLI/PREV_VOB_LAST_SCR |
| | | | EVOB_A_STP_PTM | AGAPI/VOB_A_STP_PTM |
| | | | EVOB_A_GAP_LEN | AGAPI/VOB_A_GAP_LEN |

F I G. 92

```
    ( Video recording )

            │
            ▼                    ST22
  ┌──────────────────────┐
  │ Video recording processing │
  └──────────────────────┘

            │
            ▼                    ST32
  ┌──────────────────────┐
  │  Interoperable contents │
  │  generation processing  │
  └──────────────────────┘

            │
            ▼
        ( END )
```

When content is generated upon
completion of video recording

FIG. 93A

```
    ( Disc eject )

            │
            ▼                    ST30
  ┌──────────────────────┐
  │  Disc eject processing  │
  └──────────────────────┘

            │
            ▼                    ST32
  ┌──────────────────────┐
  │  Interoperable contents │
  │  generation processing  │
  └──────────────────────┘

            │
            ▼
        ( END )
```

When content is generated
upon ejecting disc

FIG. 93B

```
  ( User designates operation )

            │
            ▼                    ST32
  ┌──────────────────────┐
  │  Interoperable contents │
  │  generation processing  │
  └──────────────────────┘

            │
            ▼
        ( END )
```

When user designates operation
to generate content

FIG. 93C

Interoperable content generation processing

ST320

EVOB recorded ? —— NO

YES

ST322

Generate VTSI in HDVR_VOB from HD_MANGER.IFO based on conversion table

ST324

Generate directory "ADV_OBJ", and generate Playlist (XML) of HD_DVD-VIDEO based on PGCI of HDVR

END

F I G. 94

F I G. 95

DISC image | I2 | B0 | B1 | P3 | ... |

⇓ Playback

Display image | B0 | B1 | I2 | I3 | ... |

CNT_SEG#1 ← → CNT_SEG#2

Wrap-around occur

CNT_SEG#1
  CNT_SEG_SZ=0
  CNT_SEG_S_PKT_POS=0
PTM
  CNT_SEGN=1
CNT_SEG#2
  CNT_SEG_SZ=From head to next Wrap-around position
  CNT_SEG_S_PKT_POS=Value at next Wrap-around position
PTM
  CNT_SEGN=2

DISC image | ... | Pn | Bn-2 | Bn-1 |

⇓ Playback

Display image | ... | Bn-2 | Bn-1 | Pn |

CNT_SEG#m-1 ← → CNT_SEG#m

Wrap-around occur

CNT_SEG#m
CNT_SEG_SZ=0
  CNT_SEG_S_PKT_POS=0
PTM
  CNT_SEGN=+1

F I G. 96

EP 1 763 033 A1

| ESOB#n | ESOB#n+1 (ESOB_CONN_SS=1) |
|--------|---------------------------|

ES#1 (default)

ES#2

ESOBU#1 | ESOBU#2

—5packet_group

ESOB_S_PTM=ES_S_PTM#1
ESOB_S_PTM≦ES_S_PTM#2

If ESOB_CONN_SS=1
ES_S_ADR_OFS#2 may also assume minus value
(in this case, 0xffff ffff ffff fffb (complement of 2 of −5)),
and
ESOB_S_PTM>ES_S_PTM#2 (ES_S_PTM#1>ES_S_PTM#2) may be allowed

F I G. 97

When deleted

| ESOB#n | ESOB#n+1 (ESOB_CONN_SS=0) |

ES#1 (default)

Deleted

ES#2

ESOBU#1    ESOBU#2

ESOBU that protrudes from ESOB is deleted not to protrude from ESOB

change is made to satisfy ES_S_ADR_OFS#2≧0
(in this case, head of ESOBU#2),
and
ES_S_PTM#2 is changed to fall within ES_S_PTM#2≧ESOB_S_PTM
(in this case, head value of ESOBU#2)

# F I G. 98

| ESOB#n | ESOB#n+1 (ESOB_CONN_SS=1) |
|---|---|

ES#1 (default)

ESOB_SZ=30packet_group

ES#2

ESOBU#1   ESOBU#2

9packet_group      20packet_group      5packet_group

ESOB_E_PTM=ES_E_PTM#1, ESOB_E_PTM≧ES_E_PTM#2,
ESOB_SZ≧ES_S_ADR_OFS#2+total number of ESOBU_SZs

If ESOB_CONN_SS=1
ESOB_SZ<ES_S_ADR_OFS#2+total number of ESOBU_SZs may be allowed,
and
ESOB_E_PTM<ES_E_PTM#2 (ES_E_PTM#1<ES_E_PTM#2) may be allowed

FIG. 99

When deleted

| ESOB#n | ESOB#n+1 (ESOB_CONN_SS=1) |

ES#1 (default)

ESOB_SZ=30packet_group

ES#2          Deleted

ESOBU#1      ESOBU#2

9packet_group          15packet_group          5packet_group

To satisfy ESOB_SZ≧ES_S_ADR_OFS#2+the total number of ESOBU_SZs
(in this case, ESOBU_SZ#2 is deleted) total number of ESOBU_SZs is changed
to satisfy ESOB_SZ≧ES_S_ADR_OFS#2+total number of ESOBU_SZs
(in this case, ESOBU_SZ#2 is deleted),
and
ES_S_PTM#2 is changed to satisfy ESOB_E_PTM≧ES_E_PTM#2
(in this case, E_PTM of ESOBU#1 is set)

F I G. 100

**European Patent Office**

## PARTIAL EUROPEAN SEARCH REPORT

which under Rule 45 of the European Patent Convention shall be considered, for the purposes of subsequent proceedings, as the European search report

Application Number

EP 06 11 9688

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | JP 2002 084479 A (MATSUSHITA ELECTRIC IND CO LTD) 22 March 2002 (2002-03-22) * abstract * | 1-6 | INV.<br>G11B27/034<br>G11B27/10<br>G11B27/32 |
| D,X | -& EP 1 091 577 A2 (MATSUSHITA ELECTRIC IND CO LTD [JP]) 11 April 2001 (2001-04-11) * figures 20,24,29 * * paragraphs [0012], [0013], [0017], [0019], [0023], [0052], [0053], [0056], [0068], [0069], [0097] - [0099], [0135], [0136], [0160] * * paragraphs [0170], [0173], [0284] - [0288] * ----- | 1-6 | |
| X | EP 0 763 938 A2 (STARSIGHT TELECAST INC [US]) 19 March 1997 (1997-03-19) * column 1, lines 14-22,65-69 * * column 2 * * column 3, lines 1-10 * ----- | 1-6 | |
| X | US 5 661 526 A (HAMAMOTO KENJI [JP] ET AL) 26 August 1997 (1997-08-26) * column 1, line 60 - column 4, line 36 * ----- | 1-6 | TECHNICAL FIELDS SEARCHED (IPC)<br><br>G11B |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 4 December 2006 | Bruma, Cezar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

INCOMPLETE SEARCH
SHEET C

Claim(s) searched incompletely:
      1-6

Claim(s) not searched:
      -

Reason for the limitation of the search:

The scope of the search was restricted (Rule 45 EPC) because the
application fails to comply with the requirements of the EPC to such an
extent that it was not possible to carry out a complete meaningful search
into the state of the art on the basis of the claims. The application
does not comply with the requirement of sufficiency of disclosure of the
invention of Art. 83 EPC and with the requirement of clarity of the
claims of Art. 84 EPC.

The expressions "high-definition video information (HD_DVD-VR;
HDVR_VOB/HDVR_SOB) for a recorder", "high-definition video information
(HD_DVD-VIDEO; ADV_OBJ) for a player", "high-definition video information
(HD_DVD-VR)", "high-definition video information (HD_DVD-VIDEO)",
"object", "management information (HR_SFIxx.IFO, etc.)", "time map
(HR_Vmmmm.MAP, etc.)", and "management information (VIDEO_PLAYLIST,
VTSI)", used in each of the independent claims, in particular in claim 1
on lines 5-6, 7-8, 10, 11-12, 16, 19, 23-24, and 29 respectively, are not
clear (Art. 84 EPC) because said expressions are not defined in said
claims and because they are not expressions with a publicly
well-recognized and precise meaning in the art. All said expressions
appear to be essential for the definition of the subject-matter for which
protection is sought.

When turning to the description for support, the skilled person learns
that the various entities termed "high-definition video information" and
"management area" in the claims, are in fact obtained by extension from,
or based on, a conventional DVD Video standard (see for example: "As a
typical example of a Recordable or Re-writable information storage
medium, DVD disc [...] 100 is known." in the paragraph between line 33 on
pages 11 and line 2 on page 12 of the description; see further "complying
with DVD-Video (ROM Video) standard", "complying with the video recording
(VR) standard", "file directories [...] in correspondence with formats
(e.g., video title set (VIDEO-TS) for DVD-Video (ROM Video) and DVD-RTAV
for recordable/reproducible DVD (DVD-RTR), and a new DVD standard file
[...] to be described in this embodiment" on the lines 9-32 of page 12 of
the description; see also lines 1-2 on page 17, lines 21-22 on page 37,
lines 36-37 on page 43, lines 1 and 5-8 on page 44, line 37 on page 50,
lines 31-33 on page 86, "DVD streamer" in the paragraph between line 25
of page 91 and line 16 of page 92, all of the description). The claimed
invention builds exclusively upon existing DVD Video technologies

Further, the person skilled in the art learns that:
1. the only prior art cited by the Applicant on lines 25-29 of page 1 of
the description contains only embodiments relating to DVD RAM and DVD
Video Recording standard (see par. 52, 53, 142, and 143 of the European
patent application published as EP1091577, which is considered to be the
translation to the English language of said prior art.)

**European Patent Office**

**INCOMPLETE SEARCH SHEET C**

Application Number

EP 06 11 9688

2. the problem dealt with in the present application, as far as it can be understood from the paragraph between line 12 of page 1 and line 18 of page 3 of the description, can be understood only when having access to DVD video specifications.

However, DVD Video standards which possibly contain the further details necessary to the skilled person to understand and carry out the invention claimed (Art. 83, Rule 27(1)(e) EPC), are not public in the sense of Art. 54(2) EPC, because: (1) a bar of confidentiality restricts the use and dissemination of the information contained therein; see also Guidelines for Examination in the EPO C-IV 5.1; more specifically, a Non-Disclosure Agreement has to be signed in order to obtain a copy of said standards; (2) not all interested parties may have access to their content; for example, the European Patent Office was not allowed a copy of the DVD Video Standards. Therefore, the claimed invention is insufficiently disclosed, contrary to Art. 83 EPC.

The search has been restricted to those documents that address the same technical problem, which seems to be related to the recording and reproduction of broadcast signals, as far as it can be understood from the paragraph between line 12 of page 1 and line 18 of page 3 of the description.

## ANNEX TO THE EUROPEAN SEARCH REPORT
## ON EUROPEAN PATENT APPLICATION NO.

EP 06 11 9688

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2006

| Patent document cited in search report | | Publication date | Patent family member(s) | | Publication date |
|---|---|---|---|---|---|
| JP 2002084479 | A | 22-03-2002 | JP | 3760091 B2 | 29-03-2006 |
| EP 1091577 | A2 | 11-04-2001 | US | 6885809 B1 | 26-04-2005 |
| EP 0763938 | A2 | 19-03-1997 | NONE | | |
| US 5661526 | A | 26-08-1997 | CA | 2130691 A1 | 26-02-1995 |

**EP 1 763 033 A1**

## REFERENCES CITED IN THE DESCRIPTION

**Patent documents cited in the description**

- JP 2002084479 A